(19) Europäisches Patentamt

European Patent Office

Office européen des brevets

(11) EP 1 555 804 A2

(12) **EUROPEAN PATENT APPLICATION**

(43) Date of publication:
20.07.2005 Bulletin 2005/29

(51) Int Cl.7: **H04N 1/41**, H04N 1/40,
H04N 1/64

(21) Application number: 05250226.7

(22) Date of filing: 18.01.2005

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **19.01.2004 JP 2004010223**<br>**19.01.2004 JP 2004010225**<br>**15.03.2004 JP 2004072668**<br>**08.04.2004 JP 2004114076**<br>**12.04.2004 JP 2004116827**<br>**11.05.2004 JP 2004140831**<br>**14.05.2004 JP 2004144887**<br>**24.05.2004 JP 2004152864**<br>**26.05.2004 JP 2004155767**<br>**31.05.2004 JP 2004161082**<br>**07.06.2004 JP 2004168016** | (71) Applicant: **Ricoh Company, Ltd.**<br>**Tokyo 143-8555 (JP)**<br><br>(72) Inventors:<br>• **Hasegawa, Fumihiro**<br>  **Machida-shi Tokyo (JP)**<br>• **Sekiguchi, Yu**<br>  **Sumida-ku Tokyo (JP)**<br>• **Miyazawa, Toshio**<br>  **Kawasaki-shi Kanagawa (JP)**<br><br>(74) Representative: **Leeming, John Gerard**<br>**J.A. Kemp & Co.,**<br>**14 South Square,**<br>**Gray's Inn**<br>**London WC1R 5JJ (GB)** |

(54) **Image processing apparatus, image processing program and storage medium**

(57) An image processing apparatus comprises a unit acquiring a multi-level image as a processing-object image, a unit acquiring a binary image which is created based on the multi-level image, a unit extracting a specific attribute region which is a region with a specific attribute from the multi-level image, a unit changing pixels other than the specific attribute region in the binary image to white pixels, a unit creating a multi-level image in which the pixels of the specific attribute region are changed by a background color, a unit determining a color of the specific attribute region, a unit creating an image of the specific attribute region having the color determined, an image coding unit carrying out compression coding of two or more images which are created respectively, and a unit creating an integrated file in which the coded images are integrated.

FIG.3

EP 1 555 804 A2

## Description

BACKGROUND OF THE INVENTION

The present invention relates to an image processing apparatus, an image processing program, and a storage medium which can provide file-size reduction remarkably without reducing the quality of image of the multi-level image as the processing-object image so much.

Generally, transmission of a color image requires much time since the file size of the color image is large, and accumulation of the color images requires a large storage region. Therefore, it is desirable to provide the technology which reduces the file size without reducing the quality of image of the color image, for the purposes of transmission and accumulation of the color images.

Currently, the method of performing JPEG compression etc. to compress the image has been widely spread. This JPEG compression is the method which is excellent in the compression of natural images, such as photographs, but it is not suitable for the compression of document images containing the characters. Specifically, the peculiar noise called mosquito noise often arises in the region of a document image where the color is sharply changed, such as the edge region of a character. Moreover, the compression efficiency of the image in which the color is sharply changed frequently, such as the document image, is not so high.

Although it is possible to raise the compressibility compulsorily, the edge region of the character in such a case is crushed and the visibility of the character falls sharply.

Japanese Patent No. 3095804 discloses the proposed method which obviates the above problem. In the method of Japanese Patent No. 3095804, the processing-object image is divided into the blocks of the predetermined size, and each block is separated into the halftone region and the character region. The 2-dimensional discrete cosine conversion is performed for the halftone region, and the encoding is performed using the quantization table. The character region is constituted only by the luminance signal and the discernment color code and the compression coding of the character region is performed.

According to the above method, since there is little color change in the halftone region, the compressing method using discrete cosine conversion, such as the JPEG compression function, serves to encode the halftone region effectively, and a different encoding method is used to encode the character region. Therefore, it is possible to maintain the balance of the compressibility and the image quality at high level by the use of the above method.

However, since the character section and the halftone section are separated on a block basis according to the method of Japanese Patent No. 3095804, depending on the size of the block, there may be a case in which the character region and the halftone region coexist inside the same block.

In such a case, the quality of image of one of the character region and the halftone region in the block concerned will deteriorate.

The conceivable method for resolving the problem is to make the block size small. However, if the block size is made small, the information used to judge which of the character region and the halftone region will decrease, and the possibility of the judgment error will increase and the accuracy will deteriorate.

An object of the present invention is to provide an improved image processing apparatus, program and storage medium in which the above-described problems are eliminated.

In order to achieve the above-mentioned object, the present invention provides an image processing apparatus comprising: a multi-level image acquisition unit acquiring a multi-level image as a processing-object image; a binary image acquisition unit acquiring a binary image which is created based on the multi-level image; a specific attiribute region extraction unit extracting a specific attiribute region which is a region with a specific attribute from the multi-level image; a white pixel substitution unit changing pixels other than the specific attiribute region in the binary image to white pixels; a specific attiribute region elimination image creation unit creating a multi-level image in which the pixels of the specific attiribute region are changed by a background color; a specific attribute region color determination unit determining a color of the specific attribute region; a specific attribute pixel image creation unit creating an image of the specific attribute region having the color determined by the specific attribute region color determination unit; an image coding unit carrying out compression coding of two or more images which are created by the specific attribute region elimination image creation unit and the specific attribute pixel image creation unit respectively; and an integrated file creation unit creating an integrated file in which the coded images from the image coding unit are integrated.

According to the present invention, the multi-level image as the original image and the binary image based on the original image are acquired, and the pixels of the region (specific attribute region) having the specific attribute, such as a character region, are determined based on the binary image. The image of the specific attribute region which includes the color determined after generating the binary image in which the pixels other than the specific attribute region are changed to the white pixels according to the existence of such specific attribute region is created. The multi-level image in which the pixels of the specific attribute region are changed to the background color is created. The encoding of each image is performed and an integrated file of each encoded image is created. It is possible that the present invention reduce the file size remarkably without reducing the quality of image of the multi-level image used as the processing-object image too much, while the visibility about the pixels of the specific attribute region is maintained even when the original image contains the specific attribute region having the specific attribute, such as the character and the ruled line.

Other objects, features and advantages of the present invention will be apparent from the following detailed description when reading in conjunction with the accompanying drawings.

FIG. 1 is a block diagram showing the electrical connection of the image processing apparatus in the preferred embodiment of the invention.

FIG. 2 is a flowchart for explaining the outline processing of the image processing apparatus in the present embodiment.

FIG. 3 is a diagram for explaining the conceptual operation of the image processing apparatus in the present embodiment.

FIG. 4 is a block diagram of the functional composition of the image processing apparatus in the preferred embodiment of the invention.

FIG. 5 is a flowchart for explaining the outline processing of the image processing apparatus in another preferred embodiment of the invention.

FIG. 6 is a diagram for explaining why the smoothing of the multi-level image is performed in the present embodiment.

FIG. 7 is a block diagram of the functional composition of the image processing apparatus in the present embodiment.

FIG. 8 is a flowchart for explaining the outline processing of the image processing apparatus in another preferred embodiment of the invention.

FIG. 9 is a block diagram of the functional composition of the image processing apparatus in the present embodiment.

FIG. 10 is a flowchart for explaining the added processing of the image processing apparatus in another preferred embodiment of the invention.

FIG. 11 is a flowchart for explaining an example of the representative color computing method.

FIG. 12A and FIG. 12B are diagrams showing an example of the division of the original image.

FIG. 13 is a diagram for explaining the positional relation between the connection component and the mesh region.

FIG. 14 is a block diagram showing the functional composition of the image processing apparatus in another preferred embodiment of the invention.

FIG. 15 is a flowchart for explaining the contents of processing performed by the specific attribute region elimination image creation unit in the present embodiment.

FIG. 16 is a block diagram of the specific attribute region elimination image creation unit in the present embodiment.

FIG. 17 is a diagram for explaining the boundary pixels.

FIG. 18 is a diagram for explaining the multi-level image in which eliminated the characters are eliminated and the boundary pixel at the boundary position.

FIG. 19 is a diagram for explaining the problem in the processing of the outline region of the character.

FIG. 20 is an outline flowchart for explaining the outline processing of the image processing apparatus in the preferred embodiment of the invention.

FIG. 21 is a conceptual diagram of the processing.

FIG. 22 is a functional block diagram of the image processing apparatus.

FIG. 23 is a diagram showing the example of processing.

FIG. 24 is a diagram showing the example of character recognition processing.

FIG. 25 is a diagram showing the composite example.

FIG. 26 is an outline flowchart for explaining the outline processing of another preferred embodiment of the invention.

FIG. 27 is a conceptual diagram of the processing.

FIG. 28 is a functional block diagram of the image processing apparatus.

FIG. 29 is a diagram showing the example of processing.

FIG. 30 is a diagram showing the composite example.

FIG. 31 is a flowchart showing the processing of the image-processing method in the preferred embodiment of the invention.

FIG. 32 is a flowchart showing the detailed flow of the line extraction processing step in the processing of FIG. 31.

FIG. 33 is a block diagram showing the composition of the image processing apparatus in the preferred embodiment of the invention.

FIG. 34 is a flowchart showing the processing of the image-processing method in another preferred embodiment of the invention.

FIG. 35 is a block diagram showing the composition of the image processing apparatus in another preferred embodiment of the invention.

FIG. 36 is a diagram showing the situation of the processing which unifies the connection component for the line candidate.

FIG. 37 is a diagram showing the situation of the integrated processing to the line candidate in the character image and the photograph image.

FIG. 38 is a diagram for explaining the deletion conditions of reversal and the line candidate extraction to the noninverting image, and the duplication line.

FIG. 39 is a block diagram showing the composition of the computer in which the image processing apparatus of the invention is embodied.

FIG. 40A and FIG. 40B are diagrams showing the document data structure in the preferred embodiment of the invention.

FIG. 41 is a block diagram showing the document conversion device in the preferred embodiment of the invention.

FIG. 42 is a diagram for explaining the document conversion method in the preferred embodiment of the invention.

FIG. 43 is a block diagram showing the document restoration device in the preferred embodiment of the invention.

FIG. 44 is a diagram for explaining the document restoration method in the preferred embodiment of the invention.

FIG. 45A and FIG. 45B are diagrams showing the document data structure in another preferred embodiment of the invention.

FIG. 46 is a diagram for explaining the document conversion method in another preferred embodiment of the invention.

FIG. 47 is a diagram for explaining the document restoration method in another preferred embodiment of the invention.

FIG. 48A and FIG. 48B are diagrams showing the document data structure in another preferred embodiment of the invention.

FIG. 49 is a diagram showing the document conversion method in another preferred embodiment of the invention.

FIG. 50 is a diagram showing the document restoration method in another preferred embodiment of the invention.

FIG. 51A and FIG. 51B are diagrams showing the document data structure in another preferred embodiment of the invention.

FIG. 52 is a diagram for explaining the document conversion method in another preferred embodiment of the invention.

FIG. 53 is a diagram for explaining the document restoration method in another preferred embodiment of the invention.

FIG. 54A and FIG. 54B are diagrams showing the document data structure in the preferred embodiment of the invention.

FIG. 55 is a diagram for explaining the low-resolution processing of plane PLN (2).

FIG. 56 is a block diagram showing the document conversion device in the preferred embodiment of the invention.

FIG. 57 is a diagram for explaining the document conversion method in the preferred embodiment of the invention.

FIG. 58 is a diagram for explaining the document restoration device in the preferred embodiment of the invention.

FIG. 59 is a diagram for explaining the document restoration method in the preferred embodiment of the invention.

FIG. 60 is a diagram for explaining the processing in which the low-resolution processing of plane PLN (2) in FIG. 55.

FIG. 61 is a flowchart for explaining the low-resolution processing of plane PLN (2).

FIG. 62 is a functional block diagram showing the image processing apparatus in the preferred embodiment of the invention.

FIG. 63 is a diagram showing the flow of processing of the image processing apparatus of FIG. 62.

FIG. 64A is a diagram showing that a part of character is recognized as an independent character in the image processing apparatus of FIG. 62.

FIG. 64B is a diagram showing that the character is correctly recognized in the image processing apparatus of FIG. 62.

FIG. 65 is a functional block diagram showing the image processing apparatus in the preferred embodiment of the invention when the image, such as the photograph, is included in the original image.

FIG. 66 is a diagram for explaining the flow of processing by the image processing apparatus of FIG. 65.

FIG. 67A is a diagram showing a ruled line extraction unit by which the ruled line extraction unit comprises the same color long run extraction unit and the long run connection-component creation unit.

FIG. 67B is a diagram showing a ruled line extraction unit by which the ruled line extraction unit comprises the same color short run extraction unit and the short run connection-component creation unit.

FIG. 68 is a diagram showing the situation of ruled line extraction according to the ruled line extraction unit of FIG. 67A, and showing the situation of the ruled line extraction by the ruled line extraction unit of FIG. 67A.

FIG. 69 is a diagram showing that the ruled line to which the ruled line extraction unit of FIG. 67A contacted the character can be recognized, and showing that the ruled line to which the ruled line extraction unit of FIG. 67B contacted the character cannot be recognized.

FIG. 70 is a functional block diagram of the processing which is performed by the image processing apparatus in the preferred embodiment of the invention.

FIG. 71 is a functional block diagram for explaining the processing which is performed by the character color specifying unit.

FIG. 72 is a diagram for explaining gamma conversion.

FIG. 73 is a functional block diagram for explaining the processing which is performed by the non-character image creation unit.

FIG. 74 is a functional block diagram of the image processing apparatus in the preferred embodiment of the invention.

FIG. 75 is a flowchart for explaining the processing which is performed by the image processing apparatus.

FIG. 76A and FIG. 76B are diagrams for explaining extraction of the contact character.

FIG. 77 is a flowchart for explaining extraction of the contact character.

FIG. 78 is a functional block diagram of the image processing apparatus in another preferred embodiment of the invention.

FIG. 79 is a flowchart for explaining the processing which is performed by the image processing apparatus of FIG. 78.

FIG. 80 is a flowchart for explaining the decoding and displaying of the integrated file created by the image processing apparatus.

FIG. 81 is an outline flowchart for explaining the outline of processing in another preferred embodiment of the invention.

FIG. 82 is a conceptual diagram of the processing.

FIG. 83 is a functional block diagram of the image processing apparatus in the present embodiment.

FIG. 84 is an outline flowchart for explaining an example of reduction-color image creation processing.

FIG. 85 is an outline flowchart for explaining an example of representative color calculation processing.

FIG. 86 is an outline flowchart for explaining another examples of representative color calculation processing.

FIG. 87 is an outline flowchart for explaining the representative color assignment processing.

FIG. 88 is an outline flowchart for explaining an example of processing which changes the character region by the background color.

FIG. 89 is an outline flowchart for explaining the outline of processing in another preferred embodiment of the invention.

FIG. 90 is an outline flowchart for explaining a part of the processing.

FIG. 91 is a functional block diagram of the image processing apparatus in the present embodiment.

FIG. 92 is a functional block diagram showing the composition of the specific attribute pixel specifying unit.

A description will now be given of the preferred embodiments of the invention with reference to the accompanying drawings.

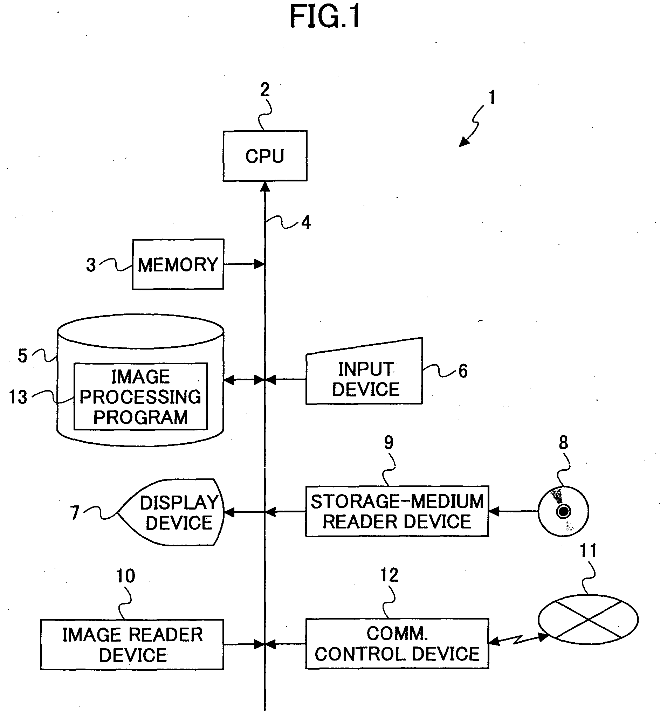

With reference to FIG. 1 through FIG. 4, the image processing apparatus and program in the preferred embodiment of the invention will be explained.

FIG. 1 shows the electrical connection of the image processing apparatus 1 in the present embodiment. As shown in FIG. 1, the image processing apparatus 1 is a computer, such as a personal computer (PC), comprising the CPU (Central Processing Unit) 2 which performs various operations and controls each of respective components of the image processing apparatus 1 collectively, the memory 3 which includes various kinds of ROMs (Read Only Memories) and RAMs (Random Access Memories), and the bus 4 which interconnects the CPU 2 and the memory 3.

In the image processing apparatus 1, further interconnected by the bus 4 are the magnetic storage 5, such as a hard disk drive, the input device 6, such as a keyboard and mouse, the display device 7, the storage-medium reader device 9 which reads the storage medium 8, such as an optical disk, the image reader device 10 which reads an image, and the communication control device 12 which communicates with the network 11 via the predetermined interface. The image processing apparatus 1 transmits an integrated file (in which the coded images are integrated) through the network 11 by using the communication control device 12.

In addition, the storage medium 8 used may be any of various media, including the optical disks, such as CD and DVD, the magneto-optic disks, and the floppy disk (FD). Moreover, the storage-medium reader device 9 used may being any of the optical disk drive, the magneto-optic disk drive, the floppy disk drive, etc., according to the kind of the storage medium 8 used.

The image processing apparatus 1 reads from the storage medium 8 the image processing program 13 which causes the computer to execute the image processing according to the present embodiment of the invention, and installs the same in the magnetic storage 5. The program may be downloaded to the image processing apparatus 1 through the network 11, such as the Internet, and it may be installed in the magnetic storage 5.

By this installation, the image processing apparatus 1 will be in the state which can carry out the image processing which will be described below. In addition, the image processing program 13 may operate on the predetermined OS (operating system).

In the present embodiment, the file size can be reduced remarkably by using the image processing program 13, without sacrificing the visibility of the characters in the multi-level image as the processing-object image (original image).

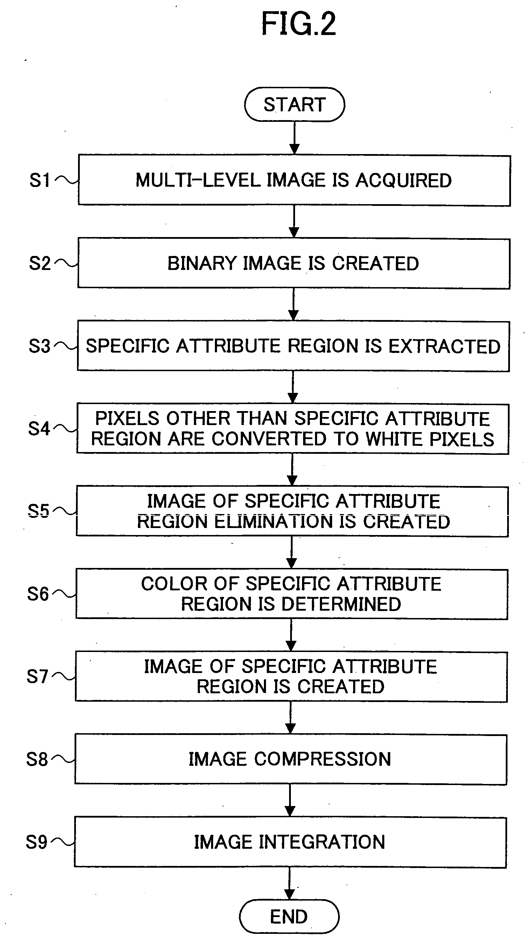

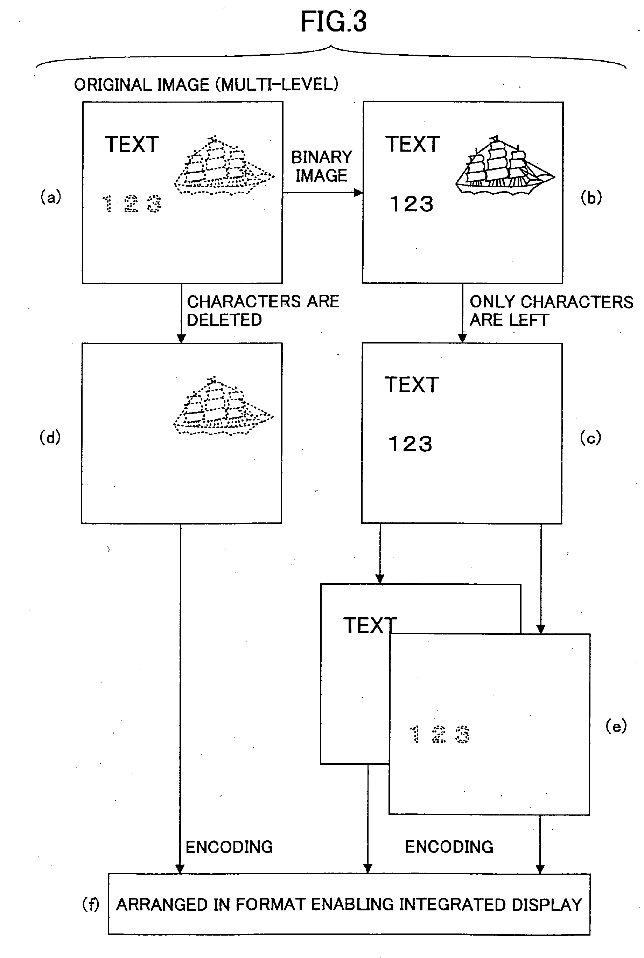

FIG 2 is a flowchart for explaining the outline processing of the image processing apparatus in the present embodiment. FIG. 3 is a diagram for explaining the conceptual operation of the image processing apparatus in the present embodiment.

In the processing of FIG. 2, the multi-level image used as the processing-object image as shown in FIG. 3 (a) is acquired using the image reader device 10, such as the image scanner (step S1). And the binary image as shown in FIG. 3 (b) is created by binarization of the multi-level image (step S2). Then, the region having the specific attribute (specific attribute region), such as the character region, is extracted (step S3).

And the white pixel processing which changes the pixels other than the specific attribute region, which do not have the specific attribute in the binary image, to the white pixels is performed so that the resulting image contains only the characters, as shown in FIG. 3 (c) (step S4). That is, black pixels other than the character are eliminated in the binary image. This processing will allows the positions of the characters to be shown per pixel.

On the other hand, the multi-level image is changed so that the region (specific attribute region) having the specific attribute, such as the character region, is filled with the background color, and the region (specific attribute region) having the specific attribute, such as the character region, is eliminated as shown in FIG. 3 (d) (step S5).

In the next step S6, the color of the specific attribute region is determined. Specifically, all the pixel colors of the color image which is located at the positions of the black pixels which constitute the specific attribute region are determined, and some of the major colors currently used in such color data are selected as the representative colors. And it is determined which representative color of the representative colors is closest to the color of each of the pixels which constitute the character or to the color of each connection component.

Then, as shown in FIG. 3 (e), the image in which the pixels with the specific attribute have the selected representative color for every pixel and for every connection component is created (step S7). In this case, one binary image (or one multi-level image having only the limited colors) is created for each of the selected representative colors.

And the compression encoding is performed for the image in which the specific attribute pixels are eliminated, which is created at step S5, and the image which contains only the specific attribute pixels, which is created at step S7 (step S8). For example, the JPEG compression encoding is performed for the former image and the MMR compression encoding is performed for the latter image. Therefore, the file size is reduced efficiently.

Then, the integrated file in the format (for example, PDF) which enables the integrated displaying of the background image (the image in which the specific attribute region is eliminated) and the character image (the image which contains only the specific attribute pixels) is created with the positional relation that is the same as the original image being maintained (step S9).

Remarkable reduction of the file size is attained without reducing the visibility of the resulting image file created through the above processing. The reason is as follows.

Although the JPEG compression does not provide so high compression efficiency in the case of the image having the sharp change of the pixel value, the above-described processing of this embodiment eliminates the character region from the multi-level image, and the sharp change of the pixel value of the character region is excluded, thereby making the compression efficiency remarkably high. Moreover, the number of the colors in the character region is reduced remarkably, and the compression efficiency can be made high further.

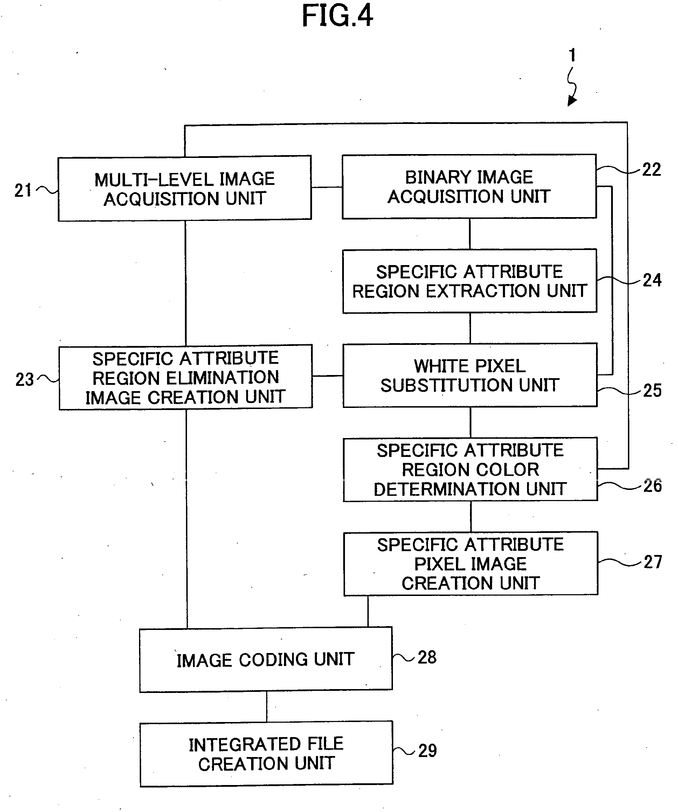

FIG. 4 shows the functional composition of the image processing apparatus 1 in the present embodiment. In the present embodiment, the above-described processing of the image processing apparatus 1 is realized based on the image processing program 13, as follows.

1. Multi-level image as the processing-object image and binary image based on the multi-level image are acquired

The multi-level image and the binary image are acquired with the multi-level image acquisition unit 21 and the binary image acquisition unit 22 (steps S1 and S2). Based on the multi-level image, the binary image is also created.

What is necessary for the creation of the binary image is to use the fixed threshold and change the pixels having the color larger than the threshold to the white pixels and change the pixels having the color smaller than the threshold to the black pixels. Moreover, it is possible that the binary image and the multi-level image have different resolutions.

For example, after creating the binary image by the above method, the thinning-out processing may be carried out, the resolution of the multi-level image may be lowered, and such image may be acquired as the multi-level image of the processing object.

Furthermore, another device may be used to perform the binary image creation, and the resulting image file which is created by the other device may be acquired.

2. Character region is extracted

By using the specific attribute region extraction unit 24, the positions where the character exists in the original image are determined (step S3). The specific attribute region extraction unit 24 may be configured to acquire the character region from either the binary image or the multi-level image. When acquiring from the multi-level image, the character region extraction method known from Japanese Laid-Open Patent Application No. 2002-288589 may be used, and when acquiring from the binary image, the character region extraction method known from Japanese Laid-Open Patent Application No. 06-020092 may be used. In the present embodiment, the pixels which constitute the character are extracted based on the binary image as the pixels having the specific attribute.

### 3. Pixels other than the character region are changed to white pixels

By using the white pixel substitution unit 25, the pixels other than the character region (the pixels other than the specific attribute region) in the binary image are changed to the white pixels (step S4).

### 4. Non-character multi-level image is created

By using the specific attribute region elimination image creation unit 23, the character region of the multi-level image corresponding to the black pixel region which remains in the processing of the above item 3 is filled with the background color, and the non-character, multi-level image containing no character is created (step S5).

### 5. Color of specific attribute region is determined

By using the specific attribute region color determination unit 26, the color of the specific attribute region is determined (step S6). All the pixel colors of the color image at the positions of the black pixels which constitute the character are determined, and some of the major colors currently used in such color data are selected as the representative colors. And it is determined which representative color of the representative colors is closest to the color of each of the pixels which constitute the character or to the color of each connection component.

### 6. Color image is created

By using the specific attribute pixel image creation unit 27, the image in which the pixels with the specific attribute have the selected representative color for every pixel and for every connection component is created (step S7). In this case, one binary image (or one multi-level image having only the limited colors) is created for each of the selected representative colors.

### 7. Image encoding

By using the image coding unit 28, the compression encoding is performed for the non-character image in which the specific attribute pixels are eliminated, and for the color-reduction image which contains only the specific attribute pixels so that the size is reduced efficiently (step S8). For example, the JPEG compression encoding is performed for the non-character image to reduce the size highly and this is irreversible compression coding. If the compression coding is performed after the resolution is lowered, the size will become small further.

Moreover, the reversible compression coding is performed for the color-reduction image. If it is the binary image, it is suitable that the PNG compression coding or the MMR compression coding be performed. If it is the 4-level or 16-level image, it is suitable that the PNG compression coding be performed.

### 8. Integrated file is created

By using the integrated file creation unit 29, the compressed images are integrated into a single file (step S9). If the file in the format which enables the integrated displaying of these images is created, it is possible to create the color image the file size of which is reduced remarkably without reducing the visibility of the character region and in which the background color of the original image is reproduced to some extent.

According to the present embodiment, the multi-level image as the original image and the binary image based on the original image are acquired, and the pixels of the region (specific attribute region) having the specific attribute, such as a character region, are determined based on the binary image. The image of the specific attribute region which includes the color determined after generating the binary image in which the pixels other than the specific attribute region are changed to the white pixels according to the existence of such specific attribute region is created. The multi-level image in which the pixels of the specific attribute region are changed to the background color is created. The encoding of each image is performed and an integrated file of each encoded image is created. It is possible that the present embodiment reduce the file size remarkably without reducing the quality of image of the multi-level image used as the processing-object image too much, while the visibility about the pixels of the specific attribute region is maintained even when the original image contains the specific attribute region having the specific attribute, such as the character and the ruled line.

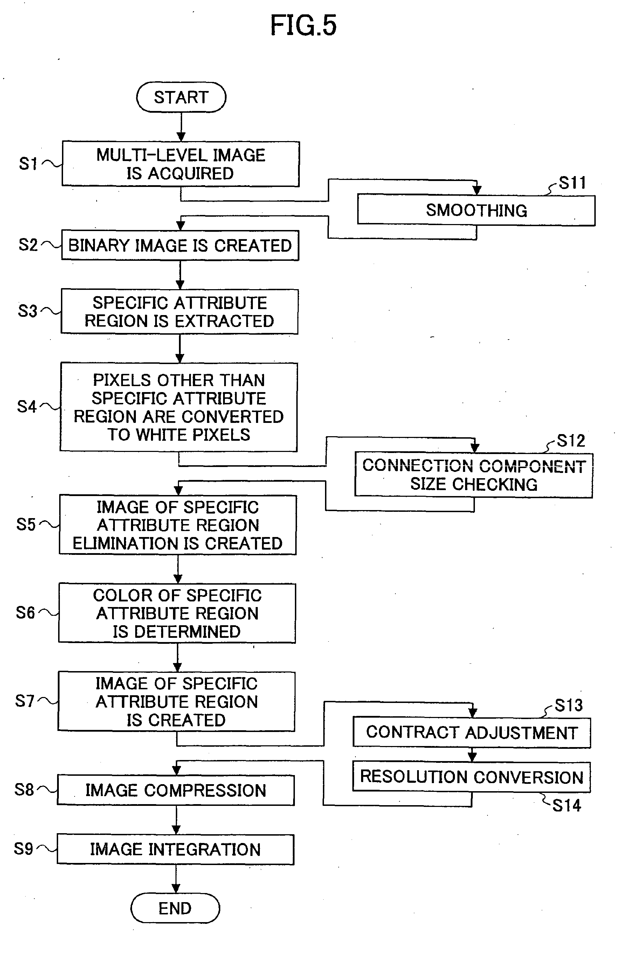

Next, another preferred embodiment of the invention will be explained with reference to FIG. 5 through FIG. 7.

In FIG. 5 through FIG. 7, the elements which are the same as corresponding elements in the previous embodiment of FIG. 1 through FIG. 4 are designated by the same reference numerals, and a description thereof will be omitted. The present embodiment is configured to further add the processing for raising the quality of image and the compressibility.

In the present embodiment, remarkable size reduction is realized by using the image processing program 13, without sacrificing the visibility of the character in the multi-level image as the processing-object image (original image).

FIG. 5 shows the outline processing of the image processing apparatus in the present embodiment.

First, the multi-level image used as the processing-object image as shown in FIG. 3 (a) is acquired using the image readers 10, such as the image scanner (step S1).

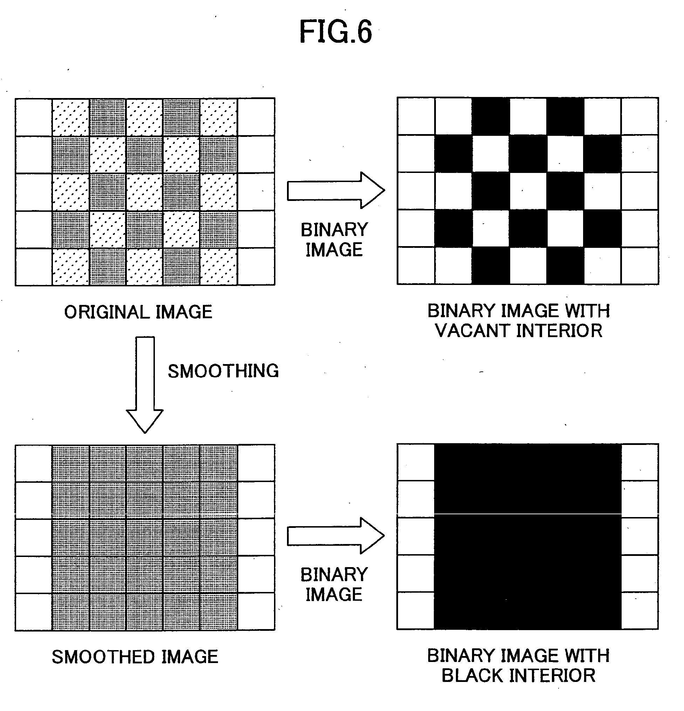

Next, the acquired multi-level image is smoothed (step S11). The reason for performing the smoothing is as follows. There is a case in which the color image is expressed by the set of the pixels of fine middle colors different from each other. If the binarization is performed for the color image in such a case, the interior of the character stroke become the binary image with vacant interior and the compression efficiency of the character image falls (see FIG. 6).

And the binary image as shown in FIG. 3 (b) is created by the binarization of the multi-level image in which such smoothing was performed (step S2). Then, the region (specific attribute region) with the specific attribute, such as the character region, is extracted (step S3).

And the white pixel processing which changes the pixels other than the specific attribute region which do not have the specific attribute in the binary image to the white pixels is performed so that the resulting image contains only the character as shown in FIG. 3 (c) (step S4). That is, black pixels other than the character in the binary image are eliminated. This processing allows the positions of the characters to be specified per pixel.

Moreover, the connection component of the black pixel is extracted from the binary image in which the black pixels other than the character are eliminated after the white pixel processing is performed, so that too large characters and too small characters are eliminated further (step S12). The possibility that the too small connection component is not the character but the noise is considered as being high, and if the binary image is created without change then the compression efficiency deteriorates.

On the other hand, the multi-level image is changed to the image in which the region (specific attribute region) with the specific attribute, such as the character region, is filled with the background color, so that the image in which the region (specific attribute region) having the specific attribute, such as the character region, is eliminated as shown in FIG. 3 (d) is created (step S5).

In the next step S6, the color of the specific attribute region is determined. Specifically, all the pixel colors of the color image which is located at the positions of the black pixels which constitute the specific attribute region are determined, and some of the major colors currently used in such color data are selected as the representative colors. And it is determined which representative color of the representative colors is closest to the color of each of the pixels which constitute the character or to the color of each connection component.

Then, as shown in FIG. 3 (e), the image in which the pixels with the specific attribute have the selected representative color for every pixel and for every connection component is created (step S7). In this case, one binary image (or one multi-level image having only the limited colors) is created for each of the selected representative colors.

Subsequently, contrast conversion of the image (background image) in which the specific attribute pixels are eliminated, which is created at step S5, and the binary image (character image) which contains only of the specific attribute pixels, which is created at step S7, is performed (step S 13), so that the contrast is weakened and the smoothed image is created.

Moreover, resolution conversion is carried out and the image (background image) in which the specific attribute pixels are eliminated is converted to low resolution (step S14).

And the compression encoding is performed for the image (background image) in which the specific attribute pixels are eliminated, which is created at step S5, and the image which contains only the specific attribute pixels, which is created at step S7 (step S8). For example, the JPEG compression encoding is performed for the former image and the MMR compression encoding is performed for the latter image. Therefore, the file size is reduced efficiently.

Then, the integrated file in the format (for example, PDF) which enables the integrated displaying of the background image (the image in which the specific attribute region is eliminated) and the character image (the image which contains only the specific attribute pixels) is created with the positional relation that is the same as the original image being maintained (step S9).

Remarkable reduction of the file size is attained without reducing the visibility of the resulting image file created through the above processing. The reason is as follows. Although the JPEG compression does not provide so high compression efficiency in the case of the image having the sharp change of the pixel value, the above-described processing of this embodiment eliminates the character region from the multi-level image, and the sharp change of the pixel value of the character region is excluded, thereby making the compression efficiency remarkably high. Moreover, the number of the colors in the character region is reduced remarkably, and the compression efficiency can be made high further.

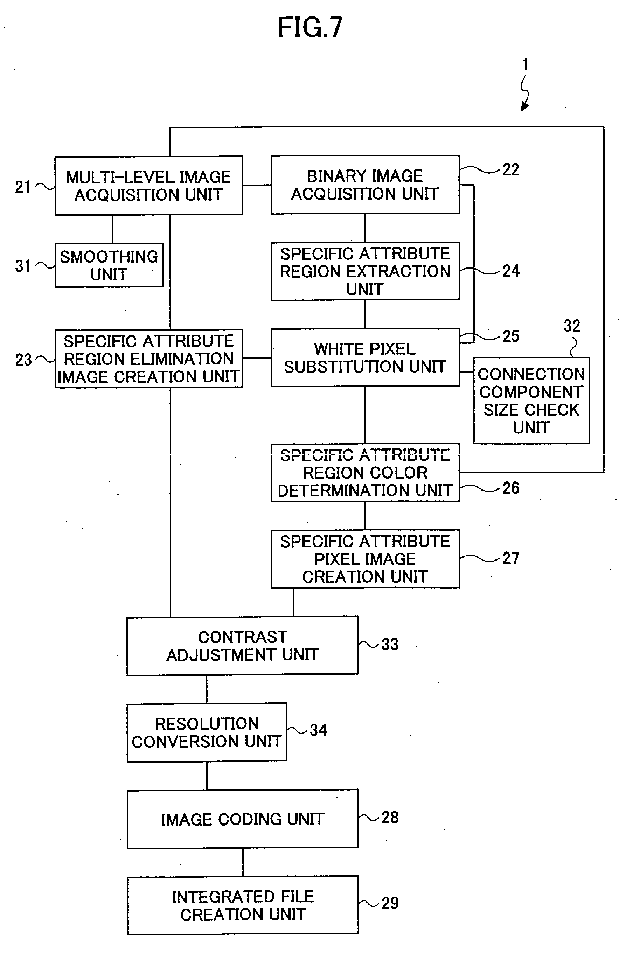

FIG. 7 shows the functional composition of the image processing apparatus 1 in the present embodiment. In the present embodiment, the above-described processing is realized based on the image processing program 13, and a description thereof will be given below with reference to FIG. 7.

1. Multi-level image as the processing-object image and binary image based on the multi-level image are acquired

The multi-level image and the binary image are acquired with the multi-level image acquisition unit 21 and the binary image acquisition unit 22 (steps S1 and S2). Based on the multi-level image, the binary image is created.

Next, smoothing of the acquired multi-level image is performed by using the smoothing unit 31 (step S11). The reason for performing the smoothing is as follows. There is a case in which the color image is expressed by the set of the pixels of fine middle colors different from each other. If the binarization is performed for the color image in such a case, the interior of the character stroke become the binary image with vacant interior and the compression efficiency of the character image falls (see FIG. 6).

In addition, the smoothing of the image may be formed for the color image (background image) in which the character region is eliminated. The reason is as follows. Since the background image is subjected to the JPEG compression coding, the compression efficiency is increased by the smoothing, and this is useful to the suppression of the moiré which may arise due to the low-resolution image.

What is necessary is for the creation of the binary image is just to use the fixed threshold, and change the pixels having the color brighter than the threshold to the white pixels, and change the pixels having the color darker than the threshold to the black pixels. Moreover, it is possible that the binary image and the multi-level image have different resolutions.

For example, after creating the binary image by the above method, the thinning-out processing may be carried out, the resolution of the multi-level image may be lowered, and such image may be acquired as the multi-level image of the processing object.

Furthermore, another device may be used to perform the binary image creation, and the resulting image file which is created by the other device may be acquired.

2. Character region is extracted

By using the specific attribute region extraction unit 24, the positions where the character exists in the original image are determined (step S3). The specific attribute region extraction unit 24 may be configured to acquire the character region from either the binary image or the multi-level image. When acquiring from the multi-level image, the character region extraction method known from Japanese Laid-Open Patent Application No. 2002-288589 may be used, and when acquiring from the binary image, the character region extraction method known from Japanese Laid-Open Patent Application No. 06-020092 may be used. In the present embodiment, the pixels which constitute the character are extracted based on the binary image as the pixels having the specific attribute.

3. Pixels other than the character region are changed to white pixels

By using the white pixel substitution unit 25, the pixels other than the character region (the pixels other than the specific attribute region) in the binary image are changed to the white pixels (step S4).

Moreover, by using the connection component size check unit 32, the connection component of the black pixel is extracted from the binary image in which black pixels other than the character are eliminated after the white pixel processing is performed, so that too large characters and too small characters are eliminated further (step S 12). The reason is as follows. The possibility that the too small connection component is not the character but the noise is considered as being high, and the compression efficiency deteriorates if the binary image is created without change. There is the possibility of making a mistake in this and considering as the character, either, when the region of FIG. and the region of the photograph are in the former image, since the extraction of the character region is technically difficult and the correct character region is not necessarily extracted.

Moreover, the possibility that the too large connection component is not the character is considered as being high. Even when it is accidentally classified into the background according to this processing when the large connection component is actually the character, the size of such connection component is large enough for the human eyes to recognize it.

4. Non-character multi-level image is created

By using the specific attribute region elimination image creation unit 23, the multi-level image corresponding to the black pixel region which remained by processing 3. which buries the character region of the multi-level image by the background color, and does not have the character is made (step S5).

5. Color of specific attribute region is determined

By using the specific attribute region color determination unit 26, the color of the specific attribute region is determined (step 6). All the pixel colors of the color image at the positions of the black pixels which constitute the character are determined, and some of the major colors currently used in this color data are selected as the representative colors. And it is determined which representative color of the representative colors is closest to the color of each of the pixels which constitute the character or to the color of each connection component.

6. Color image is created

By using the specific attribute pixel image creation unit 27, the image in which the pixels with the specific attribute have the selected representative color for every pixel and for every connection component is created (step S7). In this case, one binary image (or one multi-level image having only the limited colors) is created for each of the selected representative colors.

Moreover, by using the contrast adjustment unit 33, contrast conversion of the image (background image) in which the specific attribute pixels are eliminated, and the binary image (character image) which contains only the specific attribute pixels is performed (step S13). The contrast is weakened and then the smoothing of the image is performed. The reason is as follows. The compression efficiency becomes high when there is little change of the pixel value in the case in which the JPEG compression encoding of the background image is performed. There is no influence in the size even when the contrast conversion is performed, because the MMR compression encoding is performed for the character image. However, in order to cause unnatural tone to arise when the integrated file is displayed, the same contrast conversion as the background image is performed for the character image.

Furthermore, the contrast conversion of the image (background image) in which the specific attribute pixels are eliminated, which is created at step S5, and the binary image (character image) which contains only the specific attribute pixels, which is created at step S7, is performed (step S13). The contrast is weakened and then the smoothing of the image is performed.

Moreover, resolution conversion is carried out so that the resolution of the image (background image) in which the specific attribute pixels are eliminated is changed to a low resolution (step S 14). Since the influence to the visibility is small compared with the character image even if resolution of the background image is somewhat low, the compression efficiency is considered and the low-resolution is created.

7. Image Coding

By using the image coding unit 28, the multi-level image without the character and the color-reduction image which constitutes the character are encoded, and image size is compressed (step S8). For example, the JPEG compression encoding is performed for the non-character image to reduce the size highly and this is irreversible compression coding. If the compression coding is performed after the resolution is lowered, the size will become small further.

Moreover, the reversible compression coding is performed for the color-reduction image. If it is the binary image, it is suitable that the PNG compression coding or the MMR compression coding be performed. If it is the 4-level or 16-level image, it is suitable that the PNG compression coding be performed.

8. Integrated File Creation

By using the integrated file creation unit 29, an integrated file in which the encoded images are integrated is created (step S9).

If the encoded images are integrated into the file in the format which enables the integrated displaying of these images, it is possible to create the color image the file size of which is reduced remarkably without reducing the visibility of the character region and in which the background color of the original image is reproduced to some extent.

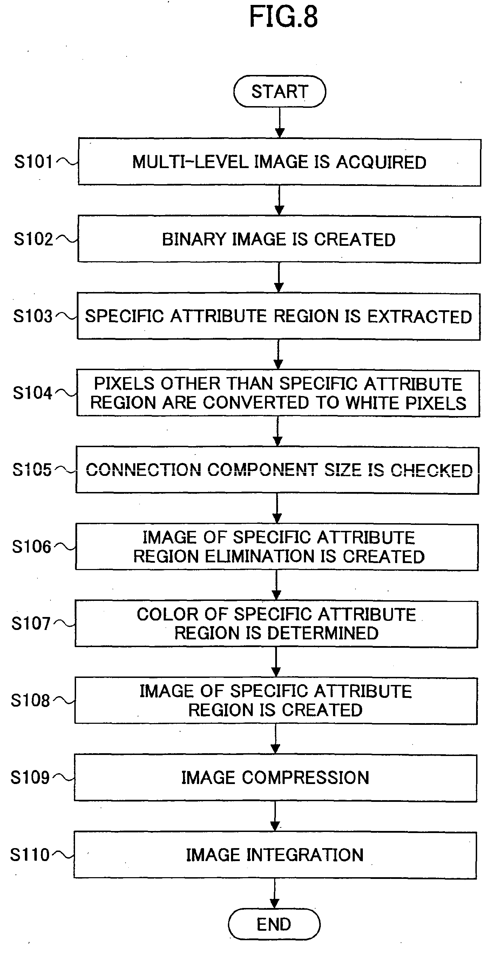

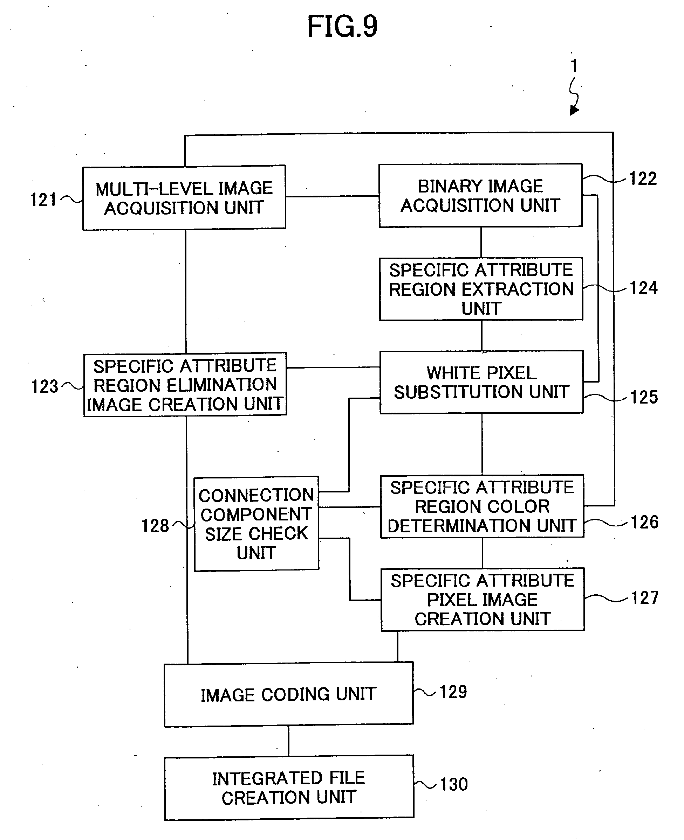

Next, another preferred embodiment of the invention will be explained with reference to FIG. 8 and FIG. 9.

In the present embodiment, remarkable size reduction is realized by using the image processing program 13, without sacrificing the visibility of the characters in the multi-level image as the processing-object image (original image).

The outline processing of the present embodiment will be explained with reference to the flowchart of FIG. 8.

In the processing of FIG. 8, the multi-level image used as the processing-object image as shown in FIG. 3 (a) is acquired using the image reader 10, such as the image scanner (step S101).

And the binary image as shown in FIG. 3 (b) is created by the binarization of the multi-level image (step S102). Then, the region (specific attribute region) with the specific attribute, such as the character region, is extracted (step S 103).

And the white pixel processing which changes the pixels (the pixels other than the specific attribute region) which have no specific attribute in the binary image to the white pixels is performed so that it may leave only the character, as shown in FIG. 3 (c) (step S104). That is, black pixels other than the character are eliminated in the binary image. This processing will show the position of the character per pixel.

Moreover, the connection component of the black pixel is extracted from the binary image which eliminated black pixels other than the character, and that too large and the too small connection components are eliminated further (step S105).

For the noise etc., the too small connection component will be for compression efficiency to fall, if a possibility that it is not the character makes it the binary image as it is the high top. That is, step S104 and step S105 will show the position of the character per pixel.

On the other hand, the multi-level image makes it the image which filled the region (specific attribute region) with the specific attribute, such as the character region, in the background color, and creates the image which eliminated the region (specific attribute region) which has the specific attribute, such as the character region, as shown in FIG. 3 (d) (step S106).

The color of the specific attribute region is determined in the next step S107. Specifically, all the pixel colors of the color image at the positions of the black pixels which constitute the specific attribute region are determined, and some of the major colors currently used in such color data are selected as the representative colors. And it is determined which representative color of the representative colors is closest to the color of each of the pixels which constitute the character or to the color of each connection component.

Next, as shown in FIG. 3 (e), the image in which the pixel with the specific attribute has every pixel and the color judged for every connection component is created (step S108). Although the multi-level image only with the limited color is sufficient and it is possible to have every one binary image for every color, suppose that it has every one binary image for every color.

And the compression image is created from the image which eliminated the specific attribute pixel which it created at step S 106, and the image which consists only of the specific attribute pixel which it created at step S108 (step S109). For example, if the former performs JPEG compression and the latter performs MMR compression, the file size will become small efficiently.

Then, the encoded imaged are integrated in the file in the format (for example, PDF) which enables the integrated displaying of the images: the background image (the image in which the specific attribute region is eliminated), and the character image (the image which contains only the specific attribute pixels), with the same position relation as the original image maintained (step S110).

Remarkable compression of the file size is attained without the image file which the above processing created reducing the visibility. The reason is as follows. Although JPEG compression does not have so good compression efficiency about the image with the sharp change of the pixel value, if the character region is eliminated by the method described here, since pixel value change of the character region will be lost, efficiency becomes good. Moreover, since the character region reduces the color number sharply, also in this, compression efficiency becomes good.

With reference to FIG. 9, the functional composition of the image processing apparatus 1 will be explained. The functions are realizes by the image processing apparatus 1 based on the image processing program 13.

1. Multi-level image as the processing-object image and binary image based on the multi-level image are acquired.

The multi-level image and the binary image are acquired with the multi-level image acquisition unit 121 and the binary image acquisition unit 122 (steps S101 and S102). Based on the multi-level image, the binary image is created.

What is necessary for the method of binarization is to use the fixed threshold and to take the method, like setting the pixel brighter than the threshold into the white pixel, and setting the dark pixel the black pixel. Moreover, different resolution is sufficient as the binary image and the multi-level image.

For example, after creating the binary image by the method, thinning-out processing may be carried out, the resolution of the multi-level image may be lowered, and this may be acquired as a multi-level image of the processing object.

Furthermore, another device may perform the binary image creation and the image file which it created may be acquired.

2. Character region is extracted

By using the specific attribute region extraction unit 124, the positions where the character exists in the original image are determined (step S103). The specific attribute region extraction unit 24 may be configured to acquire the character region from either the binary image or the multi-level image. When acquiring from the multi-level image, the character region extraction method known from Japanese Laid-Open Patent Application No. 2002-288589 may be used, and when acquiring from the binary image, the character region extraction method known from Japanese Laid-Open Patent Application No. 06-020092 may be used. In the present embodiment, the pixels which constitute the character are extracted based on the binary image as the pixels having the specific attribute.

3. Pixels other than the character region are changed to white pixels

By the white pixel substitution unit 125, the pixels other than the character region (the pixels other than the specific attribute region) in the binary image are changed to the white pixels (step S104).

4. Checking of connection component

The connection component size check unit 128 extracts the connection component of the black pixels is extracted from the binary image in which the components excepts the characters are eliminated, and too large and too small connection components are eliminated further (step S105). The possibility that the too small connection component is not the character but the noise is considered as being high, and if the binary image is created without change then the compression efficiency deteriorates.

Moreover, There is the possibility of making a mistake in this and considering as the character, either, when the region of the view and the region of the photograph are in the former image, since the extraction of the character region is technically difficult and the correct character region is not necessarily extracted.

Moreover, the possibility that the too large connection component is not the character is considered as being high. Even when it is accidentally classified into the background according to this processing when the large connection component is actually the character, the size of such connection component is large enough for the human eyes to recognize it.

## 5. Non-character multi-level image is created

By using the specific attribute region elimination image creation unit 123, the character region of the multi-level image corresponding to the black pixel region which remain in the processing of the above item 3 is filled with the background color, and the non-character multi-level image containing no character is created (step S106).

## 6. Color of specific attribute region is determined

By using the specific attribute region color determination unit 126, the color of the specific attribute region is determined (step S107). All the pixel colors of the color image at the positions of the black pixels which constitute the character are determined, and some of the major colors currently used in such color data are selected as the representative colors. And it is determined which of the representative colors is closest to the color of every pixel of the pixels which constitute the character or to the color of every connection component.

## 7. Color image is created

By using the specific attribute pixel image creation unit 127, the image in which the pixels with the specific attribute have the selected representative color for every pixel and for every connection component is created (step S108). In this case, one binary image (or one multi-level image having only the limited colors) is created for each of the selected representative colors.

## 8. Image Coding

By using the image coding unit 129, the multi-level image which contains no character and the reduction-color image which constitutes the character are encoded, so that the size is reduced efficiently (step S109). For example, the JPEG compression encoding is performed for the non-character image to reduce the size highly and this is irreversible compression coding. If the compression coding is performed after the resolution is lowered, the size will become small further.

Moreover, the reversible compression coding is performed for the color-reduction image. If it is the binary image, it is suitable that the PNG compression coding or the MMR compression coding be performed. If it is the 4-level or 16-level image, it is suitable that the PNG compression coding be performed.

## 9. Integrated file is created

By using the integrated file creation unit 130, the compressed images are integrated into a single file (step S 110). If the file in the format which enables the integrated displaying of these images is created, it is possible to create the color image the file size of which is reduced remarkably without reducing the visibility of the character region and in which the background color of the original image is reproduced to some extent.

According to the present embodiment, the sharp change of pixel value of the region (specific attribute region) with the specific attribute, such as the character region, is eliminated. Even if it is the compression technique which is not suitable for the image with the sharp change of the pixel value such as the JPEG compression encoding, is used, it is possible to make the compression efficiency appropriate. The compression efficiency for the region (specific attribute region) with the specific attribute, such as the character region, can be made suitable by reducing the color number sharply. Remarkable reduction of the file size can be attained without reducing the quality of image of the multi-level image used as the processing-object image too much. And the visibility of the pixels of the specific attribute region can be secured even when there is the region (specific attribute region) with the specific attribute, such as the character and the ruled line.

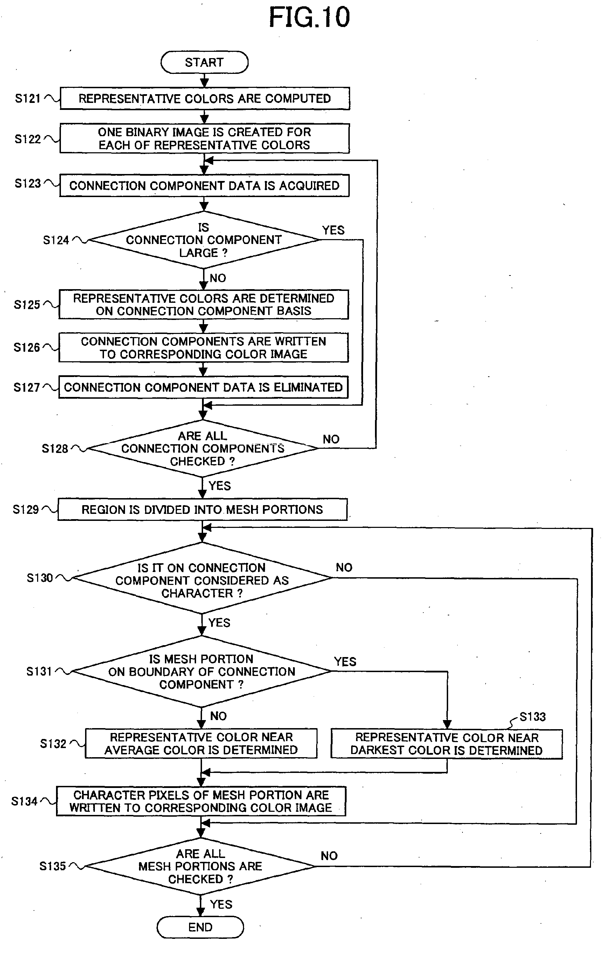

Next, another preferred embodiment of the invention will be explained with reference to FIG. 10 through FIG. 13.

In the following, the elements which are the same as the corresponding elements in the previous embodiment are designated by the same reference numerals, and a description thereof will be omitted.

In the present embodiment, the processing for raising the quality of image and compressibility is further added.

As previously described with FIG. 8, the color is determined on a pixel basis or on a connection component basis by using the specific attribute pixel image creation unit 127 (step S108), this processing has the following problems.

(1) If the coloring per pixel is performed, when the character of the half tone is expressed by dithering, the pixel color changes in the unit of the very fine components. In this case, the created character image has an increasing number of fine noise-like dots, and the compression efficiency will deteriorate.

(2) If the coloring per connection component is performed, the quality of the resulting image becomes poor when the determination as to which color the connection component belongs to is mistaken. Although there is no large influence in the human eyes even if the coloring per pixel is mistaken, it will be conspicuous if the coloring per connection component is mistaken, since the connection component is large in size.

To obviate the problems, in the present embodiment, the image with the middle characteristic between the above items (1) and (2) can be created by dividing the image into mesh portions with the fixed size and determining the color on a mesh portion basis.

It is appropriate that the size of the mesh portions is made to a size which is hardly conspicuous to the human eyes. It is assumed that one block of mesh portion in the present embodiment is made up of 2x2 pixels.

Moreover, since it is seldom conspicuous even if what has the small size should be mistaken in the color of the connection component, if it colors per connection component in this case, compression efficiency will not have degradation of the quality of image so much, either, when going up, rather than it colors all per mesh.

FIG. 10 is a flowchart for explaining the added processing. The flowchart of FIG. 10 is to explain the process of the specific attribute region color determination (step S107) in FIG. 8, and the specific attribute region image creation (step S108).

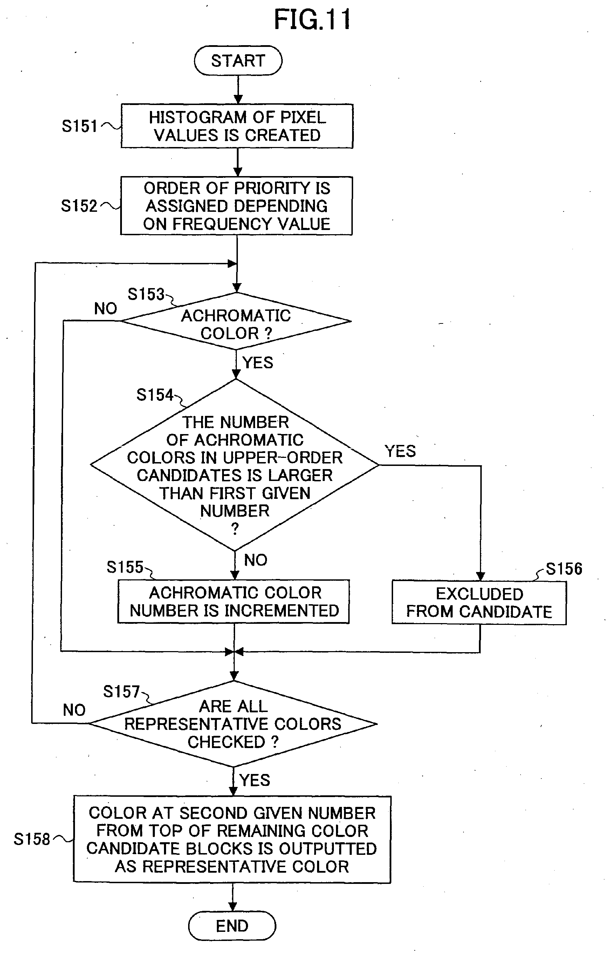

First, the representative color of the character region is computed in step S121. The details of calculation of the representative color of the character region will be explained. FIG. 11 is a flowchart for explaining an example of the representative color computing method.

The pixel value in the position on the multi-level image equivalent to the black pixel of the binary image is calculated, and the histogram of the pixel value is created (step S151). For example, what is necessary is to divide the RGB space into the equal blocks of 4x4x4, and determine where the target pixel is located in the block of concern, and adds 1 to the frequency value of the corresponding space.

The block with the high frequency value is determined, and the order of priority is assigned to each block depending on the frequency value (step S 152). These blocks are called the representative color candidate blocks.

Sequentially from the block of the highest priority, it is determined whether the block concerned is colorless or has the achromatic color (step S153). It is assumed that if the RGB central values (the RGB median of the block) of the block are the almost same value, the block is said to be colorless.

When the result at step S 153 is negative, the control is transferred to the checking of the block with the following priority (step S157).

If the result at step S 153 is affirmative, it is determined whether the number of achromatic colors in the upper-order candidates is larger than a first given number (step S 154). If the number of achromatic colors reaches the first given number, then the corresponding block is excluded from the representative color candidates (step S 156). Otherwise, the number of achromatic colors is incremented and the next processing is performed (step S 155).

The processing of steps S 152-S 156 is repeated until the checking of all the representative color candidate blocks is finished (step S 157).

When the result at step S 157 is affirmative, the color at the second given number from the highest priority of the remaining representative color candidate blocks which remain without being excluded is outputted as the representative color (step S 158).

Referring back to FIG. 10, at the next step S122, the binary image with the representative color and the pixel value of the "transparence" is created to each representative color of the character region computed in step S121. Let all early pixel values be the "transparence."

Next, the connection component information is acquired at step S123. This connection component is the connection component of the pixel which constitutes the character.

And the size of the connection component is checked at step S124, when the connection component is smaller than the size defined beforehand, it progresses to (N of step S124), and step S125, and it is determined which representative color it should color per connection component.

Specifically, what is necessary is to determine the pixel value average of the original image which is at the positions of the pixels which constitute the connection component, to calculate the distance of this and the representative color, and just to select the nearest representative color.

Subsequently, the pixel which constitutes the connection component is written in the binary image which has the representative color chosen at step S125 in the pixel value (step S126), and the connection component information that the writing to the binary image ended is eliminated (step S127).

On the other hand, when the connection component exceeds the size defined beforehand, it returns to (Y of step S124), and step S123, and another connection component information is acquired.

The processing of the above steps S123-S127 is repeated until all the connection component information is checked (Y of step S128).

The end of check of all connection component information divides the original image in the shape of a mesh (step S129). (Y of step S128)

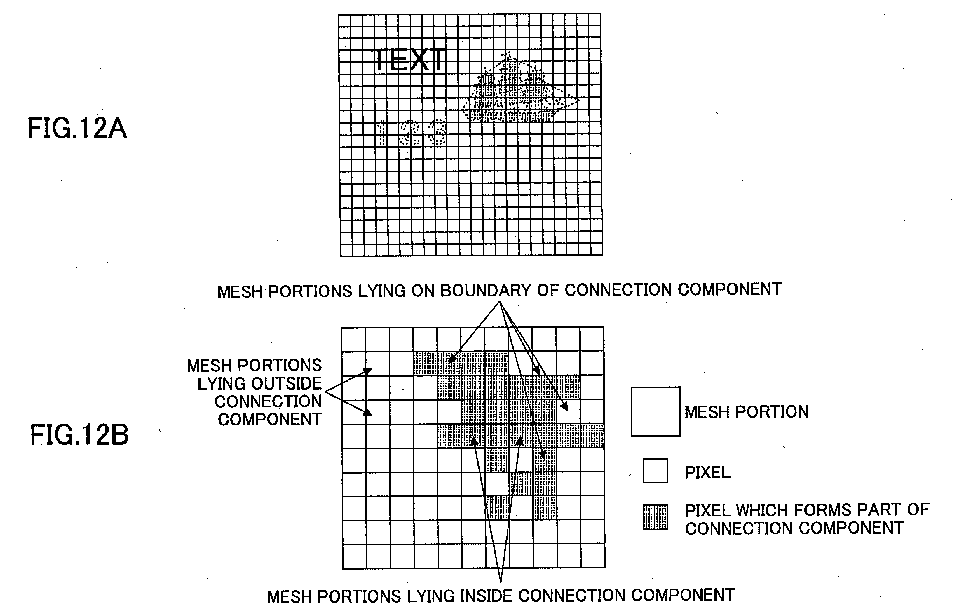

As shown in FIG. 12A and FIG. 12B, it is supposed that the whole image be divided into the blocks with the size of 2x2 pixels.

Next, the respective mesh regions are checked in order.

First, it is determined whether the target mesh region is on the connection component which can be considered as the character (step S 130). Since it will be said that there is no character in (N of step S 130) and its region when there is no pixel on the connection component, the following mesh is checked.

When it is on the connection component, it will be said that the character is in (Y of step S 130) and the applicable mesh region.

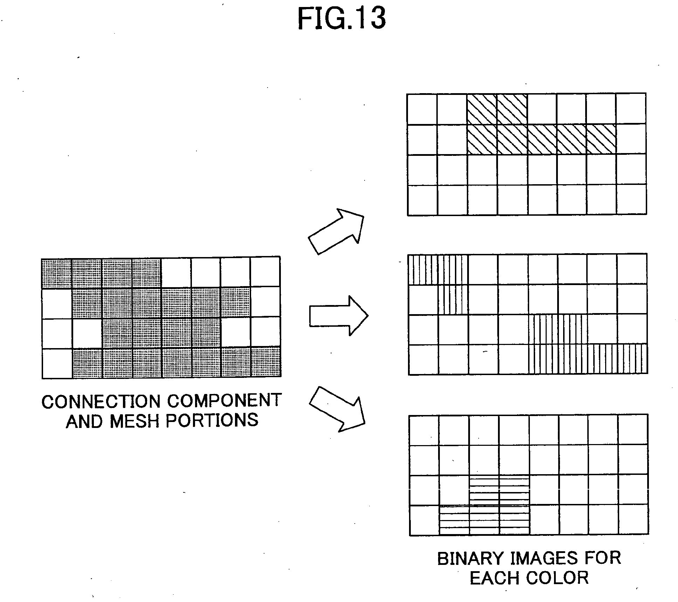

Then, it is determined whether the mesh region is in the boundary portion (end) of the connection component (step S131). If it goes into the pixel from which the whole mesh constitutes the connection component as shown in FIG. 13, it will be judged that there is no pixel on the boundary.

When it is judged that there is no pixel on the boundary (it is in the interior), the average of (N of step S131) and the pixel value inside the mesh is calculated, and the representative color near this average is chosen (step S 132).

On the other hand, when it is determined that it is in the boundary (there is no pixel inside), the pixel with the lowest lightness is chosen in the pixel which is in the interior of (Y of step S131), and the mesh, and constitutes the connection component, and the representative color near this is chosen (step S133).

Thus, the reason for not using the average for the boundary region is because the influence of the background color has the strong value, when the color of the background was mixed, near the boundary is crowded in many cases in the pixel value and the average is taken.

It is because it consists of the actual character color that it tends to be judged that it is the closest to the representative color near the background color, and it will become unnatural when it reappears as a character image if the influence of the background color is larger.

The pixel which constitutes the connection component in the mesh is written in the binary image which has the selected representative color as a pixel color (step S 134). Since the form of the mesh is not written in as it is but only the pixel portion which constitutes the connection component in the mesh is written in as shown in FIG. 13, the resolution does not fall.

The processing of the above steps S 130-S 134 is repeated until all the mesh portions are checked (Y of step S 135).

Thus, in the present embodiment, the plurality of color determination methods determining different colors respectively are provided. For example, the plurality of color determination methods are as follows:

(1) the method of determining the color per connection component;
(2) the method of determining the color per block (the average color is used for representative color selection);
(3) the method of determining the color per block (the darkest color is used for representative color selection).

By selecting one of these methods and using them in combination according to the case, it is possible to balance the quality of the resulting image and the processing time.

In addition, in case the region (specific attribute region) which has the specific attribute, such as the character region, is extracted in the step S103, it is possible to make it use the image with the high resolution in false in the present embodiment when the resolution of the original image is low. Thereby, when the specific attribute region is discovered, precision may increase.

On the contrary, if the low-resolution image is used when the resolution of the original image is very high, it will lead to shortening of the processing time.

The above-described embodiments of FIG. 8 through FIG. 13 provide an image processing apparatus comprising: a multi-level image acquisition unit acquiring a multi-level image as a processing-object image; a binary image acquisition unit acquiring a binary image which is created based on the multi-level image; a specific attribute region extraction unit extracting a specific attribute region which is a region with a specific attribute from the multi-level image; a white pixel substitution unit changing pixels other than the specific attribute region in the binary image to white pixels; a connection component size check unit extracting a connection component of black pixels from the binary image in which the pixels other than the specific attribute region are changed to the white pixels by the white pixel substitution unit, classifying a size of the connection component, and changing a too large or too small component to the white pixels; a specific attribute region elimination image creation unit creating a multi-level image in which the pixels of the specific attribute region are changed by a background color; a specific attribute region color determination unit determining a color of the specific attribute region; a specific attribute pixel image creation unit creating an image of the specific attribute region having the color determined by the specific attribute region color determination unit; an image coding unit carrying out compression coding of two or more images which are created by the specific attribute region elimination image creation unit and the specific attribute pixel image creation unit respectively; and an integrated file creation unit creating an integrated file in which the coded images from the image coding unit are integrated.

According to the present invention, the sharp change of pixel value of the region (specific attribute region) with the specific attribute, such as the character region, is eliminated. Even if it is the compression technique which is not suitable for the image with the sharp change of the pixel value such as the JPEG compression encoding, is used, it is possible to make the compression efficiency appropriate. The compression efficiency for the region (specific attribute region) with the specific attribute, such as the character region, can be made suitable by reducing the color number sharply. Remarkable reduction of the file size can be attained without reducing the quality of image of the multi-level image used as the processing-object image too much. And the visibility of the pixels of the specific attribute region can be secured even when there is the region (specific attribute region) with the specific attribute, such as the character and the ruled line.

The above-mentioned image processing apparatus may be configured so that the specific attribute region color determination unit comprises: an image division unit dividing the multi-level image into fixed regions; and a color determination unit determining a color of each of the fixed regions created by the image division unit.

The above-mentioned image processing apparatus may be configured so that the color determination unit comprises a plurality of color determination units determining different colors respectively, and the color of the specific attribute region is determined using a selected one of the plurality of color determination units according to a classification of the size of the connection component given by the connection component size check unit.

The above-mentioned image processing apparatus may be configured so that the color determination unit comprises a plurality of color determination units determining different colors respectively, and one of the plurality of color determination units is selected between a case in which two or more pixels are located in the specific attribute region and a case in which two or more pixel units are located on a boundary of regions other than the specific attribute region and the specific attribute region, in order to determine the color of the specific attribute region.

The above-mentioned image processing apparatus may be configured so that the specific attribute region extraction unit is provided to change a resolution of the multi-level image to another resolution when the specific attribute region which is the region with the specific attribute is extracted from the multi-level image.

The above-described embodiments of FIG. 8 through FIG. 13 provide a computer program product embodied therein for causing a computer to execute an image processing method, the image processing method comprising the steps of: acquiring a multi-level image as a processing-object image; acquiring a binary image which is created based on the multi-level image; extracting a specific attribute region which is a region with a specific attribute from the multi-level image; changing pixels other than the specific attribute region in the binary image to white pixels; extracting a connection component of black pixels from the binary image in which the pixels other than the specific attribute region are changed to the white pixels by the white pixel substitution unit; classifying a size of the connection component; changing a too large or too small component to the white pixels; creating a multi-level image in which the pixels of the specific attribute region are changed by a background color; determining a color of the specific attribute region; creating an image of the specific attribute region having the color determined by the specific attribute region color determination step; carrying out compression coding of two or more images which are created by the specific attribute region elimination image creation step and the specific attribute pixel image creation step respectively; and creating an integrated file in which the coded images created in the image coding step are integrated.

The above-mentioned computer program product may be configured so that the specific attribute region color determination step comprises the steps of: dividing the multi-level image into fixed regions; and determining a color of each of the fixed regions created in the image dividing step.

The above-mentioned computer program product may be configured so that, in the color determining step, a plurality of color determination methods of determining different colors respectively are provided, and the color of the specific attribute region is determined using a selected one of the plurality of color determination methods according to a classification of the size of the connection component given in the connection component size check step.

The above-mentioned computer program product may be configured so that, in the color determining step, a plurality of color determination methods of determining different colors respectively are provided, and one of the plurality of color determination methods is selected between a case in which two or more pixels are located in the specific attribute region and a case in which two or more pixel units are located on a boundary of regions other than the specific attribute region and the specific attribute region, in order to determine the color of the specific attribute region.

The above-mentioned computer program product may be configured so that the specific attribute region extracting step is provided to change a resolution of the multi-level image to another resolution when the specific attribute region which is the region with the specific attribute is extracted from the multi-level image.

The above-described embodiments of FIG. 8 through FIG. 13 provide a computer-readable storage medium storing a program embodied therein for causing a computer to execute an image processing method, the image processing method comprising the steps of: acquiring a multi-level image as a processing-object image; acquiring a binary image which is created based on the multi-level image; extracting a specific attribute region which is a region with a specific attribute from the multi-level image; changing pixels other than the specific attribute region in the binary image to white pixels; extracting a connection component of black pixels from the binary image in which the pixels other than the specific attribute region are changed to the white pixels by the white pixel substitution unit; classifying a size of the connection component; changing a too large or too small component to the white pixels; creating a multi-level image in which the pixels of the specific attribute region are changed by a background color; determining a color of the specific tribute region; creating an image of the specific attribute region having the color determined by the specific attribute region color determination step; carrying out compression coding of two or more images which are created by the specific attribute region elimination image creation step and the specific attribute pixel image creation step respectively; and creating an integrated file in which the coded images created in the image coding step are integrated.

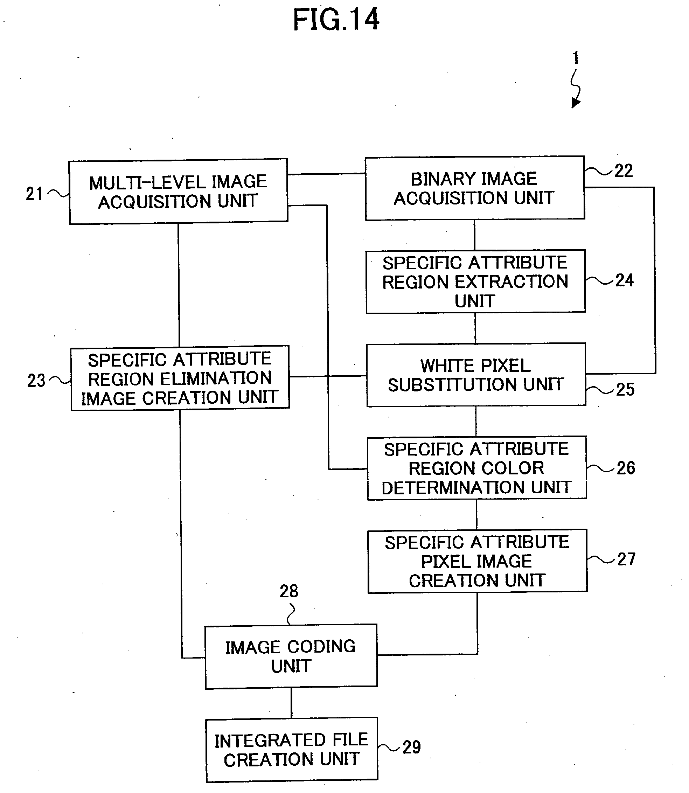

Next, another preferred embodiment of the invention will be explained with reference to FIG. 14 through FIG. 18.

In order to raise compressibility by using the method of FIG. 3, it is important to create the image containing only the background in which the characters are eliminated.

By eliminating the characters, the difference between the pixel values of the character region and the circumference region becomes small, and the compression efficiency by the image coding is increased and the occurrence of the mosquito noise can be suppressed.

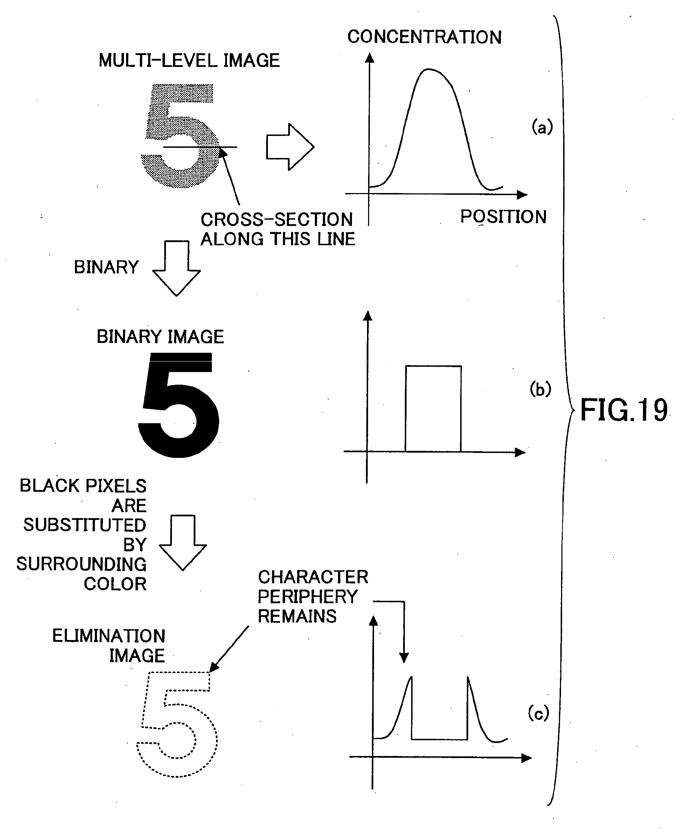

However, in the multi-level image, the edge portion of the character changes smoothly, as shown in FIG. 19 (a). Although the boundary monochrome in somewhere in positions which change smoothly using a certain threshold will be made when binarization is performed (FIG. 19 (b)), if the position which is the black pixel of the binary image is used as it is, it will remain, without eliminating the outline region of the character (FIG. 19 (c)).

Since the difference of the pixel value with the circumference will also remain, the region which remained will cause the decrease of the compression efficiency and the deterioration of the quality of image by the mosquito noise.

To resolve the problem, the technical objective of the present embodiment is to suppress the phenomenon the outline of the character remaining at the time of elimination, and aim at improvements in the compressibility and the quality of image.

FIG. 14 shows the functional composition of the image processing apparatus 1 in the present embodiment. In the present embodiment, the processing of the image processing apparatus 1 is realized based on the image processing program 13, as follows.

1. Multi-level image as the processing-object image and binary image based on the multi-level image are acquired

The multi-level image and the binary image are acquired with the multi-level-image acquisition unit 21 and the binary image acquisition unit 22 (S1, S2). Based on the multi-level image, the binary image is created.

What is necessary is for the creation of the binary image is to use the fixed threshold and change the pixels having the color brighter than the threshold into the white pixels and change the pixels having the color darker than the threshold into the black pixels. Moreover, it is possible that the binary image and the multi-level image have different resolutions.

For example, after creating the binary image by the above-mentioned method, the thinning-out processing may be carried out, the resolution of the multi-level image may be lowered, and such image may be acquired as the multi-level image of the processing object.

Furthermore, another device may be used to perform the binary image creation, and the resulting image file which is created by the other device may be acquired.

2. Character region is acquired

By using the specific attribute region extraction unit 24, the positions where the character exists in the original image are determined (S3). It does not matter even from the binary image even if it acquires from the multi-level image. When acquiring from the multi-level image, the character region extraction method known from Japanese Laid-Open Patent Application No. 2002-288589 may be used. When acquiring from the binary image, the character region extraction method known from Japanese Laid-Open Patent Application No. 06-020092 may be used. In the present embodiment, the pixels which constitute the character are extracted based on the binary image as the pixels having the specific attribute.

3. Pixels other than the character region are changed to white pixels

By using the white pixel substitution unit 25, the pixels other than the character region (the pixels other than the specific attribute region) in the binary image are changed to the white pixels (S4).

4. Pixels of the character region are changed by the background color

By using the specific attribute region elimination image creation unit 23, the image in which the specific attribute region (character region) is eliminated is created (S5). What is necessary is just to make the image which replaced the pixel of the character portion by the surrounding color in the color image.

5. Color of specific attribute region is determined

By using the specific attribute region color determination unit 26, the color of the specific attribute region (character region) is determined (S6). All the pixel colors of the color image at the positions of the black pixels which constitute the character are determined, and some of the major colors currently used in such color data are selected as the representative colors. And it is determined which of the representative colors is closest to the color of each of the pixels which constitute the character or to the color of each connection component.

6. Specific attribute pixel image creation

By using the specific attribute pixel image creation unit 27, the image in which the pixels with the specific attribute have the selected representative color for every pixel and for every connection component is created (S7). In this case, one binary image (or one multi-level image having only the limited colors) is created for each of the selected representative colors.

7. Image encoding

By using the image coding unit 28, the compression encoding is performed for the non-character image in which the specific attribute pixels are eliminated and the reduction-color image which contains only the specific attribute pixels so that the compressed images are created (S8). For example, the JPEG compression encoding is performed for the non-character image, and the MMR compression encoding is performed for the reduction-color image in order to reduce the file size efficiently.

8. Integrated file creation

By using the integrated-file creation unit 29, the compressed images are integrated into a single file (S9). If these images are integrated, it becomes the form where the character sticks on the background, and can regard as the original image similarly.

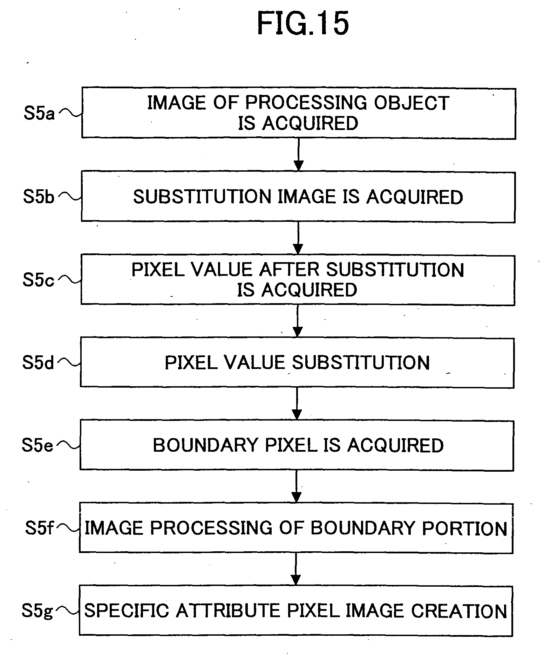

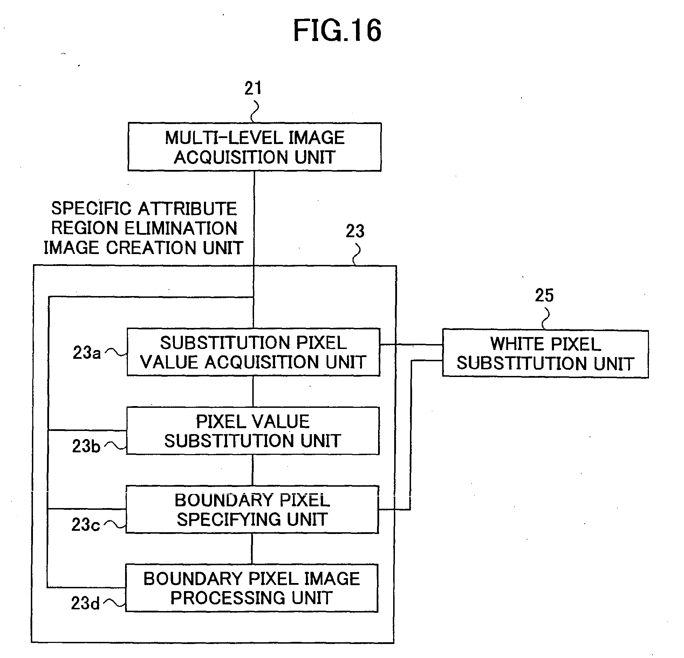

The processing of step S5 performed by the specific attribute region elimination image creation unit 23 by which it is characterized especially with the form of this operation is explained in detail with reference to the outline functional block diagram showing in the flowchart and FIG. 16 showing in FIG. 15. In addition, in FIG. 16, the component which is not directly related omits illustration and is simplified.

First, the processing-object image is acquired (S5a). The processing-object image is the original image of the multiple value, and can be acquired from the multi-level-image acquisition unit 21.

The pixel which replaces the pixel value is acquired (S5b). This is the binary image acquired at step S4, and the portion which is the black pixel corresponds. This image is acquirable with the white pixel substitution unit 25.

The pixel value after the replacement is acquired (S5c). The pixel value equivalent to the position of the white pixel of the circumference region of the black pixel which is the object which replaces is used as a pixel value after the replacement. This is acquired by substitution pixel acquisition unit 23a.

The pixel value after the replacement replaces the value of the pixel for the replacement using pixel value substitution unit 23b (S5d).

The boundary position of the replaced pixel and the pixel which is not replaced is acquired using boundary pixel specifying unit 23c (S5e). In the present embodiment, the 1 pixel which exists in the outside position of the boundary line of the black pixel which constitutes the character, and the white pixel which constitutes except the character is made into the boundary position, and it is aimed at the pixel concerned. In the example shown in the FIG. 6, the slash portion is the boundary pixel.

The image processing is performed to the pixel which exists in the boundary position using 23d of boundary pixel image processing units (S5f).

Some methods can be considered as applicable image processing. The pixel value after performing (R1,G1,B1), and image processing for the pixel value before performing image processing is set with (R2,G2,B2).

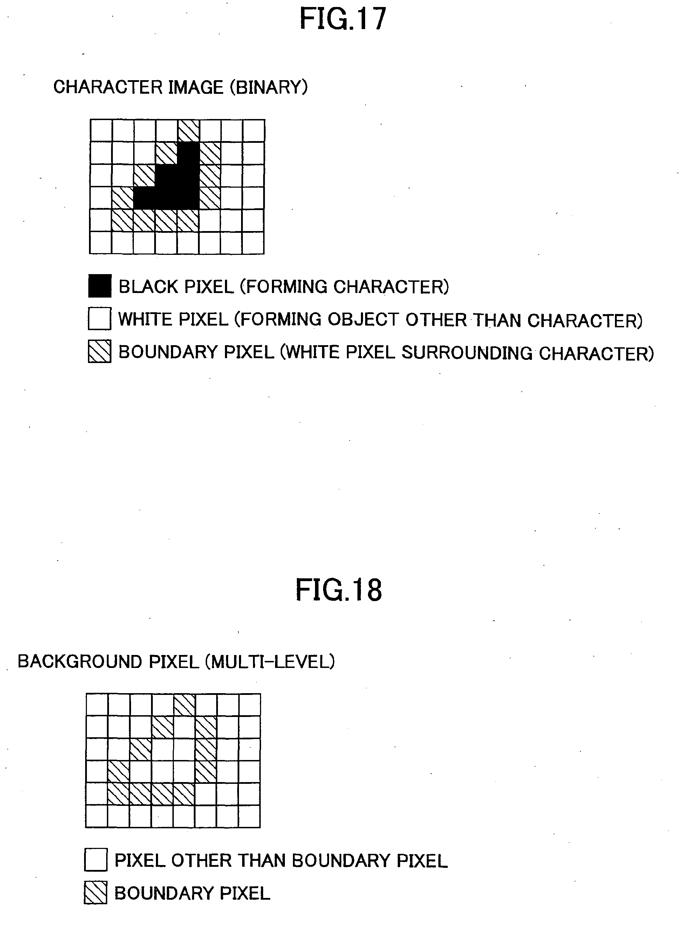

FIG. 18 shows the boundary pixel of the boundary position to be the multi-level image which eliminated the character. Image processing will be performed to the boundary pixel (slash portion).

a. Lightness compensation processing

It multiplies by the fixed values, such as $R2=R1xV$, $G2=G1xV$, and $B2=B1xV$ (V is the constant), and lightness is raised. Since the ratio of RGB each component does not change, only lightness will change in general.

b. Color tone compensation processing

The fixed values, such as $R2=R1+VR$, $G2=G1+VG$, and $B2=B1xVB$ (VR, VG, and VB are the constants), are applied. The color tone changes by applying the value which is different for RGB each component. Lightness will also change depending on the value.

c. Smoothing processing

If the value of the pixel which adjoins right and left is set with (RL, GL, BL), and (RR, GR, BR), the computation of $R2=(RL+RR+R1)/3$, $G2=(GL+GR+G1)/3$, $B2=(BL+BR+B1)/3$, will carry out the smoothing processing.

d. Weighted average operation processing

This processing can be also said to be a kind of smoothing. For example, the computation of $R2=(RL+RR+R1x2)/4$, $G2=(GL+GR+G1x2)/4$, $B2=(BL+BR+B1x2)/4$ can change the smoothing quantity of the character outline by changing weight.

By the above processing, in the image which eliminated the character, the character color which remained in the outline region fades, and the further improvement in compressibility and the suppression of the mosquito noise can be expected.

The above-described embodiments of FIG. 14 through FIG. 18 provide an image processing apparatus comprising: an image acquisition unit acquiring a processing-object image; a pixel acquisition unit acquiring pixels in the processing-object image which are subjected to pixel value substitution; a pixel value acquisition unit acquiring a pixel value after the pixel value substitution; a pixel value substitution unit changing pixel values of the acquired pixels by the acquired pixel value; a boundary pixel specifying unit determining boundary positions between the pixels which are subjected to the pixel value substitution and pixels in the processing-object image which are not subjected to the pixel value substitution; and a boundary pixel image processing unit performing image processing with respect to pixel values of pixels which are located at the boundary positions in the processing-object image.

According to the present invention, when performing elimination processing by replacing the pixel value about the predetermined pixel of the processing-object image with the predetermined pixel value, a predetermined image processing (for example, processing of lightness compensation, color tone compensation, smoothing, weighted average operation with the circumference pixel, etc.) is performed to the pixel portion with which the pixel value is not replaced in the outside position of the boundary line. The phenomenon in which the pixel portion concerned remains as an outline can be suppressed, and, therefore, improvement in compressibility and improvement in the quality of image can be aimed at.

The above-mentioned image processing apparatus may be configured so that the boundary pixel image processing unit is provided to perform the image processing with respect to pixel values of pixels in the processing-object image which are located outside the pixels subjected to the pixel value substitution.

The above-mentioned image processing apparatus may be configured so that the boundary position specifying unit is provided to acquire only the pixels in the processing-object image which are not subjected to the pixel value substitution.

The above-mentioned image processing apparatus may be configured so that the image processing is a lightness compensation processing.

The above-mentioned image processing apparatus may be configured so that the image processing is a color tone compensation processing.

The above-mentioned image processing apparatus may be configured so that the image processing is a smoothing processing.

The above-mentioned image processing apparatus may be configured so that the image processing is a weighted average operation processing associated with surrounding pixels.

The above-described embodiments of FIG. 14 through FIG. 18 provide an image processing method comprising the steps of: acquiring a processing-object image; acquiring pixels in the processing-object image which are subjected to pixel value substitution; acquiring a pixel value after the pixel value substitution; changing pixel values of the acquired pixels by the acquired pixel value; determining boundary positions between the pixels which are subjected to the pixel value substitution and pixels in the processing-object image which are not subjected to the pixel value substitution; and performing image processing with respect to pixel values of pixels which are located at the boundary positions in the processing-object image.

The above-described embodiments of FIG. 14 through FIG. 18 provide a computer program product embodied therein for causing a computer to execute an image processing method, the image processing method comprising the steps of: acquiring a processing-object image; acquiring pixels in the processing-object image which are subjected to pixel value substitution; acquiring a pixel value after the pixel value substitution; changing pixel values of the acquired pixels by the acquired pixel value; determining boundary positions between the pixels which are subjected to the pixel value substitution and pixels in the processing-object image which are not subjected to the pixel value substitution; and performing image processing with respect to pixel values of pixels which are located at the boundary positions in the processing-object image.

The above-mentioned computer program product may be configured so that the image processing is performed with respect to pixel values of pixels in the processing-object image which are located outside the pixels subjected to the pixel value substitution.

The above-mentioned computer program product may be configured so that in the boundary position determining step only the pixels in the processing-object image which are not subjected to the pixel value substitution are acquired.

The above-mentioned computer program product may be configured so that the image processing is a lightness compensation processing.

The above-mentioned computer program product may be configured so that the image processing is a color tone compensation processing.

The above-mentioned computer program product may be configured so that the image processing is a smoothing processing.

The above-mentioned computer program product may be configured so that the image processing is a weighted average operation processing associated with surrounding pixels.

The above-described embodiments of FIG. 14 through FIG. 18 provide a computer-readable storage medium storing a program embodied therein for causing a computer to execute an image processing method, the image processing method comprising the steps of: acquiring a processing-object image; acquiring pixels in the processing-object image which are subjected to pixel value substitution; acquiring a pixel value after the pixel value substitution; changing pixel values of the acquired pixels by the acquired pixel value; determining boundary positions between the pixels which are subjected to the pixel value substitution and pixels in the processing-object image which are not subjected to the pixel value substitution; and performing image processing with respect to pixel values of pixels which are located at the boundary positions in the processing-object image.

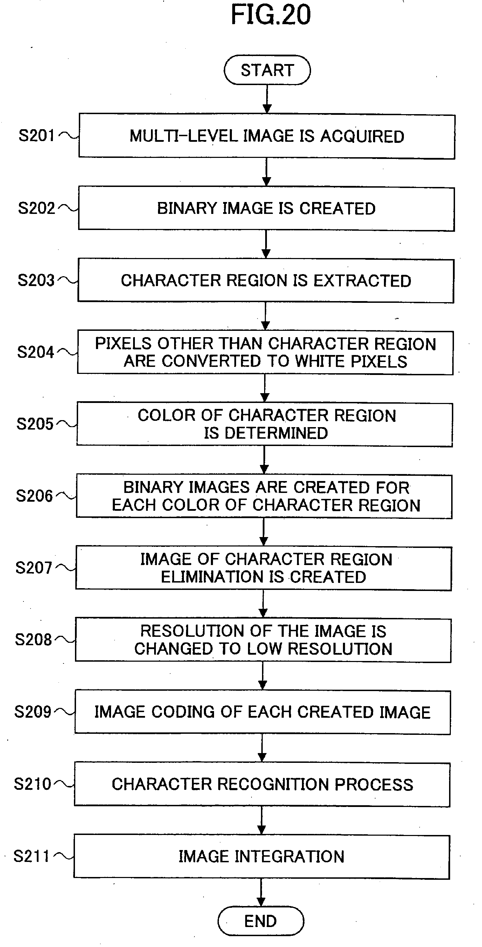

Next, another preferred embodiment of the invention will be explained with reference to FIG. 20 through FIG. 25.

In the present embodiment, while realizing the remarkable size reduction, without sacrificing the visibility of the character for the multi-level image as a processing-object image (original image) by using the image processing program 13, the retrieval based on the character code is enabled.

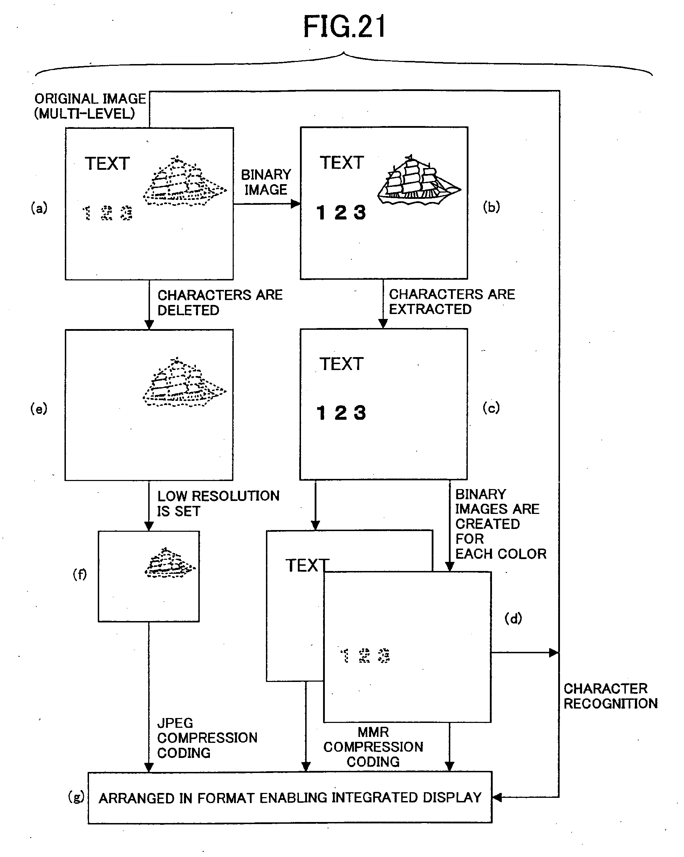

The outline of processing of this embodiment will be explained with reference to FIG. 20 and FIG. 21.

First, the multi-level image (color image) which is the original image used as the processing-object image as shown in FIG. 21 (a) using the image readers 10, such as the image scanner, is acquired (step S201).

And the binary image as shown in FIG. 21 (b) is created by binarizing such a multi-level image (step S202). Then, the character portion is extracted (step S203). And white pixel processing which transposes the pixels other than the character portion to the white pixel by the binary image is performed so that it may leave only the character portion, as shown in FIG. 21 (c) (step S204). That is, black pixels other than the character are eliminated in the binary image. This processing will show the position of the character per pixel.

The color of the character portion is determined in continuing step S205. Specifically, all the pixel colors of the color image which is in the position of the black pixel which constitutes the character portion are determined, and some of the major colors currently used are selected from this data as the representative colors. And it is determined whether every pixel and the pixel which constitutes the character for every connection component are the closest to which representative color.

Then, as shown in FIG. 21 (d), the image in which the pixel (character portion) with the specific attribute has every pixel and the color judged for every connection component is created (step S206). Although the multi-level image only with the limited color is sufficient and you may have every one binary image for every color, suppose that it has every one binary image for every color.

On the other hand, the multi-level image is made into the image in which the pixel value of the character portion is changed by the background color, and the image in which the character portion is eliminated is created as shown in FIG. 21 (e) (step S207). The image filled with the background color is regarded as what does not have the important information, and as shown in FIG. 21 (f), low-resolution processing is performed (step S208).

And the compression image is created from the low-resolution image which eliminated the character portion which it created at step S208, and the binary image for every color which consists only of the character portion which it created at step S206 (step S209). For example, if the former performs JPEG compression and the latter performs MMR compression, the file size will become small efficiently.

In the next step S210, character recognition processing is performed and the character code is created. Character recognition processing is performed to the original image (color image) or the binary character image (image which consists only of the character portion). Although the processing time requires the merit which performs character recognition processing to the original image (color image), highly precise character recognition processing is attained.

Although it is high-speed since character recognition processing will be performed to the binary image if character recognition processing is performed to the binary character image (image which consists only of the character portion) obtained by processing mentioned above on the other hand, the result obtained by the quality of the binary image obtained by processing may fall.

Then, what is necessary is to choose the image which performs character recognition processing and just to make it change it by whether performing character recognition processing at high speed is needed or performing character recognition processing with high precision is needed.

Furthermore, if the code with more high reliability is chosen when character recognition processing is performed in the original image and each character image, consequently the character codes of the character recognition result differ by the result of the same character image of the coordinate, it is possible to raise character recognition precision.

In addition, in this embodiment, it has the binary character image for every color, and precision improves by performing character recognition processing for every binary character image, respectively.

As for this, column writing and lateral writing are intermingled with the magazine, and identification division (for example, lateral writing) may be drawn in color with other another portions (for example, column writing). When character recognition processing of this is performed, it might be said that extraction of the line goes wrong.

However, in the present embodiment, since another binary image is created for every color and it creates the two images of the identification division (for example, lateral writing) from which the color differs, and other portions (for example, column writing), character recognition precision improves.

Moreover, in the present embodiment, it has the binary character image for every color and to perform character recognition processing for every binary character image, respectively, character recognition processing of multiple times is needed, and the subject whose processing is impossible at high speed occurs. Then, it is possible to make it attain improvement in the speed of processing by carrying out OR processing of the binary character image for every color, and performing character recognition processing as a character image of the one sheet to process at high speed.

Then, there is arranged, with the same position relation as the original image maintained, in the format (for example, PDF file type) which can be integrated and displayed such that it includes the non-character image (image in which the character portion is eliminated), the binary character image (image in which only the character portion is included), and the character code of the character recognition result, and its position coordinate (step S211).

The visibility of the image can realize the image retrieval by the character code etc. by embedding the character code to compound and its position coordinate in the form of the transparent text at the layer different from the image, without making it fall.

In addition, although compounded by the PDF file type, it may compound by the method which has multilayer ability, such as not only the PDF file type but JPEG2000 form, and, of course, it does not matter even if it keeps it by multiple files.

While remarkable compression of the file size is attained without the image file which such processing created reducing the visibility, it becomes possible to search based on the character code. The reason is as follows.

Although JPEG compression does not have so good compression efficiency about the image with the sharp change of the pixel value, if the character portion is eliminated by the method described here, since pixel value change of the character portion will be lost, efficiency becomes good.

Moreover, since the character portion reduces the color number sharply, also in this, compression efficiency becomes good.

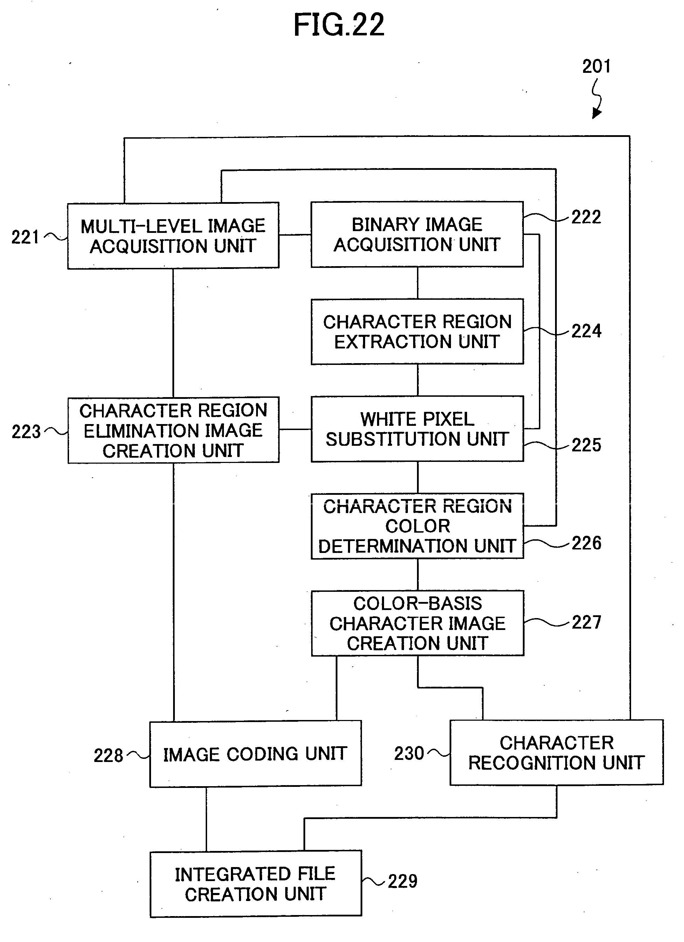

With reference to FIG. 22 which shows the functional block diagram of the function in which the image processing apparatus 1 concerned realizes the details of such procedure based on the image processing program 13, it explains in detail.

1. Multi-level image as a processing-object image and binary image based on this are acquired

The multi-level image and the binary image are acquired with the multi-level-image acquisition unit 221 and the binary image acquisition unit 222 (steps S201 and S202).

Based on the multi-level image, it should create the binary image. What is necessary is for the method of binarizing to be the fixed threshold and just to take the methods, like make the pixel brighter than the threshold into the white pixel, and it makes the dark pixel the black pixel.

Moreover, different resolution is sufficient as the binary image and the multi-level image. For example, after creating the binary image by the method, thinning-out processing may be carried out, the resolution of the multi-level image may be lowered, and this may be acquired as a multi-level image of the processing object.

Furthermore, another device may perform the binary image creation and the image file which it created may be acquired.

2. Character region is acquired

By the character portion extraction unit 224, the position where the character exists on the image is created (step S203). In the present embodiment, the position of the pixel which constitutes the character as a pixel having the specific attribute is determined based on the binary image.

3. Pixels other than character region are changed to white pixels

By the white pixel substitution unit 225, the pixels other than the character portion are changed to the white pixels in the binary image (step S204).

4. Color of character region is determined

The character region color determination unit 226 determines the color of the character portion (step S205). All the pixel colors of the color image in the position of the black pixel which constitutes the character are determined, and some of the major colors currently used are selected from this data as the representative colors. And it is determined whether every pixel and the pixel which constitutes the character for every connection component are the closest to which representative color.

5. Color image is created

By the character image creation unit 227, the image in which the pixel (character portion) with the specific attribute has every pixel and the color judged for every connection component is created the whole color (step S206). Although the multi-level image only with the limited color is sufficient and you may have every one binary image for every color, suppose that it has every one binary image for every color.

### 6. Non-character multi-level image creation

The multi-level image in which pixel value of the character portion of the multi-level image corresponding to the black pixel portion which remained by processing of the item 3 is changed by the background color, and does not have the character is created by the character partial elimination image creation unit 223 (step S207).

### 7. Image coding

By the image coding unit 228, the binary image for every color which consists only of the multi-level image without the character and the character is encoded, and the size is compressed (step S209). Among these, the information with the already important multi-level image without the character considers that there is nothing, and carries out irreversible compression highly by JPEG etc. If it compresses after dropping resolution, size will become small further.

Moreover, reversible compression of the binary image for every color which includes only the character is carried out.

If it is the binary image and PNG compression, MMR compression, etc. are the images, such as the 4 values and 16 value, it is good to use PNG compression etc.

### 8. Character recognition

By the character recognition unit 230, character recognition processing is performed to the original image (color image) or the binary character image (image which consists only of the character portion), and the character code is created (step S210).

Especially character recognition processing may not limit the method, and should just use the method of character recognition that proposals various until now are performed.

However, as a result of character recognition, the position coordinate other than the character code of the character recognition result is needed.

### 9. Integrated-File Creation

By the integrated-file creation unit 229, the compressed images are integrated into one file (step S211). If it collects into the file of the format which is made to repeat mutually and can be displayed, it can consider as the small color image of the file size by which the visibility of the character portion did not fall and the background was also reproduced to some extent.

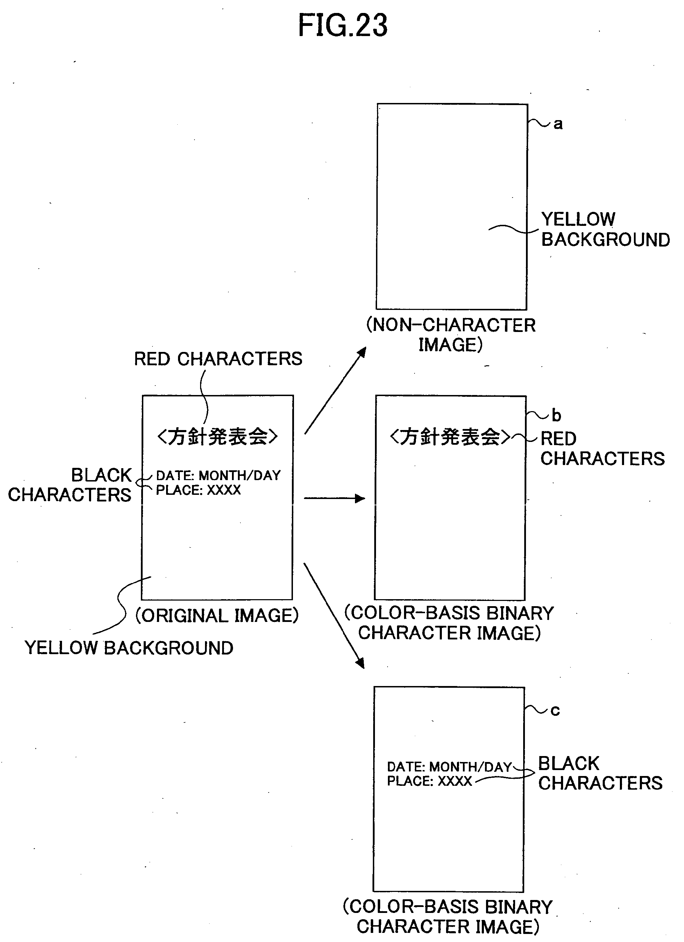

Next, an example of the above processing will be explained with reference to FIG. 23 through FIG. 25.

In the example shown in FIG. 23, on the yellow background, the original image (color image) is indicated to be "<方 針発表会 "plan meeting">" in the red characters, and indicated to be the "date: month xx date xx" and "place xxx" in the black characters.

The processing mentioned above creates, from such an original image (color image), the non-character image a of only the yellow background, the binary character image b of the red character, and the binary character image c of the black character.

Subsequently, character recognition processing is performed. Here, character recognition processing shall be performed to the original image (color image).

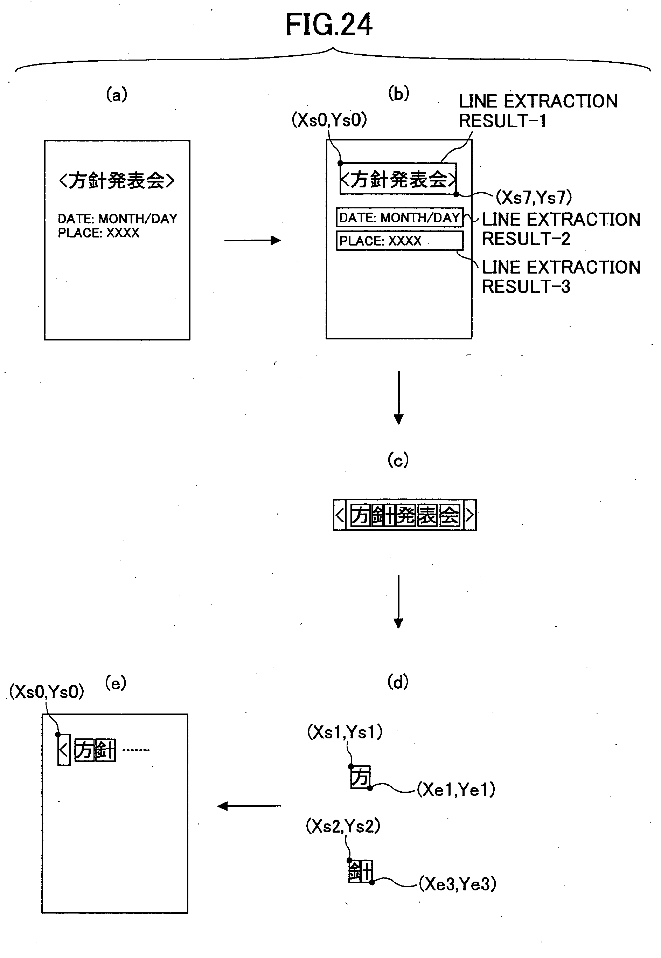

The character recognition processing performs region discernment processing to the original image (color image) shown in FIG. 24 (a) first, and extracts the character row.

In the example shown in FIG. 24, the three lines, "< plan meeting >", the "date: month xx date xx", and "place xxx", are extracted (refer to FIG. 24 (b)).

In addition, region discernment processing may be realized by using the technology known from Japanese Patent No. 3278471 etc.

Next, the character in the extracted character row is extracted. Here, the example which makes the character the black connection component (lump of the black pixel) of the binary image is shown.

FIG. 24 (c) shows as a result of character extraction of the line extraction result 1. However, like the "meeting", even when the original black connection component is divided into the plurality, logging of the character like FIG. 24 (c) of the black connection component with the overlap in the direction of length (it is perpendicularly to the line writing direction) becomes possible by image integration.

However, the 針 "needle" will be divided into the 金 "gold" and + "10" as shown in FIG. 24 (c). What is necessary is just to make it the "needle" choose about this choice of "needle" or "gold" plus "10" by utilizing the processing called path selection of character recognition processing, or the language processing.

Consequently, each character coordinate is acquired with the right character string "<plan meeting>" (refer to FIG. 24 (d)).

Finally the character code of the character recognition result is stuck on the position united with the character coordinate, and the character result plane is created (refer to FIG. 24 (e)).

Although the character code "< plan ..." can be seen in the example shown in FIG. 24 (e), since it sticks as a transparent text in practice (the color mapping is specified as transparent), and it is invisible to the human eyes.

However, when referring to the personal computer etc., since there is the plane to which the text code stuck, the retrieval becomes possible.

Moreover, it becomes possible by sticking the character recognition result on the same coordinate position as the original image to tell the user about the retrieval position by carrying out highlighting of the character code, or carrying out the inverse video as a result of the retrieval.

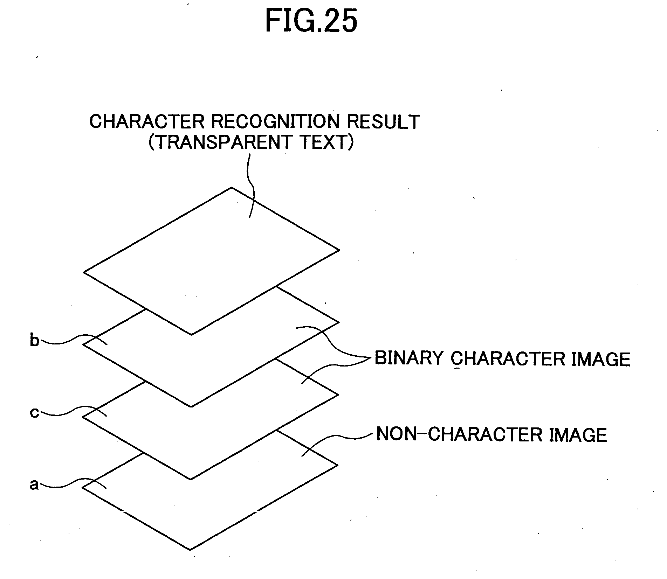

Finally, as shown in FIG. 25, there is arranged, with the same position relation as the original image maintained, in the format (for example, PDF file type) which can be integrated and displayed such that it includes the non-character image which is the background image, the binary character image for every color, the character code of the character recognition result, and its position coordinate.

The visibility of the image can realize the image retrieval by the character code etc. by embedding the character code to compound and its position coordinate in the form of the transparent text at the layer different from the image, without making it fall.

The multi-level image which is the processing-object image, and the binary image based on this are prepared, and the character portion is extracted from the binary image, and while creating the binary character image with which the pixels other than the character portion were replaced by the white pixel and creating the non-character multi-level image by which the pixel of the character portion in the multi-level image was buried by the background color, it creates the binary character image which consists of the color which constitutes the character portion.

In addition, character recognition processing is performed at least to one of the binary character image which consists of each color determined, and the multi-level image, and the character code is acquired. And the binary character image which consists of each color determined, and the non-character multi-level image are encoded respectively and integrated with the character code into the integrated file.

It is possible to perform file-size reduction sharply, without reducing the quality of image of the multi-level image used as the processing-object image too much, securing the visibility about the pixel of the character portion even when there is the character portion. It is possible to create the highly compressed data enabling searching and maintaining the quality of image, since it becomes possible to perform searching based on the character code.

Moreover, it becomes possible by having the binary character image for every color to aim at improvement in character recognition precision by performing character recognition processing for every binary character image, respectively.

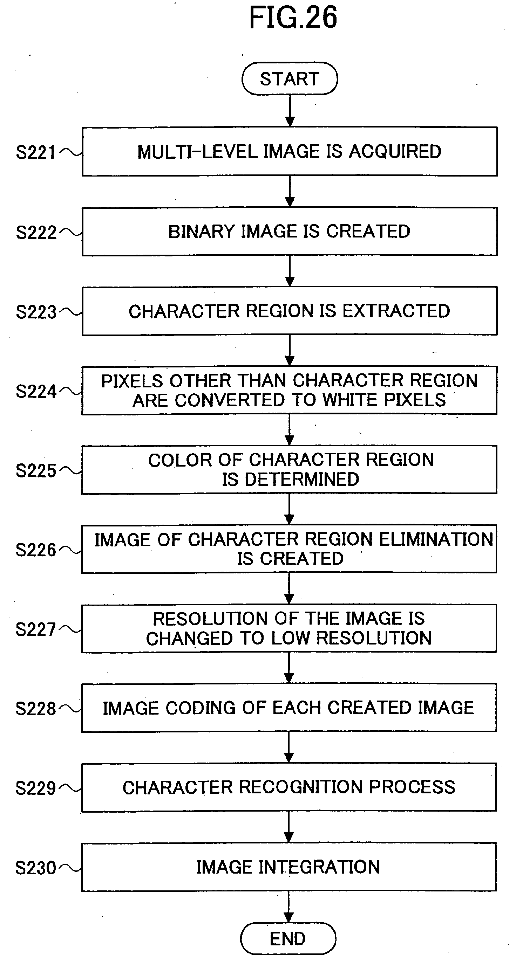

Next, another preferred embodiment of the invention will be explained with reference to FIG. 26 through FIG. 30.

The elements which are the same as the corresponding elements in the previous embodiment are designated by the same reference numerals, and a description thereof will be omitted.

Although it shall have the binary character image for every color in the previous embodiment, it does not have the binary character image for every color, but is made to create the color information of each character apart from the binary character image in this embodiment.

In the present embodiment, while realizing the remarkable size reduction, without sacrificing the visibility of the character for the multi-level image as a processing-object image (original image) by using the image processing program 13, the retrieval based on the character code is enabled.

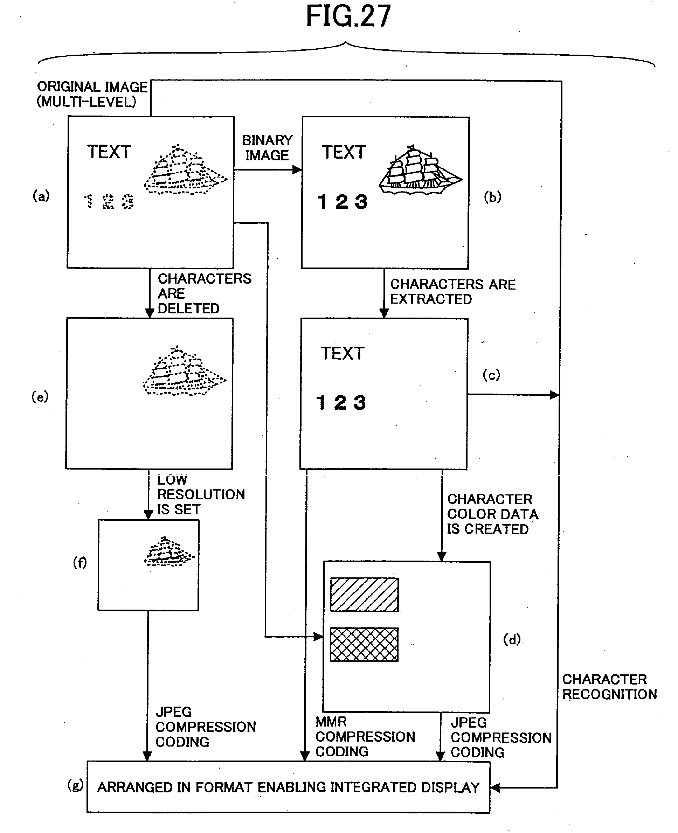

The outline of processing of the present embodiment will be explained with reference to FIG. 26 and FIG. 27.

First, the multi-level image (color image) which is the original image used as the processing-object image as shown in FIG. 27 (a) using the image readers 10, such as the image scanner, is acquired (step S221). And the binary image as shown in FIG. 27 (b) is created by binarizing such a multi-level image (step S222).

Then, the character portion is extracted (step S223). And white pixel processing which transposes the pixels other than the character portion to the white pixel by the binary image is performed so that it may leave only the character, as shown in FIG. 27 (c) (step S224). That is, black pixels other than the character are eliminated in the binary image. This processing will show the position of the character per pixel.

In the next step S225, as shown in FIG. 27 (d), the color information of each character is created.

On the other hand, the multi-level image makes it the image which buried the character portion by the background color, and creates the image which eliminated the character portion as shown in FIG. 27 (e) (step S226).

The image filled with such background color is considered as what does not have the important information, and as shown in FIG. 27 (f), low-resolution processing is performed (step S227).

And the compression image is created from the low-resolution image which eliminated the character portion which it created at step S227, the binary character image which eliminated black pixels other than the character which it created at step S224, and the color information of the character which it created at step S224 (step S228).

For example, if MMR compression and the color information of the character perform JPEG compression in the binary character image from which the low-resolution image which eliminated the character portion eliminated black pixels other than JPEG compression and the character portion, the file size will become small efficiently.

In continuing step S229, the same character recognition processing as step S210 of the form of the first operation is performed, and the character code is created.

Then, there is arranged, with the same position relation as the original image maintained, in the format (for example, PDF file type) which can be integrated and displayed such that it includes the non-character image (image in which the character portion is eliminated), the binary character image (image in which only the character portion is included), the color information of the characters, the character code of the character recognition result, and its position coordinate (step S230).

The visibility of the image can realize the image retrieval by the character code etc. by embedding the character code to compound and its position coordinate in the form of the transparent text at the layer different from the image, without making it fall.

In addition, although compounded by the PDF file type, it may compound by the method which has multilayer ability, such as not only the PDF file type but JPEG2000 form, and, of course, it does not matter even if it keeps it by multiple files here.

While remarkable compression of the file size is attained without the image file which such processing created reducing the visibility, it becomes possible to search based on the character code. The reason is as follows.

Although JPEG compression does not have so good compression efficiency about the image with the sharp change of the pixel value, if the character portion is eliminated by the method described here, since pixel value change of the character portion will be lost, efficiency becomes good.

Moreover, since the character portion reduces the color number sharply, also in this, compression efficiency becomes good.

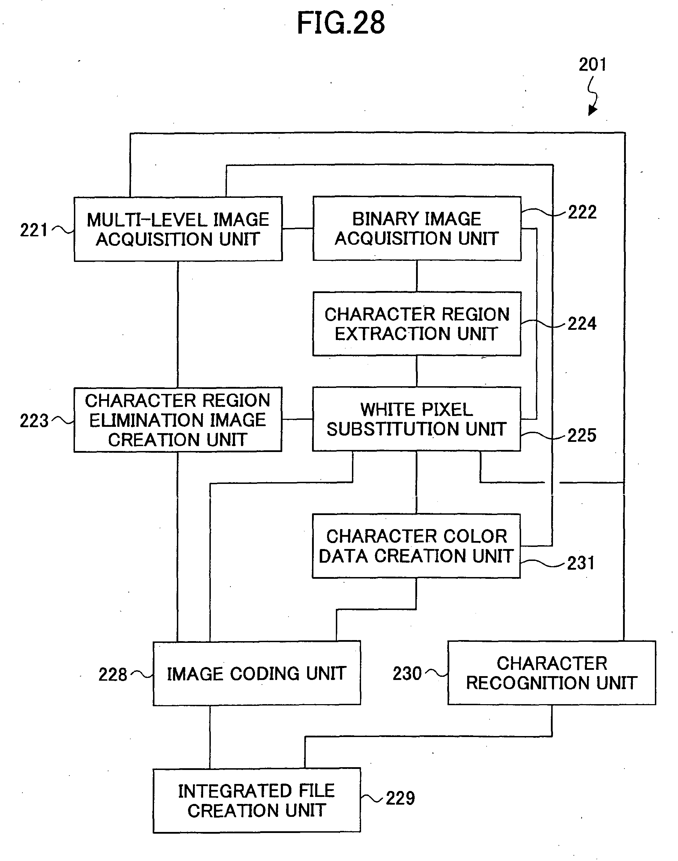

With reference to FIG. 28 which shows the functional block diagram of the function in which the image processing apparatus 1 concerned realizes the details of such procedure based on the image processing program 13, it explains in detail.

1. Multi-level image as a processing-object image and binary image based on this are acquired

The multi-level image and the binary image are acquired with the multi-level-image acquisition unit 221 and the binary image acquisition unit 222 (steps S221 and S222).

Based on the multi-level image, it should create the binary image. What is necessary is for the method of binarizing to be the fixed threshold and just to take the method, like setting the pixel brighter than the threshold into the white pixel, and setting the dark pixel the black pixel.

Moreover, different resolution is sufficient as the binary image and the multi-level image. For example, after creating the binary image by the method, thinning-out processing may be carried out, the resolution of the multi-level image may be lowered, and this may be acquired as a multi-level image of the processing object. Furthermore, another device may perform the binary image creation and the image file which it created may be acquired.

2. Character region is acquired

By the character partial extraction unit 224, the position where the character exists on the image is created (step S223). In the present embodiment, the position of the pixel which constitutes the character as a pixel having the specific attribute is determined based on the binary image.

3. Pixels other than character are changed to white pixels

By the white pixel substitution unit 225, the pixels other than the character portion are transposed to the white pixels in the binary image (step S224).

4. Color information of each character is created

The color information of each character is created by the character color information creation unit 231. Here, the character color information code expressing the color information of the character image is created.

5. Non-character multi-level image creation

The multi-level image in which the character portion of the multi-level image corresponding to the black pixel portion which remained by processing of the item 3 is changed by the background color and does not have the character is created by the character partial elimination image creation unit 223 (step S226).

6. Image coding

By the image coding unit 228, the color information of the binary character image and each character which consist only of the multi-level image without the character and the character is encoded, and the size is compressed (step S228). Among these, the information with the already important multi-level image without the character considers that there is nothing, and carries out irreversible compression highly by JPEG etc. If it compresses after dropping resolution, size will become small further.

Moreover, reversible compression of the binary character image which consists only of the character is carried out. If it is the binary image and PNG compression, MMR compression, etc. are the images, such as the 4 values and 16 value, it is good to use PNG compression etc. Furthermore, irreversible compression of the color information of each character is highly carried out by JPEG etc.

7. Character recognition

By the character recognition unit 230, character recognition processing is performed to the original image (color image) or the binary character image (image which consists only of the character portion), and the character code is created (step S229).

Especially character recognition processing may not limit the method, and should just use the method of character recognition that proposals various until now are performed. However, as a result of character recognition, the position coordinate other than the character code of the character recognition result is needed.

8. Integrated-file creation

By the integrated-file creation unit 229, the compressed images are integrated into one file (step S230). If it collects into the file of the format which is made to repeat mutually and can be displayed, it can consider as the small color image of the file size by which the visibility of the character portion did not fall and the background was also reproduced to some extent.

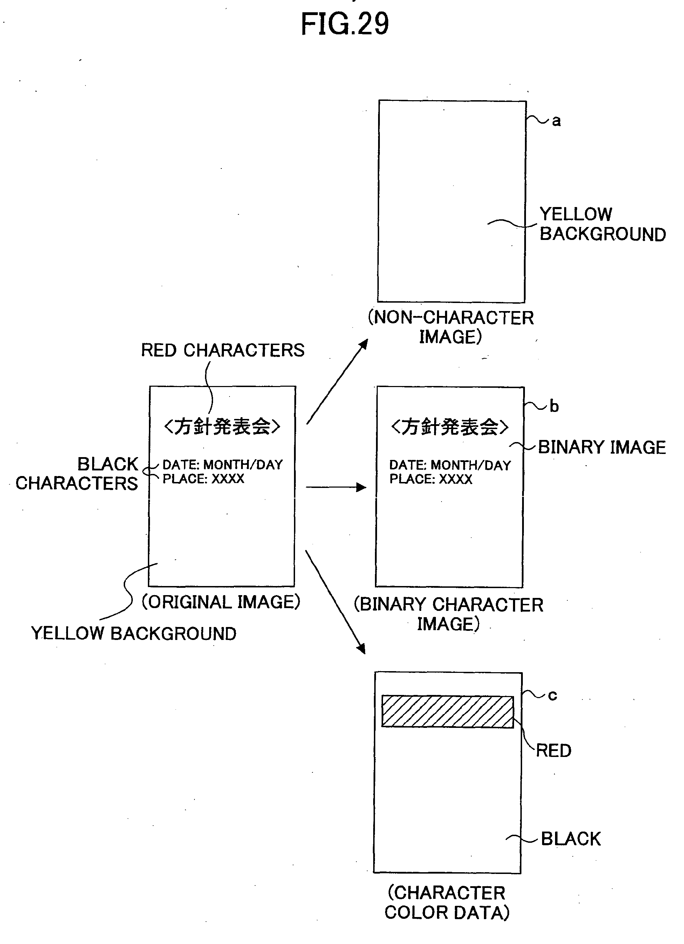

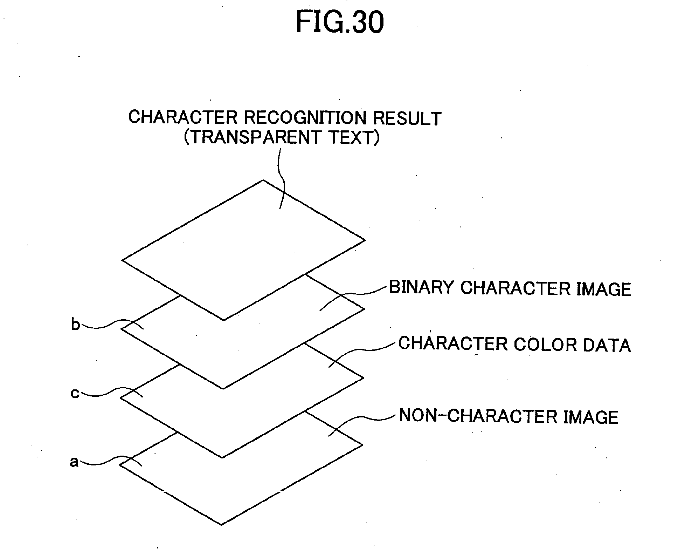

Next, an example of the above processing will be explained with reference to FIG. 29 and FIG. 30.

In the example shown in FIG. 29, the original image (color image) is indicated on the yellow background, to be "< 方針発 表会  plan meeting">" in the red characters, and indicated to be the "month xx date xx" and "place xxx" in the black characters.

The processing mentioned above creates such an original image (color image) at the non-character image a of only the yellow background, the binary character image b, and the character color information c.

In addition, the character recognition processing is the same as that in the previous embodiment, and a description thereof will be omitted.

Finally, as shown in FIG. 30, there is arranged, with the same position relation as the original image maintained, in the format (for example, PDF file type) which can be integrated and displayed such that it includes the non-character image which is the background image, the binary character image, the color information of the character, the character code of the character recognition result, and its position coordinate.

The visibility of the image can realize the image retrieval by the character code etc. by embedding the character code to compound and its position coordinate in the form of the transparent text at the layer different from the image, without making it fall.

The multi-level image which is the processing-object image, and the binary image based on this are prepared here, and the character portion is extracted from the binary image, and while creating the binary character image with which the pixels other than the character portion were replaced by the white pixel and creating the non-character multi-level image by which the pixel of the character portion in the multi-level image was buried by the background color, it creates the color information of each character portion of the binary character image.

In addition, character recognition processing is performed at least to one of the multi-level image and the binary character image, and the character code is acquired. And the color information of each character portion of the binary character image, the non-character multi-level image, and the binary character image are encoded respectively and integrated with the character code into the integrated file.

Even when there is the character portion, it is possible to perform file-size reduction sharply, without reducing the quality of image of the multi-level image used as the processing-object image too much, while securing the visibility about the pixel of the character portion.

Since it becomes possible to perform searching based on the character code, it is possible to create the highly compressed date enabling searching and maintaining the quality of image.

The above-described embodiments of FIG. 20 through FIG. 30 provide an image processing apparatus comprising: a multi-level image acquisition unit acquiring a multi-level image which is a processing-object image; a binary image acquisition unit acquiring a binary image which is created based on the multi-level image; a binary character image creation unit creating a binary character image in which pixels other than a character region, extracted from the binary image, are changed to white pixels; a non-character multi-level image creation unit creating a non-character multi-level image in which pixels of the character region in the multi-level image are changed by a background color; a color determination unit determining colors of the pixels of the character region; a color-basis character image creation unit creating a binary character image for each of the determined colors respectively; a character recognition unit performing a character recognition processing for at least one of the multi-level image and the binary character images for the determined colors so that a character code is acquired; and an integrated file creation unit performing a compression coding for each of the character code, the non-character multi-level image, and the binary character images for the determined colors, respectively, and creating an integrated file in which the coded images are integrated.

According to the present invention, the multi-level image which is the processing-object image, and the binary image based on this are acquired, the character portion is extracted from the binary image, the binary character image in which the pixels other than the character portion are changed to the white pixels is created, the non-character multi-level image in which the pixel value of the character portion in the multi-level image is changed by the background color is created, and the binary character image which includes the color which constitutes the character portion is created. In addition, character recognition processing is performed at least to one side with the binary character image which includes each color determined as the multi-level image, and the character code is acquired. And by encoding respectively the binary character image which includes each color determined and the non-character multi-level image, so that the integrated file is created with the character code. It is possible to perform file-size reduction sharply without reducing the quality of image of the multi-level image used as the processing-object image too much, and the visibility about the pixel of the character portion can be secured even when there is the character portion.

The above-described embodiments of FIG. 20 through FIG. 30 provide an image processing apparatus comprising: a multi-level image acquisition unit acquiring a multi-level image which is a processing-object image; a binary image acquisition unit acquiring a binary image which is created based on the multi-level image; a binary character image creation unit creating a binary character image in which pixels other than a character region, extracted from the binary image, are changed to white pixels; a non-character multi-level image creation unit creating a non-character multi-level image in which pixels of the character region in the multi-level image are changed by a background color; a character color data creation unit creating color data of the pixels of the character region; a character recognition unit performing a character recognition processing for at least one of the multi-level image and the binary character images for the determined colors so that a character code is acquired; and an integrated file creation unit performing a compression coding for each of the color data, the character code, the non-character multi-level image, and the binary character images for the determined colors, respectively, and creating an integrated file in which the coded images are integrated.

The above-mentioned image processing apparatus may be configured so that the character code is embedded in a form of transparent text in a layer different from the images.

The above-mentioned image processing apparatus may be configured so that the character code is embedded with position coordinates thereof in a form of transparent text in a layer different from the images.

The above-described embodiments of FIG. 20 through FIG. 30 provide a computer program product embodied therein for causing a computer to execute an image processing method, the image processing method comprising the steps of: acquiring a multi-level image which is a processing-object image; acquiring a binary image which is created based on the multi-level image; creating a binary character image in which pixels other than a character region, extracted from the binary image, are changed to white pixels; creating a non-character multi-level image in which pixels of the character region in the multi-level image are changed by a background color; determining colors of the pixels of the character region; creating a binary character image for each of the determined colors respectively; performing a character recognition processing for at least one of the multi-level image and the binary character images for the determined colors so that a character code is acquired; and performing a compression coding for each of the character code, the non-character multi-level image, and the binary character images for the determined colors, respectively, and creating an integrated file in which the coded images are integrated.

The above-described embodiments of FIG. 20 through FIG. 30 provide a computer program product embodied therein for causing a computer to execute an image processing method, the image processing method comprising the steps of: acquiring a multi-level image which is a processing-object image; acquiring a binary image which is created based on the multi-level image; creating a binary character image in which pixels other than a character region, extracted from the binary image, are changed to white pixels; creating a non-character multi-level image in which pixels of the character region in the multi-level image are changed by a background color; creating color data of the pixels of the character region; performing a character recognition processing for at least one of the multi-level image and the binary character images for the determined colors so that a character code is acquired; and performing a compression coding for each of the color data, the character code, the non-character multi-level image, and the binary character images for the determined colors, respectively, and creating an integrated file in which the coded images are integrated.

The above-mentioned computer program product may be configured so that the character code is embedded in a form of transparent text in a layer different from the images.

The above-mentioned computer program product may be configured so that the character code is embedded with position coordinates thereof in a form of transparent text in a layer different from the images.

The above-described embodiments of FIG. 20 through FIG. 30 provide a computer-readable storage medium storing a program embodied therein for causing a computer to execute an image processing method, the image processing method comprising the steps of: acquiring a multi-level image which is a processing-object image; acquiring a binary image which is created based on the multi-level image; creating a binary character image in which pixels other than a character region, extracted from the binary image, are changed to white pixels; creating a non-character multi-level image in which pixels of the character region in the multi-level image are changed by a background color; determining colors of the pixels of the character region; creating a binary character image for each of the determined colors respectively; performing a character recognition processing for at least one of the multi-level image and the binary character images for the determined colors so that a character code is acquired; and performing a compression coding for each of the character code, the non-character multi-level image, and the binary character images for the determined colors, respectively, and creating an integrated file in which the coded images are integrated.

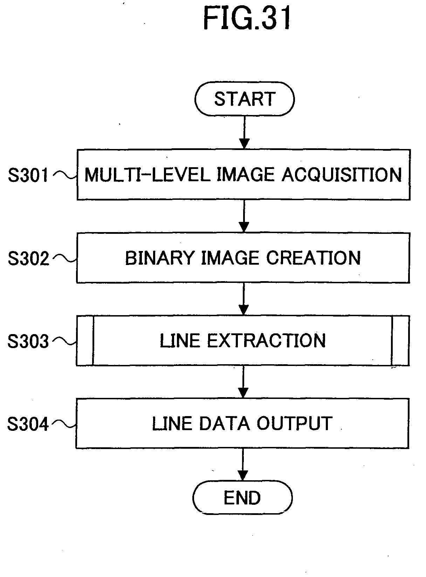

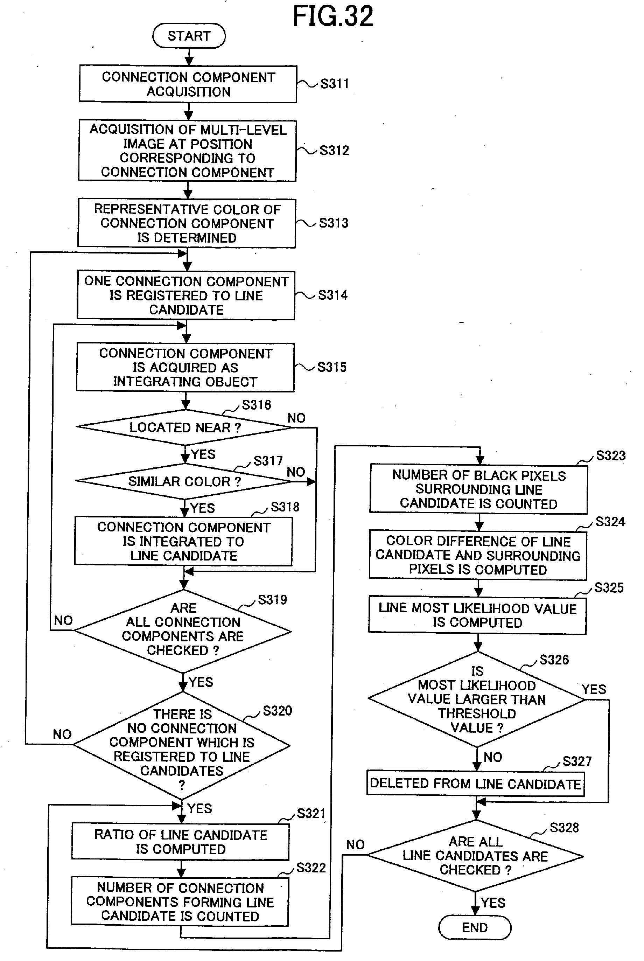

Next, with reference to FIG. 31 and FIG. 32, another preferred embodiment of the invention will be described.

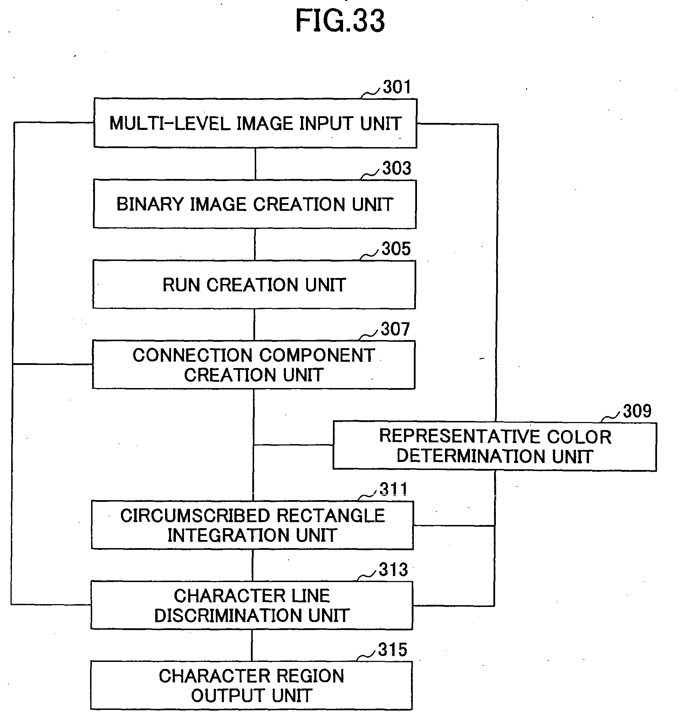

FIG. 31 shows the processing flow of the image-processing method concerning the present embodiment, and FIG. 32 shows the detailed flow of the line extraction processing (S303) in FIG. 31. Moreover, FIG. 33 shows the composition of the image processing apparatus concerning the present embodiment.

In the image processing apparatus of FIG. 33, the multi-level-image input unit 301 is a device (which can operate with a document reading device which outputs color image data, such as the scanner and the image pick-up device) which acquires and stores the original image of the processing object, and sends out the original multi-level-image data acquired by the multi-level-image input unit 301 to the binarization unit 303, the connection-component creation unit 307, the representative color determination unit 309, and the character line determination unit 313.

In addition, although the shaded image is sufficient as the multi-level image, the following explanation will be given assuming the multi-level image as a color image.

The binarization unit 303 changes color image (R, G, B) data into binarization data, and outputs the resulting binary image data to the run creation unit 305. In addition, the unit which carries out binarization of the color image (RGB) data can be carried out by using the various methods, such as applying predetermined threshold processing to the data of G color, for example, and is not limited to the specific method.

The run creation unit 305 is a device which creates the pixel run from the binarization image, and sends out the run which created from the black pixel to the connection-component creation unit 307. The connection-component creation unit 307 is a device which creates the connection component from the pixel run, and sends out the resulting connection component to the representative color determination unit 309 and the circumscribed rectangle integration unit 311.

The representative color determination unit 309 acquires the pixel value (R, G, B) of the original processing-object multi-level image corresponding to the pixel which constitutes the connection component obtained with the connection-component creation unit 305, and determines the pixel value which represents the connection component for every connection component based on the acquired pixel value, and sends out the determined representative pixel value to the circumscribed rectangle integration unit 311 and the character line determination unit 313.

The circumscribed rectangle integration unit 311 unifies the circumscribed rectangle of the connection component created with the connection-component creation unit 307, and sends it out to the character line determination unit 313.

The character line determination unit 313 determines the line likelihood ratio of the circumscribed rectangle (character line candidate) unified with the circumscribed rectangle integration unit 311, deletes the character line judged as the line likelihood ratio being low, and sends out the obtained proper character line to the character region output unit 315.

The character region output unit 315 is an output device which outputs the coordinate judged to be the character line.

Next, the image-processing method concerning the present embodiment will be explained with reference to the flowcharts of FIG. 31 and FIG. 32.

In addition, the following explanation serves as explanation of the operation of the above-mentioned image processing apparatus (FIG. 33).

According to the flowchart of FIG. 31, the document to process is first acquired as an original image (color image) by the multi-level-image input unit 301 (step S301).

The color image acquired takes the form of each pixel data of R, G, and B which are detected in the main and sub scanning method by the image sensor.

Subsequently, the binarization image is obtained for the color (multiple value) image used as the processing object by the binarization unit 303 (step S302).

The method of binarization sets up the fixed threshold, and compares the threshold and pixel value (for example, pixel data of G color), and it can carry out by adopting the method, such as making the pixel brighter than the threshold into white, and making the dark pixel into black.

Although extraction processing of the subsequent character lines is performed based on the acquired black pixel data, even if it carries out binarization of the color (multiple value) image used as the processing object, and it takes such a procedure first the white character receiving exceptional the omission in extraction being generated (in the below-mentioned embodiment, showing the correspondence to the white character) about almost all characters, there are very few possibilities of causing the omission in extraction.

Extraction of the character line will be explained with reference to the flowchart of FIG. 32.

First, the connection component of the black pixel is acquired based on the binary image data (step S311). This processing creates the list of the black pixel by which the run creation unit 305 adjoins horizontally based on binary image data as a run of the black pixel. In addition, the run is the concept which indicates the array of continuation pixels when continuation pixel data takes the same value.

In the binary image treated by the facsimile etc., it is just going to be known by the example made into the unit of coding by considering the lump of the white pixel which continues in the direction of the single dimension, or the black pixel as "the run" well.

The connection-component creation unit 307 creates the group produced by putting in a row what touch perpendicularly about the run of the black pixel on a par with horizontally it created as a connection component. Thus, the array of the pixels which constitute the character will be extracted as a connection component.

Next, the representative color determination unit 309 determines the representative color of each connection component. The pixel value (R of the position corresponding to the black pixel, G, pixel data of the B3 ingredients) of the original processing-object multiple-value (color) image corresponding to the black pixel which constitutes the connection component is acquired (step S312).

According to the definition of the representative color of the connection component, the representative color data of each connection component is determined based on the acquired pixel value (step S313).

At this time, the representative color of the connection component is defined as an average of the color pixel data of all the pixels that constitute the connection component, computes the representative color of the connection component according to this definition, and determines one representative color to the one connection component.

In this way, it is the latter part, the representative color of the determined connection component is used as integrated conditions when unifying the connection components as a line candidate, and further, in order to create the likeliness ratio of the character line, it is used.

Next, a series of processings in which the character line candidate is created from the connection component by the circumscribed rectangle integrated unit 311 are performed.

It is the processing which judges whether the connection component can unify it according to the conditions for unifying as a character line candidate for the connection component since this processing contains the component of the character in the connection component obtained at the processing step to the preceding paragraph, and creates the character line candidate's rectangular portion. Distance approaches the relation of the connection components and suppose that the color is alike of integrated conditions, respectively.

As a procedure of processing, shown in the flowchart of FIG. 32, one connection component is chosen and registered as a line candidate the first stage (step S314), another connection component is taken out as this initial line candidate for integration (step S315), and it is determined whether they both meet the integration conditions or not.

Here, the distance between the circumscribed rectangles (the rectangle circumscribed to the connection component is defined and the region finally started as a line is also expressed in the region of this circumscribed rectangle) of the connection component is found for whether they are whether the connection components are in near, and no, and integration will be made possible, if it judges by carrying out threshold processing to the found distance and is in near (step S316-YES).

Moreover, integration will be made possible, if it judges by carrying out threshold processing to the comparison value which compared and asked for the representative color data of each connection component which determined whether to have been whether the color of the connection components is alike, and no at the above-mentioned step S313 and the color is alike (step S317-YES).

In response to the result which judged whether the connection component could be unified as mentioned above, the circumscribed rectangle integration unit 311 integrates the connection components for the line candidate (step S318).

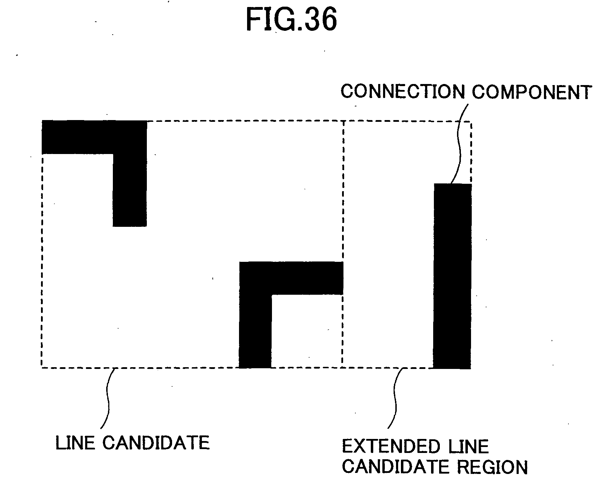

Since the line candidate unified with the connection components makes the region the circumscribed rectangle (indicated by the dashed line) of the connection component as in FIG. 36 showing the situation of the processing which unifies the connection component for the line candidate and it is shown in this view, the existence range will spread by the rectangular portion of the connection component added to the target line candidate.

In addition, since the line candidate changes with integrated results, it is necessary to make the integrated result reflect in the line candidate's circumscribed rectangle and representative color as mentioned above at steps S316 and S317 which judge integrated conditions, although the contrast judgment is made between the connection components with the line candidate.

That is, since the line candidate consists of two or more connection components, the position serves as the circumscribed rectangle of the connection component to constitute, and the average of the color of the connection component to constitute determines the line candidate's color.

Since processing which unifies the connection component for the line candidate is performed for every predetermined processing region of the document page, it checks that the connection component which should check integrated conditions does not remain in the processing region (step S319-YES).

Moreover, since the above-mentioned steps S314-319 are repeated for every predetermined region in the document page, it checks that there is no unsettled region where the connection component which should be registered into the document page the first stage exists (step S320- YES), and goes out of the integration processing of the connection component.

In addition, when there is the unsettled region where the connection component which should be registered the first stage exists when the unsettled connection component is in the processing region (step S319-NO) (step S320- NO), it returns to the start of each processing loop, and integration processing of the connection component is repeated.

If it determines the circumscribed rectangular portion of the connection component which carried out grouping (integration) as mentioned above as a character line candidate next, it is checked the character line likeliness of the line candidate determined in the preceding step by the character line determination unit 313, the line candidate which is not like the character line at all will be judged, and processing which deletes the line candidate according to the result will be performed.

In the process which checks character line likeliness, the feature amounts of the character line showing character line likeliness is computed, the feature amounts are considered as a line likelihood ratio, and the line candidate which should be deleted is judged with the line likelihood ratio.

In the present embodiment, as shown below, the four amounts of the features are computed, and the line likelihood ratio is created from the result.

The line candidate's aspect ratio is calculated as the feature amount 1 (step S321). If this is long and slender, since it will be considered seemingly to be the line more from asking for the line candidate as a circumscribed rectangular portion of the connection component which carried out grouping (integration), it is taken as the feature amounts which uses this for judgment of the line likelihood ratio.

As the feature amount 2, the number of the connection components which constitute the line candidate is counted (step S322). If there are not much few connection components in the line, since it will be hard to say that seemingly it is the line, it considers as the feature amounts which uses this for judgment of the line likelihood ratio.

As the feature amount 3, the number of black pixels of the circumference of the line candidate is counted (step S323).

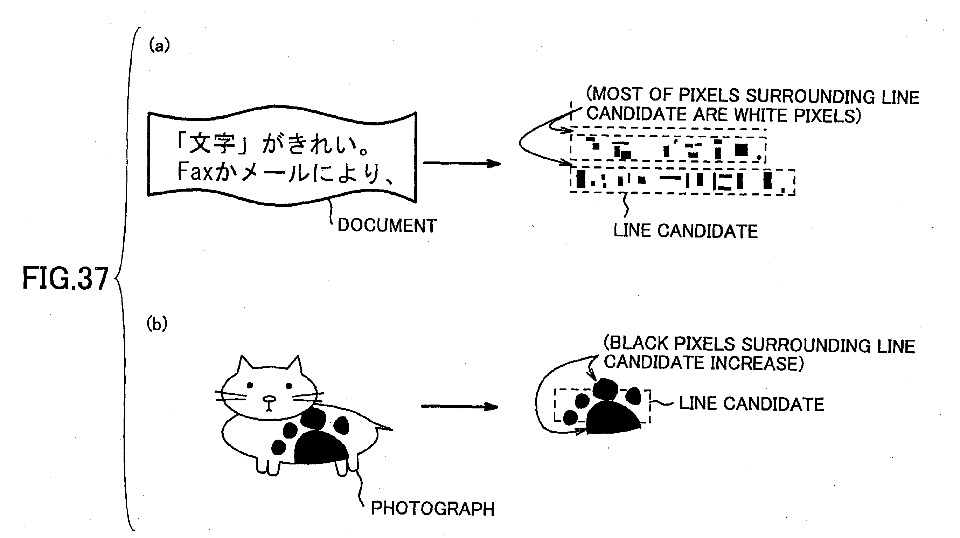

FIG. 37 shows the situation of the integration processing to the line candidate, (A) in FIG. 37 showing the example in the photograph image and (B) showing the example in the character image. As shown in (A) and (B) in FIG. 37, the line candidate surrounded with the dashed line is extracted respectively as a result of processing the original image.

It is the character image, and the line candidate's circumference is surrounded by the white pixel, and (A) has many white pixels and has the feature as a character line.

On the other hand, (B) is the photograph image, and is the example which extracted a part of photograph image as a line candidate, its a possibility that there is the connection component which entered in the line in this case is high, and the line candidate's circumference has comparatively many black pixels, and it does not have the feature as a character line.

Therefore, considering as the object of deletion is appropriate for the line candidate in the photograph image of (B) which is not like the character line at all, and it considers as the feature amounts which uses the number of black pixels of the circumference of the line candidate for judgment of the line likelihood ratio.

However, it is desirable to normalize by length or the boundary length in how to take out this amount of the features, since the long line has many pixels of the dividing enclosure.

As the feature amount 4, the difference of the line candidate's color and the surrounding color is created (step S324). (R1, G1, B1), and the average color of the surrounding pixel are acquired for the line candidate's color (the representative color data of the connection component determined at the above-mentioned step S313 can be used) as (R2, G2, B-2), and it is the color difference D with the circumference.

The color difference D is computed by using the formula: $D = |R1-R2| + |G1-G2| + |B1-B2|$. Since it is more readable for the character to be a color from which the background is different generally, generally the color difference D with the circumference is in the large tendency.

Therefore, considering as the object of deletion is appropriate for the small line candidate, and the color difference D considers as the feature amounts which uses the color difference D for judgment of the line likelihood ratio.

After the feature amounts 1 to 4 are computed, a line likelihood ratio which indicates the character line likelihood is computed based on the computed feature amounts 1 to 4 (step S315). Suppose that F indicates the line likeliness ratio, Fi indicates the value of the feature amount i, and Wi indicates the coefficient which is multiplied to each of the values of the feature amounts i.

The line likelihood ratio F is computed by using the formula: $F = SUM (Fi * Wi)$ (where i =1-4 and SUM indicates the sum function).

The weight Wi showing the significance (the degree of contribution) over the line likelihood ratio of each amount Fi of the features defines the suitable coefficient value which may draw the experimentally right result beforehand.

Subsequently, the end result of the character line judging is drawn by performing comparison with the threshold which defined beforehand the limit of whether it leaves as a line candidate, or to delete it in accordance with the computed line likelihood ratio (step S326).

Here, when the calculated line likelihood ratio is larger than the threshold, it is judged as the character line. Otherwise, it is judged that it is not the character line.

According to the end result of the character line judging obtained as mentioned above, it deletes from the line candidate extracted the line data which has not been judged to be the character line (step S327).

In addition, when a certain amount of the features is calculated, for example, the value is widely different from the value appropriate for the line, and although it asked for line-likeness synthetically after calculating all the amounts of the features, when it can be judged that it is not the line clearly, the line candidate concerned may delete at the time.

The processing judges the line candidate's character line likeliness and deletes the line candidate according to the result. Since it carries out for every line candidate, when it checks having finished the judgment of all line candidates which should be checked (step S328) and there is the non-judged line candidate.

Since the above processing steps S321-327 are repeated, it is checked that there is no unsettled line candidate (step S328-YES), and goes out of judgment processing of the character line.

Since the line it is considered that is the incorrect extraction which may be generated for the line candidate by performing line extraction processing in the flow of FIG. 31 as mentioned above (step S303, i.e., the flow of FIG. 32) can be deleted and proper character line data can be extracted, from the obtained character line data, the character region output unit 315 outputs the corresponding coordinate value of the line region as a processing result (S304), and ends the processing flow.

The following embodiment shows a modification of the above embodiment in which the improvement for losing the omission in extraction of the white character produced in the above-mentioned embodiment is added.

As described in the above-mentioned embodiment, binarization of the color (multiple value) image used as the processing object is carried out, and although there are very few possibilities of causing the omission in extraction about almost all characters when performing extraction processing of the character line based on the acquired black pixel data, the omission in extraction arises to the white character exceptionally.

In order to improve this point, in the present embodiment, extraction processing of the line is performed for the binarization image made to reverse the binarization image and reversed, and it uses together with noninverting extraction processing.

Furthermore, incorrect extraction is prevented by adding the processing which extracts the line candidate which overlaps among the line candidates determined based on the reversal and the noninverting binarization image, respectively, and deletes one of the overlapping line candidate.

Although it is the binary image reversal processing step, the line extraction processing step to the reversal image, and the exclusion processing step of the duplication line if the unit which is newly needed in order to realize the above-mentioned improvement is in the device, and it is in the image reversal unit, the duplication region exclusion unit, and the method, all depend to addition of composition and the elements other than the composition add use the element of the above-mentioned embodiment.

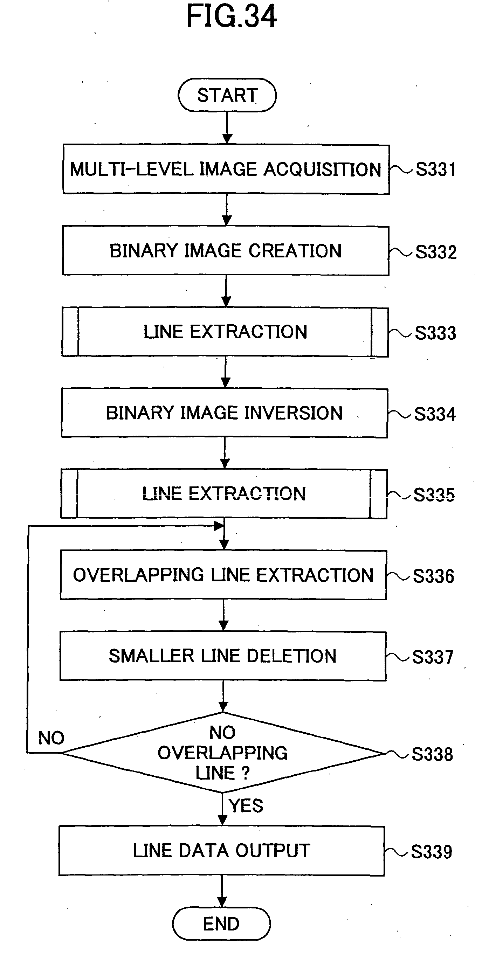

FIG. 34 shows the processing flow of the image-processing method concerning the present embodiment, and the detailed flow of the line extraction processing in FIG. 34 (S303, S305) is shown in the previous FIG. 32.

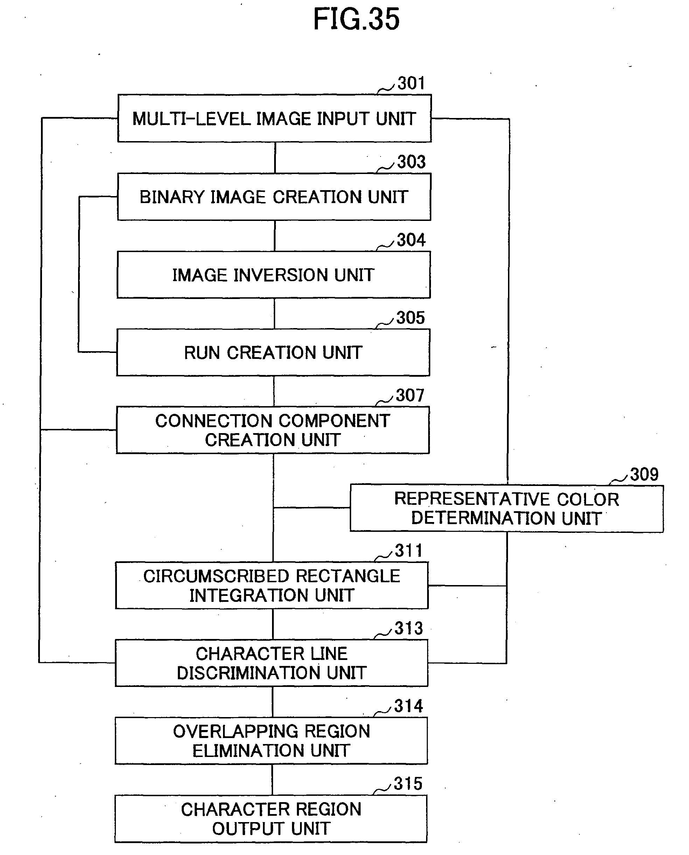

Moreover, FIG. 35 shows the composition of the image processing apparatus concerning the present embodiment.

The image processing apparatus of the present embodiment will be explained with reference to FIG. 35.

In addition, about the composition of those other than the image reversal unit newly added in the present embodiment, and the duplication region exclusion unit, since explanation of the above-mentioned preferred embodiment is overlapped, it supposes that the above-mentioned explanation is referred to, and the publication is omitted here.

The image reversal unit 304 is a device which reverses black and white of the binary image data changed by the binarization unit 303, and outputs the reversed image data to the run creation unit 305.

The duplication region exclusion unit 314 eliminates one of the line candidates which overlap among line candidates in response to the line candidate extraction result of the two kinds of the reversal and noninverting images by the character line determination unit 313, and sends out the result to the character region output unit 315.

Next, the image-processing method concerning the present embodiment will be explained with reference to the flow view of FIG. 34.

In addition, the following explanation serves as the explanation of operation about the image reversal unit 304 of the above-mentioned image processing apparatus (FIG. 35), and the duplication region exclusion unit 314.

According to the flowchart of FIG. 34, the document to process is first acquired as an original image (color image) by the multi-level-image input unit 301 (step S331).

The color image acquired here takes the form of each pixel data of R, G, and B which were detected in the main and sub scanning method by the image sensor.

Subsequently, the binarization image is obtained for the color (multiple value) image used as the processing object by the binarization unit 303 (step S332).

The method of binarization sets up the fixed threshold, and compares the threshold and pixel value (for example, pixel data of G color), and it can carry out by adopting the methods, such as making the pixel brighter than the threshold into white, and making the dark pixel into black.

Thus, binarization of the color (multiple value) image used as the processing object is carried out, and extraction processing of the character line is performed based on the acquired black pixel data (step S333).

Extraction of the character line is performed according to the flowchart of FIG. 32 as shown in the above-mentioned embodiment.

Next, when the white character is contained in the original image, in order to prevent the omission in extraction, the binary image data obtained by binarization processing of step S332 is reversed by the image reversal unit 304 (step S334).

Monochrome reversal processing can be carried out by using the known method.

Extraction processing of the character line is performed based on the binary image data which reversed black and white (step S333).

Extraction of the character line is performed according to the flowchart of FIG. 32 mentioned above (step S335). When the line candidate extraction to the two kinds of noninverting image and reversal image are performed at steps S333 and S335 respectively and the position overlaps between the reversal image and the noninverting image is extracted, the duplication region exclusion unit 314 determines one as the correct answer and the other as the error, so that the processing which eliminates one is carried out until it brings the extraction result without duplication.

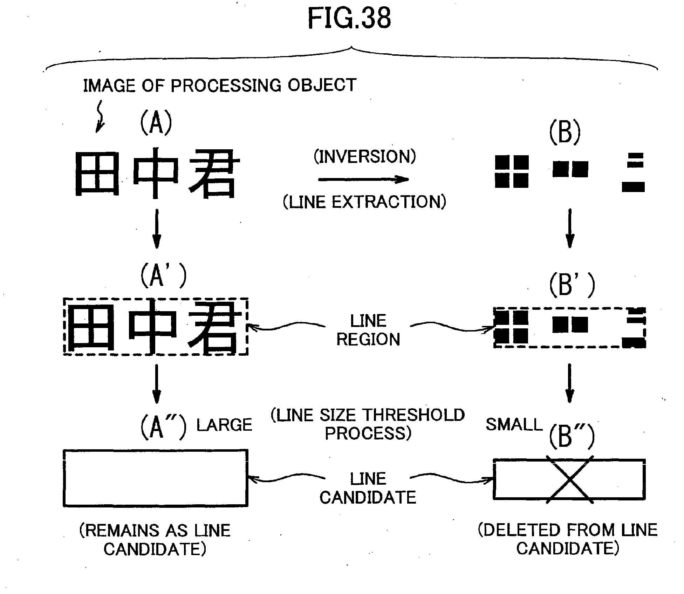

For example, as shown in FIG. 38, when "Mr. Tanaka" is made into the processing-object image (A), in processing usually (noninverting), the character line region turns into the region enclosed with the dashed line in the view (A'), and the data of (A") is obtained as an extraction line candidate.

On the other hand, if the binary image is reversed, the connection component of the white pixel which constitutes the character will change into the black pixel, will serve as the reversal image (B), and will be extracted as a line. That is, if it is the character "田 (rice field)", four small white crossroads of the original image constitute the reversal image (B).

Therefore, the character line region may turn into the region enclosed with the dashed line in the view (B'), and may extract (B") as a line candidate.

As shown in the example of FIG. 38, since the line candidate (B") extracted from the reversal image (B) is mistaken, comes out and there is, he needs to leave the line candidate (A") of the noninverting image in this case, and needs to delete the line candidate (B") of the reversal image.

As deletion conditions in this case, as shown in FIG. 38, it is able to define the conditions by using this property, since the line candidates (B") of the reversal image to be deleted are smaller than the size of the line candidate (A") of the noninverting image.

Therefore, it becomes possible by comparing both line size and deleting the smaller one to remove the mistaken data. Moreover, it is shown in the above-mentioned embodiment as calculation of line likelihood ratio carrying out (FIG. 32, step S325, reference) this is compared and the direction which is not like the line at all may be deleted, and it does not matter even if it uses these together.

The object line which applies exclusion processing is extracted at the exclusion processing step of the duplication line shown in the flow of FIG. 34 (step S336). That is, the line candidate with which the position overlaps among the line candidates obtained at steps S333 and S335 is extracted by performing the line extraction to the two kinds of the reversal and noninverting images.

Subsequently, the line size of the duplication line candidate extracted is compared, and the line candidate of the direction having a small size is deleted (step S337). This processing is performed by repeating the exclusion processing step of steps S336-S338 until the overlapping line is lost (step S338- YES), since it extracts the 1 set of duplication line at a time and it is performed.

Thus, since the line it is considered that is the incorrect extraction which may be generated for the line candidate can be deleted and proper character line data can be extracted when performing reversal and line extraction to the noninverting image, from the obtained character line data, the character region output unit 315 outputs the corresponding coordinate value of the line region as a processing result (S339), and ends the processing flow.

The following embodiment shows using the general-purpose processor (computer) as the image processing apparatus which performs the respective processing steps of the image-processing method and performs character region extraction as shown in the above-mentioned embodiments.

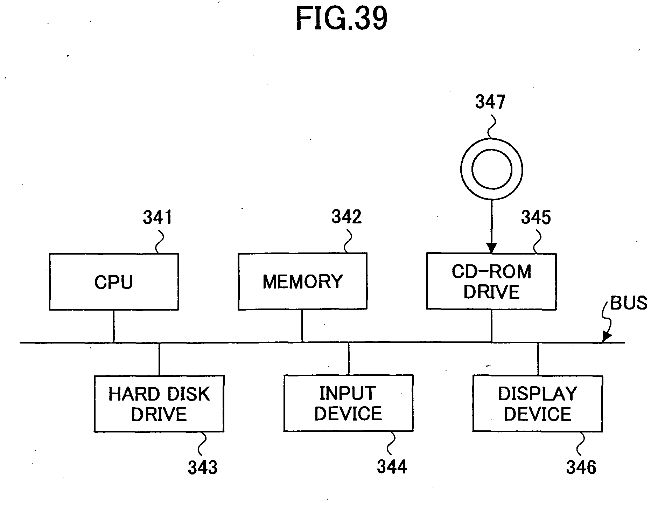

FIG. 39 shows the composition of the processor of the present embodiment. As shown in FIG. 39, the present embodiment shows using the general-purpose processor (computer) which comprises the CPU 341, the memory 342, the hard disk drive 343, the input device 344 (the mouse, etc.), the CD-ROM drive 345, and the display 346 as the components thereof.

Moreover, the program (software) for causing the computer to execute the procedure of the character region (character line) extraction processing of the present embodiment is recorded on the recording medium 347, such as CD-ROM, is used with the CD-ROM drive 345.

The color (multiple value) image of the processing object is inputted by the input device 344, such as the scanner, for example, is stored in the hard disk drive 343.

The CPU 341 reads the program which realizes the procedure of the character region extraction processing described above from the recording medium 347, performs extraction processing of the character region of the color (multiple value) image according to the program, and outputs it in order to use the character region data obtained as an extraction result for the procedure of character image processing which needs this data, such as character recognition processing.

Thus, this computer is operated as the image processing apparatus of the present invention, by making operation according to the program for performing character region extraction processing.

The above-described embodiments of FIG. 31 through FIG. 39 provide an image processing apparatus comprising: a binary image creation unit creating a binary image by binarization of a multi-level image as a processing-object image; a connection component creation unit acquiring connection components each having runs of black pixels in the binary image; a distance determination unit determining a horizontal distance and a vertical direction between the connection components respectively; a line candidate unit integrating the connection components with which the horizontal distance and the vertical distance are smaller than a predetermined threshold into one of line candidates; a feature amount computation unit computing a feature amount which indicates a feature of a corresponding line in the multi-level image, based on each of the line candidates respectively; and a line candidate deletion unit deleting one of the line candidates if a line likelihood ratio based on the feature value of the line candidate concerned is smaller than a given value.

According to the present invention, binarization of the multi-level image of the processing object is performed, obtaining the pixel run and the connection component are obtained based on the binary image, and the character line candidate is unified. It is possible to create the character line candidate by the short processing time, and the character line candidate as a value showing the feature of the line after that. It is possible to perform quickly logging processing of the character line with few errors by checking the comparison result of the number of the connection components, the number of black pixels around the line candidate, and the representative pixel value (representative color) of the line candidate and the circumference of the line candidate which constitutes the line candidate's aspect ratio, and the line candidate, and the unsuitable character line is deleted.

The above-mentioned image processing apparatus may be configured so that the image processing apparatus further comprises: a unit acquiring pixel values corresponding to pixels of the multi-level image which constitute each of the connection components respectively; a unit determining a representative pixel value which represents pixel values of the connection components based on the acquired pixel values; and a unit determining a representative pixel value which represents pixel values of the line candidates based on the acquired pixel values.

The above-mentioned image processing apparatus may be configured so that the line candidate unit comprises a color difference computation unit computing a difference between the representative pixel value of the connection components and the representative pixel value of the line candidates, and the line candidate unit is provided to integrate the connection components into one of the line candidates when the computed difference is smaller than a predetermined threshold.

The above-mentioned image processing apparatus may be configured so that the feature amount computation unit comprises at least one of an aspect ratio computation unit computing an aspect ratio of the line candidate concerned, a connection component number computation unit computing the number of the connection components which constitutes one of the line candidates, and a black pixel number computation unit computing the number of black pixels surrounding one of the line candidates.

The above-mentioned image processing apparatus may be configured so that the feature amount computation unit comprises: a unit acquiring pixel values of pixels of the multi-level image which surround the pixels corresponding to one of the line candidates; a unit determining a representative pixel value which represents pixels values of the pixels surrounding one of the line candidates based on the acquired pixel values; and a unit comparing the representative pixel value which represents the pixel values of the pixels surrounding one of the line candidates and a representative pixel value which represents pixel values of the line candidates.

The above-mentioned image processing apparatus may be configured so that the image processing apparatus further comprises a binary image inversion unit inverting the binary image from the binary image creation unit.

The above-mentioned image processing apparatus may be configured so that the image processing apparatus comprises at least one of a unit extracting the line candidates which overlap between the line candidates created based on the non-inverted binary image and the line candidates created based on the inverted binary image, a unit deleting one of the overlapping line candidates with a smaller size, and a unit comparing feature amounts of the overlapping line candidates and deleting one of the overlapping line candidates with a smaller line likelihood ratio.

The above-described embodiments of FIG. 31 through FIG. 39 provide an image processing method comprising the steps of: creating a binary image by binarization of a multi-level image as a processing-object image; acquiring connection components each having runs of black pixels in the binary image; determining a horizontal distance and a vertical direction between the connection components respectively; integrating the connection components with which the horizontal distance and the vertical distance are smaller than a predetermined threshold into one of line candidates; computing a feature amount which indicates a feature of a corresponding line in the multi-level image, based on each of the line candidates respectively; and deleting one of the line candidates if a line likelihood ratio based on the feature value of the line candidate concerned is smaller than a given value.

The above-mentioned image processing method may be configured so that the image processing method further comprises the steps of: acquiring pixel values corresponding to pixels of the multi-level image which constitute each of the connection components respectively; determining a representative pixel value which represents pixel values of the connection components based on the acquired pixel values; and determining a representative pixel value which represents pixel values of the line candidates based on the acquired pixel values.

The above-mentioned image processing method may be configured so that the integrating step comprises computing a difference between the representative pixel value of the connection components and the representative pixel value of the line candidates, and the integrating step is provided to integrate the connection components into one of the line candidates when the computed difference is smaller than a predetermined threshold.

The above-mentioned image processing method may be configured so that the feature amount computing step comprises at least one of the steps of: computing an aspect ratio of the line candidate concerned; computing the number of the connection components which constitutes one of the line candidates; and computing the number of black pixels surrounding one of the line candidates.

The above-mentioned image processing method may be configured so that the feature amount computing step comprises: acquiring pixel values of pixels of the multi-level image which surround the pixels corresponding to one of the line candidates; determining a representative pixel value which represents pixels values of the pixels surrounding one of the line candidates based on the acquired pixel values; and comparing the representative pixel value which represents the pixel values of the pixels surrounding one of the line candidates and a representative pixel value which represents pixel values of the line candidates.

The above-mentioned image processing method may be configured so that the image processing method further comprises the step of inverting the binary image created in the binary image creating step, and the connection component acquisition step is provided to acquire the connection components each having runs of black pixels in the binary image and acquire connection components each having runs of black pixels in the inverted binary image.

The above-mentioned image processing method may be configured so that the image processing method comprises at least one of the steps of: extracting the line candidates which overlap between the line candidates created based on the non-inverted binary image and the line candidates created based on the inverted binary image, deleting one of the overlapping line candidates with a smaller size, and comparing feature amounts of the overlapping line candidates and deleting one of the overlapping line candidates with a smaller line likelihood ratio.

The above-described embodiments of FIG. 31 through FIG. 39 provide a computer program product embodied therein for causing a computer to execute an image processing method, the image processing method comprising the steps of: creating a binary image by binarization of a multi-level image as a processing-object image; acquiring connection components each having runs of black pixels in the binary image; determining a horizontal distance and a vertical direction between the connection components respectively; integrating the connection components with which the horizontal distance and the vertical distance are smaller than a predetermined threshold into one of line candidates; computing a feature amount which indicates a feature of a corresponding line in the multi-level image, based on each of the line candidates respectively; and deleting one of the line candidates if a line likelihood ratio based on the feature value of the line candidate concerned is smaller than a given value.

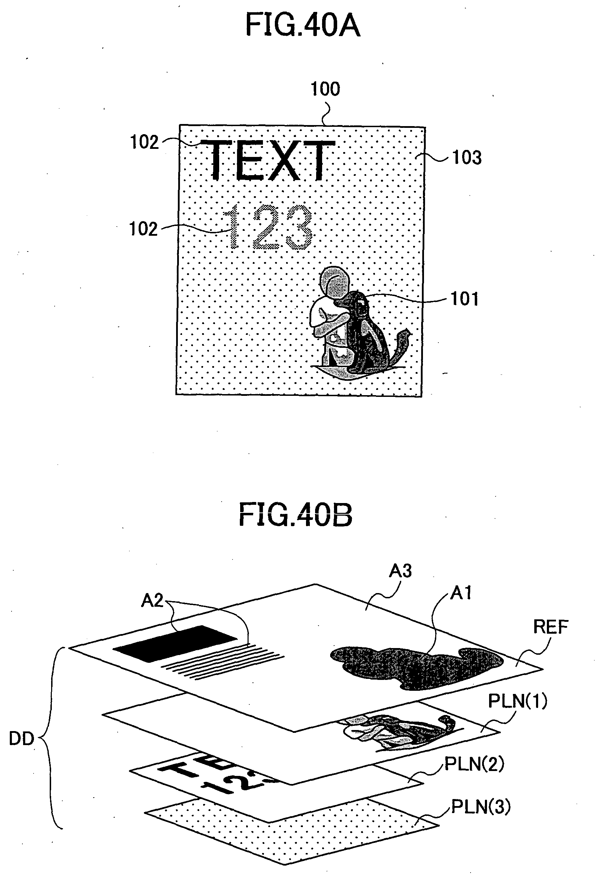

Next, FIG. 40A and FIG. 40B are the diagrams showing the document data structure in the preferred embodiment of the invention.

As shown in FIG. 40B, the document data DD is comprised from the n planes: plane-PLN (1), plane-PLN (2), and the plane-PLN (3) (in the present embodiment n=3), extracted from the original document 100 of FIG. 40A, and the reference image REF.

The original document 100 includes the 8-bit color image 101, the blue painting-out character and the painting-out character 102 of the blue horizontal stripe, and the red dot-pattern background 103, as shown in FIG. 40A.

In the present embodiment, as shown in FIG. 40B, according to the object indicated by the image concerned, the image displayed on the original document 100 is divided into plane-PLN (1), PLN (2), and PLN (3), and extracted. The reference image REF contains, for every pixel, the information for choosing one of PLN (1), PLN (2), and PLN(s) (3) as the values A1, A2, and A3 of the m tone levels (the present embodiment m= 3). For example, it can consider as A1: "00", A2: "01", and A3: "10".

In the present embodiment, plane PLN (1) is encoded by the method which is the 8-bit color image and was suitable for compression of the photograph etc. Plane PLN (2) is encoded by the method which is the character (image expressed by the image or the text code), and was suitable for compression of the character. Plane PLN (3) is encoded by the method which is the image showing the background and was suitable for compression of the background.

For example, when the reference image REF is monochrome image, MMR compression etc. is convenient in respect of compression efficiency. Moreover, since plane PLN (1) is the color image, the methods, such as JPEG and JPEG2000, become suitable.

Furthermore, since plane PLN (2) is the character image, considering as MMR compression is desirable.

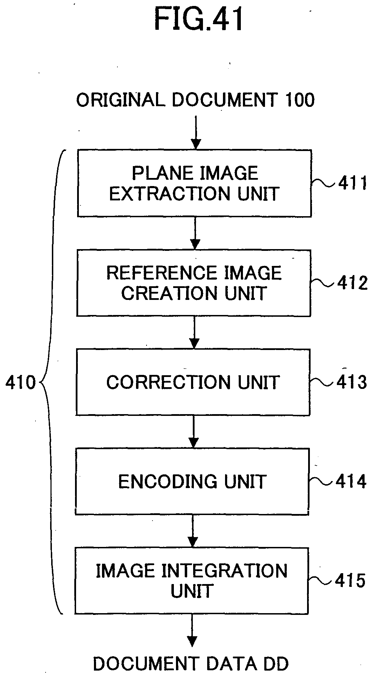

FIG. 41 is the block diagram showing the document conversion device of the 1st preferred embodiment, and can create the document data DD of the structure shown in FIG. 40B by this document conversion device.

The document conversion device 11 comprises the plane image extraction unit 411, the reference image creation unit 412, the image manipulation unit 413, the coding unit 414, and the integrated unit 415 in FIG. 41.

The plane image extraction unit 411 can extract the plane PLN of the three sheets (1), PLN (2), and PLN (3) from the original document 100 according to the coding method. In the present embodiment, plane PLN (1) is the color image.

Moreover, when the color on the original document 100 of the object on PLN (2) and PLN (3) is the monochrome color, the object on the PLN (2) concerned and PLN (3) can also be made into the monochrome color, and it can also consider as the monochrome image. When making PLN (2) and PLN (3) into the color image, the reference image REF is monochrome image.

Moreover, when making PLN (2) and PLN (3) into monochrome image, the monochrome color is defined as the tone level values A2 and A3 which choose PLN (2) of the reference image REF, and PLN (3).

The plane in the present embodiment color photography etc. is extracted by PLN (1) and plane the character is extracted by PLN (2) and plane although the background is extracted by PLN (3), since the technology of sharp distinction (extraction of the character, extraction of the background) of the object with is common knowledge, explanation is not given.

The reference image creation unit 412 can create the reference image REF.

The image manipulation unit 413 can perform the image manipulation or image compensation (resolution conversion, filtering processing, lightness compensation, color tone compensation, noise rejection). Usually, by this processing, compressibility becomes high on the occasion of coding.

For example, the plane since only the color of the character should understand PLN (2) on restoration document 100' the resolution of the dot pitch on plane PLN (2) plane when the monochrome color is defined as PLN (2), resolution of the color tone level can be made low. Since the object of Plane PLN (2) is the character, resolution is reduced and the visibility does not fall so much.

Furthermore, about Plane PLN (2), if character recognition processing is performed, the text code will be obtained. If this is related with a series of data sets which it finally creates and is set (usually including the text data in the data set), the retrieval in the text code can be performed in restoration document 100'.

Moreover, interpolation processing etc. may perform image processing which makes resolution high. Although the file size becomes large, when the photograph region etc. is important, it becomes improvement in the quality of image.

In the present embodiment, although the reference image REF does not make the change of the dot pitch, it can make this change.

The noise rejection can be performed by the method of eliminating the connection component of Plane PLN (2) and the black pixel minute about the reference image REF, and compressibility with becomes high.

in addition, the document which it needs according to whether it is used, it can opt for image manipulation processing of each plane suitably. For example, plane, when it is thought that the photograph is important what is necessary is just made not to make resolution of PLN (1) low, and conversely, the photograph is plane, when not much important resolution of PLN (1) is made low and plane what is necessary is just to make resolution of PLN (2) into the height. Since it is the trade-off with the quality of image and the size of the final information, these are determined according to the use.

The coding unit 414 is plane PLN (1), PLN (2), PLN (3), and the reference image REF can be encoded by the method (it is the suitable method for compression of the object concerned, and differs by each plane) according to the kind of object on the original document 100.

The integrated unit 415 can unify the reference image REF encoded by the coding unit 413 and the n planes PLN (1), PLN (2), and PLN (3) to the data set. In addition, on the occasion of integration, each plane has what attribute including that information (for example, information, such as bit map images, such as the photograph, the character, and the background) in the data set for example, on the occasion of the document restoration mentioned later, the unnecessary plane is excludable using the plane exclusion unit 213 for the operator. Thereby, only a certain specific plane can also be seen in the case of image expression. In this case, since the unnecessary information serves as invisibility, the document becomes legible.

Moreover, on the occasion of the data communication, it is excepting the plane suitably considered to be unnecessary from the data set, and what the amount of data transmitted and received is lessened for (transceiver time is thereby shortened) is made.

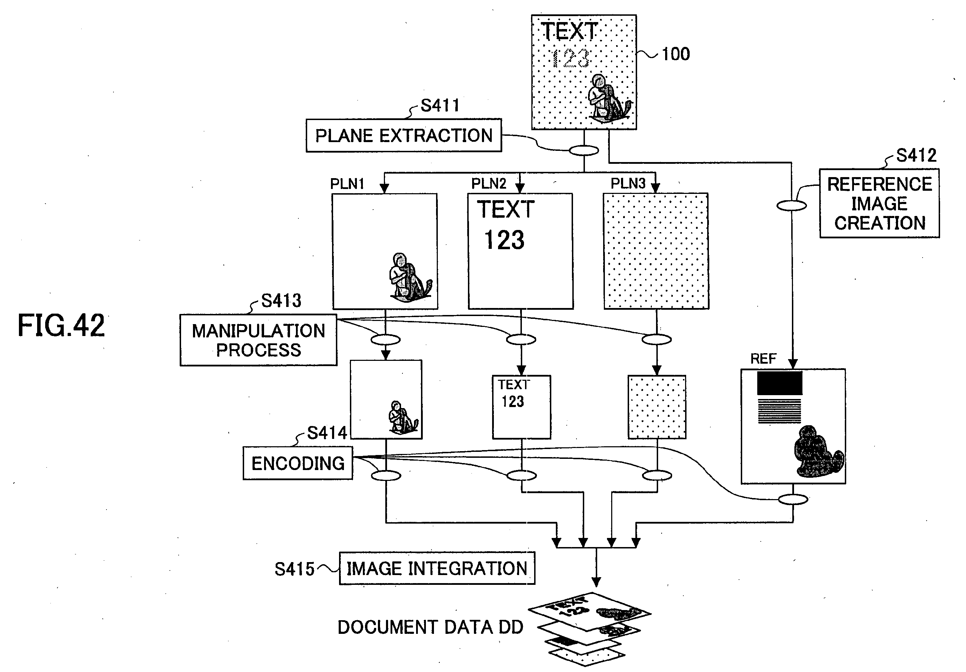

FIG. 42 is the diagram showing the document conversion method of the 1 st preferred embodiment. This document conversion method can be enforced using the document conversion device 11 of FIG. 41.

In FIG. 42, the plane PLN of the three sheets according to the coding method (1), PLN (2), and PLN (3) are first extracted from the original document 100 (plane extraction step : S411).

In this plane extraction step S411, the object on the original document 100 is divided into the plane PLN of the three sheets (1), PLN (2), and PLN (3), and is extracted.

Next, the values A1, A2, and A3 of the three tone levels give each pixel having the value of the three tone levels responding the three sheets plane PLN (1), PLN (2), and PLN (3) the reference image REF for determining inner any they are is created (reference image creation step : S412).

The image manipulation or image compensation (resolution conversion, filtering processing, lightness compensation, color tone compensation, noise rejection) is further performed about the plane PLN of the three sheets (1), PLN (2), and PLN (3) (image manipulation step: S413).

Then, the plane PLN of the three sheets (1), PLN (2), PLN (3), and the reference image REF are encoded (coding step: S414).

At the coding step S414, the plane PLN of the three sheets (1), PLN (2), PLN (3), and the reference image REF are encoded by the method according to the kind of object on the original document 100. In the present embodiment, the plane of the three sheets is encoded by the coding method different, respectively.

And the reference image REF encoded in the coding step S414 and the plane PLN of the three sheets (1), PLN (2), and PLN (3) are unified to the data set.

In addition, the pixel value of the region where Plane PLN (1), PLN (2), and PLN (3) are not referred to can be transposed to predetermined pixel values (for example, white, black, etc.). Thereby, compression efficiency can be raised on the occasion of coding.

When plane PLN (1) is referred to at the time of image reappearance, the surrounding pixel can be used for the pixel corresponding to the character of the reference image REF on plane PLN (1), and the predetermined pixel value can be given to it. The plane the color to which, as for the pixels other than the character of the reference image REF on plane PLN (2), the character becomes legible when PLN (2) is referred to at the time of image reappearance and the pixel value to which compression efficiency is not reduced can be given.

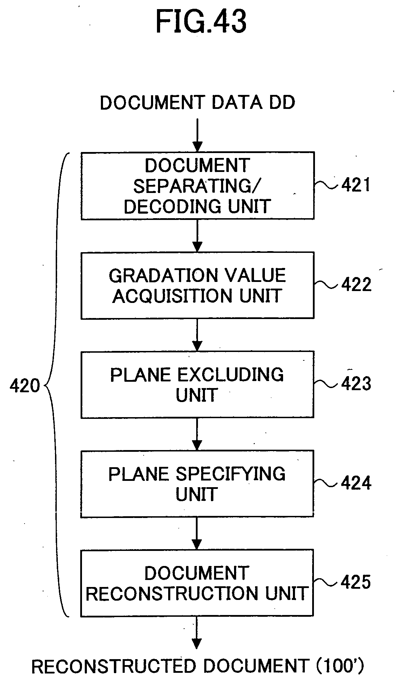

FIG. 43 is the diagram showing the document restoration device in the preferred embodiment of the invention.

The document restoration device 21 comprises the document decomposition/decoding unit 211, the tone level value acquisition unit 212, the plane exclusion unit 213, the plane specification unit 214, and the document restoration unit 215 in FIG. 43. In the present embodiment, the document restoration device 21 can acquire the document data DD, and can restore the original document 100 from the document data concerned.

The document decomposition/decoding unit 211 can perform decoding processing to the document data DD, and can create the plane PLN of the three sheets (1), PLN (2), PLN (3), and the reference image REF.

The tone level value acquisition unit 212 can acquire any of the values A1, A2, and A3 of the three tone levels which scan the pixel of the reference image REF and are given to the scanned pixel they are.

The plane exclusion unit 213 can remove the plane of the one sheet or the two sheets from the processing object among the plane PLN of the three sheets (1), PLN (2), and PLN (3).

The plane excepted by the plane exclusion unit 213 can display only the required object on reappearance image 100' by not including in the specific object by the plane specification unit 214.

The plane specification unit 214 can determine the plane PLN corresponding to the value of the values A1, A2, and A3 of the three tone levels (1), PLN (2), and PLN (3).

The document restoration unit 215 can extract the value on the plane determined by the plane specification unit 214 corresponding to the pixel given to the position of the pixel of the reference image REF, can restore the document, and can obtain restoration document 100'.

When the monochrome color is defined as the object on plane PLN (2) and PLN (3) and the tone level value of the pixel of the reference image REF is A2 or A3, the color defined on plane PLN (2) and PLN (3) is reflected in restoration document 100'.

Moreover, when the monochrome color is defined as Plane PLN (2) and (3) corresponding to the tone level values A2 and A3, without defining the color beforehand, these monochrome colors are reflected in the restoration image.

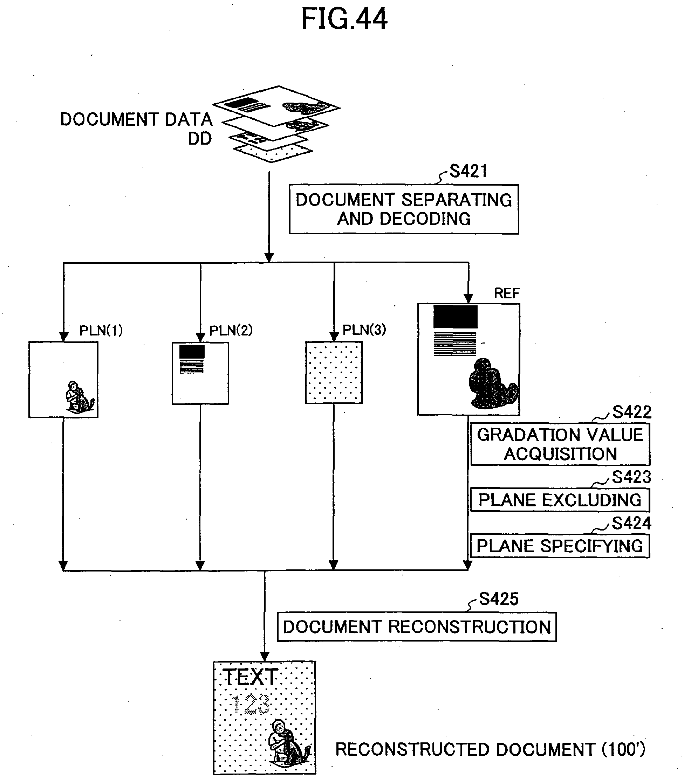

FIG. 44 is the diagram showing the document restoration method in the preferred embodiment of the invention.

This document restoration method can be enforced using the document restoration device 21 of FIG. 43.

In FIG. 44, first, the document data DD is disassembled into the plane PLN of the three sheets (1), PLN (2), PLN (3), and the reference image REF, and decoding processing is performed to these (document decomposition/decoding step : S421).

The pixel of the reference image REF is scanned and the values A1, A2, and A3 of the three tone levels given to each pixel are acquired (tone level value acquisition step : S422).

The plane used as the predetermined object is excepted (plane exclusion step : S423).

The plane corresponding to the values A1, A2, and A3 of the three tone levels is determined (plane specification step : S424).

The pixel value given to the position of the pixel on the plane determined in the plane specification step S424 is extracted, and restoration document 100' is created (document restoration step : S425).

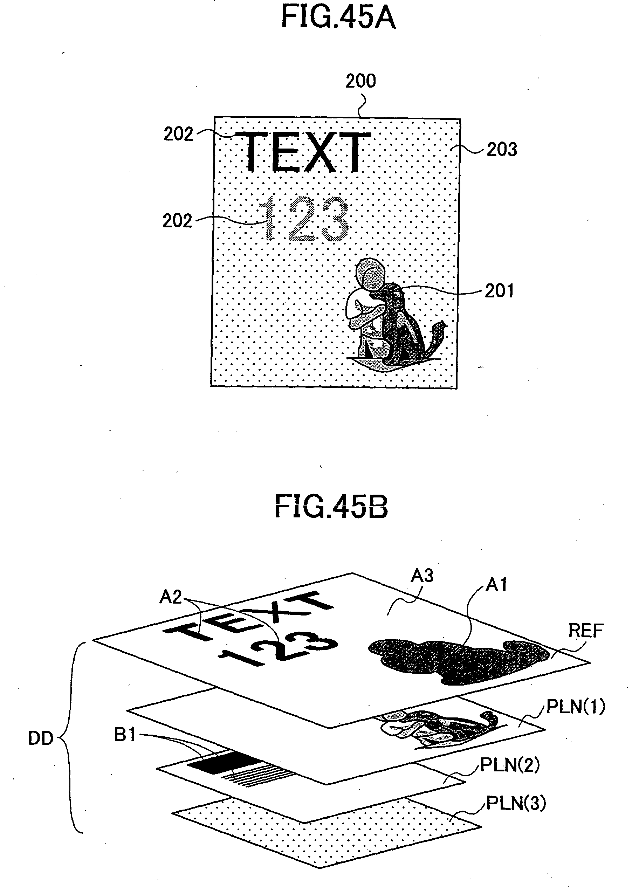

Next, FIG. 45A and FIG. 45B are the diagrams showing the document data structure in another preferred embodiment of the invention.

In the present embodiment, as shown in FIG. 45A, the original document 200 is the same as the original document 100 of the previous embodiment (refer to FIG. 40A), and includes the 8-bit color image 201, the blue painting-out character and the painting-out character 202 of the blue horizontal stripe, and the red dot-pattern background 203.

Moreover, the document data DD is comprised from plane PLN (1), plane PLN (2) and plane PLN (3), extracted from the original document 200 of FIG. 45B, and the reference image REF.

The reference image REF has the information for choosing one of planes PLN (1), PLN (2), and PLN (3) for every pixel as the values A1, A2, and A3 of the m tone levels (the present embodiment m= 3).

However, plane PLN (2) and the reference image REF of FIG. 45B are different from plane PLN (2) and the reference image REF of the preferred embodiment (refer to FIG. 40B).

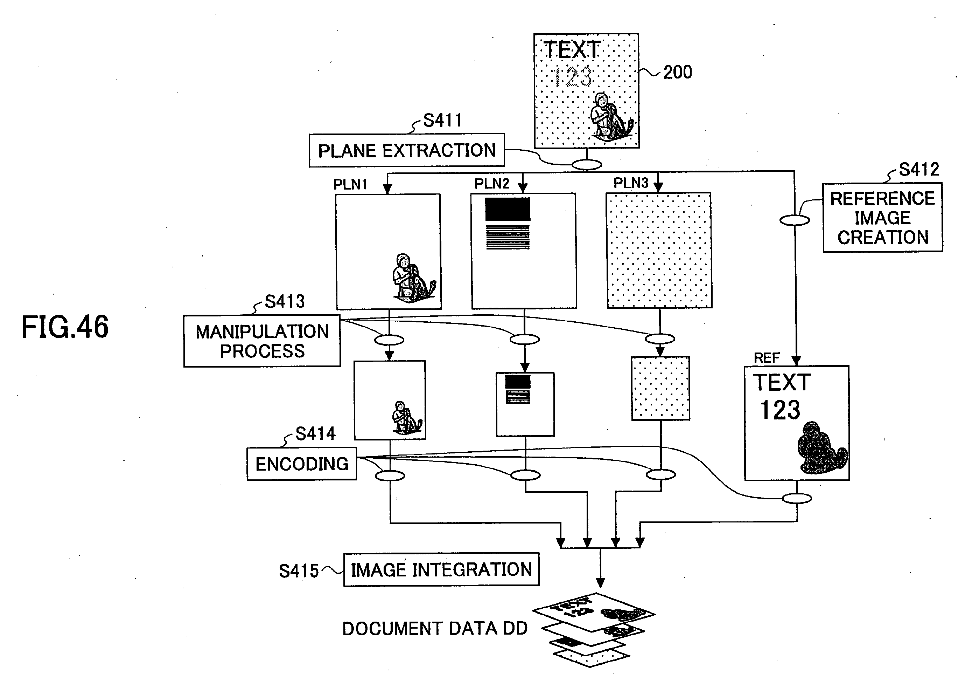

The blue painting-out character and the painting-out character 202 of the blue horizontal stripe are indicated by the reference image REF. Painting out of black and the painting-out figure B1 of the black stripe are formed in the portion equivalent to the character 202 of plane-PLN (2) (refer to plane-PLN (2) of FIG. 46).

The document data DD of the structure shown in FIG. 45B can be created by the document conversion device 11 of FIG. 41, and the document restoration device 12 of FIG. 45B can restore it.

FIG. 46 is the diagram showing the document conversion method of the 2nd preferred embodiment.

This document conversion method is fundamentally as the document conversion method in the 1st preferred embodiment the same. However, the plane extraction step S411 setting the previous embodiment the object on the original document 200 the three planes although it divided into PLN (1), PLN (2), and PLN (3) and being extracted the present embodiment the object on the original document 100 the two sheets plane it divides into PLN (1), PLN (3), and the reference image REF.

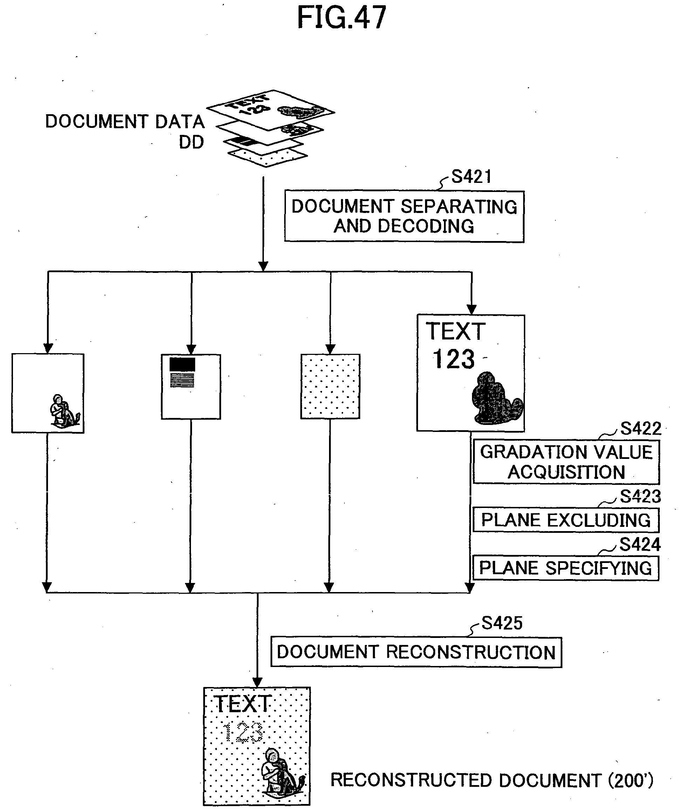

FIG. 47 is the diagram showing the document restoration method in another preferred embodiment of the invention.

This document restoration method is fundamentally the same as the document restoration method in the previous embodiment, and restoration of restoration document 200' is performed like the 1 st preferred embodiment of the substance top. However, as plane in the 2nd preferred embodiment as the character object on the reference image REF, although the character object on painting out on the reference image REF and plane PLN (2) restored the character 202 in the 1st preferred embodiment at the plane specification step S424 painting out of PLN (2) restores the character 202.

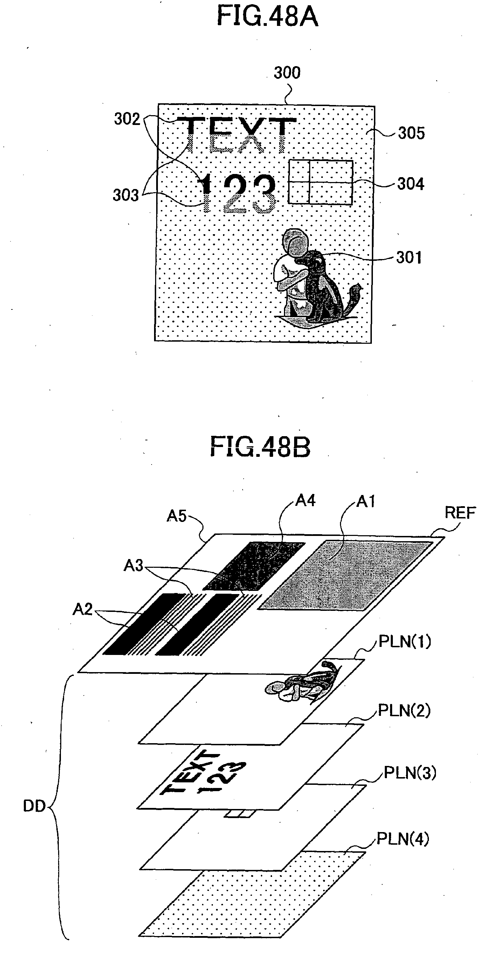

FIG. 48A and FIG. 48B are the diagrams showing the document data structure in another preferred embodiment of the invention.

In the present embodiment, as shown in FIG. 48A, the original document 300 includes the 8-bit color image 301, blue and the table 304 where the upper and lower cases are distinguished with green's and which smeared away and was expressed in black as the character (it is the sign 302 about the upper region, and the sign 303 shows the lower region), and the background 305 of the red dot pattern.

Moreover, the document data DD is comprised from the planes PLN (1), PLN (2), PLN (3), PLN (4), extracted from the original document 300 of FIG. 48B, and the reference image REF. The reference image REF has the information for choosing one of plane-PLN (1), PLN (2), PLN (3), and PLN(s) (4) for every pixel as the values A1, A2, A3, and A4 of the m tone levels (the present embodiment m= 5), and A5. That is, in the present embodiment, it is n<m.

The plane PLN (1) of FIG. 48B includes the 8-bit color image 301. Moreover, plane-PLN (2) is constituted by the painting-out character of the monochrome. Plane-PLN (3) is constituted by the table of the monochrome. Plane-PLN (4) is constituted by the dot pattern of the monochrome.

Moreover, the reference image REF is comprised by the values A1, A2, A3, and A4 of the five tone levels, and the region of A5, as mentioned above.

The region with the tone level value A1 is formed corresponding to the color image 301 of plane PLN (1). Moreover, the region with the tone level value A2 is formed corresponding to the up region 302 of the character on plane PLN (2), and the region with the tone level value A3 is formed corresponding to the lower region 303 of the character on plane PLN (2).

The region with the tone level value A4 is formed corresponding to Table 304 of plane PLN (3), and the region with tone level value A5 corresponds to the background 305 of the dot pattern of plane PLN (4).

The document data DD of the structure shown in FIG. 45B can be created by the document conversion device 11 of FIG. 41, and the document restoration device 12 of FIG. 43 can restore it.

In the present embodiment, it is displayed with the pixel value on PLN (1) about Plane PLN (1). Moreover, for the planes PLN (2), (3), and (4) in the present embodiment, the color is not defined, but the color is defined as the reference image REF corresponding to A2, A3, A4, and A5, respectively.

Therefore, about the object (the present embodiment character) on plane PLN (2), it is expressed as the color (blue) beforehand defined as the region of the tone level A2, or the color (green) beforehand defined as the region of the tone level A3.

Moreover, the object (the present embodiment table) of plane-PLN (3) is expressed as the color (here black) beforehand defined as the region of the tone level A3. The object (the present embodiment dot pattern) of plane-PLN (4) is expressed as the color (here red) beforehand defined as the region of the tone level A4.

In addition, it can display also about Plane PLN (2), PLN (3), and PLN (4) with the pixel value on plane PLN (2), PLN (3), and PLN (4). In this case, the color is defined as the object on plane PLN (2), PLN (3), and PLN (4).

The document data DD of the structure shown in FIG. 48B can be created by the document conversion device 11 of FIG. 41, and the document restoration device 12 of FIG. 43 can restore it.

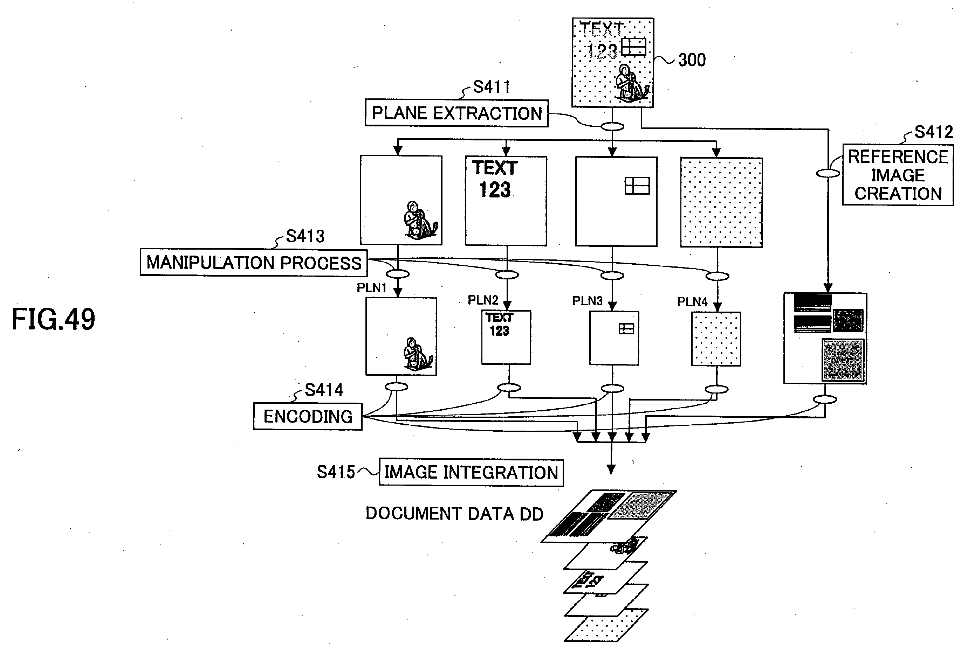

FIG. 49 is the diagram showing the document conversion method in another preferred embodiment of the invention.

This document conversion method is fundamentally the same as the document conversion method in the previous embodiment. However, although the character was made to correspond to one tone level value A2, the character is made to correspond to two tone level values A2 and A3 by the present embodiment in the reference image creation step S412.

Moreover, in the present embodiment, since the table is added to the original document 300 as an object, the plane is the four sheets in all.

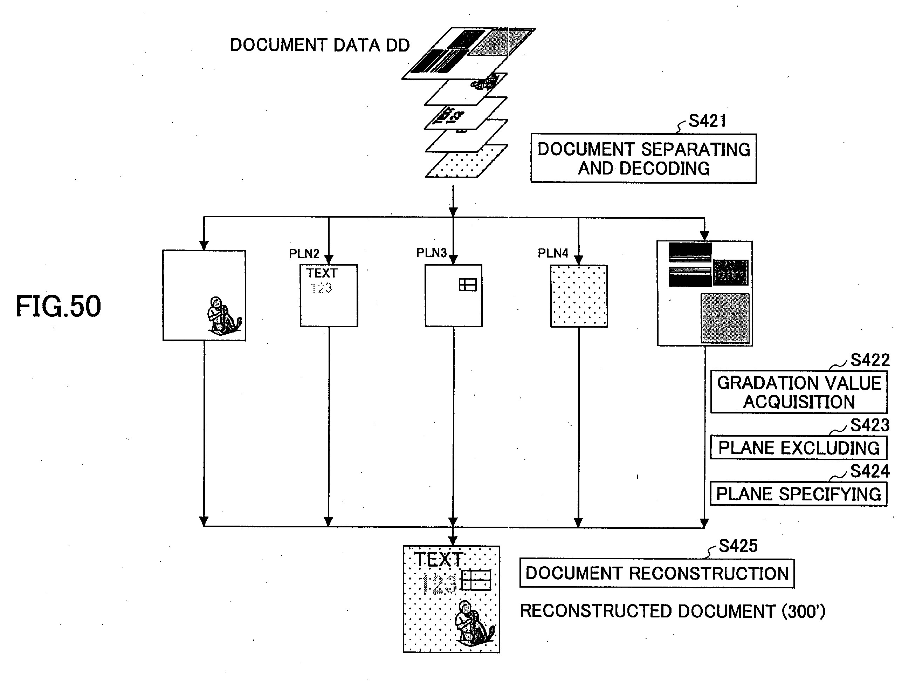

FIG. 50 is the diagram showing the document restoration method in another preferred embodiment of the invention.

This document restoration method is fundamentally the as the document restoration method in the previous embodiment, and restoration of restoration document 300' is performed like the 1st preferred embodiment of the substance top. However, as plane in the present embodiment as the character object of the two colors which the tone level values A2 and A3 on the reference image REF show, although the character object on painting out on the reference image REF and plane PLN (2) restored the character 102 in the 1st preferred embodiment at the plane specification step S424 painting out of PLN (2) restores 102 the up region 302 of the character, and the lower region of the 303 characters of the character.

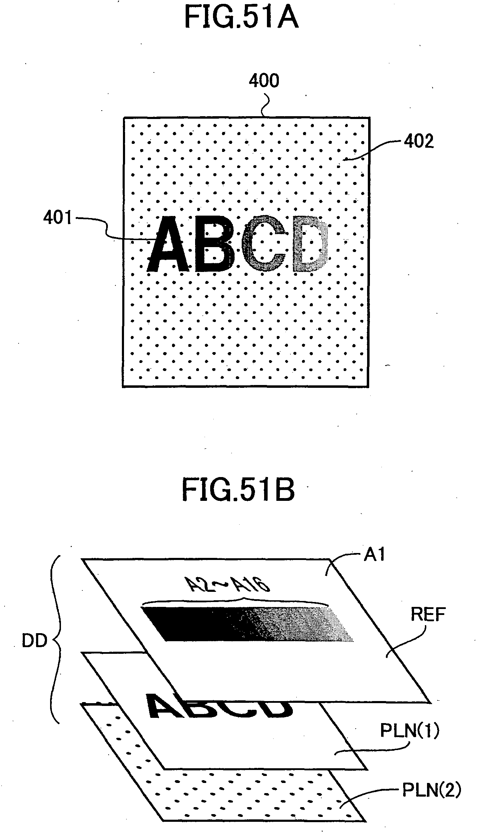

FIG. 51A and FIG. 51B are the diagrams showing the document data structure in another preferred embodiment of the invention.

In the present embodiment, as shown in FIG. 51A, the original document 400 includes the character 401 ornamented with the gradations of the gray, and the background 402 of the red dot pattern.

Moreover, the document data DD is comprised from the n planes (the present embodiment n= 2), extracted from the original document 400 of FIG. 51B, PLN (1) and PLN (2), and the reference image REF.

The reference image REF has the information for choosing one of Plane PLN (1) and PLN(s) (2) for every pixel as the values A1, A2, ..., A16 of the m tone levels (the present embodiment m= 16). That is, in the present embodiment, it is n<m.

The reference image REF is comprised by the region of the values A1, A2, ..., A16 of the 16 tone levels, as mentioned above. The pixel value on corresponding plane PLN (1) is assigned to the pixel of the region with the tone level value A1.

Moreover, "white" is defined as the region with the tone level value A2, "black" is defined as the region with the tone level value A16, and the gray near "black" is gradually defined as the region with the tone level values A3-A15 from the gray near "white."

The document data DD of the structure shown in FIG. 51B can be created by the document conversion device 11 of FIG. 41, and the document restoration device 12 of FIG. 43 can restore it.

In the present embodiment, it is displayed with the value of the pixel on the reference image REF concerned about the pixel value on PLN (1) corresponding to the pixel with the tone level value A1 on the reference image REF. About Plane PLN (2), the color is not defined but white, the gray, and black appear in the restoration image corresponding to the tone level values A2-A16 given to the pixel on the reference image REF, respectively.

In addition, it can display also about Plane PLN (2), PLN (3), and PLN (4) with the pixel value on plane PLN (2), PLN (3), and PLN (4). In this case, the color is defined as the object on plane PLN (2), PLN (3), and PLN (4).

The document data DD of the structure shown in FIG. 51B can be created by the document conversion device 11 of FIG. 41, and the document restoration device 12 of FIG. 43 can restore it.

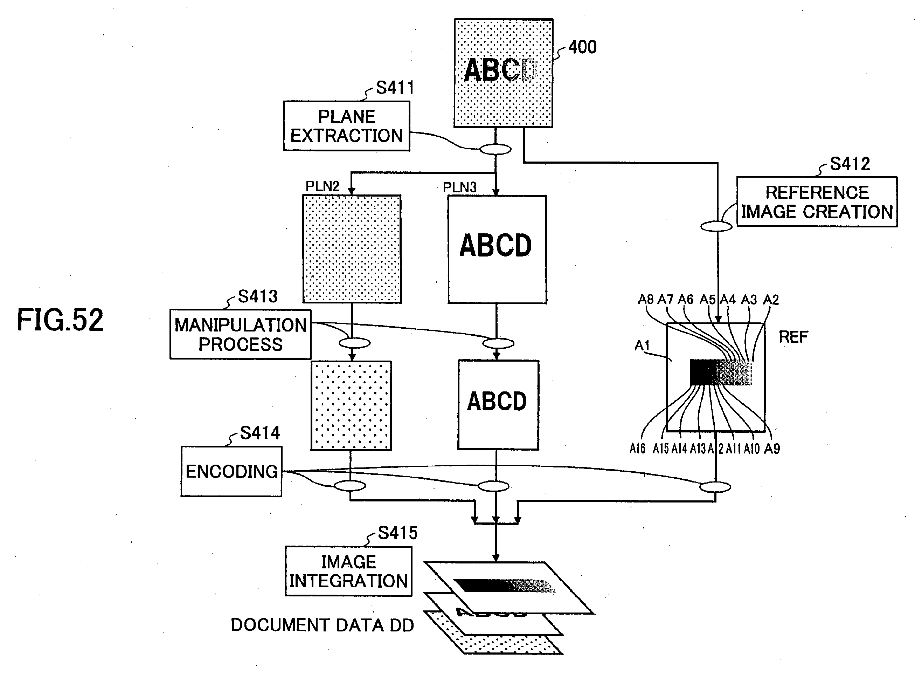

FIG. 52 is the diagram showing the document conversion method in another preferred embodiment of the invention.

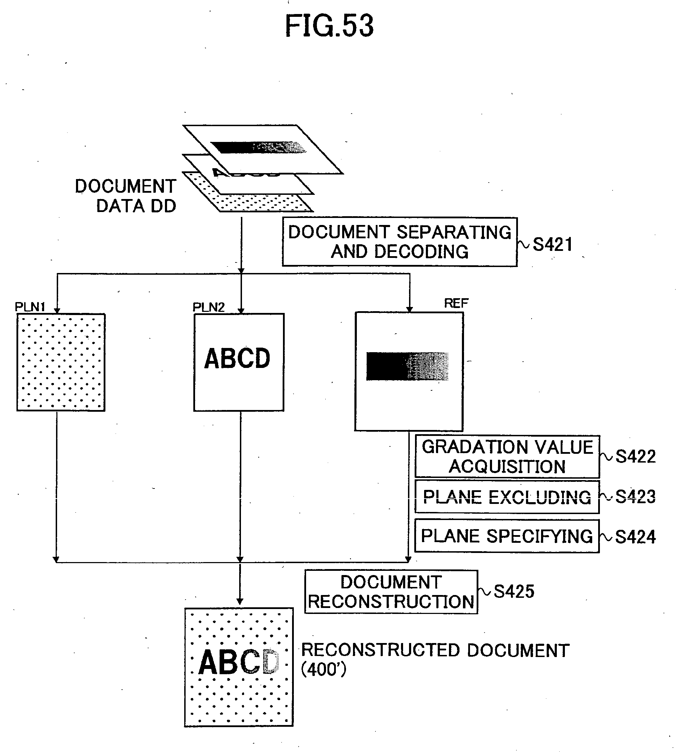

This document conversion method is fundamentally the same as the document conversion method in the previous embodiment. Moreover, FIG. 53 is the diagram showing the document restoration method in another preferred embodiment of the invention. This document restoration method is fundamentally the same as the document restoration method in the previous embodiment, and restoration of restoration document 400' is performed like the 1st preferred embodiment of the substance top.

As for the decoding of the reference image REF, in the present embodiment, it is desirable to adopt the method suitable for the multi-level image. In the present embodiment, the gradations, such as the image which changes continuously, are used suitable for the image for using it abundantly in the boundary of the figure and the background.

The above-described embodiments of FIG. 40A through FIG. 53 provide a document conversion device comprising: a plane image extraction unit extracting n planes from an original document; a reference image creation unit creating a reference image in which a value of m tone levels is assigned to each of pixels of the reference image, and information for choosing one of the n planes according to the value of the m tone levels is contained; and a coding unit encoding the n planes and the reference image.

According to the present invention, the file size of the document concerning the color image can be made small without reducing the quality of image sharply. Moreover, in the reproduced document, the visibility of the image, which includes the character, the ruled line, and the monochrome figure, can be maintained, and it can be applied also to the image with the gradation. Moreover, since the document image is divided into two or more planes and a reference image, only the required object can be displayed or can be transmitted.

The above-mentioned document conversion device may be configured so that the plane image extraction unit is provided to extract the n planes by dividing objects on the original document into the n planes, or the n planes and the reference image.

The above-mentioned document conversion device may be configured so that the coding unit is provided to encode the n planes and/or the reference image by using a coding method according to a kind of objects on the original document.

The above-mentioned document conversion device may be configured so that the coding unit is provided to encode at least one of the n planes by using a coding method different from a coding method used to encode the other planes.

The above-mentioned document conversion device may be configured so that the document conversion device further comprises an image integration unit integrating the reference image and the n planes encoded by the coding unit into a data set.

The above-mentioned document conversion device may be configured so that the document conversion device further comprises a manipulation unit performing an image manipulation process or image compensation process.

The above-described embodiments of FIG. 40A through FIG. 53 provide a document restoration device which restores a document by acquiring document data having a document data structure which is created by integrating n planes extracted from an original document, into one document, the document data having the n planes and a reference image containing information for choosing one of the n planes for every pixel as a value of m tone levels, the document restoration device comprising: a document decomposing/decoding unit disassembling the document data into the n planes and the reference image, and performing a decoding processing for each of the n planes and the reference image; a scanning unit scanning pixels of the reference image; a tone-level value acquisition unit acquiring a value of the m tone levels assigned to each of the scanned pixels; a plane determination unit determining a plane of the n planes corresponding to the value of the m tone levels; a pixel value extraction unit extracting pixel values of pixels on the plane determined by the plane determination unit, which pixels correspond to positions of pixels of the reference image, and a document reconstruction unit restoring the document by assigning the pixel values extracted by the pixel value extraction unit, to pixels of a reconstructed document image which pixels correspond to the respective pixels of the reference image.

The above-mentioned document restoration device may be configured so that the document restoration device further comprises a plane exclusion unit specifying one or plurality of planes among the n planes which are to be excluded, wherein the specified planes are not subjected to the plane determination by the plane determination unit, and only necessary objects are displayed on the restored document image.

The above-described embodiments of FIG. 40A through FIG. 53 provide a document conversion method comprising the steps of: extracting n planes from an original document; creating a reference image in which a value of m tone levels is assigned to each of pixels of the reference image, and information for choosing one of the n planes according to the value of the m tone levels is contained; and encoding the n planes and the reference image.

The above-mentioned document conversion method may be configured so that the extracting step is provided to extract the n planes by dividing objects on the original document into the n planes, or the n planes and the reference image.

The above-mentioned document conversion method may be configured so that the encoding step is provided to encode the n planes and/or the reference image by using a coding method according to a kind of objects on the original document.

The above-mentioned document conversion method may be configured so that the encoding step is provided to encode at least one of the n planes by using a coding method different from a coding method used to encode the other planes.

The above-mentioned document conversion method may be configured so that the document conversion method further comprises the step of integrating the reference image and the n planes encoded in the encoding step into a data set.

The above-mentioned document conversion method may be configured so that the document conversion method further comprises the step of performing an image manipulation process or image compensation process.

The above-described embodiments of FIG. 40A through FIG. 53 provide a document restoration method which restores a document by acquiring document data having a document data structure which is created by integrating n planes extracted from an original document, into one document, the document data having the n planes and a reference image containing information for choosing one of the n planes for every pixel as a value of m tone levels, the document restoration method comprising the steps of: disassembling the document data into the n planes and the reference image, and performing a decoding processing for each of the n planes and the reference image; scanning pixels of the reference image; acquiring a value of the m tone levels assigned to each of the scanned pixels; determining a plane of the n planes corresponding to the value of the m tone levels; extracting pixel values of pixels on the plane determined in the determining step, which pixels correspond to positions of pixels of the reference image; and restoring the document by assigning the pixel values extracted in the extracting step, to pixels of a reconstructed document image which pixels correspond to the respective pixels of the reference image.

The above-mentioned document restoration method may be configured so that the document restoration method further comprises the step of specifying one or plurality of planes among the n planes which are to be excluded, wherein the specified planes are not subjected to the plane determination, and only necessary objects are displayed on the restored document image.

The above-described embodiments of FIG. 40A through FIG. 53 provide a computer program product embodied therein for causing a computer to execute the above-mentioned document conversion method.

The above-described embodiments of FIG. 40A through FIG. 53 provide a computer program product embodied therein for causing a computer to execute the above-mentioned document restoration method.

The above-described embodiments of FIG. 40A through FIG. 53 provide a computer-readable storage medium storing a program embodied therein for causing a computer to execute the above-mentioned document conversion method and/or the above-mentioned document restoration method.

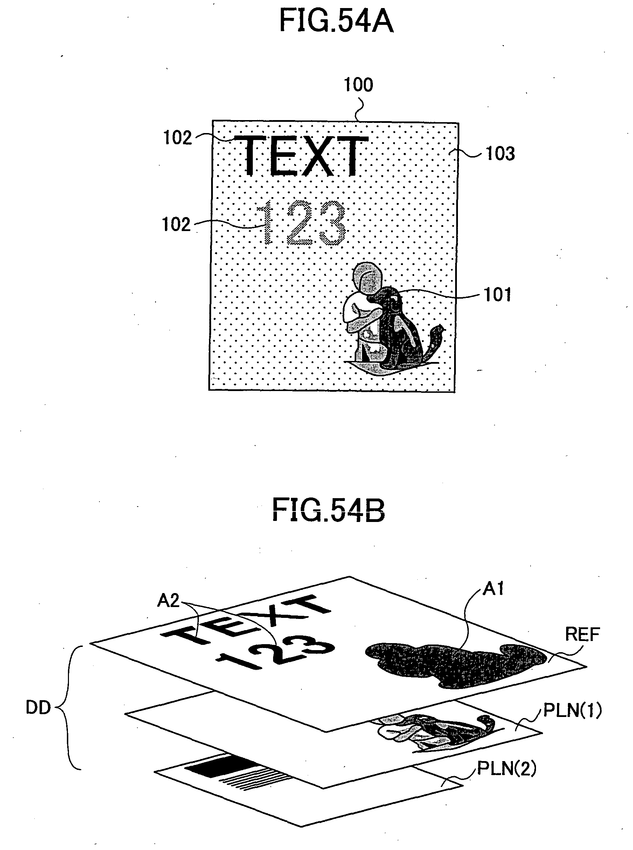

Next, FIG. 54A and FIG. 54B are the diagrams showing the document data structure in the preferred embodiment of the invention.

As shown in FIG. 54B, the document data DD is comprised from the reference image REF and the n-planes: plane PLN(1), plane PLN (2) (in the present embodiment, n=2) extracted from the original document 100 of FIG. 54A.

The original document 100 consists of the 8-bit color image 101, and the black painting-out character and the painting-out character 102 of the gray, as shown in FIG. 54A.

In the present embodiment, as shown in FIG. 54B, according to the object indicated by the image concerned, the image displayed on the original document 100 is divided into plane PLN (1) and PLN (2), and is extracted. The reference image REF has the information for choosing one of plane PLN (1) and PLN(s) (2) for every pixel as the values A1 and A2 of the m tone levels (the present embodiment m= 2). For example, it can consider as A1: "0" and A2: "1."

In the present embodiment, the reference image REF contains the painting-out image of the one tone level of the m tone levels for the character object on the original document 100. This painting-out image is the character in the present embodiment.

In the present embodiment, plane-PLN (1) is encoded by the method which is the 8-bit color image and was suitable for compression of the photograph etc.

The plane-PLN (2) is encoded by the method suitable for compression of the painting-out image of simple form. And the pixel value corresponding to the painting-out image (character) of the reference image REF is determined by the pixel value of the object on the original document (character).

The reference image REF is encoded by the method which is the character (image expressed by the image or the text code), and is suitable for compression of the character.

Since plane PLN (1) is the color image, application of compression methods, such as JPEG and JPEG2000, is suitable for it. Moreover, plane PLN (2) can apply compression methods, such as JPEG and JPEG2000. Since the reference image REF is the character image, considering as MMR compression is desirable.

In the present embodiment, as shown in FIG. 54A and FIG. 54B, the resolution of the reference image REF is the same as the resolution of the original document 100, and the resolution of plane PLN (2) is set up lower than the resolution of the reference image REF.

In making low resolving of plane PLN (2) low, when it decides the pixel value of the image simply subjected to the low-resolution processing by thinning out or the average, it is sometimes inconvenient. For example, since plane PLN (2) is the image for reproducing the color of the character, it is because it is not desirable that pixel values other than the character mix in plane PLN (2). That is, since the portions other than the character are the pixel values which determined the value suitably in the monochrome, such as black, it is not appropriate to reflect this pixel value in the image of the low-resolution plane PLN (2).

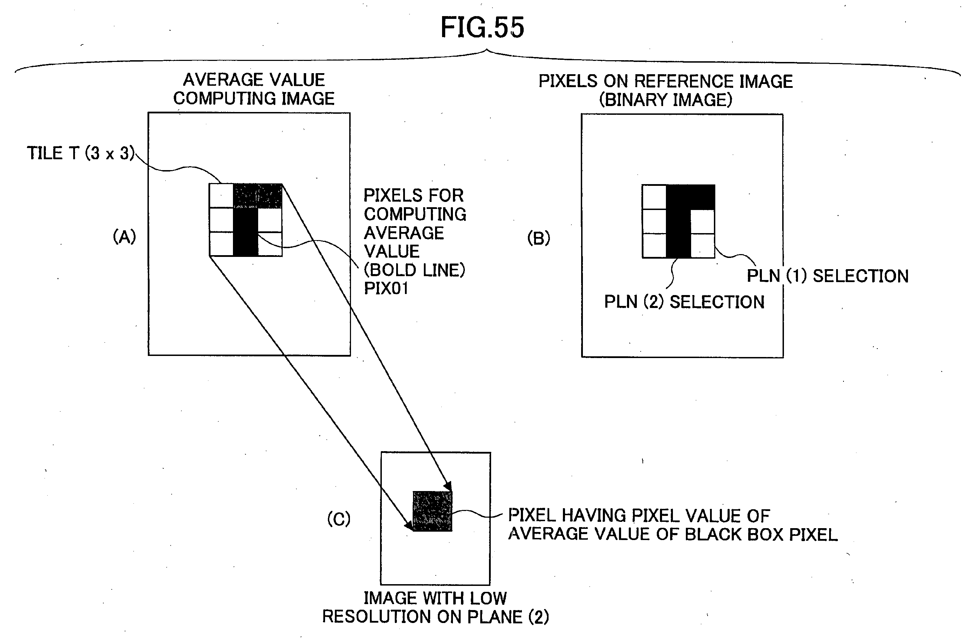

FIG. 55 is the diagram for explaining the low-resolution processing of plane PLN (2). FIG. 55 (A) shows the value of the pixel of plane-PLN (2). FIG. 55 (B) shows the average computation image GA for determining the pixel value of (the pixel value of the reference image REF of A) to plane-PLN (2). FIG. 55 (C) shows the pixel value of plane-PLN (2).

The image GA for averaging extracts only the pixel value of the character object of the original document 100, and the value of the pixel on plane PLN (2) is given as an average of the pixel value of the character object contained in the 3x3-pixel tile of the image GA for averaging.

As shown in FIG. 55 (B), the pixel value of plane-PLN (1) is chosen to the white pixel of the reference image REF. And the pixel value (pixel value average : gray of the character object deep the view) of plane-PLN (2) is chosen to the black pixel.

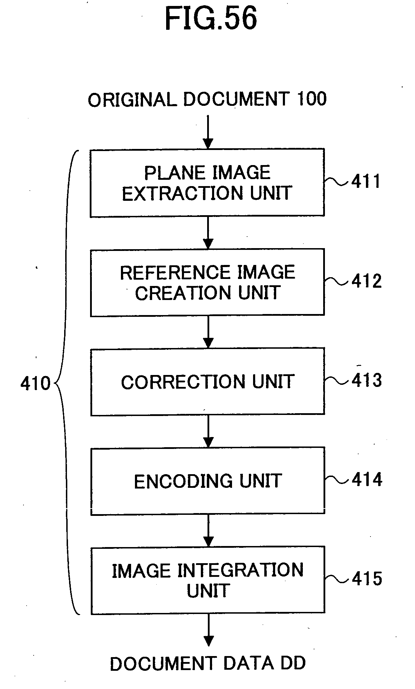

FIG. 56 is the block diagram showing the document conversion device of the 1st preferred embodiment, and can create the document data DD of the structure shown in FIG. 54B by this document conversion device.

The document conversion device 410 comprises the plane image extraction unit 411, the reference image creation unit 412, the image manipulation unit 413, the coding unit 414, and the image integration unit 415 in FIG. 56.

The plane image extraction unit 411 can extract the plane PLN of the two sheets according to the coding method (1), and PLN (2) from the original document 100.

In the present embodiment, plane PLN (1) is the color image. Moreover, in PLN (2), when the color on the original document 100 of the object is the color, it considers as the color which carried out the average of the object on PLN (2). Moreover, the reference image REF is monochrome image.

In the present embodiment, color photography etc. is extracted by plane-PLN (1), and the character is extracted by plane-PLN (2). Since the technology of extraction (extraction of the character, extraction of the background) of the object about these extraction is common knowledge, explanation is not given.

The reference image creation unit 412 can create the reference image REF.

The image manipulation unit 413 can perform the image manipulation or image compensation (resolution conversion, filtering processing, lightness compensation, color tone compensation, noise rejection). Usually, by this processing, compressibility becomes high on the occasion of coding.

For example, only the color of the character should understand plane PLN (2) on restoration document 100'. Therefore, the resolution on plane PLN (2) is set up low.

Moreover, since the object on the reference image REF is the character, even if it reduces the resolution of plane PLN (2), the visibility does not fall so much. In addition, about the reference image REF, if character recognition processing is performed, the text code will be obtained.

If this is related with a series of data sets which it finally creates and is set (usually including the text data in the data set), the retrieval in the text code can be performed in the restoration document 100.

Moreover, interpolation processing etc. may perform image processing which makes resolution high. Although the file size becomes large, when the photograph region etc. is important, it becomes improvement in the quality of image. In the present embodiment, although the reference image REF does not make the change of the dot pitch, it can make this change.

About the reference image REF, the noise rejection can be performed by the method of eliminating the connection component of the minute black pixel, and compressibility with becomes high.

In addition, according to how the document is used, it can opt for machining processing of each plane suitably. For example, when it is thought that the photograph is important, it is made not to make resolution of plane-PLN (1) low.

On the contrary, when not much important, the photograph makes resolution of plane-PLN (1) low, and makes resolution of plane-PLN (2) the height. Since it is the trade-off with the quality of image and the size of the final information, these are determined according to the use.

The coding unit 414 can encode plane PLN (1), PLN (2), and the reference image REF by the method (it is the suitable method for compression of the object concerned, and differs by each plane) according to the kind of object on the original document 100.

The image integration unit 415 can unify the reference image REF encoded by the coding unit 413 and the n planes PLN (1), and PLN (2) to the data set. In addition, on the occasion of integration, each plane includes the information (for example, information, such as bit map images, such as the photograph, the character, and the background) which shows what attribute it has in the data set. In this case, on the occasion of document restoration, the unnecessary plane is excludable using the plain exclusion unit 423 for the operator. Thereby, only a certain specific plane can also be seen in the case of image expression. In this case, since the unnecessary information serves as invisibility, the document becomes legible.

Moreover, on the occasion of the data communication, it is excepting the plane suitably considered to be unnecessary from the data set, and what the amount of data transmitted and received is lessened for (transceiver time is thereby shortened) is made.

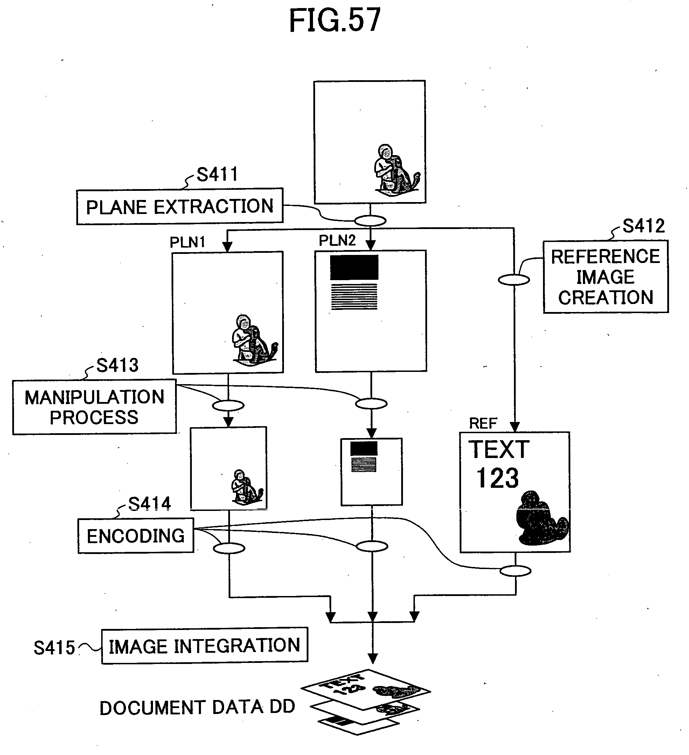

FIG. 57 is the diagram showing the document conversion method of the preferred embodiment. This document conversion method can be enforced using the document conversion device 410 of FIG. 56.

In FIG. 57, the plane PLN of the two sheets according to the coding method (1) and PLN (2) are first extracted from the original document 100 (plane extraction step : S411). In the plain extraction step S411, the object on the original document 100 is divided into plane-PLN (1) and plane-PLN (2), and is extracted.

Next, while the values A1 and A2 of the two tone levels are given to each pixel, the reference image REF for determining any of plane-PLN (1) and plane-PLN (2) they are according to the value of the two tone levels is created (reference image creation step : S412).

Furthermore, the image manipulation or image compensation (resolution conversion, filtering processing, lightness compensation, color tone compensation, noise rejection) is performed about the plane PLN of the two sheets (1), and PLN (2) (image manipulation step : S413). The resolution conversion mentioned above is performed about plane PLN (2).

Then, the plane PLN of the two sheets (1), PLN (2), and the reference image REF are encoded (coding step : S414). At the coding step S414, the plane PLN of the two sheets (1), PLN (2), and the reference image REF are encoded by the method according to the kind of object on the original document 100 (the present embodiment character).

In the present embodiment, the plane of the two sheets is encoded by the coding method different, respectively. And the reference image REF encoded in the coding step S414 and the plane PLN of the two sheets (1), and PLN (2) are unified to the data set.

In addition, the pixel corresponding to the character on the plane original document 100 of PLN (1) can be replaced in the surrounding typical color.

Moreover, the pixel value of the region where plane PLN (2) is not referred to can also be transposed to predetermined pixel values (for example, white, black, etc.). Thereby, compression efficiency can be raised on the occasion of coding.

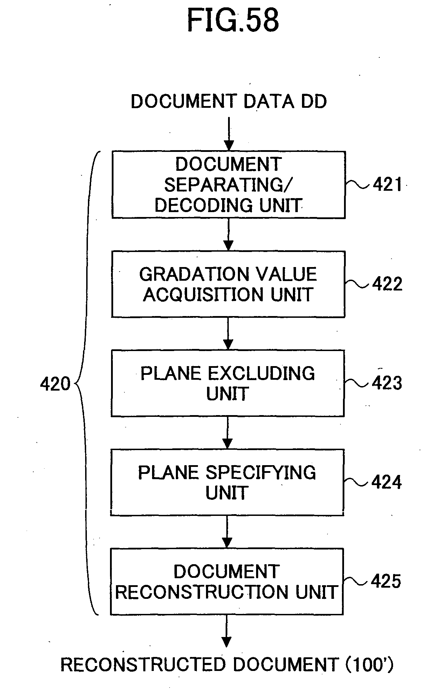

FIG. 58 is the diagram showing the document restoration device of the preferred embodiment.

The document restoration device 21 comprises document decomposition/decoding unit 421, the tone level value acquisition unit 422, the plane exclusion unit 423, the plane specification unit 424, and the document restoration unit 425 in FIG. 58.

In the present embodiment, the document restoration device 21 can acquire the document data DD, and can restore the original document 100 from the document data concerned.

The document decomposition/decoding unit 421 can perform decoding processing to the document data DD, and can create the plane PLN of the two sheets (1), and PLN (2) and the reference image REF.

The tone level value acquisition unit 422 can acquire any of the values A1 and A2 of the two tone levels which scan the pixel of the reference image REF and are given to the scanned pixel they are.

The plane exclusion unit 423 can remove the plane of the one sheet or the two sheets from the processing object among the plane PLN of the two sheets (1), and PLN (2). The plane excepted by the plane exclusion unit 423 can display only the required object on reappearance image 100' by not including in the specific object by the plane specification unit 424.

The plane specification unit 424 can determine the plane PLN corresponding to the value of the values A1 and A2 of the two tone levels (1), and PLN (2).

The document restoration unit 425 can extract the value on the plane determined by the plane specification unit 424 corresponding to the pixel given to the position of the pixel of the reference image REF, can restore the document, and can obtain restoration document 100'.

When the color is defined on plane PLN (2) and the tone level value of the pixel of the reference image REF is A2, the color defined on plane PLN (2) is reflected in restoration document 100'.

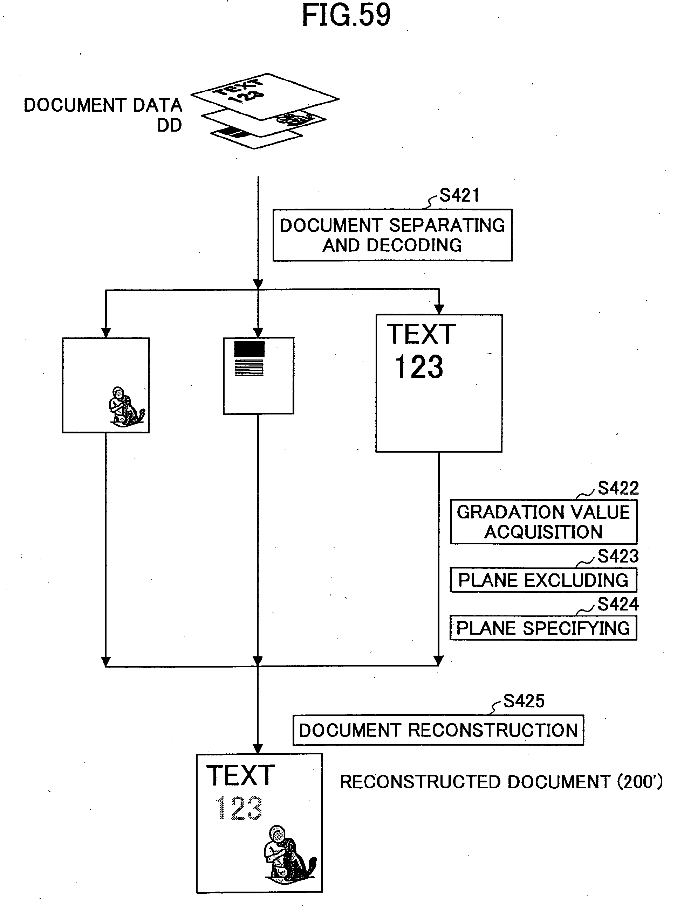

FIG. 59 is the diagram showing the document restoration method of the preferred embodiment. This document restoration method can be enforced using the document restoration device 21 of FIG. 58.

In FIG. 59, first, the document data DD is disassembled into the plane PLN of the two sheets (1), PLN (2), and the reference image REF, and decoding processing is performed to these (document decomposition/decoding step: S421).

The pixel of the reference image REF is scanned and the values A1 and A2 of the two tone levels given to each pixel are acquired (tone level value acquisition step: S422).

The plane used as the predetermined object is excepted (plane exclusion step: S423).

The plane corresponding to the values A1 and A2 of the two tone levels is determined (plane specification step: S424).

The pixel value given to the position of the pixel on the plane determined in the plane specification step S424 is extracted, and restoration document 100' is created (document restoration step: S425).

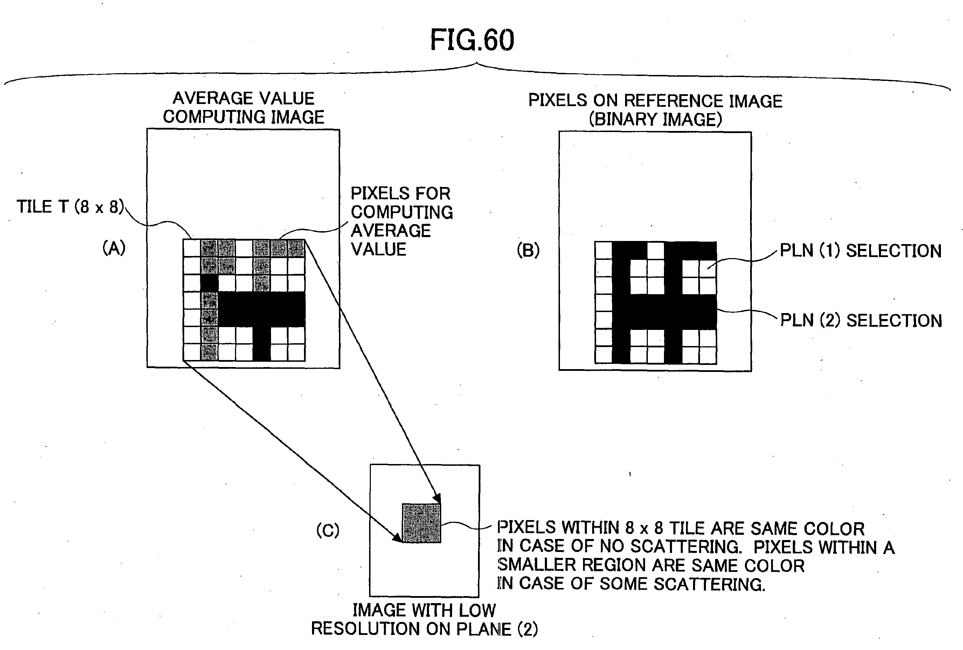

FIG. 60 shows the embodiment in which the low-resolution processing of plane PLN (2) is modified. FIG. 60 (A) shows the value of the pixel of plane PLN (2). FIG. 60 (B) shows the average computation image GA for determining the pixel value of plane PLN (2) from the pixel value of the reference image REF of (A). FIG. 60 (C) shows the pixel value of plane PLN (2).

The image GA for averaging extracts only the pixel value of the character object of the original document 100, and the value of the pixel on plane PLN (2) is given as an average of the pixel value of the character object contained in the 8x8-pixel tile T of the image GA for averaging.

As shown in FIG. 60 (B), the pixel value of plane PLN (1) is chosen to the white pixel of the reference image REF, and the pixel value (gray deep in FIG. 60 which is the average of the pixel value of the character object) of plane PLN (2) is chosen to the black pixel.

When the variation in the pixel equivalent to the character in the 8x8-pixel tile T on the image GA for averaging is small, the value of the pixel to which it corresponds on plane PLN (2) is rounded by the same color.

Moreover, when the variation in the pixel value in Tile T is large, the variation in the tile (for example, 2x2-pixel tile) of smaller size is judged, and when the variation concerned is small, the value of the pixel to which it corresponds on this plane PLN (2) can be rounded in the same color.

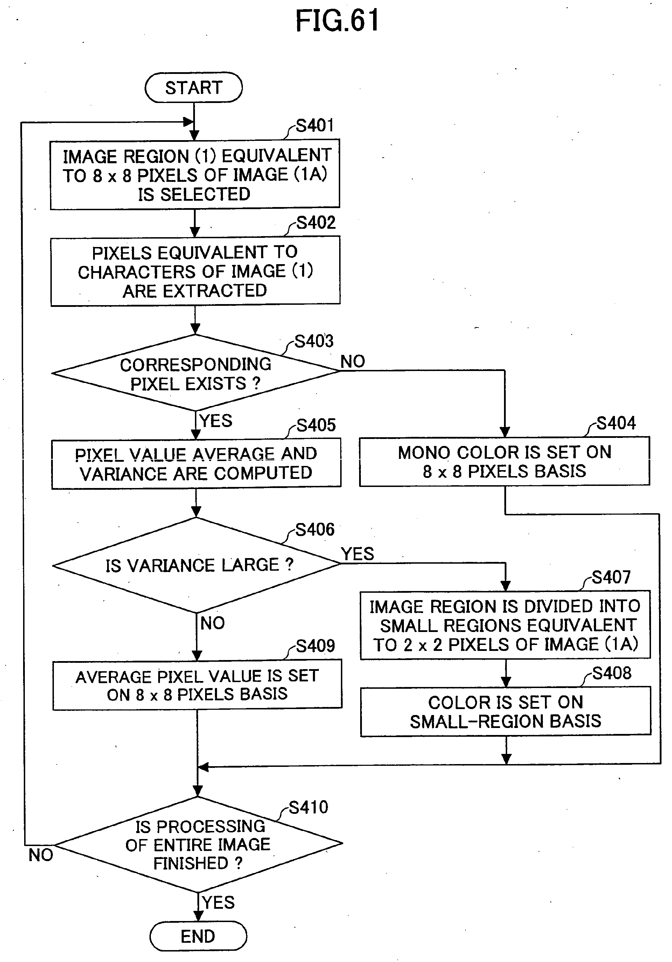

FIG. 61 is a flow chart which shows the low-resolution processing of plane PLN (2) described above.

First, the tile T which is equivalent to the 8x8 pixels on the image GA for averaging is chosen (S401). Next, it judges whether the pixel equivalent to the character position in Tile T is extracted (S402), and there is any corresponding pixel (S403).

In step S403, when there is no pixel equivalent to the character position in Tile T, the predetermined pixel value is given to the pixel of plane PLN (2) (S404). And it is determined whether the assignment of the pixel value was finished about all the pixels of plane PLN (2) (S410).

In step S403, when there is the pixel equivalent to the character position in Tile T, the average and variance of each pixel value concerned are calculated (S405), and it is determined whether variance is larger than the predetermined value (S406).

When variance is larger than the predetermined value, the 8x8-pixel tile T on the image GA for averaging is re-divided into the 2x2-pixel tile (S407).

The average of the pixel value of the pixel equivalent to the character in the re-divided tile is given to the pixel of plane-PLN (2) (S408). And it is determined whether the assignment of the pixel value was finished about all the pixels of plane-PLN (2) (S410).

In step S406, when variance is larger than the predetermined value, the average of the pixel value of the character equivalent pixel in the 8x8-pixel tile T is assigned to the pixel of PLN (2). And it is determined whether assignment of the pixel value is finished for all the pixels of plane PLN (2) (S410).

In S410, when the assignment of the pixel value is finished about all the pixels of plane PLN (2), the low-resolution processing is ended.

In the present embodiment, the variation in the color of the original document 100 is judged, and if it colors in the finer unit when it varies, the color will not be mixed. Moreover, the effect which raises compression efficiency can be expected, without lowering the quality of image to the present embodiment, since the coloring unit is changed selectively.

In addition, as a method of creating the variation in the color, although based on variance, you may use the ratio of the pixel with the achromatic color, and the pixel with the chromatic color for others. In this case, either as colorless as the chromatic color judges except that the variation in the color is large.

How to judge that colorless judgment is colorless when the relation between $|R-G|<th$, $|G-B|<th$, and $|B-R|<th$ is realized between the thresholds th beforehand defined when the colors of a certain pixel are (R, G, B) etc. can be considered.

The color will be mixed by the method using the ratio of such an achromatic color and a chromatic color when the chromatic colors are mixed. However, the multiplication required for variance calculation is unnecessary, and there is the advantage that the cost for the calculation is low.

The above-described embodiments of FIG. 54A through FIG. 61 provide a document conversion device comprising: a plane image extraction unit extracting n planes from an original document; a reference image creation unit creating a reference image in which a value of m tone levels is assigned to each of pixels of the reference image and information for choosing one of the n planes for every pixel is contained as the value of the m tone levels, the reference image including a predetermined object on the original document as a painting-out image given by one of the m tone levels; and a coding unit encoding the n planes and the reference image; wherein the plane image extraction unit is provided such that a pixel value of each of pixels corresponding to the painting-out image on the plane chosen among the n planes according to the information for each pixel contained in the reference image is determined based on a pixel value of the painting-out image on the original document.

According to the present invention, the file size can be made small without the document concerning the color image reducing the quality of image sharply. Moreover, in the reproduced document, the visibility of the image which includes the character, the ruled line, and the monochrome figure, can be maintained, and it can be applied to the image with the gradations. Moreover, since the document image is divided into two or more planes and a reference image, only the required object can be displayed or can be transmitted.

The above-mentioned document conversion device may be configured so that the plane image extraction unit extracts a plane image chosen according to the information for each pixel of the painting-out image on the reference image, the plane image having a resolution lower than a resolution of the original document, and the plane image extraction unit is provided such that pixel values of the chosen plane image are determined based a variation of pixel values of the painting-out image in a tile of the original document corresponding to pixels of the extracted plane image.

The above-mentioned document conversion device may be configured so that the plane image extraction unit extracts a plane image chosen according to the information for each pixel of the painting-out image on the reference image, the plane image having a resolution lower than a resolution of the original document, and wherein the plane image extraction unit is provided to determine a variation of pixel values of the painting-out image in a first tile of the original document corresponding to pixels of the extracted plane image, and, when the variation concerned is smaller than a given value, the pixel values of the chosen plane image are determined based on an average of the pixel values of the painting-out image in the first tile, and, when the variation concerned is larger than the given value, a variation of pixel values of the painting-out image in a second smaller tile of the original document is determined, and the pixel values of the chosen plane image are determined based on an average of the pixel values of the painting-out image in the second smaller tile when the variation concerned is smaller than the given value.

The above-mentioned document conversion device may be configured so that plane image extraction unit is provided to extract the n planes by dividing objects on the original document into the n planes, or the n planes and the reference image.

The above-mentioned document conversion device may be configured so that the coding unit is provided to encode the n planes and/or the reference image by using a coding method according to a kind of objects on the original document.

The above-mentioned document conversion device may be configured so that the coding unit is provided to encode at least one of the n planes by using a coding method different from a coding method used to encode the other planes.

The above-mentioned document conversion device may be configured so that the document conversion device further comprises an image integration unit which integrates the reference image and the n planes, which are encoded by the coding unit, into a data set.

The above-mentioned document conversion device may be configured so that the document conversion device further comprises an image manipulation unit which performs an image manipulation process or image compensation process.

The above-described embodiments of FIG. 54A through FIG. 61 provide a document restoration device which restores a document by acquiring document data having a document data structure which is created by integrating n planes extracted from an original document, into one document, the document data having the n planes and a reference image containing information for choosing one of the n planes for every pixel as a value of m tone levels, the reference image including a predetermined object on the original document as a painting-out image given by one of the m tone levels, a pixel value of each of pixels corresponding to the painting-out image on the plane chosen among the n planes according to the information for each pixel contained in the reference image being determined based on a pixel value of the predetermined object on the original document, the document restoration device comprising: a document decomposing/decoding unit disassembling the document data into the n planes and the reference image and performing a decoding processing for each of the n planes and the reference image; a scanning unit scanning the pixels of the reference image; a tone-level value acquisition unit acquiring a value of the m tone levels given to each of the pixels scanned by the scanning unit; a plane determination unit determining a plane of the n planes corresponding to the value of the m tone levels; a pixel value extraction unit extracting pixel values of pixels on the plane determined by the plane determination unit, which pixels correspond to positions of the pixels of the reference image; and a document reconstruction unit restoring the document by assigning the pixel values extracted by the pixel value extraction unit, to pixels of a reconstructed document image which pixels correspond to the respective pixels of the reference image.

The above-mentioned document restoration device may be configured so that the document restoration device comprises a plane exclusion unit which specifies one or plurality of planes among the n planes, wherein the specified planes are not subjected to the object of the specific processing by the plane determination unit, and only necessary objects are displayed on the restoration image.

The above-described embodiments of FIG. 54A through FIG. 61 provide a document conversion method comprising the steps of: extracting n planes from an original document; creating a reference image in which a value of m tone levels is assigned to each of pixels of the reference image and information for choosing one of the n planes for every pixel is contained as the value of the m tone levels, the reference image including a predetermined object on the original document as a painting-out image given by one of the m tone levels; and encoding the n planes and the reference image; wherein the extracting step is provided such that a pixel value of each of pixels corresponding to the painting-out image on the plane chosen among the n planes according to the information for each pixel contained in the reference image is determined based on a pixel value of the painting-out image on the original document.

The above-mentioned document conversion method may be configured so that, in the extracting step, a plane image chosen according to the information for each pixel of the painting-out image on the reference image is extracted, the plane image having a resolution lower than a resolution of the original document, and the extracting step is provided such that pixel values of the chosen plane image are determined based a variation of pixel values of the painting-out image in a tile of the original document corresponding to pixels of the extracted plane image.

The above-mentioned document conversion method may be configured so that, in the extracting step, a plane image chosen according to the information for each pixel of the painting-out image on the reference image is extracted, the plane image having a resolution lower than a resolution of the original document, and wherein the extracting step is provided to determine a variation of pixel values of the painting-out image in a first tile of the original document corresponding to pixels of the extracted plane image, and, when the variation concerned is smaller than a given value, the pixel values of the chosen plane image are determined based on an average of the pixel values of the painting-out image in the first tile, and, when the variation concerned is larger than the given value, a variation of pixel values of the painting-out image in a second smaller tile of the original document is determined, and the pixel values of the chosen plane image are determined based on an average of the pixel values of the painting-out image in the second smaller tile when the variation concerned is smaller than the given value.

The above-mentioned document conversion method may be configured so that the extracting step is provided to extract the n planes by dividing objects on the original document into the n planes, or the n planes and the reference image.

The above-mentioned document conversion method may be configured so that the encoding step is provided to encode the n planes and/or the reference image by using a coding method according to a kind of objects on the original document.

The above-mentioned document conversion method may be configured so that the encoding step is provided to encode at least one of the n planes by using a coding method different from a coding method used to encode the other planes..

The above-mentioned document conversion method may be configured so that the document conversion method further comprises the step of integrates the reference image and the n planes, which are encoded in encoding step, into a data set.

The above-mentioned document conversion method may be configured so that the document conversion method further comprises the step of performing an image manipulation process or image compensation process.

The above-described embodiments of FIG. 54A through FIG. 61 provide a document restoration method which restores a document by acquiring document data having a document data structure which is created by integrating n planes extracted from an original document, into one document, the document data having the n planes and a reference image containing information for choosing one of the n planes for every pixel as a value of m tone levels, the reference image including a predetermined object on the original document as a painting-out image given by one of the m tone levels, a pixel value of each of pixels corresponding to the painting-out image on the plane chosen among the n planes according to the information for each pixel contained in the reference image being determined based on a pixel value of the predetermined object on the original document, the document restoration method comprising the steps of: disassembling the document data into the n planes and the reference image and performing a decoding processing for each of the n planes and the reference image; scanning the pixels of the reference image; acquiring a value of the m tone levels given to each of the scanned pixels; determining a plane of the n planes corresponding to the value of the m tone levels; extracting pixel values of pixels on the plane determined in the determining step, which pixels correspond to positions of the pixels of the reference image;

and restoring the document by assigning the pixel values extracted by the pixel value extraction unit, to pixels of a reconstructed document image which pixels correspond to the respective pixels of the reference image.

The above-mentioned document restoration method may be configured so that the document restoration method further comprises the step of specifying one or plurality of planes among the n planes which are to be excluded, wherein the specified planes are not subjected to the plane determination, and only necessary objects are displayed on the restored document image.

The above-described embodiments of FIG. 54A through FIG. 61 provide a computer program product embodied therein for causing a computer to execute the above-mentioned document conversion method.

The above-described embodiments of FIG. 54A through FIG. 61 provide a computer program product embodied therein for causing a computer to execute the above-mentioned document restoration method.

The above-described embodiments of FIG. 54A through FIG. 61 provide a computer-readable storage medium storing a program embodied therein for causing a computer to execute the above-mentioned document conversion method and/or the above-mentioned document restoration method.

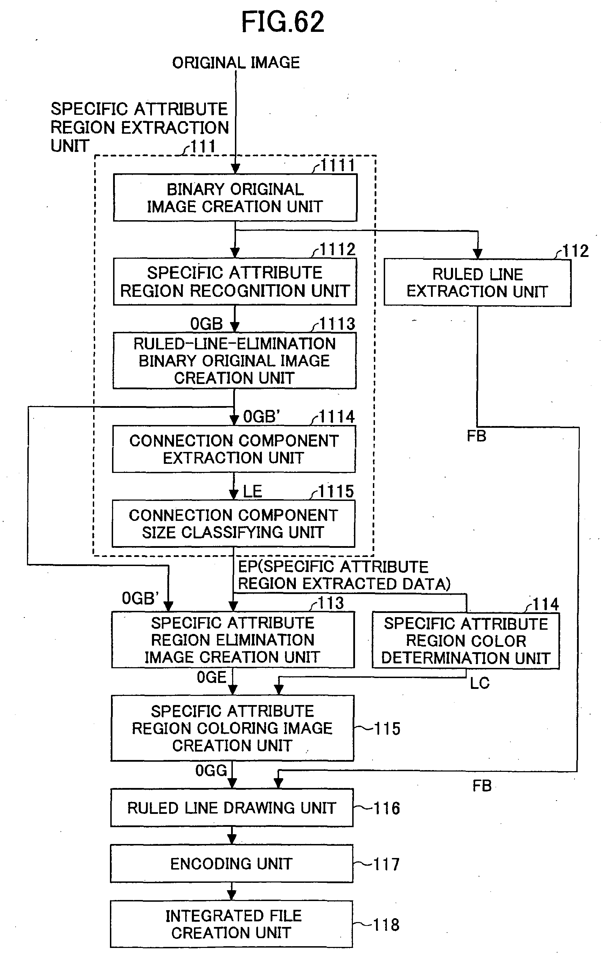

Next, FIG. 62 is the functional block diagram showing the image processing apparatus in the preferred embodiment of the invention.

The image processing apparatus 11 comprises the specific attribute region extraction unit 111, the ruled line extraction unit 112, the specific attribute region elimination image creation unit 113, the specific attribute region color determination unit 114, the specific attribute region coloring image creation unit 115, the ruled line drawing unit 116, and the coding unit 117 as shown in FIG. 62.

The specific attribute region extraction unit 111 can extract the portion (specific attribute region: the present embodiment character portion) with the specific attribute from the original image OG (EP shows specific attribute information). The specific attribute is the character attribute in the present embodiment.

Moreover, in the present embodiment, the specific attribute region extraction unit 111 comprises the binarization original-image creation unit 1111, the specific attribute region extraction unit 1112, the ruled line elimination binarization image creation unit 1113, the connection-component extraction unit 1114, and the connection-component size classification unit 1115.

The binarization original-image creation unit 1111 creates the binarization original image OGB which carried out binarization of the original image OG. The specific attribute region recognition unit 1112 performs recognition processing of the specific attribute region in the binarization original image OGB which the binarization original-image creation unit 1111 created.

The ruled line elimination binarization image creation unit 1113 eliminates the ruled line extracted by the ruled line extraction unit 112 from the binarization original image OGB, and creates ruled line elimination binarization image OGB'.

The connection-component extraction unit 1114 classifies the size of the connection component which extracted a connection-component size classification unit 1115 to extract the connection component LE from ruled line elimination binarization image OGB' which created by the ruled line elimination binarization image creation unit 1113, by the connection-component extraction unit 1114. This classification result is the specific attribute information EP.

The ruled line extraction unit 112 extracts the ruled line contained in the original image OG. In the present embodiment, the ruled line extraction unit 112 shall extract the ruled line FB from the binarization original image OGB which created by the binarization original-image creation unit 1111.

The specific attribute region elimination image creation unit 113 creates the specific attribute region elimination image OGE which eliminated the specific attribute region (character portion) extracted by the specific attribute region extraction unit 111 from the original image.

The specific attribute region color determination unit 114 determines the color of the specific attribute region (character portion) extracted by the specific attribute region extraction unit 111. This color information is set to LC.

The specific attribute region coloring image creation unit 115 creates at least one specific attribute region coloring image CGG in which it painted by the color which determined the image of the characteristics attribute region (character portion) by the specific attribute region color determination unit 114.

The ruled line drawing unit 116 draws again the ruled line FB eliminated by the ruled line elimination binarization image creation unit to the image after processing of the connection-component size classification unit.

The coding unit 117 creates the compression image from the image which eliminated the specific attribute region, and the image which consists only of the specific attribute region. In the present embodiment, the image processing apparatus 11 can realize the remarkable size reduction, without sacrificing the visibility of the character for the original image.

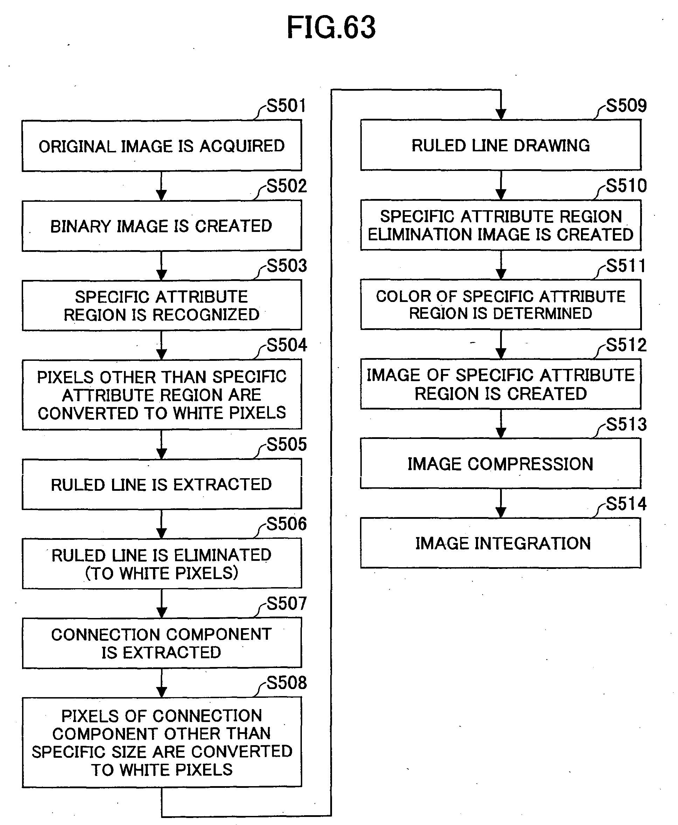

FIG. 63 is a block diagram for explaining the flow of processing of the image processing apparatus 11 of FIG. 62.

As the image scanner etc. was used for the image processing apparatus 11, and the original image of the multiple value was inputted (S501) and mentioned above with the ぞ, the binarization original-image creation unit 1111 creates the binarization original image OGB which carried out binarization of the original image OG (S502).

Subsequently, the specific attribute region recognition unit 1112 pinpoints the position of the specific attribute region (the present embodiment character portion) from the original image OG (S503). The position of the character can be known per pixel.

The technology of pinpointing the position of the character portion is common knowledge, can also pinpoint the position of the character portion directly from the multi-level image, creates the binarization original image OGB from the multi-level image (see Japanese Laid-Open Patent Application No. 2002-288589), and can also pinpoint the position of the character portion from this binarization original image OGB (see Japanese Laid-Open Patent Application No. 06-020092).

Extraction of the specific attribute region is performed by what (the black pixel is changed into the background color (usually white)) black pixels other than the specific attribute region recognized in S503 are eliminated for (S504).

Moreover, the ruled line extraction unit 112 performs ruled line extraction (S505). In the present embodiment, extraction of the ruled line is performed based on the binarization original image OGB which created by the binarization image creation unit 1111 as mentioned above.

Furthermore, the ruled line is eliminated by the ruled line elimination binarization original-image creation unit 1113 (S506). That is, the ruled line is eliminated by changing into the white pixel.

In addition, processing of S504 to S506 can replace sequence. The ruled line elimination binarization original-image OGB' is created as mentioned above.

Next, by the connection-component extraction unit 1114, the connection component of the black pixel is extracted from ruled line elimination binarization original-image OGB' (S507), and the connection component of too large size and the connection component of too small size are eliminated (S508).

For the noise etc., the connection component of too small size will be for compression efficiency to fall, if a possibility that it is not the character makes it the binary image as it is the high top.

Moreover, pinpointing of the character region is technically difficult and the right character region is not necessarily extracted. Therefore, this region may be incorrect-recognized to be the character when the region of the view and the region of the photograph are in the original image OG. Therefore, the connection component of too large size has the high possibilities other than the character.

Moreover, although it will be accidentally classified into the background according to this processing when the connection component of big size is the character in fact, since size is large, it can be read by the human eyes enough.

When the ruled line is not eliminated, it becomes the same connection component as the ruled line, size becomes large too much, and it becomes impossible here, to extract the character in contact with the ruled line. Therefore, performing ruled line elimination has the effect which makes it easy to extract the character in contact with the ruled line.

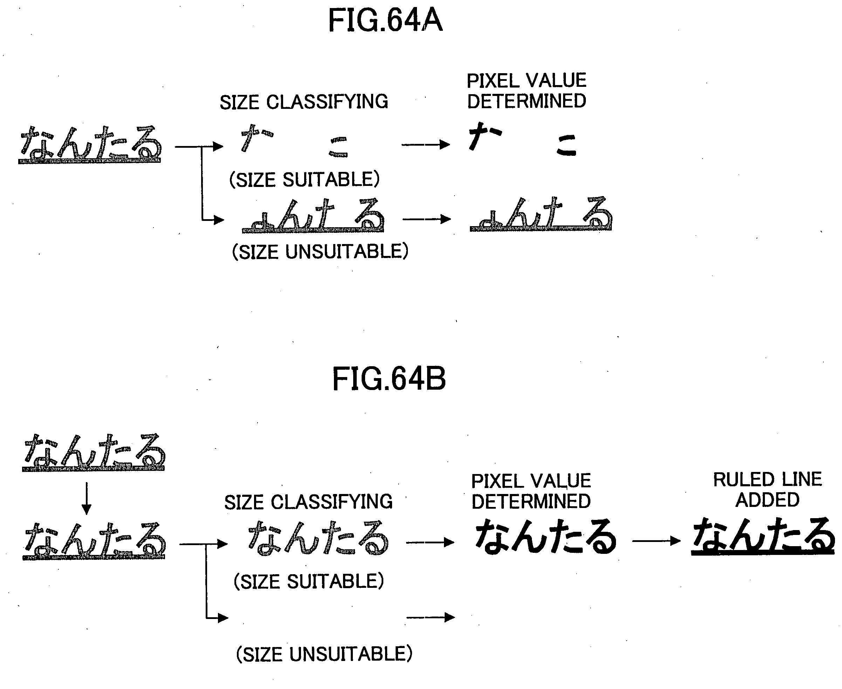

For example, although a part of character will be recognized as an independent character as shown in FIG. 64A or the part and ruled line of the character will be recognized as an image, when size extracts the character, without separating the character and the ruled line. Though size extracts the character when the character and the ruled line are separated, as it is shown in FIG. 64B, recognition of the character is made correctly.

Since the ruled line is the monochrome in many cases, even if it reappears by the binary image, the visibility does not fall. Then, the ruled line is drawn again and it is made to reappear as a binary image to ruled line elimination binarization original-image OGB' which eliminated except the character (S509).

In addition, if the portions which are not the ruled lines, such as the photograph portion, are extracted as a ruled line and this will be reproduced by the binary image, the color number will decrease extremely and will cause the quality-of-image fall. In such a case, it is also possible to omit this processing. In this case, the ruled line will be reproduced as a background image.

Then, the specific attribute region elimination image OGE which eliminated the specific attribute region (specific attribute region) is made by the specific attribute region elimination image creation unit 113 (S510).

What is necessary is just to make the image which specifically replaced the pixel of the character portion in ruled line elimination binarization original-image OGB' by the surrounding color.

Specifically, this specific attribute region elimination image OGE is the image by which the specific attribute region (character portion) and the ruled line were removed from the binarization original image OGB.

Then, the specific attribute region color determination unit determines the color of the specific attribute region (S511). All the pixel colors of the color image in the position of the black pixel which constitutes the character are determined, and some of the major colors currently used are selected from this data as the representative colors.

And it is determined whether every pixel and the pixel which constitutes the character for every connection component are the closest to which representative color.

By the specific attribute region coloring image creation unit 115, the specific attribute region coloring image CGG which has the specific attribute region (it has the color in which it painted for every pixel and every connection component) is created (S512). The multilevel image only with the limited color is sufficient as this image, and it may have every one binary image for every color. Suppose that it has every one binary image for every color.

The compression image is created from the image which eliminated the specific attribute region which the coding unit 117 created, and the image which consists only of the specific attribute region (S513). For example, if the former performs JPEG compression and the latter performs MMR compression, the file size will become small efficiently.

Next, it compounds in the form which can pile up and display the image which consists only of the specific attribute pixel by the integrated file generation unit 118 on the image which eliminated the specific attribute region (S514).

If these are integrated, it becomes the form where the character sticks on the background, and can regard as the original image OG similarly.

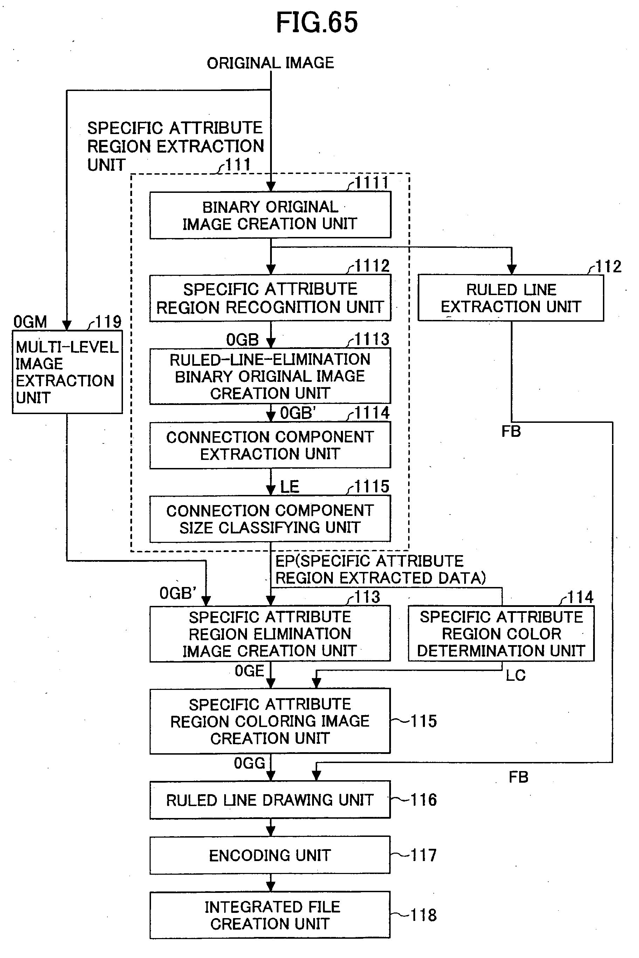

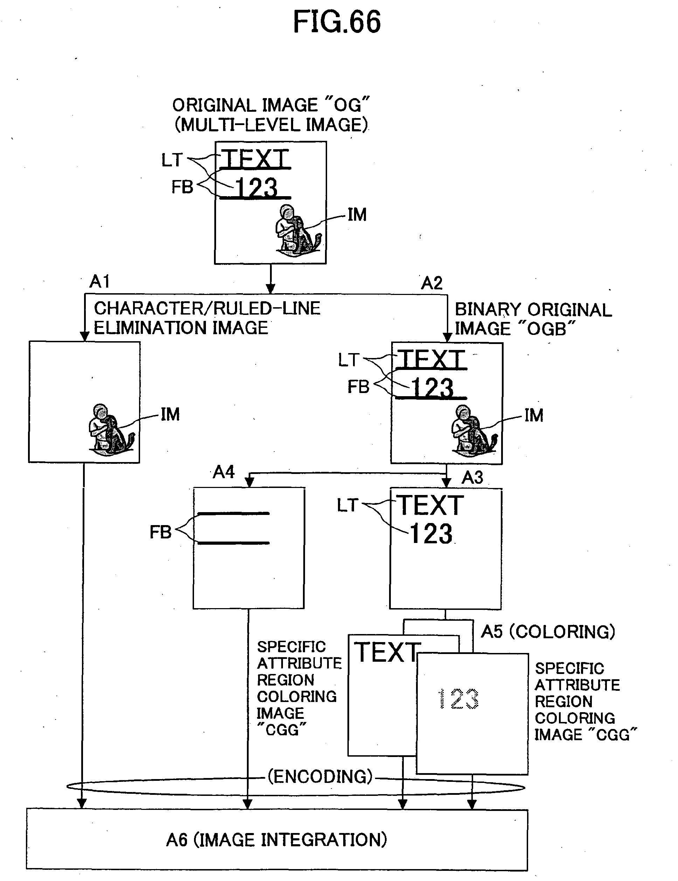

The functional block diagram in which FIG. 65 shows the preferred embodiment of the image processing apparatus of the present invention in case the images IM, such as the photograph, are included in the original image OG, and FIG. 66 is the diagram showing the flow of processing by the image processing apparatus concerned.

Although the composition of FIG. 65 is the same as the composition of the outline and FIG. 62, it differs from FIG. 62 in that the multiple-value image extraction unit 119 dissociates with the character, and extracts the images IM, such as the photograph, from the original image OG. In the present embodiment, the character LT with the ruled line FB is indicated to be Image IM by the original image OG.

The image (binarization original image OGB) which carried out binarization of the whole to the multiple-value original image OG 1 from which the image IM portion was extracted from this original image OG is created (A1, A2). The specific attribute region extraction unit 111 extracts the specific attribute region (character portion) from the binarization original image OGB (A3), the ruled line extraction unit 112 extracts the ruled line from the binarization original image OGB, and drawing by the ruled line drawing unit 116 makes having (A4) - (A5) by which coloring is given to the binarization original image OGB by the specific region color determination unit 114, and ruled line elimination binarization original-image OGB' is created.

Then, the coding unit 117 encodes and Image IM, the ruled line portion FB (these serve as the specific attribute region elimination image OGE), and ruled line elimination binarization original-image OGB' (specific attribute region (character portion)) are unified by the integrated file generation unit 118 (A6).

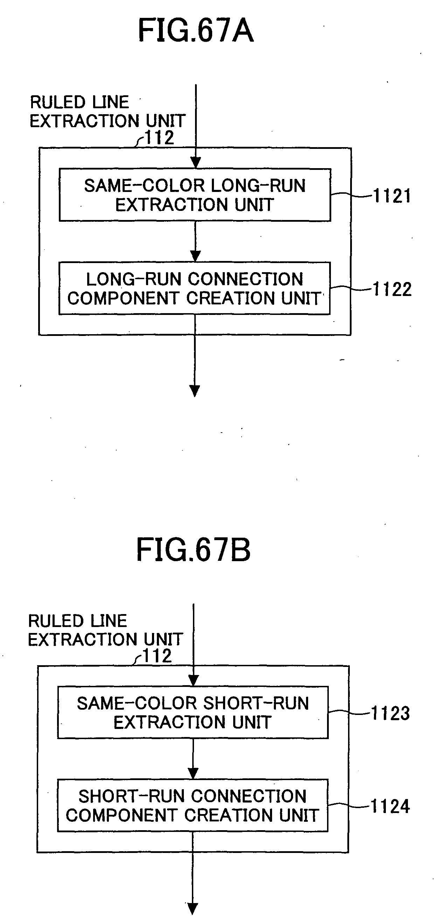

With reference to FIG. 67A through FIG. 68, the case where ruled line extraction is performed by the ruled line extraction unit 112 will be explained.

FIG. 67A and FIG. 67B are diagrams showing the details of the ruled line extraction unit 112, and the ruled line extraction unit 112 comprises a same color long run extraction unit 1121 to extract the long run it can be considered that is the same color, and a long run connection-component creation unit 1122 to create the connection component which makes the component the long run extracted by the same color long run extraction unit 1121 as shown in FIG. 67A.

Moreover, as shown in FIG. 67B, the ruled line extraction unit 112 comprises a same color short run extraction unit 1123 to extract the short run it can be considered that is the same color, and a short run connection-component creation unit 1124 to create the connection component which makes the component the short run extracted by the same color short run extraction unit 1123.

The ruled line extraction unit 112 of FIG. 67A extracts only the long thing among the runs (level or black pixel group which continued perpendicularly) of the black pixel, summarizes what these long runs touch, and it carries out grouping as a connection component.

And it is long in the direction of the run, and the run and the vertical direction consider that only the short long and slender connection component is the ruled line.

Moreover, the ruled line extraction unit 112 of FIG. 67B extracts only the short thing among the runs of the black pixel, and extracts the connection component from these. And it is short in the direction of the run, and the run and the vertical direction consider that only the long and slender long connection component is the character. It is possible to use either of those shown in FIG. 67A and FIG. 67B.

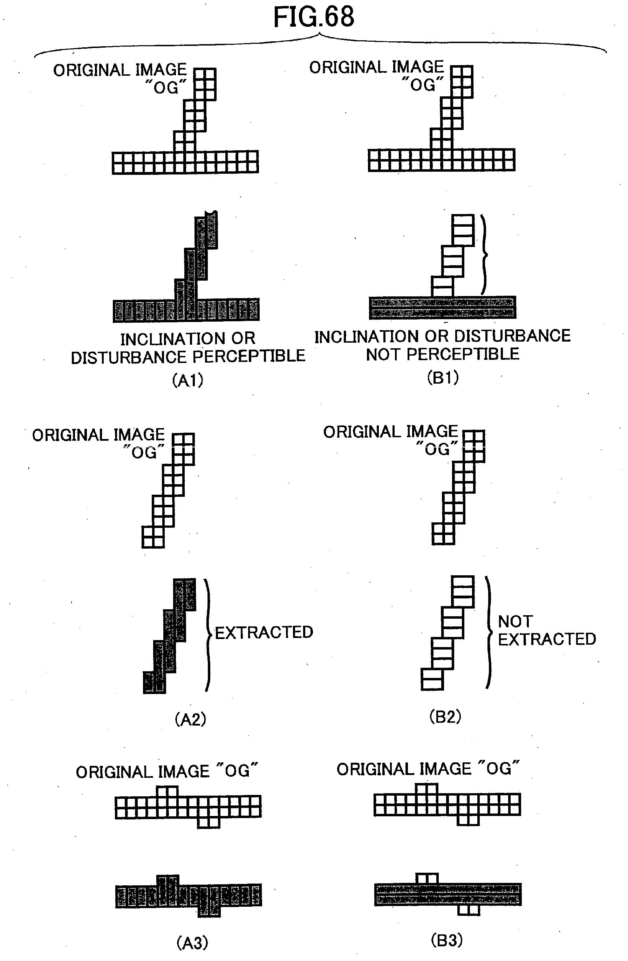

As the ruled line extraction unit 112 of FIG. 67A is, as shown in the lower cases of FIG. 68 (A1), (A2), and (A3), strong to inclination and disorder, and the small pixels can also be extracted. Conversely, the ruled line extraction unit 112 of FIG. 67B is, as shown in FIG. 68 (B1), (B2), and (B3), weak to inclination and disorder, and the small pixels cannot be extracted (in each view, the upper case shows the original image OG and painting out of the lower case shows the extraction image by the ruled line extraction unit 112).

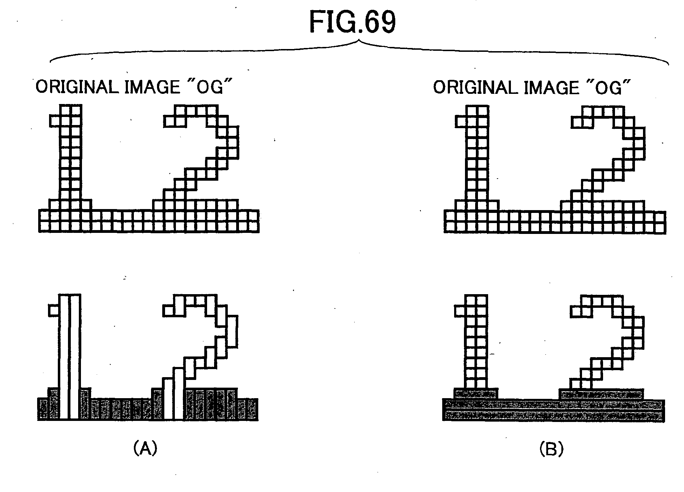

Moreover, although the ruled line extraction unit 112 of FIG. 67A can recognize the ruled line as shown in FIG. 69 (A), the ruled line extraction unit 112 of FIG. 67B cannot recognize the ruled line, as shown in FIG. 69 (B) (in each view, the upper case shows the original image OG and painting out of the lower case shows the extraction image by the ruled line extraction unit 112).

Since there are merits and demerits in the ruled line extraction unit 112 of FIG. 67A and FIG. 67B as mentioned above, respectively, if the ruled line extraction unit which does both functions so is used, the omission in extraction of the ruled line will decrease.

Remarkable compression of the file size is attained by the above processing, without reducing the visibility. That is, although JPEG compression does not have so good compression efficiency about the image with the sharp change of the pixel value, if the character portion is eliminated by the method described here, since pixel value change of the character region will be lost, efficiency becomes good.

Moreover, since the character portion reduces the color number sharply, also in this, compression efficiency becomes good. If the character is reproduced as a binary image, since the outline will become clear in quality of image, the visibility tends to improve.

The above-described embodiments of FIG. 62 through FIG. 69 provide an image processing apparatus comprising: a specific attribute region extraction unit extracting a region with a specific attribute from an original image; a ruled line extraction unit extracting a ruled line contained in the original image; a specific attribute region elimination image creation unit creating a specific attribute region elimination image in which the specific attribute region extracted by the specific attribute region extraction unit is eliminated from the original image; a specific attribute region color determination unit determining a color of the specific attribute region extracted by the specific attribute region extraction unit; and a specific attribute region coloring image creation unit creating at least one specific attribute region coloring image in which an image of the specific attribute region is painted with the color determined by the specific attribute region color determination unit.

According to the present invention, remarkable compression of the file size is attained without reducing the visibility. That is, although JPEG compression does not have so good compression efficiency about the image with the sharp change of the pixel value, since the character region is encoded by the method (compression of the MMR method suitable for the character etc.) of compressing other than the JPE method, compression efficiency becomes high. Moreover, since the character portion reduces the color number sharply, compression efficiency becomes good (since the binarization is carried out). If the character is reproduced as a binary image, since the outline will become clear in quality of image, the visibility tends to improve.

The above-mentioned image processing apparatus may be configured so that the specific attribute region extraction unit comprises a binary original-image creation unit which creates a binary original image by binarization of the original image, and a specific attribute region recognition unit which recognizes the specific attribute region in the binary original image created by the binary original-image creation unit, and wherein the ruled line extraction unit is provided to extract the ruled line from the binary original image created by the binary original-image creation unit.

The above-mentioned image processing apparatus may be configured so that the specific attribute region extraction unit further comprises: a ruled line elimination binary image creation unit which creates a ruled line elimination binary image in which the ruled line extracted by the ruled line extraction unit is eliminated from the binary original image; a connection-component extraction unit which extracts a connection component from the ruled line elimination binary image created by the ruled line elimination binary image creation unit; and a connection-component size classification unit which classifies a size of the connection component extracted by the connection-component extraction unit.

The above-mentioned image processing apparatus may be configured so that the image processing apparatus further comprises a ruled line drawing unit which draws again the ruled line, which is eliminated by the ruled line elimination binary image creation unit, to an image after processing of the connection-component size classification unit.

The above-mentioned image processing apparatus may be configured so that the ruled line extraction unit comprises: a same-color long run extraction unit which extracts long runs which are considered as having a same color; and a long-run connection-component creation unit which creates a connection component which is constituted by the long runs extracted by the same-color long run extraction unit.

The above-mentioned image processing apparatus may be configured so that the ruled line extraction unit comprises: a same-color short-run extraction unit which extracts short runs which are considered as having a same color; and a short-run connection-component creation unit which creates a connection component which is constituted by the short runs extracted by the same-color short-run extraction unit.

The above-mentioned image processing apparatus may be configured so that the ruled line extraction unit comprises: a same-color long run extraction unit which extracts long runs which are considered as having a same color; a long-run connection-component creation unit which creates a connection component which is constituted by the long runs extracted by the same-color long run extraction unit; a same-color short-run extraction unit which extracts short runs which are considered as having a same color; and a short-run connection-component creation unit which creates a connection component which is constituted by the short runs extracted by the same-color short-run extraction unit.

The above-described embodiments of FIG. 62 through FIG. 69 provide an image processing method comprising the steps of: extracting a region with a specific attribute from an original image; extracting a ruled line contained in the original image; creating a specific attribute region elimination image in which the extracted specific attribute region is eliminated from the original image; determining a color of the extracted specific attribute region; and creating at least one specific attribute region coloring image in which an image of the specific attribute region is painted with the color determined in the determining step.

The above-mentioned image processing method may be configured so that the specific attribute region extracting step comprises creating a binary original image by binarization of the original image, and wherein the ruled line extracting step is provided to extract the ruled line from the created binary original image.

The above-mentioned image-processing method may be configured so that the specific attribute region extracting step further comprises: creating a ruled line elimination binary image in which the ruled line extracted in the ruled line extracting step is eliminated from the binary original image; extracting a connection component from the ruled line elimination binary image created; and classifying a size of the connection component extracted.

The above-mentioned image-processing method may be configured so that the image-processing method further comprises the step of drawing again the ruled line, which is eliminated in the ruled line elimination binary image creating step, to an image after processing of the connection-component size classifying step.

The above-mentioned image processing method may be configured so that the ruled line extracting step comprises: extracting long runs which are considered as having a same color; and creating a connection component which is constituted by the long runs extracted.

The above-mentioned image processing method may be configured so that the ruled line extracting step comprises: extracting short runs which are considered as having a same color; and creating a connection component which is constituted by the short runs extracted.

The above-mentioned image processing method may be configured so that the ruled line extracting step comprises: extracting long runs which are considered as having a same color; creating a connection component which is constituted by the long runs extracted; extracting short runs which are considered as having a same color; and creating a connection component which is constituted by the short runs extracted.

The above-described embodiments of FIG. 62 through FIG. 69 provide a computer program product embodied therein for causing a computer to execute the above-mentioned image processing method.

The above-described embodiments of FIG. 62 through FIG. 69 provide a computer-readable storage medium storing a program embodied therein for causing a computer to execute the above-mentioned image processing method.

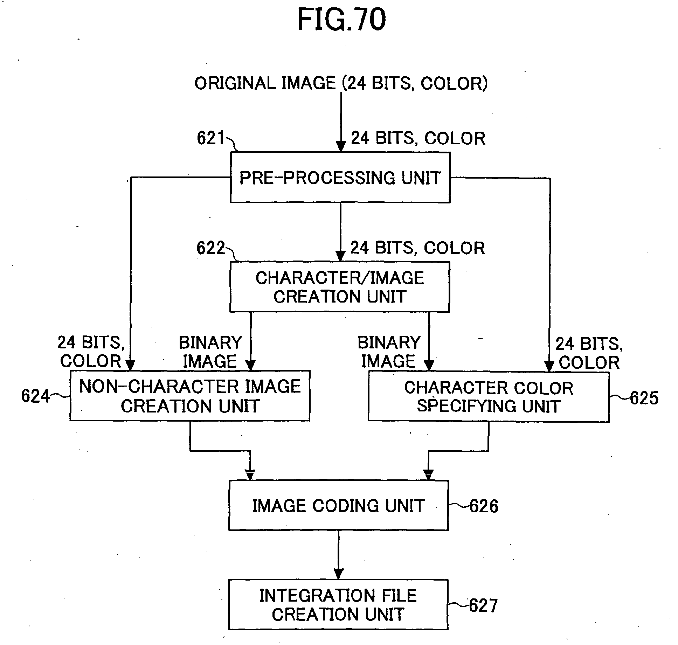

Next, FIG. 70 is the functional block diagram of the processing which is performed by the image processing apparatus 1 based on the program 13 for image processing.

The image processing apparatus 1 performs the respective functions of the pre-processing unit 621, the character image creation unit 622, the non-character image creation unit 624, the character color specifying unit 625, the image coding unit 626, and the integrated-file creation unit 627 by the program 13 for image processing.

In the following, the fundamental function of each of these units will be explained.

First, the pre-processing unit 621 performs the pre-processing of edge emphasis, smoothing processing, etc. in the multi-level document image which is the original image of the processing object (in this example, the 24-bit color image).

Then, the character image creation unit 622 determines the position of the portion (specific attribute portion) which has the specific attribute, based on the original image (in this example, the position of the character portion).

And the character image creation unit 623 creates the binary image in which the pixel value of the portion corresponding to the region which has no specific attribute in the original image which is the multi-level image, and the pixel value of the portion corresponding to the character region which has the specific attribute are changed to the pixel values which are different from each other. In this example, black pixels other than the characters are eliminated and changed to the white pixels in the binary image. By this processing, the positions of the characters will be known per pixel.

The character color specifying unit 625 determines the color of the character which is the specific attribute portion. The character color specifying unit 625 determines all the pixel colors of the color image in the position of the black pixel which constitutes the character, and selects some of the major colors currently used in the image based on the color data as the representative colors.

And it is determined whether every pixel and the pixel which constitutes the character for every connection component are the closest to which representative color. And the image in which the pixel with the specific attribute has every pixel and the color judged for every connection component is created.

This is good also as a multi-level image only with the limited color, and it is possible to make it create every one binary image for every color.

The non-character image creation unit 624 creates the image which eliminated the character which is the specific attribute portion. This should just create the image which replaced the pixel of the character portion used as the specific attribute portion by the surrounding color in the color image.

The image coding unit 626 creates the compression image from the image (non-character image) which eliminated the specific attribute pixel which it created, and the image (character image) which consists only of the specific attribute pixel. This compresses for example, the non-character image by the JPEG method, the character image is considered compressing by the MMR method or the PNG method, etc. and, thereby, the file size becomes small efficiently.

And it compounds in the form which can pile up and display the character image on the non-character image by the integrated-file creation unit 627. Thus, if the file compounded and created is decoded and these images will be integrated, it becomes the form where the character sticks on the background, and can regard as the original image similarly.

Next, other functional examples of the functional block diagram of the processing which the image processing apparatus 1 shown in FIG. 70 performs will be explained.

In this example, the different point from the above-mentioned functional example is explained, and the explanation with the common detailed point is omitted. It is the functions, such as the character color specifying unit 625 and the image coding unit 626, that the functions differ in this example.

The character color specifying unit 625 creates the character mask image from the binary image of only the character which created. The pixel which leaves Bit ON (here black pixel) by mask processing, and Bit OFF (here white pixel) are processed as a pixel which it does not leave by mask processing.

Moreover, the character color corresponding to the black pixel of the specific attribute portion is acquired from the original image, and the black pixel of the character which is the specific attribute portion is smeared away.

And this image is created as a foreground image (color information). At this time, pixel portions other than the character are drawn as the background color.

The image coding unit 626 performs compression coding of the background image by the JPEG (DCT) method, performs compression coding of the character mask image having only the specific attribute pixels by the MMR method, and performs compression coding of the foreground image in which only the specific attribute portion is drawn by the JPEG (DCT) method.

Next, the contents of the characteristic processing which is performed by the image processing apparatus 1 will be explained.

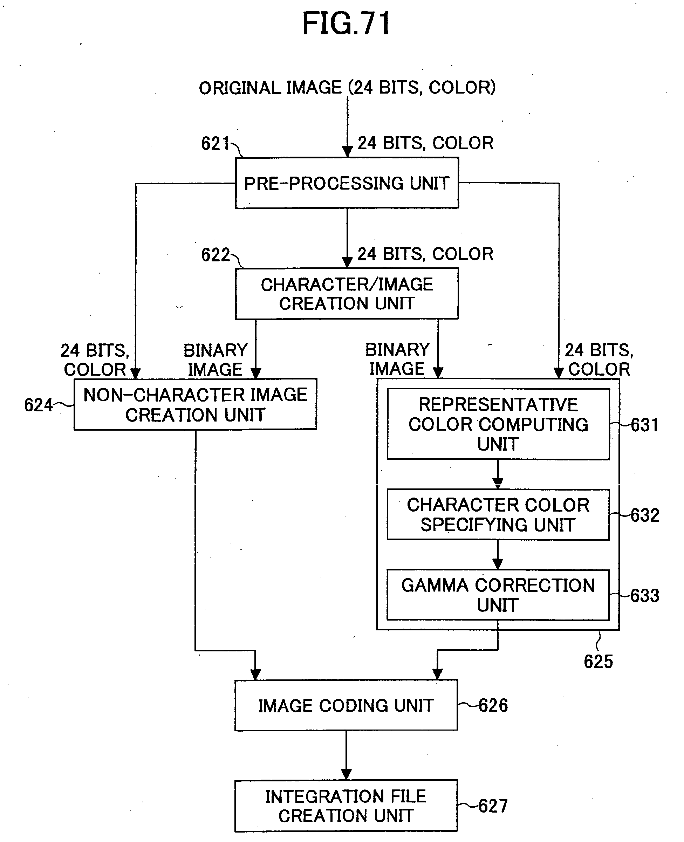

FIG. 71 is the functional block diagram for explaining the characteristic processing performed by the character color specifying unit 625.

In the character color specifying unit 625, "representative color calculation processing of the character region", "character color specification processing", and "gamma correction processing" are performed by considering as the input the character image (the ruled line being included) created in the character image creation unit 622, and the 24-bit color image accomplished pre-processing unit 621, and the character image of coloring is created.

First, the representative color computing unit 631 performs processing in which the color of the character region is reduced to the color number specified by the user. "The character region-color histogram creation" and "the histogram to representative color selection" are large, and this processing consists of two processings.

Next, these processings will be explained. Character region-color histogram creation

The pixel value of the portion equivalent to the character of the binary image of only the character created in the character image creation unit 622 is acquired from the 24-bit color image created in the pre-processing unit 621, and the color histogram of RGB is created. It quantizes in RGB each ingredients 8 color, and the histogram created here divides color space into the 8x8x8 colors, and counts the number of the pixels belonging to this space. Representative color selection from the histogram

The 128 colors are selected out of the histogram of RGB created as mentioned above as order with much the frequency, and it considers as the initial representative color. However, to some extent, since many achromatic colors will be chosen too much if it selects ordinarily, as for the achromatic color, the above applies the limit so that it may not choose.

If the selected achromatic color exceeds the half of the maximum character color number which the user gave, it will not choose any more. However, only the reasonable black color which constitutes the character is the exception, and even if it exceeds the half, only the color is chosen by the addition.

Next, the pair of the color to the nearest selected color is chosen, and the way with few pixels which belong is deleted from the representative color. It repeats until it decreases to the color number which the user gave this. In addition, when the color nearest even when it decreases to the color specified by the user is smaller than the threshold defined beforehand, it is determined that the reduction color is inadequate and continues the color reduction processing. For this reason, the color number which the user gives becomes the way of giving called the maximum color number.

The character color specification processing unit 632 determines the color per character (rectangle unit), when the size of the rectangle which consists of black connection components is smaller than the predetermined size.

First, the average color inside the character stroke except the character edge in the black connection component (RGB value) and the average color RGB value of all the pixels that constitute the character are created.

Next, it is determined whether those colors are colorless. The average color inside the character stroke in the small connection component is determined, and the average color of all the pixels that constitute the character is compared with the above-mentioned representative color, and let the nearest representative color be the character color of the applicable rectangle.

Although comparing the maximum dark color with the representative color in order to prevent mixing of the background color is also considered when there are only the background pixel and the touching pixel, when the stroke of the connection component is thin, and in the maximum dark color the color tends to vary in the character and it finally reappears as a character here, the color may vary in the character.

Then, such a case compares with the representative color the average color of all the pixels that constitute the character. Moreover, it is in the character stroke, and when the background pixel and the pixel which does not touch exist, the average color is compared with the representative color.

However, the average color for which it asked is the achromatic color (when the absolute value of the difference of each value of RGB is smaller than the predetermined threshold.). For example, in |R-G|<th, the repeatability of the black character is improved by comparing the value and representative color which subtracted the predetermined value from the RGB value.

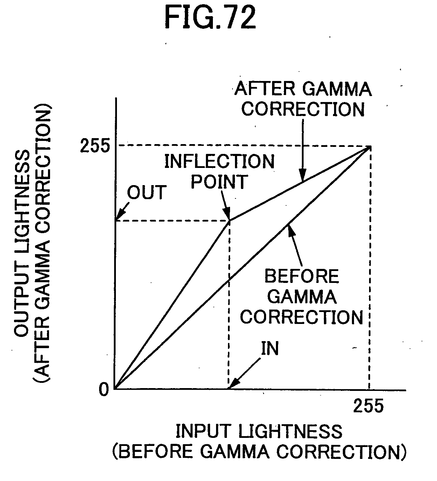

Since the character color may become bright or gamma correction unit 633 may become dark depending on the clustering result of the input image and the character color, in order to adjust the lightness value of the character image, gamma correction is performed as shown in FIG. 72. The gamma correction is performed in RGB collectively.

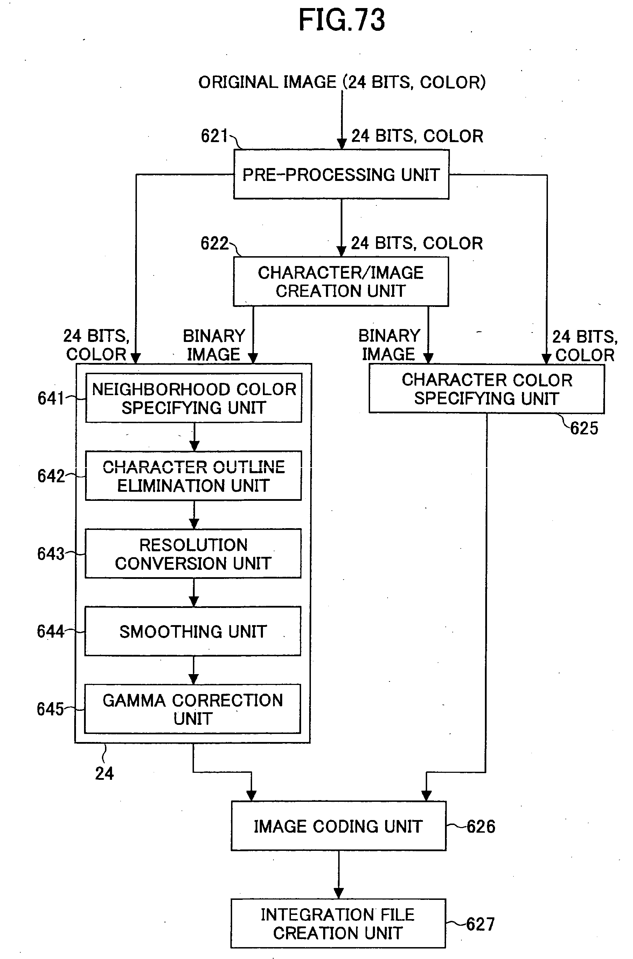

Next, the flow of the processing in the non-character image creation unit 624 will be explained with reference to FIG. 73.

The 24-bit color image to which creation of the non-character image was outputted from the pre-processing unit 621, by replacing the color of the character region in "specification of the circumference color of the character", and its determined character circumference color by considering the binary image of only the character outputted from the character image creation unit 622 as the input. Each processing of "character region removal (stopgap) processing", "resolution conversion (low-resolution processing)", "smoothing", and "gamma correction" is performed.

First, specific processing of the circumference color of the character is performed in the circumference color specifying unit 641. To the beginning, the pixel value of the color image corresponding to the surrounding rectangle coordinate of the character rectangle of the binary image of only the character is created.

The average of the calculated pixel value is computed and it considers as the color around the connection component. In addition, since it corresponds for entering of the character, it is aimed only at the pixel which is the white pixel of the binary image.

Next, character region removal (stopgap) processing of the image is performed in the character region removal unit 642. That is, the pixel value of the portion which constitutes the character of the color image from the circumference color for which it asked in the circumference color specifying unit 641 is replaced in this circumference color.

Since it can consider in approximation that the surrounding color is the color of the background, it will create the color image in which the character disappeared.

And resolution conversion (low-resolution processing) of the image is performed in the resolution conversion unit 643. That is, reduction of the file size is aimed at by low-resolution processing of the background image. Although the user can specify the grade of low-resolution processing, the grade which summarizes the 2x2 pixels to the 1 pixel standard is good.

Specifically, the average color of the 2x2 pixels of the color image in which the characters are removed is determined, and the pixel value of each pixel of the background image with the low resolution is changed to the pixel value of this average color.

Next, smoothing processing is performed by the smoothing unit 644. That is, when the photograph is included in the background image, if it is changed to the low resolution, the defect may be produced in the reproduced image of the portion. Then, the background image is smoothed. The smoothing is performed by giving spatial filtering of 3x3-pixel size similar to smoothing of the original image.

And gamma correction is performed by the gamma correction unit 645. Depending on the combination of the image printer after processing, the image obtained by the processing so far by the scanner which acquires the original image processed by this image processing apparatus 1, and this image processing apparatus 1 may be reproduced in the color dark on the whole or the bright color. Then, in order to adjust the lightness value of the background image, gamma correction is performed as shown in FIG. 72.

The gamma correction is performed in RGB collectively. This has the effect which raises the compression efficiency at the time of compression by the JPEG method of the background image.

By the above composition, by the image processing apparatus 1, after dividing the image into the character image and the non-character image, it separates into the character image and the non-character image, and gamma correction units 33 and 45 perform gamma correction independently the back, respectively.

Since it is dark to the whole and the background image can perform by this gamma correction which is different in the character image and the non-character image, respectively, such as wanting to make it bright, although he wants to make it bright since the character image is blackish, it can respond to the request of the user who desires to perform gamma correction different, respectively in the character image and the non-character image.

Moreover, specification of the circumference color by the circumference color specifying unit 641 is performed before smoothing by the smoothing unit 644 about the non-character image. In the circumference color specifying unit 641, although specific processing of the circumference color of the character is performed, in having performed this after smoothing of the image, the character color will mix in the circumference color of the character, and the character color will remain in the non-character image.

Then, by performing specification of the circumference color by the circumference color specifying unit 641 before smoothing by the smoothing unit 644, the character color cannot remain in the non-character image, and the non-character image can be separated correctly.

Furthermore, resolution conversion to the low resolution by the resolution conversion unit 643 is also performed before smoothing by the smoothing unit 644 about the non-character image. This is because smoothing processing can be performed at high speed if image size is reduced by resolution conversion.

Moreover, specification of the circumference color by the circumference color specifying unit 641 is performed before the resolution conversion to the low resolution by the resolution conversion unit 643. This is because the position of the character image will become ambiguous and it will become difficult to perform specific processing of the circumference color of the character correctly, if resolution conversion to the low resolution is performed.

The above-described embodiments of FIG. 70 through FIG. 73 provide an image processing apparatus comprising: a unit determining a position of a specific-attribute region having a specific attribute in an original image based on either a multi-level image which is the original image or a binary image which is created from the multi-level image; a unit creating a binary character image in which a pixel value corresponding to a non-specific-attribute region having no specific attribute in the original image is replaced by a given pixel value different from a pixel value corresponding to the specific-attribute region; a unit creating a multi-level non-character image of the non-specific-attribute region in which the pixel value of the specific attribute region in the original image is changed to a background color of the original image; a unit performing gamma conversion of the multi-level non-character image created; a unit determining a color of pixels which constitute the specific attribute region; a unit creating a binary or multi-level image of the specific attribute region which has the determined color, based on the binary character image; a unit performing gamma conversion of the binary or multi-level image of the specific attribute region created; an image coding unit carrying out compression coding of each of the multi-level non-character image after the gamma conversion and the binary or multi-level image of the specific attribute region after the gamma conversion, respectively; and an integrated file creation unit creating an integrated file in which the coded images after the compression coding are integrated.

According to the present invention, the image of specific attribute portions, such as characters, and the image of other portions can be created from the processing-object image, gamma correction can be performed independently of each of these images, gamma correction according to the attribute of the image is enabled, and it is possible to meet the user's request.

The above-described embodiments of FIG. 70 through FIG. 73 provide an image processing apparatus comprising: a unit determining a position of a specific-attribute region having a specific attribute in an original image based on either a multi-level image which is the original image or a binary image which is created from the multi-level image; a unit creating a binary character image in which a pixel value corresponding to a non-specific-attribute region having no specific attribute in the original image is replaced by a given pixel value different from a pixel value corresponding to the specific-attribute region; a unit performing gamma correction of the binary character image created; a unit creating a multi-level non-character image of the non-specific-attribute region in which the pixel value of the specific attribute region in the original image is changed to a background color of the original image; a unit determining a color of pixels which constitute the specific attribute region; a unit creating color information which indicates the determined color; a unit performing gamma conversion of the color information created; an image coding unit carrying out compression coding of each of the multi-level non-character image after the gamma conversion, the binary character image of the specific attribute region, and the color information after the gamma conversion, respectively; and an integrated file creation unit creating an integrated file in which the coded images after the compression coding are integrated.

The above-described embodiments of FIG. 70 through FIG. 73 provide an image processing apparatus comprising: a unit determining a position of a specific-attribute region having a specific attribute in an original image based on either a multi-level image which is the original image or a binary image which is created from the multi-level image; a unit creating a binary character image in which a pixel value corresponding to a non-specific-attribute region having no specific attribute in the original image is replaced by a given pixel value different from a pixel value corresponding to the specific-attribute region; a unit creating a multi-level non-character image of the non-specific-attribute region in which the pixel value of the specific attribute region in the original image is changed to a background color of the original image; a unit determining a color of pixels which constitute the specific attribute region; a unit creating a binary or multi-level image of the specific attribute region which has the determined color, based on the binary character image; an image coding unit carrying out compression coding of each of the multi-level non-character image and the binary or multi-level image of the specific attribute region, respectively; and an integrated file creation unit creating an integrated file in which the coded images after the compression coding are integrated, wherein the multi-level non-character image creation unit comprises: a unit determining a circumference color of the specific attribute region in the original image; a unit replacing the pixel value of the specific attribute region by the circumference color in the original image; and a smoothing unit performing smoothing of the multi-level image which is the original image after the circumference color is determined.

The above-described embodiments of FIG. 70 through FIG. 73 provide an image processing apparatus comprising: a unit determining a position of a specific-attribute region having a specific attribute in an original image based on either a multi-level image which is the original image or a binary image which is created from the multi-level image; a unit creating a binary character image in which a pixel value corresponding to a non-specific-attribute region having no specific attribute in the original image is replaced by a given pixel value different from a pixel value corresponding to the specific-attribute region; a unit creating a multi-level non-character image of the non-specific-attribute region in which the pixel value of the specific attribute region in the original image is changed to a background color of the original image; a unit determining a color of pixels which constitute the specific attribute region; a unit creating color information which indicates the determined color; an image coding unit carrying out compression coding of each of the multi-level non-character image, the binary character image of the specific attribute region, and the color information, respectively; and an integrated file creation unit creating an integrated file in which the coded images after the compression coding are integrated, wherein the multi-level non-character image creation unit comprises: a unit determining a circumference color of the specific attribute region in the original image; a unit replacing the pixel value of the specific attribute region by the circumference color in the original image; and a smoothing unit performing smoothing of the multi-level image which is the original image after the circumference color is determined.

The above-mentioned image processing apparatus may be configured so that the multi-level non-character image creation unit further comprises a resolution conversion unit which changes a resolution of the multi-level image which is the original image to a low resolution before the smoothing is performed.

The above-mentioned image processing apparatus may be configured so that the multi-level non-character image creation unit further comprises a resolution conversion unit which changes a resolution of the multi-level image which is the original image to a low resolution before the smoothing is performed.

The above-mentioned image processing apparatus may be configured so that the resolution conversion unit is provided to change, after the circumference color is determined, the resolution of the multi-level image which is the original image to the low resolution.

The above-mentioned image processing apparatus may be configured so that the resolution conversion unit is provided to change, after the circumference color is determined, the resolution of the multi-level image which is the original image to the low resolution.

The above-mentioned image processing apparatus may be configured so that the image processing apparatus further comprises a communication control device which is provided to transmit the integrated file through a predetermined network.

The above-mentioned image processing apparatus may be configured so that the image processing apparatus further comprises a unit which is provided to decode each of the coded images included in the integrated file, respectively.

The above-described embodiments of FIG. 70 through FIG. 73 provide a computer program product embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; creating a multi-level non-character image of the non-specific-attribute region in which the pixel value of the specific attribute region in the original image is changed to a background color of the original image; performing gamma conversion of the multi-level non-character image created; determining a color of pixels which constitute the specific attribute region; creating a binary or multi-level image of the specific attribute region which has the determined color, based on the binary character image; performing gamma conversion of the binary or multi-level image of the specific attribute region created; carrying out compression coding of each of the multi-level non-character image after the gamma conversion and the binary or multi-level image of the specific attribute region after the gamma conversion, respectively; and creating an integrated file in which the coded images after the compression coding are integrated.

The above-described embodiments of FIG. 70 through FIG. 73 provide a computer program product embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; performing gamma correction of the binary character image created; creating a multi-level non-character image of the non-specific-attribute region in which the pixel value of the specific attribute region in the original image is changed to a background color of the original image; determining a color of pixels which constitute the specific attribute region; creating color information which indicates the determined color; performing gamma conversion of the color information created; carrying out compression coding of each of the multi-level non-character image after the gamma conversion, the binary character image of the specific attribute region, and the color information after the gamma conversion, respectively; and creating an integrated file in which the coded images after the compression coding are integrated.

The above-described embodiments of FIG. 70 through FIG. 73 provide a computer program product embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; creating a multi-level non-character image of the non-specific-attribute region in which the pixel value of the specific attribute region in the original image is changed to a background color of the original image; determining a color of pixels which constitute the specific attribute region; creating a binary or multi-level image of the specific attribute region which has the determined color, based on the binary character image; carrying out compression coding of each of the multi-level non-character image and the binary or multi-level image of the specific attribute region, respectively; and creating an integrated file in which the coded images after the compression coding are integrated, wherein the multi-level non-character image creation step comprises: determining a circumference color of the specific attribute region in the original image; replacing the pixel value of the specific attribute region by the circumference color in the original image; and performing smoothing of the multi-level image which is the original image after the circumference color is determined.

The above-described embodiments of FIG. 70 through FIG. 73 provide a computer program product embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; creating a multi-level non-character image of the non-specific-attribute region in which the pixel value of the specific attribute region in the original image is changed to a background color of the original image; determining a color of pixels which constitute the specific attribute region; creating color information which indicates the determined color; carrying out compression coding of each of the multi-level non-character image, the binary character image of the specific attribute region, and the color information, respectively; and creating an integrated file in which the coded images after the compression coding are integrated, wherein the multi-level non-character image creation step comprises: determining a circumference color of the specific attribute region in the original image; replacing the pixel value of the specific attribute region by the circumference color in the original image; and performing smoothing of the multi-level image which is the original image after the circumference color is determined.

The above-mentioned computer program product may be configured so that the image processing method further comprises a resolution conversion step of changing a resolution of the multi-level image which is the original image to a low resolution before the smoothing is performed.

The above-mentioned computer program product may be configured so that the image processing method further comprises a resolution conversion step of changing a resolution of the multi-level image which is the original image to a low resolution before the smoothing is performed.

The above-mentioned computer program product may be configured so that the resolution conversion step is provided to change, after the circumference color is determined, the resolution of the multi-level image which is the original image to the low resolution.

The above-mentioned computer program product may be configured so that the resolution conversion step is provided to change, after the circumference color is determined, the resolution of the multi-level image which is the original image to the low resolution.

The above-described embodiments of FIG. 70 through FIG. 73 provide a computer-readable storage medium storing a program embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; creating a multi-level non-character image of the non-specific-attribute region in which the pixel value of the specific attribute region in the original image is changed to a background color of the original image; performing gamma conversion of the multi-level non-character image created; determining a color of pixels which constitute the specific attribute region; creating a binary or multi-level image of the specific attribute region which has the determined color, based on the binary character image; performing gamma conversion of the binary or multi-level image of the specific attribute region created; carrying out compression coding of each of the multi-level non-character image after the gamma conversion and the binary or multi-level image of the specific attribute region after the gamma conversion, respectively; and creating an integrated file in which the coded images after the compression coding are integrated.

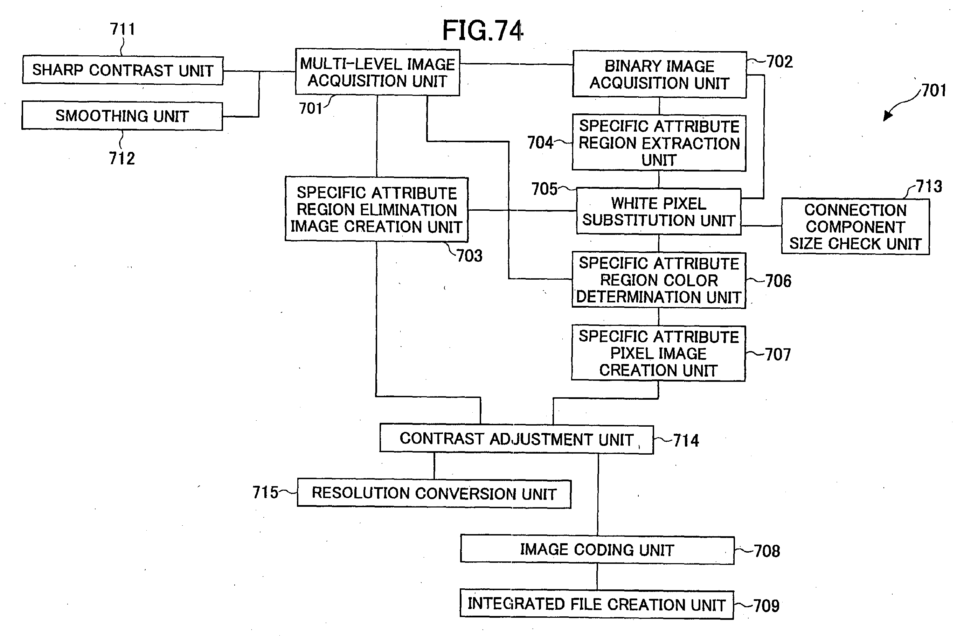

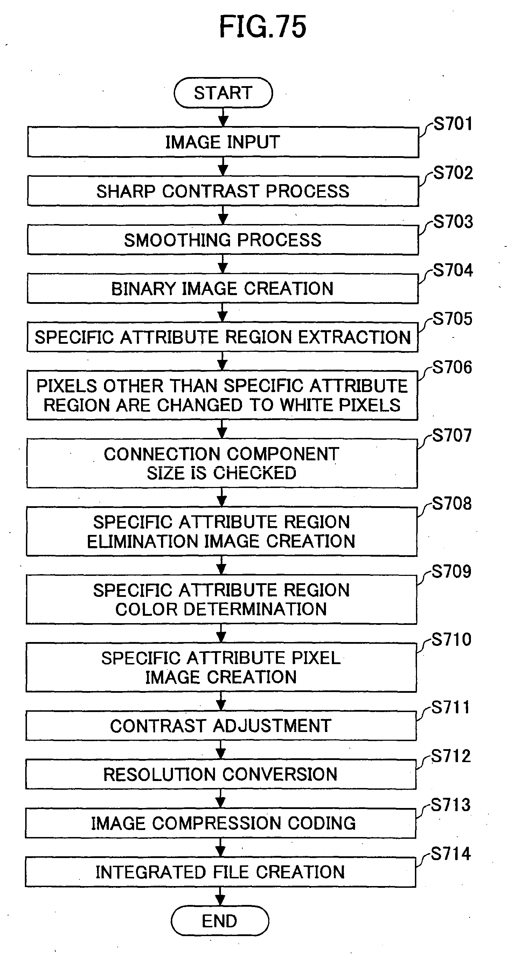

Next, FIG. 74 is the functional block diagram of the processing which the image processing apparatus 701 performs based on the program 13 for image processing. Moreover, FIG. 75 is the flowchart of this processing.

First, the multi-level-image input unit 701 acquires the document image of the multiple value which is the original image of the processing object with the image scanner which is not illustrated (step S701).

The specific attribute region extraction unit 704 pinpoints the position of the portion which has the specific attribute from this document image (specific attribute portion), for example, the character portion (step S705).

In this example, the binary image shall be created from the multi-level image (step S704), and it shall acquire from this binary image.

The white pixel substitution unit 705 eliminates and forms black pixels other than the character into the white pixel in the binary image, and makes them the binary image (step S706). By this processing, the position of the character will be known per pixel.

And the image in which the specific attribute portion is eliminated is created by the specific attribute region elimination image creation unit 703 (step S708). This should just create the image which replaced the pixel of the character portion used as the specific attribute portion by the surrounding color in the color image.

Next, the specific attribute region-color determination unit 706 determines the color of the specific attribute portion (step S709). This step determines all the pixel colors of the color image in the position of the black pixel which constitutes the character, and makes to the representative color some of the major colors currently used in the image from this data. And it is determined whether every pixel and the pixel which constitutes the character for every connection component are the closest to which representative color.

And the image in which the pixel with the specific attribute has every pixel and the color judged for every connection component by the specific attribute pixel image creation unit 707 is created (step S710). This is good also as a multi-level image only with the limited color, and it is possible to make it create every one binary image for every color.

The image coding unit 708 creates the compression image from the image in which the specific attribute pixels are eliminated, and creates the images which have only the specific attribute pixels (step S713). The image which is the character image is considered that this compresses by the MMR method or the PNG method by compressing the image which is the pattern image by the JPEG method, etc. and thereby, the file size becomes small efficiently.

And it compounds in the form which can pile up and display the images which have only the specific attribute pixels by the integrated-file creation unit 709 on the image in which the specific attribute region is eliminated (step S714). If these are integrated, it becomes the form where the character sticks on the background, and can regard as the original image similarly.

Remarkable compression of the file size is attained without reducing the visibility too much by performing the above processing. The reason is as follows.

Although the compression by the JPEG method does not have so good compression efficiency about the image with the sharp change of the pixel value, if the character portion is eliminated from the image by the processing, since pixel value change of the character region will be lost, efficiency of compression (step S713) by the JPEG method improves.

Since the character portion reduces the color number sharply, its compression efficiency improves also by this.

Next, the characteristic processing which the image processing apparatus 701 performs based on the program 13 for image processing will be explained. This processing is performed in order to raise the quality of image and compressibility further.

(A) Check by the size of the connection component

After execution of processing of the step S706, before execution of processing of step S708, he extracts the connection component of the black pixel from the binary image in which the pixels except the character are eliminated, and checks the size of the connection component by the connection-component size check unit 713 (step S707).

That is, the portion smaller than predetermined fiducial point with another larger portion among the connection components than predetermined fiducial point and this is eliminated further. For the noise etc., the too small connection component will be for compression efficiency to fall, if a possibility that it is not the character makes it the binary image as it is the high top.

Moreover, pinpointing of the character region is technically difficult and the right character region is not necessarily extracted. Therefore, when the region of the view and the region of the photograph are in the former image, also throwing away a possibility of making a mistake in this and considering as the character cannot be finished. The too large connection component has the high possibilities other than these characters.

Moreover, although it will be accidentally classified into the background according to this processing when the big connection component is the character in fact, since size is large, it can be read by the human eyes enough.

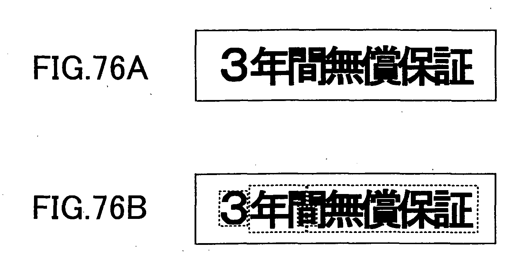

FIG. 76A shows a part of "contact character" in which the characters in the input image adjoin. FIG. 76B shows the result of extraction when the conventional method extracts the contact character.

By the conventional method, it is determined the circumscribed rectangle size n of the connection component which shows that it is the character from resolution and standard-character size (10.5pt), and unless the rectangle was within the limits of n x n size, extraction of specific attribute portions, such as the character portion, is not completed.

By this method, the connection component of the black pixel is extracted from the binary image (or multi-level image) in which the pixels except the character are eliminated. And it is necessary to ask for the height size n of the circumscribed rectangle which shows first that it is the character from the resolution and standard-character size (10.5pt) of the input image (that is, for the value of n to be changed according to the resolution of the input image), and to decide the range (threshold) for taking the pixel corresponding to specific attribute portions, such as the character portion. The threshold uses the rectangular portion of n x m size, where n substitutes the above values and the value of m can be found from the lower formula (1) using the threshold Thr which creates the length of the contact character.

Since the size of width becomes large rather than the height of character, the contact character cannot extract the contact character, unless it makes m into the bigger value than n. Therefore, by the condition m>n, as a standard with the rough ratio of width and the height, the value of Thr is created here so that it may be set to 1:3. It assumes as "Thr=3" temporarily hereafter and explains.

$$m = n \times Thr \qquad (1)$$

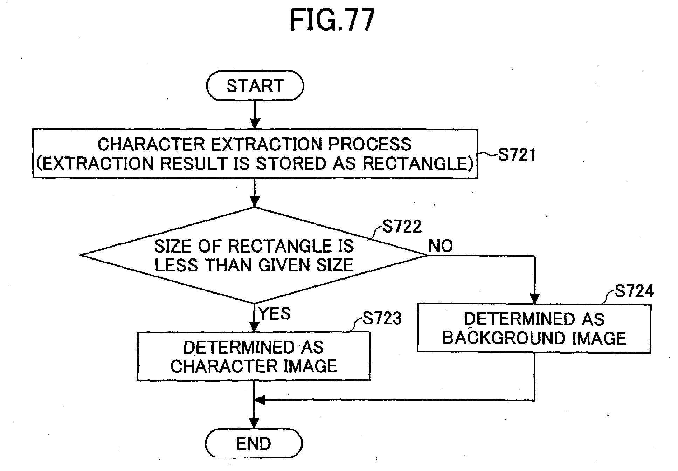

Along with the flowchart of FIG. 77, processing of step S707, i.e., the extraction processing to the contact character of FIG. 76A, will be explained.

First, character extraction processing is performed from the input image in which the character, and the photograph and the background coexist, or the binary image (step S721). Character extraction processing can use conventionally the character extraction processing with common knowledge which used the connection component.

The rectangular portion extracted at step S721 is shown by the dashed line as shown in FIG. 76B. And it is determined whether the width and the height of this rectangular portion are within the limits of n x m, respectively (step S722).

As a result of this judgment, when it is within the limits, (Y of step S722) and its rectangular portion are judged as a character image (step S723). When out of range, it judges as (N of step S722), and a background image (step S724).

(B) Radicalization of the image

By the radicalization unit 711, it is inputted at step S701, and before creating the binary image at step S704, it is radicalized in the color image (step S702). When this may be expressed by the image with the weak edge in the color image and performs binarization with this, it is for the character to become blurred, to become feeling and for the readability and compression efficiency of the character image to fall. That is, the readability of the character improves by radicalization.

(C) Smoothing of the image

The color image is smoothed, before are radicalized at step S702 and creating the binary image at step S704 by the smoothing unit 712 (step S703). This is for the interior of the character stroke to become the binary image full of the holes, and for the compression efficiency of the character image to fall, when neutral colors may be expressed by the set which is the pixel of the fine color which is different from each other and perform binarization in the color image with this.

Then, since the binary image to which the interior of the character stroke is changed with carrying out binarization can be obtained after the smoothing, the compression efficiency of the character image improves.

Moreover, it is possible to perform smoothing of the image to the color image (background image) which eliminated the character. Since the background image performs JPEG compression, this is for being useful to the suppression of that compression efficiency increases by the smoothing, and the moiré which may be generated by the conversion of low resolution.

(D) Contrast adjustment

After processing of step S710, before processing of step S713, contrast conversion of the image (background image) which eliminated the specific attribute pixel, and the binary image (character image) which consists only of the specific attribute pixel is performed (step S711), contrast is weakened, and it is made the smooth image by the contrast adjustment unit 714.

It is because compression efficiency is high, so that there is little change of the pixel value, when compressing by the JPEG method in the background image. Although there is no influence in size even if it carries out contrast conversion, since the character image is the MMR method etc., when these are integrated and displayed, the same contrast conversion as the background is performed so that it may not become unnatural tone.

(E) Resolution conversion

After processing of step S711, before processing of step S713, resolution conversion is carried out and the image which eliminated the specific attribute pixel is set to the low resolution by the resolution conversion unit 715 (step S712).

Since the influence to the visibility is small compared with the character image even if resolution of the background image is somewhat low, compression efficiency is considered and changed to low resolution.

Another preferred embodiment of the invention will be explained. Since the hardware composition of the image processing apparatus 701 of this embodiment is the same as that of FIG. 1, a detailed explanation thereof will be omitted.

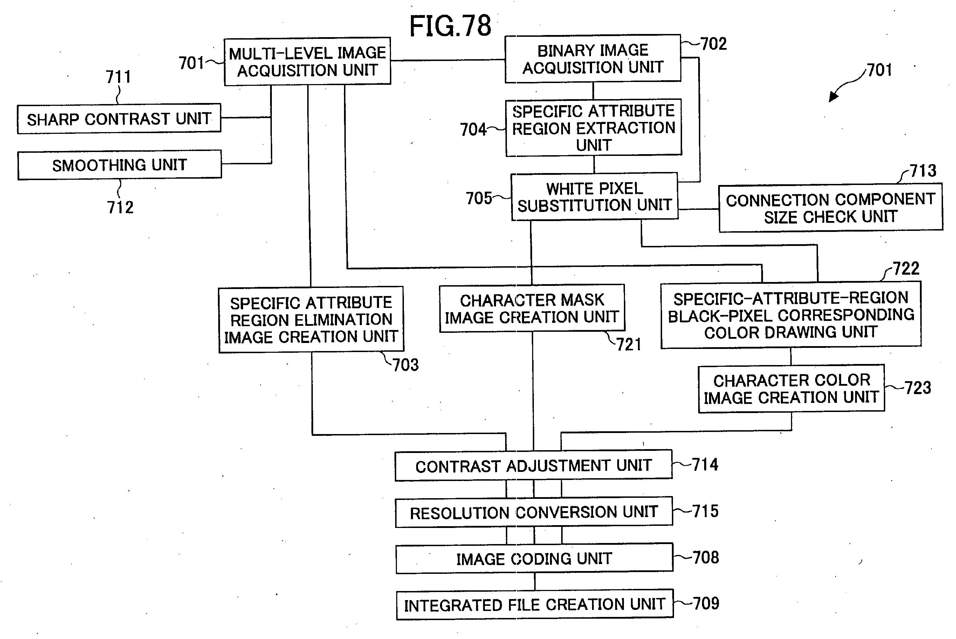

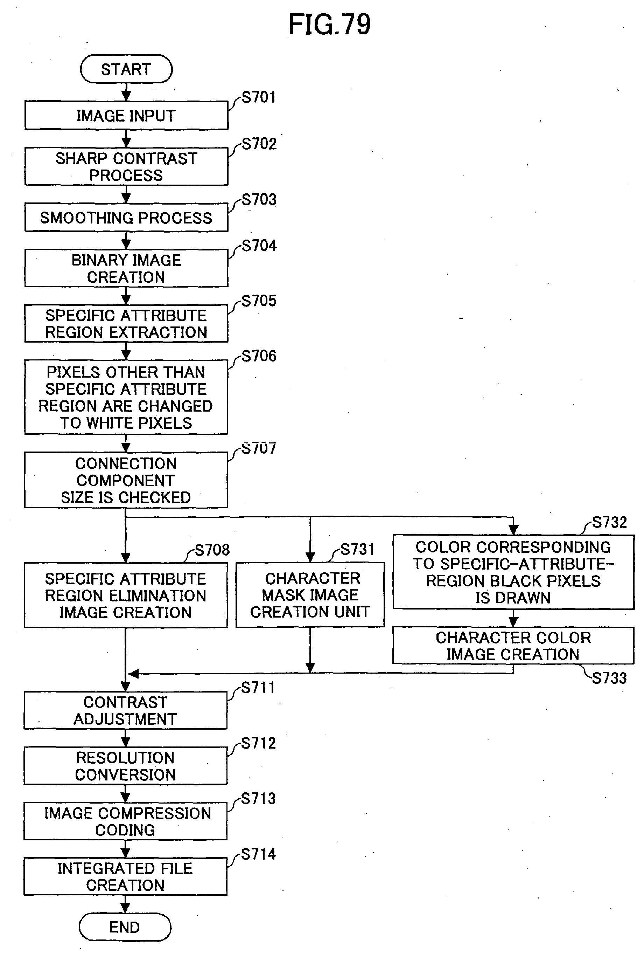

FIG. 78 is the functional block diagram of the processing which is performed by the image processing apparatus 701 based on the program 13 for image processing. Moreover, FIG. 79 is the flowchart of this processing.

In FIG. 78 and FIG. 79, the elements which are the same as corresponding elements in FIG. 74 and FIG. 75 are designated by the same reference numerals, a detailed explanation thereof will be omitted.

The specific attribute region elimination image creation unit 703 makes the image which eliminated the specific attribute portion (step S708). This should just create the image which replaced the pixel of the character portion by the surrounding color in the color image.

The character mask image creation unit 721 creates the character mask image from the binary image of only the character which it created at step S706 (step S731). The pixel which leaves Bit ON (here black pixel) by mask processing, and Bit OFF (here white pixel) are processed as a pixel which it does not leave by mask processing.

The unit 722 to draw the color corresponding to the black image portion of the specific attribute region acquires the character color corresponding to the black pixel of the specific attribute portion from the color image into which it was inputted at step S701, and smears away the black pixel of the specific attribute portion (step S732).

The foreground-image creation unit 723 creates the image drawn at step S732 as a foreground image (color information) (step S733). At this time, pixel portions other than the character draw as a background color.

The image coding unit 708 compresses the background image which eliminated the specific attribute pixel which it created with the specific attribute region elimination image creation unit 703 by the JPEG (DCT) method, compresses the character mask image which consists only of the specific attribute pixel by the MMR method, and compresses the foreground image which drew only the specific attribute portion by the JPEG (DCT) method (step S713).

And the integrated-file creation unit 709 compounds in the form which can pile up and display the foreground image which remained by the pixel corresponding to the black pixel portion, character mask applying it to the background image which eliminated the specific attribute region, and the foreground image which consists only of the specific attribute pixel (step S714).

If these are integrated, it becomes the form where the character sticks on the background, and can regard as the original image similarly.

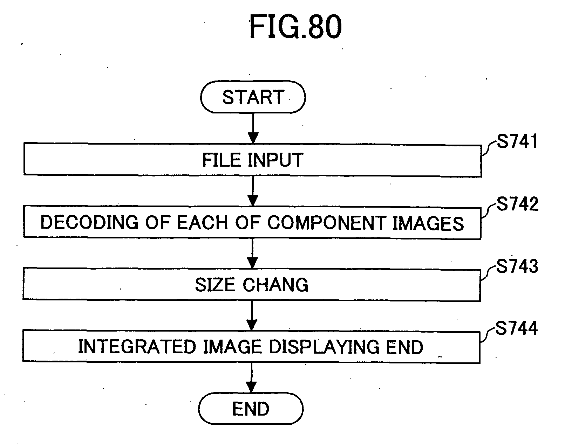

In the above embodiment, the image processing apparatus 701 can carry out the decoding of the file created as mentioned above by processing of FIG. 80, and it can be indicated by the image. Namely, the integrated file created as mentioned above is inputted (step S741), and each of the coded images included in the integrated file is decoded and displayed respectively (step S742). And each of this decoded image is integrated and displayed (step S744).

In this case, when resolution conversion of the image is made with the resolution conversion unit 715 as mentioned above, variable power processing for returning to the original resolution is performed (step S743).

The above-described embodiments of FIG. 74 through FIG. 80 provide an image processing apparatus comprising: a position determination unit determining a position of a specific-attribute region having a specific attribute in an original image based on either a multi-level image which is the original image or a binary image which is created from the multi-level image; a unit creating a binary character image in which a pixel value corresponding to a non-specific-attribute region having no specific attribute in the original image is replaced by a given pixel value different from a pixel value corresponding to the specific-attribute region; a unit creating a multi-level non-character image of the non-specific attribute region in which the pixel value of the specific attribute region in the original image is changed to a background color of the original image; a unit determining a color of pixels which constitute the specific attribute region; a unit creating a binary or multi-level image of the specific attribute region which has the determined color, based on the binary character image; an image coding unit carrying out compression coding of each of the multi-level non-character image and the binary or multi-level image of the specific attribute region, respectively; and an integrated file creation unit creating an integrated file in which the coded images after the compression coding are integrated, wherein the position determination unit comprises: a unit extracting connection components from the multi-level image which is the original image, or the binary character image of the specific attribute region; and a unit determining a rectangular portion of the connection components as being a character region if a height and a width of the rectangular portion concerned are smaller than a height threshold n and a width threshold m, respectively, where the thresholds m and n meet the condition m > n.

According to the present invention, the value of the width threshold m for the rectangular portion is larger than the value of the height threshold n, and the height and width thresholds n x n are not used for the rectangular portion, and therefore the rectangle of the connection components equivalent to the contact character can be suitably extracted as the specific attribute region.

The above-described embodiments of FIG. 74 through FIG. 80 provide an image processing apparatus comprising: a position determination unit determining a position of a specific-attribute region having a specific attribute in an original image based on either a multi-level image which is the original image or a binary image which is created from the multi-level image; a unit creating a binary character image in which a pixel value corresponding to a non-specific-attribute region having no specific attribute in the original image is replaced by a given pixel value different from a pixel value corresponding to the specific-attribute region; a unit creating a multi-level non-character image of the non-specific attribute region in which the pixel value of the specific attribute region in the original image is changed to a background color of the original image; a unit determining a color of pixels which constitute the specific attribute region; a unit creating color information which indicates the determined color; an image coding unit carrying out compression coding of each of the multi-level non-character image, the binary character image of the specific attribute region, and the color information, respectively; and an integrated file creation unit creating an integrated file in which the coded images after the compression coding are integrated, wherein the position determination unit comprises: a unit extracting connection components from the multi-level image which is the original image, or the binary character image of the specific attribute region; and a unit determining a rectangular portion of the connection components as being a character region if a height and a width of the rectangular portion concerned are smaller than a height threshold n and a width threshold m, respectively, where the thresholds m and n meet the condition m > n.

The above-mentioned image processing apparatus may be configured so that the position determination unit is provided to change a value of the height threshold n according to a resolution of the multi-level image which is the original image.

The above-mentioned image processing apparatus may be configured so that the image processing apparatus further comprises at least one of a unit which performs sharp contrast processing of the multi-level image which is the original image, a unit which performs smoothing of the multi-level image which is the original image, a unit which performs contrast adjustment processing of the images before the compression coding, and a unit which changes a resolution of the multi-level image before the compression coding to a low resolution.

The above-mentioned image processing apparatus may be configured so that the image processing apparatus further comprises a unit which is provided to decode each of the coded images included in the integrated file, respectively.

The above-described embodiments of FIG. 74 through FIG. 80 provide a computer program product embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; creating a multi-level non-character image of the non-specific attribute region in which the pixel value of the specific attribute region in the original image is changed to a background color of the original image; determining a color of pixels which constitute the specific attribute region; creating a binary or multi-level image of the specific attribute region which has the determined color, based on the binary character image; carrying out compression coding of each of the multi-level non-character image and the binary or multi-level image of the specific attribute region, respectively; and creating an integrated file in which the coded images after the compression coding are integrated, wherein the position determination step comprises: extracting connection components from the multi-level image which is the original image, or the binary character image of the specific attribute region; and determining a rectangular portion of the connection components as being a character region if a height and a width of the rectangular portion concerned are smaller than a height threshold n and a width threshold m, respectively, where the thresholds m and n meet the condition m > n.

The above-described embodiments of FIG. 74 through FIG. 80 provide a computer program product embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; creating a multi-level non-character image of the non-specific attribute region in which the pixel value of the specific attribute region in the original image is changed to a background color of the original image; determining a color of pixels which constitute the specific attribute region; creating color information which indicates the determined color; carrying out compression coding of each of the multi-level non-character image, the binary character image of the specific attribute region, and the color information, respectively; and creating an integrated file in which the coded images after the compression coding are integrated, wherein the position determination step comprises: extracting connection components from the multi-level image which is the original image, or the binary character image of the specific attribute region; and determining a rectangular portion of the connection components as being a character region if a height and a width of the rectangular portion concerned are smaller than a height threshold n and a width threshold m, respectively, where the thresholds m and n meet the condition m > n.

The above-mentioned computer program product may be configured so that the position determination step is provided to change a value of the height threshold n according to a resolution of the multi-level image which is the original image.

The above-mentioned computer program product may be configured so that the image processing method further comprises at least one of the steps of performing sharp contrast processing of the multi-level image which is the original image, performing smoothing of the multi-level image which is the original image, performing contrast adjustment processing of the images before the compression coding, and changing a resolution of the multi-level image before the compression coding to a low resolution.

The above-mentioned computer program product may be configured so that the image processing method further comprises the step of decoding each of the coded images included in the integrated file, respectively.

The above-described embodiments of FIG. 74 through FIG. 80 provide a computer-readable storage medium storing a program embodied therein for causing a computer to execute an image processing method, the image processing method comprising the steps of: determining a position of a specific-attribute region having a specific attribute in an original image based on either a multi-level image which is the original image or a binary image which is created from the multi-level image; creating a binary character image in which a pixel value corresponding to a non-specific-attribute region having no specific attribute in the original image is replaced by a given pixel value different from a pixel value corresponding to the specific-attribute region; creating a multi-level non-character image of the non-specific attribute region in which the pixel value of the specific attribute region in the original image is changed to a background color of the original image; determining a color of pixels which constitute the specific attribute region; creating a binary or multi-level image of the specific attribute region which has the determined color, based on the binary character image; carrying out compression coding of each of the multi-level non-character image and the binary or multi-level image of the specific attribute region, respectively; and creating an integrated file in which the coded images after the compression coding are integrated, wherein the position determination step comprises: extracting connection components from the multi-level image which is the original image, or the binary character image of the specific attribute region; and determining a rectangular portion of the connection components as being a character region if a height and a width of the rectangular portion concerned are smaller than a height threshold n and a width threshold m, respectively, where the thresholds m and n meet the condition m > n.

Next, in the following embodiment, remarkable size reduction is realized by using the image processing program 13, without sacrificing the visibility of the character for the multi-level image as a processing-object image (original image).

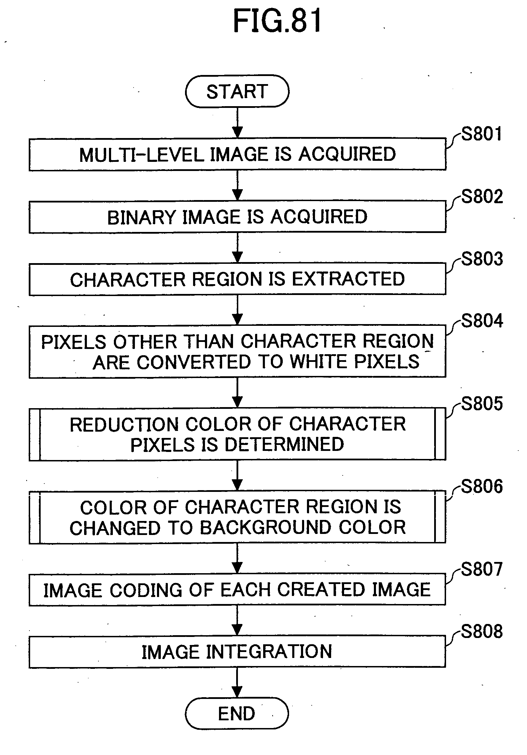

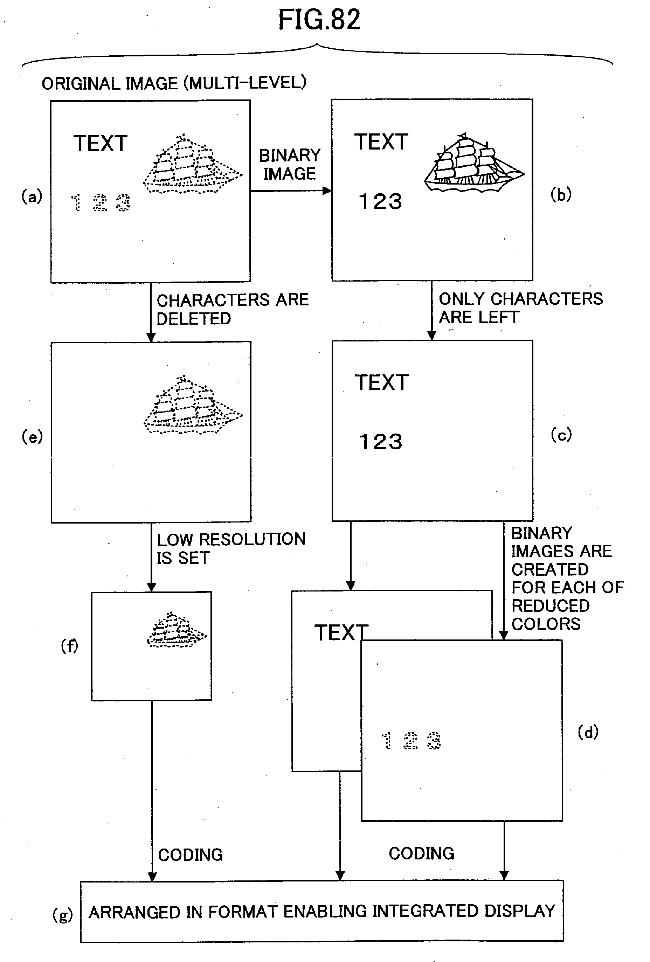

The outline of processing of this embodiment is explained here with reference to the conceptual diagram of the processing shown in the outline flowchart of FIG. 81 and FIG. 82 which show the outline of processing.

First, the multi-level image used as the processing-object image as shown in FIG. 82 (a) using the image reader device 10, such as the image scanner, is acquired (S801). And the binary image as shown in FIG. 82 (b) is acquired by binarization of such a multi-level image (S802).

Then, the region with the specific attributes, such as the character region, is determined (S803). And as shown in FIG. 82 (c), white pixel processing which changes the pixel which does not have the specific attribute by the binary image to the white pixel so that it may leave only the character is performed (S804), and as shown in FIG. 82 (d), the reduction-color image of the character portion is made (S805).

On the other hand, the multi-level image is taken as the image by which made it the image which buried the specific attribute portion by the background color, and character deletion was carried out as shown in FIG. 82 (e) (S806).

The image filled with such a background color regards it as what does not much have the important information, and it is changed to low resolution so that it may be highly shown in coding (it is irreversible compression at JPEG form etc.), i.e., FIG. 82 (f), (S807).

Moreover, the pixel which constitutes the character drops the color number, encodes (it is reversible compression at PNG form etc.), or creates the binary (two colors) image by the color number, and encodes (S807). (it is reversible compression at MMR form etc.)

Then, it collects into the format (for example, PDF) which can pile up and display the background image and the character image, with the same position relation as the original image maintained (S808). Compared with the original image, as for the made file, the file size is small sharply.

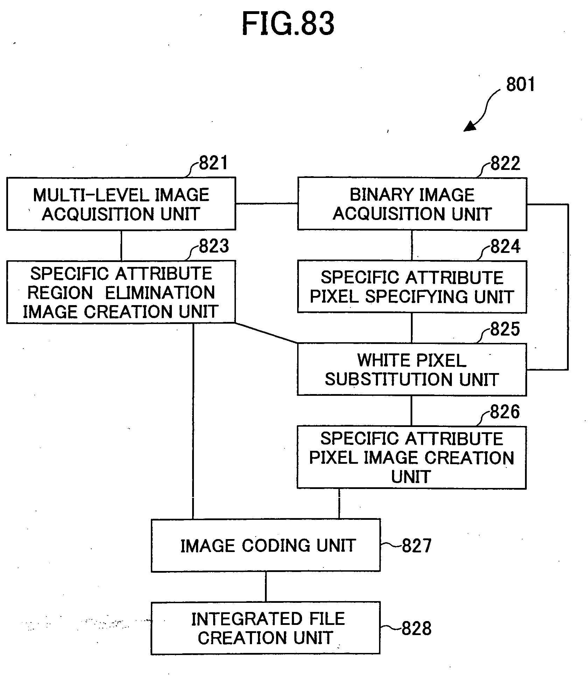

With reference to FIG. 83 which shows the functional block diagram of the function in which the image processing apparatus 1 concerned realizes the details of such procedure based on the image processing program 13, it explains in detail.

1. Multi-level image as a processing-object image and binary image based on this are acquired

The multi-level image and the binary image are acquired with the multi-level-image acquisition unit 821 and the binary image acquisition unit 822 (S801, S802). Based on the multi-level image, it should create the binary image. What is necessary is for the method of binarizing to be the fixed threshold and just to take the methods, like make the pixel brighter than the threshold into the white pixel, and it makes the dark pixel the black pixel.

Moreover, different resolution is sufficient as the binary image and the multi-level image. For example, after creating the binary image by the method, thinning-out processing may be carried out, the resolution of the multi-level image may be lowered, and this may be acquired as a multi-level image of the processing object.

Furthermore, another device may perform the binary image creation and the image file which it created may be acquired.

2. Character region is acquired

By using the specific attribute pixel specifying unit 824, the positions where the character exists on the image are determined (S803). The specific attribute pixel specifying unit 824 may be configured to acquire the character region from either the binary image or the multi-level image. When acquiring from the multi-level image, the character region extraction method known from Japanese Laid-Open Patent Application No. 2002-288589 may be used, and when acquiring from the binary image, the character region extraction method known from Japanese Laid-Open Patent Application No. 06-020092 may be used. In the present embodiment, the pixels which constitute the character are extracted based on the binary image as the pixels having the specific attribute.

3. Pixels other than characters are changed to white pixels

By using the white pixel substitution unit 825, the pixels other than the character region (pixel without the specific attribute) are changed to the white pixels in the binary image (S804).

4. Reduction-color image of only character pixels is created

This is processing which consists of black pixel portions which remained by processing of the above item 3 and which creates the image with color information (processing by the specific attribute pixel image creation unit 826) (S805).

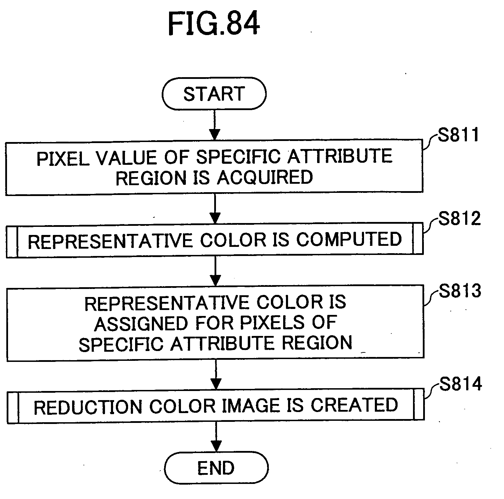

This will be explained by referring to FIG. 84. First, the pixel value of the pixel with the specific attribute is acquired (S811), and the representative color of those pixels is computed (S812).

That is, although color information is created from the multi-level image, it computes as the representative color some of the major colors - about ten colors of numbers from these pixel values rather than uses the pixel value of the corresponding position as it is.

And each black pixel is assigned to which the color (S813), and the images of several colors to the dozens colors are created (S814). It is considered that several to dozens color images be created, and also considered that several to dozens binary (two colors) images with the character color and the transparent background color are created.

Anyway, since the use color number of the character portion becomes fewer compared with the multi-level image used as the processing-object image, this image will be called "reduction-color image".

The details of an unit (S812) to compute the representative color will be explained.

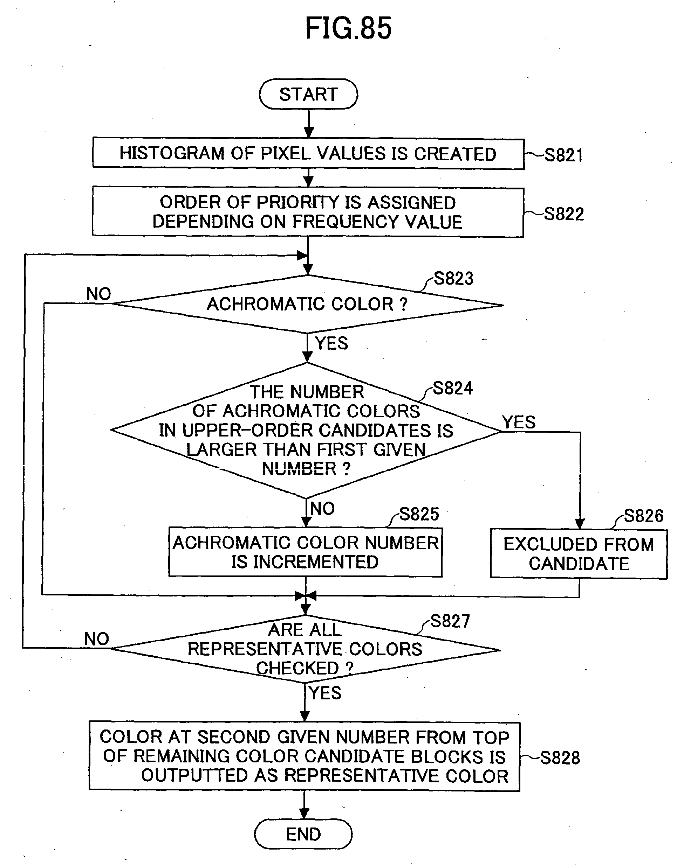

FIG. 85 is an outline flowchart which shows an example of the representative color computing method.

(1) The pixel value in the position on the multi-level image equivalent to the black pixel of the binary image is calculated, and the histogram of the pixel value is created (S821). For example, what is necessary is to carry out the division-into-equal-parts rate of the RGB space to the block of 4x4x4, and just to carry out how the target pixel adds 1 to the frequency value of the space which is determined.

(2) The block with the high frequency is determined, and it is determined that the numerousness of the frequency is the height of the priority, and priority is given from the frequency value (S822). These blocks will be called "representative color candidate blocks.

(3) It is checked sequentially from the block with the high priority, and it is determined whether the block concerned is colorless (S823). If the RGB central value (RGB median of the block etc.) of the block is the almost same value, it will be said that it is colorless.

(4) If it is not the achromatic color (N of S823), it will move to checking of the block with the following priority (S827).

(5) If it is the achromatic color (Y of S823), it will checked which has the achromatic color by the candidate of the old high order (S824). If the block which corresponds supposing the achromatic color reaches the value defined beforehand (the first predetermined number) is excepted from the representative color candidate (S826) and is not attained, 1 is added to the colorless number and the next processing is performed (S825).

(6) Processing of steps S822-S826 is repeated until it finishes examining all representative color candidate blocks (S827).

(7) The 2nd predetermined number is outputted as a representative color from the one among the representative color candidate blocks which remain without being excepted where the priority is higher (S828).

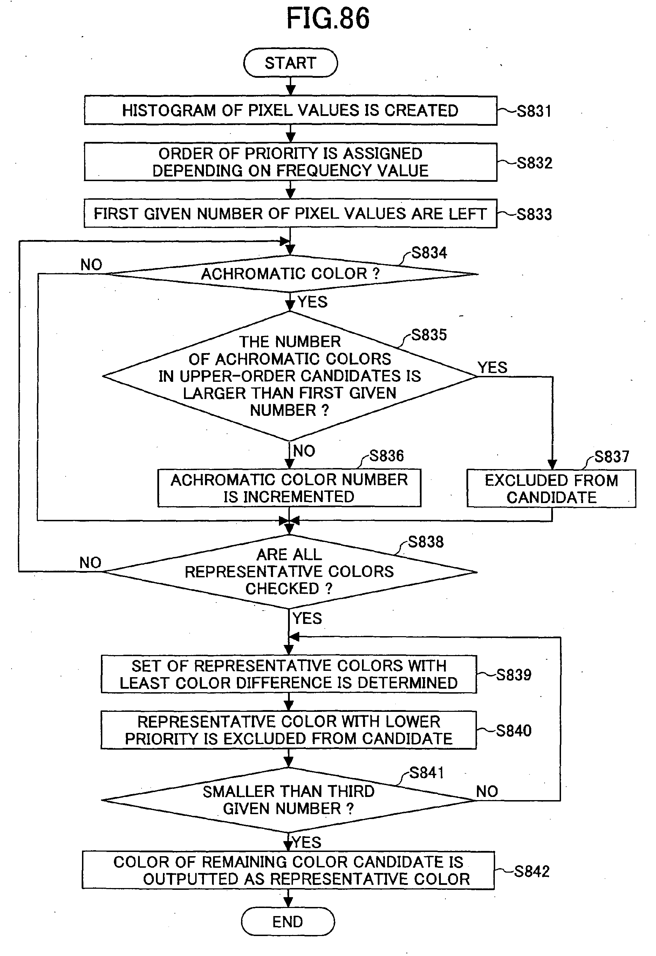

Moreover, as a representative color computing method, the way as shown in FIG. 86 is also considered.

(1) The pixel value in the position on the multi-level image equivalent to the black pixel of the binary image is calculated, and the histogram of the pixel values is created (S831). The processing which is the same as the processing explained with FIG. 85 may be used.

(2) It is determined the block with the high frequency, and considers that the numerousness of the frequency is the height of the priority, and priority is given from the frequency value (S832).

(3) Sequentially from the high block of the priority, it leaves even the 1st predetermined number and others are excepted from the candidate (S833).

(4) It is checked sequentially from the block of the high priority, and it is determined whether the block concerned is colorless (S834).

(5) If it is not the achromatic color (N of S834), it will move to checking of the block with the following priority (S838).

(6) If it is the achromatic color (Y of S834), it will be checked which has the achromatic color by the candidate of the old high order (S835). If the corresponding block is excepted from the representative color candidate (S837) and is not attained supposing the achromatic color reaches the value (the first predetermined number) defined beforehand (Y of S835) (N of S835), 1 is added to the colorless number and the next processing is performed (S836).

(7) Steps S833-S837 are repeated until he finishes examining all representative color candidate blocks (S838).

(8) The nearest things of the color are selected among representative color candidates (S839). The nearness of the color is computed using the square sum of the difference of RGB each component etc.

(9) The one between two selected representative color blocks where the frequency value is lower is excepted from the candidate (S840).

(10) The processings of (8) and (9) are repeated until it becomes below the third predetermined number (S841).

(11) The representative color candidate block which remains without being excepted is outputted as a representative color (S842).

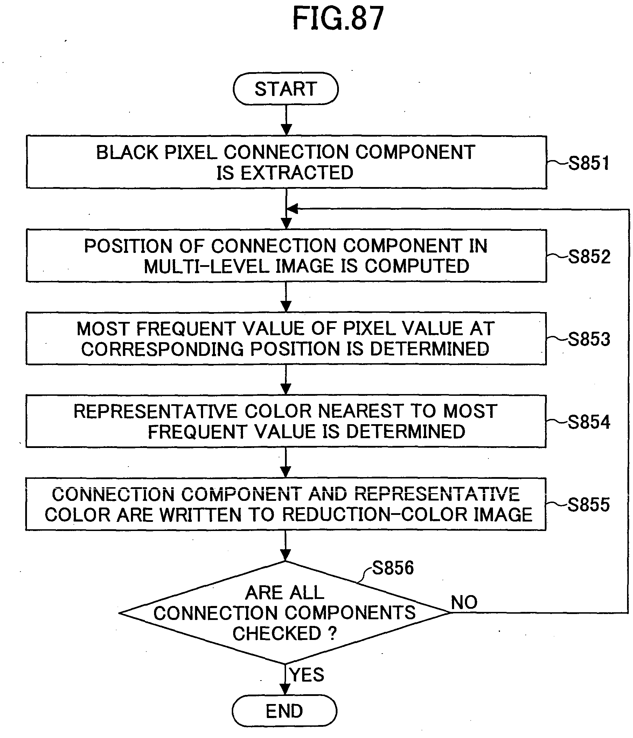

Next, the details of the unit (S813) which assigns the pixel value with the specific attributes, such as the character, for any of the computed representative color being are explained with reference to FIG. 87.

(1) The connection component of the black pixel is extracted from the binary image (S851).

(2) The position on the multi-level image corresponding to the position of the connection component is computed (S852).

(3) The average of the pixel value of the applicable position is created. It may calculate the mode instead of the average. The calculation method which is the same as the method of creating the histogram of the pixel values may be used. Here, the calculation method will be used (S853).

(4) The distance of the mode and the representative color is found and the nearest thing is chosen (S854).

(5) It considers that the whole connection component has the pixel value of the representative color, and writes out as a reduction-color image (S855). If the reduction-color image is the binary image defined for every color, the connection component will be written out to the binary image expressing the corresponding color. Moreover, if the reduction-color image is the multi-level image, color information and the connection component will be written in the reduction-color image.

(6) Processing of (2) - (5) is performed to all connection components (S856). Here, although it was made to perform assignment in the representative color per connection component, it is possible to carry out the assignment per pixel. When it carries out per pixel, there is the tendency for the file size to create to become large, and processing-time mist and the appearance of the image which it creates since it can respond to the fine change of the pixel value compared with the connection-component unit, although it increases may become good.

Moreover, although the character unit is sufficient as assignment, the processing which judges where the character is in this case is newly needed. Moreover, depending on the precision of the processing which judges where the character is, the break of the character and change of the color may not be in agreement, and it may become unnatural character reappearance.

By the way, if the distance of the mode and the representative color is found and the nearest representative color is chosen like step S854 mentioned above in FIG. 87, although the difference with the original image will decrease, as appearance, it is not sometimes so good.

Then, when the maximum likelihood color is achromatic, it is appropriate to change to a little blacker color, to perform comparison with the replaced color and replaced representative color, and to choose the nearest thing.

The concrete procedure will be explained.

(1) The maximum likelihood color is first created as processing corresponding to the processing which creates the mode of step S853. The maximum likelihood color for which it asked is set with R, G, and B.

(2) When maximum likelihood color R, G, and B which it created are smaller than the threshold Diff defined beforehand, it is judged that it is colorless. Namely, when $|R-G|<Diff$, $|G-B|<Diff$, and $|B-R|<Diff$, it is judged that it is colorless.

(3) The color is corrected, in order to express the black character blacker and to improve appearance, when it is judged that the maximum likelihood color is colorless.

When the color after the compensation is made into R', G', and B' and correction value defined beforehand is set to Rt, Gt, and Bt, it is R'=max (R-Rt, 0), G'=max(G-Gt, 0) B'=max (B-Bt, 0) -- subtraction processing is performed. Here, it is shown that max (a, b) chooses the one where the value of a and b is larger. That is, it has the intention of making the character color dark (black) by reducing the correction value defined beforehand. Since the negative value is not allowed as a pixel value, when subtracting, the minimum value is set to 0 so that it may not become negative.

(4) The corrected mode (R', G', B') and the nearest representative color are looked for and chosen like the case of step S854.

In addition, the reason which limits processing colorless in this example of processing is that tone changes when subtraction processing of (3) is performed in the case of the chromatic color. In this example, compensation processing of the color of the chromatic color is not performed, but it reappears in the color near the original image.

Incidentally, it is possible to perform not subtraction processing but multiplication processing to the mode (R, G, B) to make the colors also including the chromatic color deep. Namely, what is necessary is just to consider as R'=RxRu G'=GxGu B'=BxBu using the correction value Ru, Gu, and Bu (value which is less than 0 or more one respectively) defined beforehand.

Although the reference was made about the processing in the case of assigning the representative color per connection component, it is possible to perform same processing per pixel like the case explained by FIG. 87.

What is necessary is to rectify the color (for it to be made dark) and just to choose the color near the representative color using the color after the compensation.

5. Character-less multi-level image creation

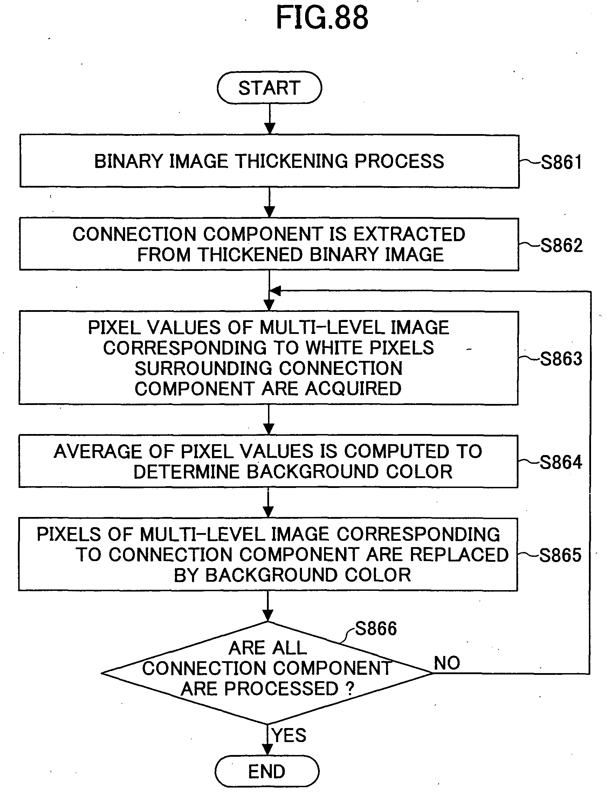

The multi-level image in which the character portion of the multi-level image corresponding to the black pixel portion which remained by processing of the item 3 is changed by the background color by using the specific attribute pixel elimination multi-level-image creation unit 823, and does not have the character is made (S806). It explains with reference to the outline flowchart which shows details to FIG. 88.

(1) The binary image is thickened (S861). The pixel value may change gently-sloping and the color of the character may mix the boundary region of the character and the background in the multi-level image in the background in this case.

By performing thickening processing, since the boundary region of the character and the background also becomes width for elimination, a possibility that the character color remains unmelted in the boundary region can be reduced.

(2) The connection component of the black pixel is extracted from the thickened image (S862).

(3) The pixel value around the corresponding multi-level image (pixel value in the periphery of the circumscribed rectangle of the connection component) is calculated from the one connection component, they are averaged, and it is regarded as the background color.

However, since a possibility of being the portion which constitutes not the background but the character is high, the portion which is the black pixel by the binary image is not included in averaging (S863).

(4) The pixel portion of the multi-level image corresponding to the connection component of the black pixel is replaced in the background color for which it asked (S865). Consequently, the applicable portion of the multi-level image serves as the image in which the character disappeared.

(5) The processing of (3) and (4) is performed to all connection components (S866).

6. Image Coding

By using the image coding unit 827, the multi-level image without the character, and the reduction-color image which constitutes the character are encoded, and the size is compressed (S807). Among these, the information with the already important multi-level image without the character considers that there is nothing, and carries out irreversible compression highly by JPEG etc. If it compresses after dropping resolution, size will become small further.

Moreover, reversible compression of the reduction-color image is carried out. If it is the binary image and PNG compression, MMR compression, etc. are the images, such as the 4 values and 16 value, it is good to use PNG compression etc.

7. Integrated-File Creation

By using the integrated-file creation unit 828, the compressed images are integrated into one file (FIG. 82 (g), S808). If it collects into the file of the format which is made to repeat mutually and can be displayed, it can consider as the small color image of the file size by which the visibility of the character portion did not fall and the background was also reproduced to some extent.

In addition, since what is necessary is for what is necessary to be to acquire only the reduction-color image and just to use, and to use only the character-less image if you want only the background, when the encoded image file wants only the character portion, the file size decreases greatly further in this case.

Moreover, the integrated-file creation unit becomes unnecessary in this case.

With the present embodiment, although aimed at the character as a specific attribute, it is possible to use for another attributes, such as the ruled line and the line drawing, or these may be united and used.

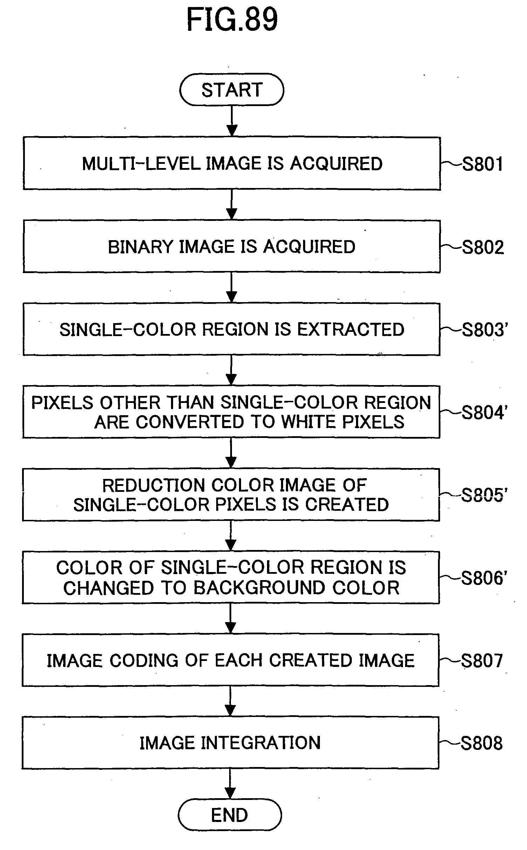

Another preferred embodiment of the invention will be explained with reference to FIG. 89 through FIG. 92. The elements which are the same as the corresponding elements in the previous embodiment are designated by the same reference numerals, and a description thereof will be omitted.

Although the character region is extracted and it was made to create the character image as a reduction-color image with the form of the operation, the mark constituted in one color uses not the "character" but "the region it can be considered that is the monochrome" as a specific attribute with the present embodiment from it being the quality of image and compressibility better to binarization, even if it was not the character.

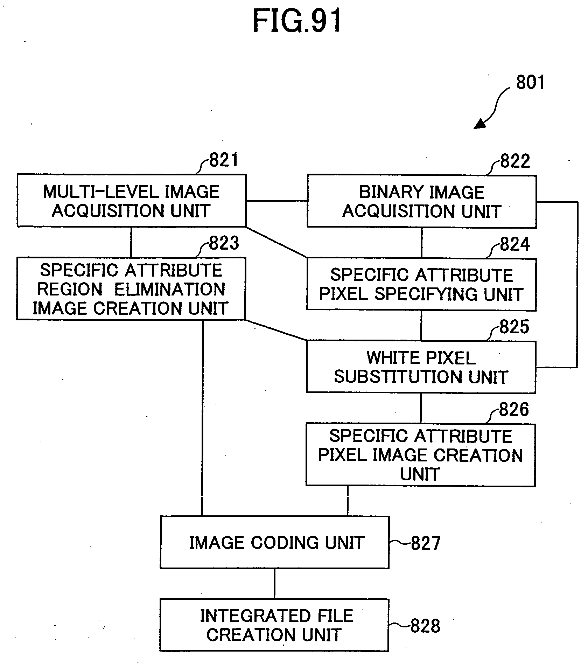

FIG. 89 is the outline flowchart which shows the outline of processing of this embodiment, and FIG. 91 is the functional block diagram. Although it is the same as that of the case of FIG. 81 and FIG. 83 which were shown with the form of the operation almost, the portions which ask for the monochrome region instead of the character differ (S803').

Moreover, the portions into which the specific attribute pixel specifying unit 824 refers to the multi-level image of the multi-level-image acquisition unit 821 also differ.

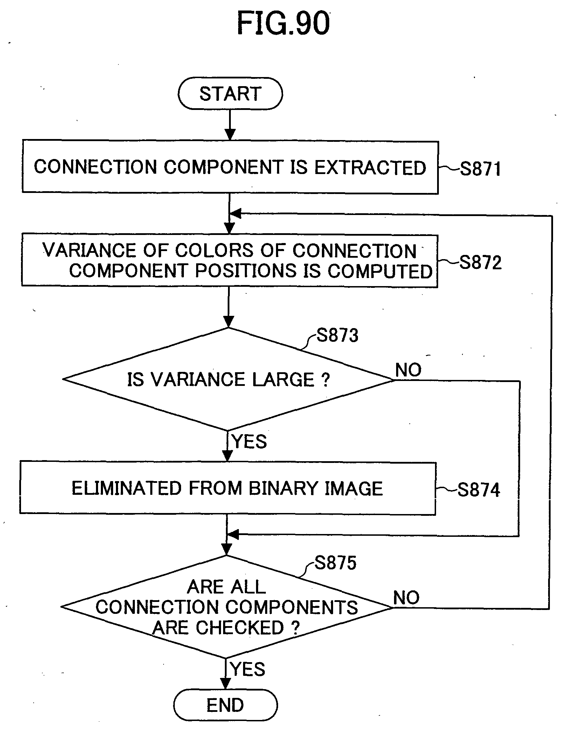

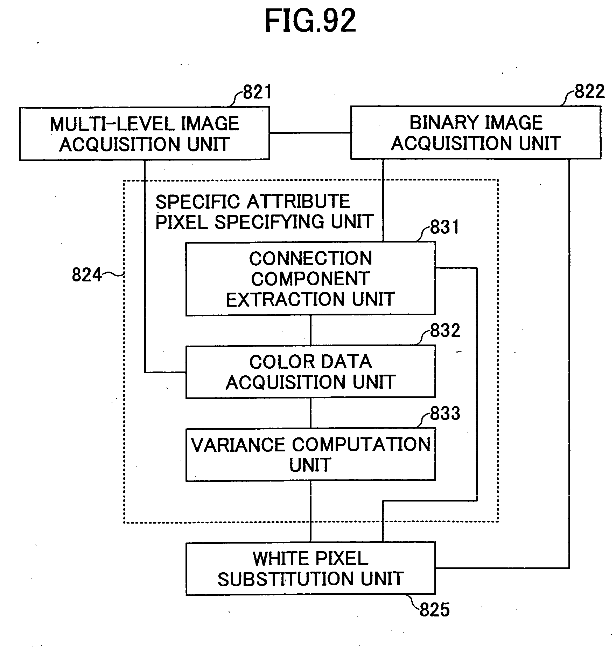

Referring to the outline flowchart shown in FIG. 90, the method of determining the monochrome region (specific attribute pixel) will be explained. Moreover, FIG. 92 is the functional block diagram showing more the example of composition of the specific attribute pixel specifying unit 824 in details.

First, the connection-component extraction unit 831 extracts the connection component of the black pixel from the binary image (S871). And the color information of the multi-level image which is in the position corresponding to the black pixel of the connection component by the color information acquisition unit 832 is acquired, and the variation in color information is created (S872).

Variation should just calculate distribution of each color component using the distributed calculation unit 833. It is the distribution V, if the average shall be expressed for E() and the color component is set with r, g, and b. This can be calculated by the formula: $V=E(r^2)-\{E(r)\}^2+E(g^2)-\{E(g)\}^2+E(b^2)-\{E(b)\}^2$. The size of this value expresses variation.

Then, it is checked size of this variation (S873). What is necessary is just to judge that the variation of the size of distribution is large when large as compared with the predetermined value.

By the white pixel substitution unit 825, what has large variation is eliminated from on the binary image (S874). Since it is the binary image, the applicable pixel will be changed to the white pixel. And processing of steps S872-S874 is performed to all connection components (S875). It means that processing of step S804' and S805' is completed by the above processing.

According to the method of the present embodiment, it is not concerned with whether it is the character, but since the region which is the monochrome is assigned to the reduction-color image, the quality of image and its compression efficiency improve.

The above-described embodiments of FIG. 81 through FIG. 92 provide an image processing apparatus comprising: a multi-level image acquisition unit acquiring a multi-level image as a processing-object image; a binary image acquisition unit acquiring a binary image which is created based on the processing-object image; a specific attribute pixel specifying unit determining pixels having a specific attribute from the processing-object image; a white pixel substitution unit changing pixels which have no specific attribute in the binary image to white pixels; a specific attribute pixel image creation unit creating one or plurality of images which have only pixel portions with the specific attribute; a specific attribute region elimination image creation unit creating a multi-level image in which a pixel value of the pixels with the specific attribute is changed by a background color; and an image coding unit carrying out compression coding of each of two or more images which are created by the image creation units, wherein the specific attribute pixel specifying unit is provided to determine the pixels having the specific attribute based on the binary image.

According to the above-mentioned image processing apparatus of the invention, the multi-level image used as the original image and the binary image based on the original image are acquired. The pixels having the specific attribute, such as the character, are determined based on the binary image, and one or plurality of binary images which have only pixel portions having the specific attribute are created according to the existence of such a specific attribute. The multi-level image in which the pixel value of the pixels with the specific attribute is changed by the background color is created, and each image is encoded and the integrated file is created. File-size reduction can be performed sharply, without reducing the quality of image of the multi-level image used as the processing-object image too much, while securing the visibility about the pixels with the specific attribute.

The above-mentioned image processing apparatus may be configured so that the pixels with the specific attribute determined by the specific attribute pixel specifying unit include pixels which constitutes a character, a ruled line, or a line drawing.

The above-mentioned image processing apparatus may be configured so that the pixels with the specific attribute determined by the specific attribute pixel specifying unit include pixels which are considered to constitute a monochrome region.

The above-mentioned image processing apparatus may be configured so that the specific attribute pixel specifying unit comprises: a unit extracting connection components of black pixels from the binary image; a unit acquiring color information of the multi-level image as the processing-object image corresponding to black pixels which constitute the connection components; and a unit determining a region corresponding to the connection components of the black pixels as being a monochrome region when a variation of the acquired color information is smaller than a predetermined value.

The above-described embodiments of FIG. 81 through FIG. 92 provide an image processing apparatus comprising: a multi-level image acquisition unit acquiring a multi-level image as a processing-object image; a binary image acquisition unit acquiring a binary image which is created based on the processing-object image; a specific attribute pixel specifying unit determining pixels having a specific attribute from the processing-object image; a white pixel substitution unit changing pixels which have no specific attribute in the binary image to white pixels; a specific attribute pixel image creation unit creating one or plurality of images which have only pixel portions with the specific attribute; a specific attribute region elimination image creation unit creating a multi-level image in which a pixel value of the pixels with the specific attribute is changed by a background color; and an image coding unit carrying out compression coding of each of two or more images which are created by the image creation units, wherein the specific attribute pixel elimination image creation unit comprises: a unit extracting connection components of black pixels from the binary image in which the pixels having no specific attribute are changed to the white pixels; a unit acquiring a pixel value of pixels surrounding the connection components of the black pixels; and a unit computing the background color which is equivalent to positions of the connection components based on the pixel value of the surrounding pixels.

The above-mentioned image processing apparatus may be configured so that the image processing apparatus further comprises a unit creating a thickened binary image in which a black pixel portion is thickened by a predetermined value, based on the binary image in which the pixels having no specific attribute are changed to the white pixels, wherein the connection component extraction unit is provided to compute the connection components of the black pixels from the thickened binary image.

The above-mentioned image processing apparatus may be configured so that the surrounding pixel value acquisition unit is provided not to use a black pixel portion in the binary image which is set as the object of connection-component calculation as a surrounding pixel value.

The above-mentioned image processing apparatus may be configured so that the surrounding pixel value acquisition unit comprises a unit computing an average of pixel values of pixels on the periphery of a circumscribed rectangle of the connection components.

The above-mentioned image processing apparatus may be configured so that the specific attribute pixel elimination image creation unit comprises a unit replacing the pixel value of the positions of the multi-level image equivalent to the positions of the connection components by the background color computed.

The above-described embodiments of FIG. 81 through FIG. 92 provide an image processing apparatus comprising: a multi-level image acquisition unit acquiring a multi-level image as a processing-object image; a binary image acquisition unit acquiring a binary image which is created based on the processing-object image; a specific attribute pixel specifying unit determining pixels having a specific attribute from the processing-object image; a white pixel substitution unit changing pixels which have no specific attribute in the binary image to white pixels; a specific attribute pixel image creation unit creating one or plurality of images which have only pixel portions with the specific attribute; a specific attribute region elimination image creation unit creating a multi-level image in which a pixel value of the pixels with the specific attribute is changed by a background color; and an image coding unit carrying out compression coding of each of two or more images which are created by the image creation units, wherein the specific attribute pixel image creation unit comprises: a unit acquiring a pixel value of pixels in the multi-level image corresponding to the pixels with the specific attribute in the binary image; a unit computing a representative color from the acquired pixel value; a unit assigning any of the computed representative color for the pixels with the specific attribute; and a unit creating one or plurality of images in which only the computed representative color is made to a composition pixel color according to a result of the pixel value assignment.

The above-mentioned image processing apparatus may be configured so that the representative color computation unit comprises: a unit creating a histogram of pixel values; a unit setting a representative color candidate with a high priority from a large frequency of the histogram sequentially; a unit determining whether the representative color candidate is achromatic; a unit excluding achromatic representative color candidates from the representative color candidates when the number of the achromatic representative color candidates with the high priority is larger than a first predetermined number; and a unit choosing one of the representative color candidates at a second predetermined number from among the representative color candidate with the high priority, as the representative color.

The above-mentioned image processing apparatus may be configured so that the representative color computation unit comprises: a unit creating a histogram of pixel values; a unit setting a representative color candidate with a high priority from a large frequency of the histogram sequentially; a unit making a first predetermined number of the representative color candidates with the high priority leave; a unit determining whether the representative color candidate is achromatic; a unit excluding achromatic representative color candidates from the representative color candidates when the number of the achromatic representative color candidates with the high priority is larger than a second predetermined number; and a unit computing a dissimilarity of colors of the representative color candidates.

The above-mentioned image processing apparatus may be configured so that the representative color assignment unit comprises: a unit extracting connection components of the pixels with the specific attribute; and a unit performing the assignment of the representative color per connection component.

The above-mentioned image processing apparatus may be configured so that the representative color assignment unit comprises a unit performing the assignment of the representative color per pixel.

The above-mentioned image processing apparatus may be configured so that the image processing apparatus further comprises a resolution conversion unit changing a resolution of the multi-level image to a low resolution.

The above-described embodiments of FIG. 81 through FIG. 92 provide a computer program product embodied therein for causing a computer to execute an image processing method, the image processing method comprising the steps of: acquiring a multi-level image as a processing-object image; acquiring a binary image which is created based on the processing-object image; determining pixels having a specific attribute from the processing-object image; changing pixels which have no specific attribute in the binary image to white pixels; creating one or plurality of images which have only pixel portions with the specific attribute; creating a multi-level image in which a pixel value of the pixels with the specific attribute is changed by a background color; and carrying out compression coding of each of two or more images which are created by the image creation units, wherein the determining step is provided to determine the pixels having the specific attribute based on the binary image.

The above-described embodiments of FIG. 81 through FIG. 92 provide a computer program product embodied therein for causing a computer to execute an image processing method, the image processing method comprising the steps of: acquiring a multi-level image as a processing-object image; acquiring a binary image which is created based on the processing-object image; determining pixels having a specific attribute from the processing-object image; changing pixels which have no specific attribute in the binary image to white pixels; creating one or plurality of images which have only pixel portions with the specific attribute; creating a multi-level image in which a pixel value of the pixels with the specific attribute is changed by a background color; and carrying out compression coding of each of two or more images which are created by the image creation units, wherein the specific attribute pixel elimination image creation step comprises: extracting connection components of black pixels from the binary image in which the pixels having no specific attribute are changed to the white pixels; acquiring a pixel value of pixels surrounding the connection components of the black pixels; and computing the background color which is equivalent to positions of the connection components based on the pixel value of the surrounding pixels.

The above-described embodiments of FIG. 81 through FIG. 92 provide a computer program product embodied therein for causing a computer to execute an image processing method, the image processing method comprising the steps of: acquiring a multi-level image as a processing-object image; acquiring a binary image which is created based on the processing-object image; determining pixels having a specific attribute from the processing-object image; changing pixels which have no specific attribute in the binary image to white pixels; creating one or plurality of images which have only pixel portions with the specific attribute; creating a multi-level image in which a pixel value of the pixels with the specific attribute is changed by a background color; and carrying out compression coding of each of two or more images which are created by the image creation units, wherein the specific attribute pixel image creation step comprises: acquiring a pixel value of pixels in the multi-level image corresponding to the pixels with the specific attribute in the binary image; computing a representative color from the acquired pixel value; assigning any of the computed representative color for the pixels with the specific attribute; and creating one or plurality of images in which only the computed representative color is made to a composition pixel color according to a result of the pixel value assignment.

The above-described embodiments of FIG. 81 through FIG. 92 provide a computer-readable storage medium storing a program embodied therein for causing a computer to execute an image processing method, the image processing method comprising the steps of: acquiring a multi-level image as a processing-object image; acquiring a binary image which is created based on the processing-object image; determining pixels having a specific attribute from the processing-object image; changing pixels which have no specific attribute in the binary image to white pixels; creating one or plurality of images which have only pixel portions with the specific attribute; creating a multi-level image in which a pixel value of the pixels with the specific attribute is changed by a background color; and carrying out compression coding of each of two or more images which are created by the image creation units, wherein the determining step is provided to determine the pixels having the specific attribute based on the binary image.

The above-mentioned computer program product may be configured so that the representative color computation step comprises: creating a histogram of pixel values; setting a representative color candidate with a high priority from a large frequency of the histogram sequentially; determining whether the representative color candidate is achromatic; excluding achromatic representative color candidates from the representative color candidates when the number of the achromatic representative color candidates with the high priority is larger than a first predetermined number; and choosing one of the representative color candidates at a second predetermined number from among the representative color candidate with the high priority, as the representative color.

The above-mentioned computer program product may be configured so that the representative color computation step comprises: creating a histogram of pixel values; setting a representative color candidate with a high priority from a large frequency of the histogram sequentially; making a first predetermined number of the representative color candidates with the high priority leave; determining whether the representative color candidate is achromatic; excluding achromatic representative color candidates from the representative color candidates when the number of the achromatic representative color candidates with the high priority is larger than a second predetermined number; and computing a dissimilarity of colors of the representative color candidates.

The above-mentioned computer program product may be configured so that the representative color assignment step comprises: extracting connection components of the pixels with the specific attribute; and performing the assignment of the representative color per connection component.

The above-mentioned computer program product may be configured so that the representative color assignment step comprises performing the assignment of the representative color per pixel.

The present invention is not limited to the above-described embodiments, and variations and modifications may be made without departing from the scope of the present invention.

**Claims**

1. An image processing apparatus comprising:

   a multi-level image acquisition unit (21) acquiring a multi-level image as a processing-object image;
   a binary image acquisition unit (22) acquiring a binary image which is created based on the multi-level image;
   a specific attribute region extraction unit (24) extracting a specific attribute region which is a region with a specific attribute from the multi-level image;
   a white pixel substitution unit (25) changing pixels other than the specific attribute region in the binary image to white pixels;
   a specific attribute region elimination image creation unit (23) creating a multi-level image in which the pixels of the specific attribute region are changed by a background color;
   a specific attribute region color determination unit (26) determining a color of the specific attribute region;
   a specific attribute pixel image creation unit (27) creating an image of the specific attribute region having the color determined by the specific attribute region color determination unit;
   an image coding unit (28) carrying out compression coding of two or more images which are created by the specific attribute region elimination image creation unit and the specific attribute pixel image creation unit respectively; and
   an integrated file creation unit (29) creating an integrated file in which the coded images from the image coding unit are integrated.

2. The image processing apparatus according to claim 1 further comprising a smoothing unit (31) smoothing the multi-level image acquired by the multi-level image acquisition unit.

3. The image processing apparatus according to claim 1 or 2 further comprising a connection component size check unit (32) which extracts a connection component of black pixels from the binary image in which the pixels other than the specific attribute region are changed to the white pixels by the white pixel substitution unit, classifies a size of the connection component, and changes a too large and too small component to the white pixels.

4. The image processing apparatus according to any one of the preceding claims further comprising a contrast adjustment unit (33) which weakens a contrast of the images created by the specific attribute region elimination image creation unit and the image created the specific attribute pixel image creation unit.

5. The image processing apparatus according to any one of the preceding claims further comprising a resolution conversion unit (34) which converts a resolution of the multi-level image created by the specific attribute region elimination image creation unit, in which the pixels of the specific attribute region are changed by the background color, to a low resolution.

6. A computer program capable of causing a computer to execute an image processing method, the image processing method comprising the steps of:

   acquiring a multi-level image as a processing-object image;
   acquiring a binary image which is created based on the multi-level image;
   extracting a specific attribute region which is a region with a specific attribute from the multi-level image;
   changing pixels other than the specific attribute region in the binary image to white pixels;
   creating a multi-level image in which the pixels of the specific attribute region are changed by a background color;
   determining a color of the specific attribute region;
   creating an image of the specific attribute region having the color determined by the specific attribute region color determination step;
   carrying out compression coding of two or more images which are created by the specific attribute region elimination image creation step and the specific attribute pixel image creation step respectively; and
   creating an integrated file in which the coded images created in the image coding step are integrated.

7. The computer program according to claim 6 wherein the method further comprises the step of smoothing the multi-level image acquired in the multi-level image acquisition step.

8. The computer program according to claim 6 or 7 wherein the method further comprises the steps of:

> extracting a connection component of black pixels from the binary image in which the pixels other than the specific attribute region are changed to the white pixels by the white pixel substitution unit;
> classifying a size of the connection component; and
> changing a too large and too small component to the white pixels.

9. The computer program according to claim 6, 7 or 8 wherein the method further comprises the step of weakening a contrast of the images created by the specific attribute region elimination image creation step and the image created the specific attribute pixel image creation step.

10. The computer program according to any one of claims 6 to 9 wherein the method further comprises the step of converting a resolution of the multi-level image created by the specific attribute region elimination image creation step, in which the pixels of the specific attribute region are changed by the background color, to a low resolution.

11. A computer-readable storage medium storing a computer program according to any one of claims 6 to 10.

# FIG.1

2

**CPU**

1

4

3 — **MEMORY**

5 —

**IMAGE PROCESSING PROGRAM**

13 —

6 — **INPUT DEVICE**

9

8

7 — **DISPLAY DEVICE**

**STORAGE-MEDIUM READER DEVICE**

11

10

12

**IMAGE READER DEVICE**

**COMM. CONTROL DEVICE**

# FIG.2

START

S1 — MULTI-LEVEL IMAGE IS ACQUIRED

S2 — BINARY IMAGE IS CREATED

S3 — SPECIFIC ATTRIBUTE REGION IS EXTRACTED

S4 — PIXELS OTHER THAN SPECIFIC ATTRIBUTE REGION ARE CONVERTED TO WHITE PIXELS

S5 — IMAGE OF SPECIFIC ATTRIBUTE REGION ELIMINATION IS CREATED

S6 — COLOR OF SPECIFIC ATTRIBUTE REGION IS DETERMINED

S7 — IMAGE OF SPECIFIC ATTRIBUTE REGION IS CREATED

S8 — IMAGE COMPRESSION

S9 — IMAGE INTEGRATION

END

# FIG.3

ORIGINAL IMAGE (MULTI-LEVEL)

(a)

TEXT

123

→ BINARY IMAGE →

(b)

TEXT

123

CHARACTERS ARE DELETED

ONLY CHARACTERS ARE LEFT

(d)

(c)

TEXT

123

(e)

TEXT

123

ENCODING

ENCODING

(f) | ARRANGED IN FORMAT ENABLING INTEGRATED DISPLAY

# FIG.4

1

| 21 | MULTI-LEVEL IMAGE ACQUISITION UNIT | BINARY IMAGE ACQUISITION UNIT | 22 |

| | SPECIFIC ATTRIBUTE REGION EXTRACTION UNIT | 24 |

| 23 | SPECIFIC ATTRIBUTE REGION ELIMINATION IMAGE CREATION UNIT | WHITE PIXEL SUBSTITUTION UNIT | 25 |

| | SPECIFIC ATTRIBUTE REGION COLOR DETERMINATION UNIT | 26 |

| | SPECIFIC ATTRIBUTE PIXEL IMAGE CREATION UNIT | 27 |

| IMAGE CODING UNIT | 28 |

| INTEGRATED FILE CREATION UNIT | 29 |

# FIG.5

```
                    ┌─────────┐
                    │  START  │
                    └────┬────┘
                         ▼
        ┌─────────────────────────┐
S1 ─────│   MULTI-LEVEL IMAGE     │         ┌──────────────────┐ S11
        │      IS ACQUIRED        │────────▶│    SMOOTHING     │
        └────────────┬────────────┘         └──────────────────┘
                     ▼
        ┌─────────────────────────┐
S2 ─────│  BINARY IMAGE IS CREATED │
        └────────────┬────────────┘
                     ▼
        ┌─────────────────────────┐
S3 ─────│   SPECIFIC ATTRIBUTE    │
        │   REGION IS EXTRACTED   │
        └────────────┬────────────┘
                     ▼
        ┌─────────────────────────┐
        │   PIXELS OTHER THAN     │
        │   SPECIFIC ATTRIBUTE    │        ┌────────────────────────┐ S12
S4 ─────│  REGION ARE CONVERTED   │───────▶│  CONNECTION COMPONENT  │
        │    TO WHITE PIXELS      │        │     SIZE CHECKING      │
        └────────────┬────────────┘        └────────────────────────┘
                     ▼
        ┌─────────────────────────┐
        │   IMAGE OF SPECIFIC     │
S5 ─────│   ATTRIBUTE REGION      │
        │ ELIMINATION IS CREATED  │
        └────────────┬────────────┘
                     ▼
        ┌─────────────────────────┐
        │   COLOR OF SPECIFIC     │
S6 ─────│   ATTRIBUTE REGION      │
        │    IS DETERMINED        │
        └────────────┬────────────┘
                     ▼
        ┌─────────────────────────┐
        │   IMAGE OF SPECIFIC     │        ┌────────────────────────┐ S13
S7 ─────│   ATTRIBUTE REGION      │───────▶│  CONTRACT ADJUSTMENT   │
        │     IS CREATED          │        └───────────┬────────────┘
        └────────────┬────────────┘                    ▼
                     │                     ┌────────────────────────┐
                     │                     │  RESOLUTION CONVERSION │
                     ▼                     └────────────────────────┘ S14
        ┌─────────────────────────┐
S8 ─────│    IMAGE COMPRESSION    │
        └────────────┬────────────┘
                     ▼
        ┌─────────────────────────┐
S9 ─────│    IMAGE INTEGRATION    │
        └────────────┬────────────┘
                     ▼
                ┌─────────┐
                │   END   │
                └─────────┘
```

# FIG.6

ORIGINAL IMAGE

BINARY
IMAGE

BINARY IMAGE WITH
VACANT INTERIOR

SMOOTHING

SMOOTHED IMAGE

BINARY
IMAGE

BINARY IMAGE WITH
BLACK INTERIOR

# FIG.7

Block diagram showing:
- 21 MULTI-LEVEL IMAGE ACQUISITION UNIT
- 22 BINARY IMAGE ACQUISITION UNIT
- 31 SMOOTHING UNIT
- 24 SPECIFIC ATTRIBUTE REGION EXTRACTION UNIT
- 23 SPECIFIC ATTRIBUTE REGION ELIMINATION IMAGE CREATION UNIT
- 25 WHITE PIXEL SUBSTITUTION UNIT
- 32 CONNECTION COMPONENT SIZE CHECK UNIT
- 26 SPECIFIC ATTRIBUTE REGION COLOR DETERMINATION UNIT
- 27 SPECIFIC ATTRIBUTE PIXEL IMAGE CREATION UNIT
- 33 CONTRAST ADJUSTMENT UNIT
- 34 RESOLUTION CONVERSION UNIT
- 28 IMAGE CODING UNIT
- 29 INTEGRATED FILE CREATION UNIT

# FIG.8

```
                    ┌─────────┐
                    │  START  │
                    └────┬────┘
                         ▼
S101 ~┤  ┌──────────────────────────────────────┐
         │      MULTI-LEVEL IMAGE IS ACQUIRED    │
         └──────────────────┬───────────────────┘
                            ▼
S102 ~┤  ┌──────────────────────────────────────┐
         │       BINARY IMAGE IS CREATED         │
         └──────────────────┬───────────────────┘
                            ▼
S103 ~┤  ┌──────────────────────────────────────┐
         │  SPECIFIC ATTRIBUTE REGION IS EXTRACTED│
         └──────────────────┬───────────────────┘
                            ▼
S104 ~┤  ┌──────────────────────────────────────┐
         │  PIXELS OTHER THAN SPECIFIC ATTRIBUTE │
         │  REGION ARE CONVERTED TO WHITE PIXELS │
         └──────────────────┬───────────────────┘
                            ▼
S105 ~┤  ┌──────────────────────────────────────┐
         │  CONNECTION COMPONENT SIZE IS CHECKED │
         └──────────────────┬───────────────────┘
                            ▼
S106 ~┤  ┌──────────────────────────────────────┐
         │       IMAGE OF SPECIFIC ATTRIBUTE     │
         │     REGION ELIMINATION IS CREATED     │
         └──────────────────┬───────────────────┘
                            ▼
S107 ~┤  ┌──────────────────────────────────────┐
         │       COLOR OF SPECIFIC ATTRIBUTE     │
         │        REGION IS DETERMINED           │
         └──────────────────┬───────────────────┘
                            ▼
S108 ~┤  ┌──────────────────────────────────────┐
         │       IMAGE OF SPECIFIC ATTRIBUTE     │
         │         REGION IS CREATED             │
         └──────────────────┬───────────────────┘
                            ▼
S109 ~┤  ┌──────────────────────────────────────┐
         │          IMAGE COMPRESSION            │
         └──────────────────┬───────────────────┘
                            ▼
S110 ~┤  ┌──────────────────────────────────────┐
         │          IMAGE INTEGRATION            │
         └──────────────────┬───────────────────┘
                            ▼
                    ┌─────────┐
                    │   END   │
                    └─────────┘
```

# FIG.9

121 — MULTI-LEVEL IMAGE ACQUISITION UNIT

BINARY IMAGE ACQUISITION UNIT — 122

SPECIFIC ATTRIBUTE REGION EXTRACTION UNIT — 124

123 — SPECIFIC ATTRIBUTE REGION ELIMINATION IMAGE CREATION UNIT

WHITE PIXEL SUBSTITUTION UNIT — 125

128 — CONNECTION COMPONENT SIZE CHECK UNIT

SPECIFIC ATTRIBUTE REGION COLOR DETERMINATION UNIT — 126

SPECIFIC ATTRIBUTE PIXEL IMAGE CREATION UNIT — 127

IMAGE CODING UNIT — 129

INTEGRATED FILE CREATION UNIT — 130

# FIG.10

START

S121 — REPRESENTATIVE COLORS ARE COMPUTED

S122 — ONE BINARY IMAGE IS CREATED FOR EACH OF REPRESENTATIVE COLORS

S123 — CONNECTION COMPONENT DATA IS ACQUIRED

S124 — IS CONNECTION COMPONENT LARGE ? — YES

NO

S125 — REPRESENTATIVE COLORS ARE DETERMINED ON CONNECTION COMPONENT BASIS

S126 — CONNECTION COMPONENTS ARE WRITTEN TO CORRESPONDING COLOR IMAGE

S127 — CONNECTION COMPONENT DATA IS ELIMINATED

S128 — ARE ALL CONNECTION COMPONENTS CHECKED ? — NO

YES

S129 — REGION IS DIVIDED INTO MESH PORTIONS

S130 — IS IT ON CONNECTION COMPONENT CONSIDERED AS CHARACTER ? — NO

YES

S131 — IS MESH PORTION ON BOUNDARY OF CONNECTION COMPONENT ? — YES

NO

S132 — REPRESENTATIVE COLOR NEAR AVERAGE COLOR IS DETERMINED

S133 — REPRESENTATIVE COLOR NEAR DARKEST COLOR IS DETERMINED

S134 — CHARACTER PIXELS OF MESH PORTION ARE WRITTEN TO CORRESPONDING COLOR IMAGE

S135 — ARE ALL MESH PORTIONS ARE CHECKED ? — NO

YES

END

# FIG.11

START

S151 — HISTOGRAM OF PIXEL VALUES IS CREATED

S152 — ORDER OF PRIORITY IS ASSIGNED DEPENDING ON FREQUENCY VALUE

S153 — ACHROMATIC COLOR ?
NO
YES

S154 — THE NUMBER OF ACHROMATIC COLORS IN UPPER-ORDER CANDIDATES IS LARGER THAN FIRST GIVEN NUMBER ?
YES
NO

S155 — ACHROMATIC COLOR NUMBER IS INCREMENTED

S156 — EXCLUDED FROM CANDIDATE

S157 — ARE ALL REPRESENTATIVE COLORS CHECKED ?
NO
YES

S158 — COLOR AT SECOND GIVEN NUMBER FROM TOP OF REMAINING COLOR CANDIDATE BLOCKS IS OUTPUTTED AS REPRESENTATIVE COLOR

END

## FIG.12A

MESH PORTIONS LYING ON BOUNDARY OF CONNECTION COMPONENT

## FIG.12B

MESH PORTIONS LYING OUTSIDE CONNECTION COMPONENT

☐ MESH PORTION

☐ PIXEL

▦ PIXEL WHICH FORMS PART OF CONNECTION COMPONENT

MESH PORTIONS LYING INSIDE CONNECTION COMPONENT

EP 1 555 804 A2

# FIG.13

CONNECTION COMPONENT
AND MESH PORTIONS

BINARY IMAGES FOR
EACH COLOR

# FIG.14

1

| MULTI-LEVEL IMAGE ACQUISITION UNIT | 21 | BINARY IMAGE ACQUISITION UNIT | 22 |

21 MULTI-LEVEL IMAGE ACQUISITION UNIT

BINARY IMAGE ACQUISITION UNIT ~22

SPECIFIC ATTRIBUTE REGION EXTRACTION UNIT ~24

23 SPECIFIC ATTRIBUTE REGION ELIMINATION IMAGE CREATION UNIT

WHITE PIXEL SUBSTITUTION UNIT ~25

SPECIFIC ATTRIBUTE REGION COLOR DETERMINATION UNIT ~26

SPECIFIC ATTRIBUTE PIXEL IMAGE CREATION UNIT ~27

28 IMAGE CODING UNIT

INTEGRATED FILE CREATION UNIT ~29

80

# FIG.15

S5a — | IMAGE OF PROCESSING OBJECT IS ACQUIRED |

S5b — | SUBSTITUTION IMAGE IS ACQUIRED |

S5c — | PIXEL VALUE AFTER SUBSTITUTION IS ACQUIRED |

S5d — | PIXEL VALUE SUBSTITUTION |

S5e — | BOUNDARY PIXEL IS ACQUIRED |

S5f — | IMAGE PROCESSING OF BOUNDARY PORTION |

S5g — | SPECIFIC ATTRIBUTE PIXEL IMAGE CREATION |

# FIG.16

```
                            21
                         ┌──┴──┐
          ┌──────────────────────────────┐
          │   MULTI-LEVEL IMAGE          │
          │   ACQUISITION UNIT           │
          └──────────────────────────────┘
                            │
SPECIFIC ATTRIBUTE          │
REGION ELIMINATION          │        23
IMAGE CREATION UNIT         │      ┌──┴──┐
   ┌────────────────────────┼──────────────────────┐
   │  ┌─────────────────────────────┐               │               25
   │  │   SUBSTITUTION PIXEL         │               │            ┌──┴──┐
23a│  │   VALUE ACQUISITION UNIT     │───────────┐   │  ┌───────────────────────┐
   │  └─────────────────────────────┘           │   │  │   WHITE PIXEL          │
   │                 │                           └──────│   SUBSTITUTION UNIT    │
   │  ┌─────────────────────────────┐           ┌──────└───────────────────────┘
   │  │   PIXEL VALUE                │           │   │
23b│  │   SUBSTITUTION UNIT          │           │   │
   │  └─────────────────────────────┘           │   │
   │                 │                           │   │
   │  ┌─────────────────────────────┐           │   │
   │  │   BOUNDARY PIXEL             │───────────┘   │
23c│  │   SPECIFYING UNIT            │               │
   │  └─────────────────────────────┘               │
   │                 │                               │
   │  ┌─────────────────────────────┐               │
   │  │   BOUNDARY PIXEL IMAGE       │               │
23d│  │   PROCESSING UNIT            │               │
   │  └─────────────────────────────┘               │
   └────────────────────────────────────────────────┘
```

# FIG.17

CHARACTER IMAGE (BINARY)

■ BLACK PIXEL (FORMING CHARACTER)

☐ WHITE PIXEL (FORMING OBJECT OTHER THAN CHARACTER)

▨ BOUNDARY PIXEL (WHITE PIXEL SURROUNDING CHARACTER)

# FIG.18

BACKGROUND PIXEL (MULTI-LEVEL)

☐ PIXEL OTHER THAN BOUNDARY PIXEL

▨ BOUNDARY PIXEL

MULTI-LEVEL IMAGE

CONCENTRATION

(a)

POSITION

CROSS-SECTION
ALONG THIS LINE

BINARY

BINARY IMAGE

**5**

(b)

BLACK PIXELS
ARE
SUBSTITUTED
BY
SURROUNDING
COLOR

CHARACTER
PERIPHERY
REMAINS

ELIMINATION
IMAGE

(c)

FIG.19

# FIG.20

```
                    ┌─────────┐
                    │  START  │
                    └─────────┘
                         │
                         ▼
S201 ──  ┌──────────────────────────────────────┐
         │    MULTI-LEVEL IMAGE IS ACQUIRED      │
         └──────────────────────────────────────┘
                         │
                         ▼
S202 ──  ┌──────────────────────────────────────┐
         │      BINARY IMAGE IS CREATED          │
         └──────────────────────────────────────┘
                         │
                         ▼
S203 ──  ┌──────────────────────────────────────┐
         │    CHARACTER REGION IS EXTRACTED      │
         └──────────────────────────────────────┘
                         │
                         ▼
S204 ──  ┌──────────────────────────────────────┐
         │  PIXELS OTHER THAN CHARACTER REGION   │
         │   ARE CONVERTED TO WHITE PIXELS       │
         └──────────────────────────────────────┘
                         │
                         ▼
S205 ──  ┌──────────────────────────────────────┐
         │     COLOR OF CHARACTER REGION         │
         │          IS DETERMINED                │
         └──────────────────────────────────────┘
                         │
                         ▼
S206 ──  ┌──────────────────────────────────────┐
         │   BINARY IMAGES ARE CREATED FOR       │
         │  EACH COLOR OF CHARACTER REGION       │
         └──────────────────────────────────────┘
                         │
                         ▼
S207 ──  ┌──────────────────────────────────────┐
         │    IMAGE OF CHARACTER REGION          │
         │     ELIMINATION IS CREATED            │
         └──────────────────────────────────────┘
                         │
                         ▼
S208 ──  ┌──────────────────────────────────────┐
         │      RESOLUTION OF THE IMAGE IS       │
         │    CHANGED TO LOW RESOLUTION          │
         └──────────────────────────────────────┘
                         │
                         ▼
S209 ──  ┌──────────────────────────────────────┐
         │  IMAGE CODING OF EACH CREATED IMAGE   │
         └──────────────────────────────────────┘
                         │
                         ▼
S210 ──  ┌──────────────────────────────────────┐
         │   CHARACTER RECOGNITION PROCESS       │
         └──────────────────────────────────────┘
                         │
                         ▼
S211 ──  ┌──────────────────────────────────────┐
         │         IMAGE INTEGRATION             │
         └──────────────────────────────────────┘
                         │
                         ▼
                    ┌─────────┐
                    │   END   │
                    └─────────┘
```

# FIG.21

ORIGINAL IMAGE
(MULTI-LEVEL)

(a) TEXT 1 2 3

BINARY IMAGE →

(b) TEXT 1 2 3

CHARACTERS ARE DELETED

CHARACTERS ARE EXTRACTED

(e)

(c) TEXT 1 2 3

LOW RESOLUTION IS SET

BINARY IMAGES ARE CREATED FOR EACH COLOR

(f)

TEXT

(d) 1 2 3

CHARACTER RECOGNITION

JPEG COMPRESSION CODING

MMR COMPRESSION CODING

(g) ARRANGED IN FORMAT ENABLING INTEGRATED DISPLAY

# FIG.22

201

```
221 ─ MULTI-LEVEL IMAGE          BINARY IMAGE           ─ 222
        ACQUISITION UNIT       ACQUISITION UNIT

                              CHARACTER REGION          ─ 224
                              EXTRACTION UNIT

223 ─ CHARACTER REGION          WHITE PIXEL
        ELIMINATION IMAGE     SUBSTITUTION UNIT         ─ 225
        CREATION UNIT

                              CHARACTER REGION
                              COLOR
                              DETERMINATION UNIT        ─ 226

                              COLOR-BASIS
                              CHARACTER IMAGE           ─ 227
                              CREATION UNIT

228 ─ IMAGE CODING UNIT    230 ─ CHARACTER
                                 RECOGNITION UNIT

        INTEGRATED FILE        ─ 229
        CREATION UNIT
```

# FIG.23

a

YELLOW
BACKGROUND

(NON-CHARACTER
IMAGE)

RED CHARACTERS

〈方針発表会〉

BLACK
CHARACTERS { DATE: MONTH/DAY
PLACE: XXXX

(ORIGINAL IMAGE)

YELLOW BACKGROUND

b

〈方針発表会〉 RED
CHARACTERS

(COLOR-BASIS BINARY
CHARACTER IMAGE)

c

DATE: MONTH/DAY
PLACE: XXXX BLACK
CHARACTERS

(COLOR-BASIS BINARY
CHARACTER IMAGE)

# FIG.24

(a)

〈方針発表会〉

DATE: MONTH/DAY
PLACE: XXXX

(b)

(Xs0,Ys0)

LINE EXTRACTION
RESULT-1

〈方針発表会〉

(Xs7,Ys7)

DATE: MONTH/DAY    LINE EXTRACTION
                   RESULT-2

PLACE: XXXX        LINE EXTRACTION
                   RESULT-3

(c)

〈方針発表会〉

(e)

(Xs0,Ys0)

〈方針 ------

(d)

(Xs1,Ys1)

方

(Xe1,Ye1)

(Xs2,Ys2)

針

(Xe3,Ye3)

# FIG.25

CHARACTER RECOGNITION RESULT
(TRANSPARENT TEXT)

b

BINARY CHARACTER IMAGE

c

NON-CHARACTER IMAGE

a

# FIG.26

```
( START )
     │
     ▼
```

S221 — | MULTI-LEVEL IMAGE IS ACQUIRED |
     │
     ▼
S222 — | BINARY IMAGE IS CREATED |
     │
     ▼
S223 — | CHARACTER REGION IS EXTRACTED |
     │
     ▼
S224 — | PIXELS OTHER THAN CHARACTER REGION ARE CONVERTED TO WHITE PIXELS |
     │
     ▼
S225 — | COLOR OF CHARACTER REGION IS DETERMINED |
     │
     ▼
S226 — | IMAGE OF CHARACTER REGION ELIMINATION IS CREATED |
     │
     ▼
S227 — | RESOLUTION OF THE IMAGE IS CHANGED TO LOW RESOLUTION |
     │
     ▼
S228 — | IMAGE CODING OF EACH CREATED IMAGE |
     │
     ▼
S229 — | CHARACTER RECOGNITION PROCESS |
     │
     ▼
S230 — | IMAGE INTEGRATION |
     │
     ▼
   ( END )

# FIG.27

ORIGINAL IMAGE
(MULTI-LEVEL)

(a) TEXT / 1 2 3

BINARY IMAGE →

(b) TEXT / 1 2 3

CHARACTERS ARE DELETED

CHARACTERS ARE EXTRACTED

(e)

(c) TEXT / 1 2 3

LOW RESOLUTION IS SET

CHARACTER COLOR DATA IS CREATED

(f)

(d)

CHARACTER RECOGNITION

JPEG COMPRESSION CODING

MMR COMPRESSION CODING

JPEG COMPRESSION CODING

(g) ARRANGED IN FORMAT ENABLING INTEGRATED DISPLAY

# FIG.28

201

| | |
|---|---|
| 221 MULTI-LEVEL IMAGE ACQUISITION UNIT | BINARY IMAGE ACQUISITION UNIT 222 |
| | CHARACTER REGION EXTRACTION UNIT 224 |
| 223 CHARACTER REGION ELIMINATION IMAGE CREATION UNIT | WHITE PIXEL SUBSTITUTION UNIT 225 |
| | CHARACTER COLOR DATA CREATION UNIT 231 |
| 228 IMAGE CODING UNIT | 230 CHARACTER RECOGNITION UNIT |
| INTEGRATED FILE CREATION UNIT 229 | |

# FIG.29

YELLOW BACKGROUND

(NON-CHARACTER IMAGE)

a

RED CHARACTERS

〈方針発表会〉

BLACK CHARACTERS

DATE: MONTH/DAY
PLACE: XXXX

(ORIGINAL IMAGE)

YELLOW BACKGROUND

〈方針発表会〉

DATE: MONTH/DAY
PLACE: XXXX

BINARY IMAGE

b

(BINARY CHARACTER IMAGE)

c

RED

BLACK

(CHARACTER COLOR DATA)

# FIG.30

CHARACTER RECOGNITION RESULT
(TRANSPARENT TEXT)

BINARY CHARACTER IMAGE

b

CHARACTER COLOR DATA

c

NON-CHARACTER IMAGE

a

# FIG.31

```
         ( START )
             │
             ▼
S301 ─┤ MULTI-LEVEL IMAGE ACQUISITION │
             │
             ▼
S302 ─┤ BINARY IMAGE CREATION │
             │
             ▼
S303 ─┤ LINE EXTRACTION │
             │
             ▼
S304 ─┤ LINE DATA OUTPUT │
             │
             ▼
         ( END )
```

# FIG.32

START

CONNECTION COMPONENT
ACQUISITION — S311

ACQUISITION OF MULTI-LEVEL
IMAGE AT POSITION
CORRESPONDING TO
CONNECTION COMPONENT — S312

REPRESENTATIVE COLOR OF
CONNECTION COMPONENT
IS DETERMINED — S313

ONE CONNECTION COMPONENT
IS REGISTERED TO LINE
CANDIDATE — S314

CONNECTION COMPONENT
IS ACQUIRED AS
INTEGRATING OBJECT — S315

S316
LOCATED NEAR ? — NO

↓YES S317
SIMILAR COLOR ? — NO

↓YES S318
CONNECTION COMPONENT
IS INTEGRATED TO
LINE CANDIDATE

S319
ARE
ALL CONNECTION
COMPONENTS ARE
CHECKED ? — NO

↓YES

THERE IS — S320
NO CONNECTION
COMPONENT WHICH IS
REGISTERED TO LINE
CANDIDATES
? — NO

↓YES S321
RATIO OF LINE CANDIDATE
IS COMPUTED

S322
NUMBER OF CONNECTION
COMPONENTS FORMING LINE
CANDIDATE IS COUNTED

NUMBER OF BLACK PIXELS
SURROUNDING LINE
CANDIDATE IS COUNTED — S323

COLOR DIFFERENCE OF LINE
CANDIDATE AND SURROUNDING
PIXELS IS COMPUTED — S324

LINE MOST LIKELIHOOD VALUE
IS COMPUTED — S325

S326
IS
MOST LIKELIHOOD
VALUE LARGER THAN
THRESHOLD
VALUE ? — YES

↓NO S327
DELETED FROM LINE CANDIDATE

S328
ARE ALL
LINE CANDIDATES ARE
CHECKED ? — NO

↓YES

END

# FIG.33

~301
MULTI-LEVEL IMAGE INPUT UNIT

~303
BINARY IMAGE CREATION UNIT

~305
RUN CREATION UNIT

~307
CONNECTION COMPONENT
CREATION UNIT

~309
REPRESENTATIVE COLOR
DETERMINATION UNIT

~311
CIRCUMSCRIBED RECTANGLE
INTEGRATION UNIT

~313
CHARACTER LINE
DISCRIMINATION UNIT

~315
CHARACTER REGION
OUTPUT UNIT

# FIG.34

START

MULTI-LEVEL IMAGE ACQUISITION — S331

BINARY IMAGE CREATION — S332

LINE EXTRACTION — S333

BINARY IMAGE INVERSION — S334

LINE EXTRACTION — S335

OVERLAPPING LINE EXTRACTION — S336

SMALLER LINE DELETION — S337

NO OVERLAPPING LINE ? — S338

NO

YES

LINE DATA OUTPUT — S339

END

# FIG.35

```
                                        ⌇301
┌─────────────────────────────────────────┐
│        MULTI-LEVEL IMAGE INPUT UNIT       │
└─────────────────────────────────────────┘
                                        ⌇303
┌─────────────────────────────────────────┐
│        BINARY IMAGE CREATION UNIT         │
└─────────────────────────────────────────┘
                                        ⌇304
┌─────────────────────────────────────────┐
│          IMAGE INVERSION UNIT             │
└─────────────────────────────────────────┘
                                        ⌇305
┌─────────────────────────────────────────┐
│           RUN CREATION UNIT               │
└─────────────────────────────────────────┘
                                        ⌇307
┌─────────────────────────────────────────┐
│        CONNECTION COMPONENT               │
│           CREATION UNIT                   │
└─────────────────────────────────────────┘
                                                        ⌇309
                        ┌────────────────────────────────────┐
                        │   REPRESENTATIVE COLOR              │
                        │   DETERMINATION UNIT                │
                        └────────────────────────────────────┘
                                        ⌇311
┌─────────────────────────────────────────┐
│        CIRCUMSCRIBED RECTANGLE            │
│           INTEGRATION UNIT                │
└─────────────────────────────────────────┘
                                        ⌇313
┌─────────────────────────────────────────┐
│           CHARACTER LINE                  │
│         DISCRIMINATION UNIT               │
└─────────────────────────────────────────┘
                                        ⌇314
┌─────────────────────────────────────────┐
│         OVERLAPPING REGION                │
│          ELIMINATION UNIT                 │
└─────────────────────────────────────────┘
                                        ⌇315
┌─────────────────────────────────────────┐
│          CHARACTER REGION                 │
│            OUTPUT UNIT                     │
└─────────────────────────────────────────┘
```

# FIG.36

CONNECTION COMPONENT

LINE CANDIDATE

EXTENDED LINE
CANDIDATE REGION

FIG.37

(a)

「文字」がきれい。
Faxかメールにより、

DOCUMENT

(MOST OF PIXELS SURROUNDING LINE
CANDIDATE ARE WHITE PIXELS)

LINE CANDIDATE

(b)

PHOTOGRAPH

(BLACK PIXELS SURROUNDING LINE
CANDIDATE INCREASE)

LINE CANDIDATE

EP 1 555 804 A2

## FIG.38

IMAGE OF PROCESSING OBJECT

(A)

田中君

(INVERSION)

(LINE EXTRACTION)

(B)

(A' )

田中君 ← LINE REGION → (B' )

(A″) LARGE (LINE SIZE THRESHOLD PROCESS) SMALL (B″)

← LINE CANDIDATE →

(REMAINS AS LINE CANDIDATE)

(DELETED FROM LINE CANDIDATE)

# FIG.39

347

341　　　　　　　342　　　　　　　　345

| CPU | MEMORY | CD-ROM DRIVE |

BUS

| HARD DISK DRIVE | INPUT DEVICE | DISPLAY DEVICE |

343　　　　　　　344　　　　　　　346

## FIG.40A

## FIG.40B

# FIG.41

ORIGINAL DOCUMENT 100

↓

```
┌─────────────────────────┐
│   PLANE IMAGE           │ ～411
│   EXTRACTION UNIT       │
└─────────────────────────┘
            ↓
┌─────────────────────────┐
│   REFERENCE IMAGE       │ ～412
│   CREATION UNIT         │
└─────────────────────────┘
            ↓
┌─────────────────────────┐
│   CORRECTION UNIT       │ ～413
└─────────────────────────┘
            ↓
┌─────────────────────────┐
│   ENCODING UNIT         │ ～414
└─────────────────────────┘
            ↓
┌─────────────────────────┐
│   IMAGE INTEGRATION     │ ～415
│   UNIT                  │
└─────────────────────────┘
```

410

↓

DOCUMENT DATA DD

**FIG.42**

# FIG.43

DOCUMENT DATA DD

```
        ┌──────────────────────┐
        │      DOCUMENT        │
        │    SEPARATING/       │～421
        │   DECODING UNIT      │
        └──────────────────────┘
                 │
        ┌──────────────────────┐
        │  GRADATION VALUE     │～422
        │  ACQUISITION UNIT    │
        └──────────────────────┘
                 │
  420 ⎰ ┌──────────────────────┐
        │   PLANE EXCLUDING    │～423
        │       UNIT           │
        └──────────────────────┘
                 │
        ┌──────────────────────┐
        │   PLANE SPECIFYING   │～424
        │       UNIT           │
        └──────────────────────┘
                 │
        ┌──────────────────────┐
        │      DOCUMENT        │～425
        │ RECONSTRUCTION UNIT  │
        └──────────────────────┘
                 │
```

RECONSTRUCTED DOCUMENT (100')

# FIG.44

DOCUMENT DATA
DD

S421
DOCUMENT SEPARATING
AND DECODING

PLN(1)

PLN(2)

PLN(3)

REF

S422
GRADATION VALUE
ACQUISITION

S423
PLANE EXCLUDING

S424
PLANE SPECIFYING

S425
DOCUMENT RECONSTRUCTION

TEXT
123

RECONSTRUCTED DOCUMENT (100')

# FIG.45A

# FIG.45B

FIG.46

TEXT
123 ~200

S411
PLANE EXTRACTION

S412
REFERENCE
IMAGE
CREATION

PLN1          PLN2          PLN3

S413
MANIPULATION
PROCESS

REF
TEXT
123

S414
ENCODING

S415 ~ IMAGE INTEGRATION

DOCUMENT DATA DD

EP 1 555 804 A2

# FIG.47

DOCUMENT DATA
DD

S421
DOCUMENT SEPARATING
AND DECODING

TEXT
123

S422
GRADATION VALUE
ACQUISITION

S423
PLANE EXCLUDING

S424
PLANE SPECIFYING

S425
DOCUMENT RECONSTRUCTION

TEXT
123

RECONSTRUCTED DOCUMENT (200')

# FIG.48A

# FIG.48B

FIG.49

## FIG.50

DOCUMENT DATA DD

S421
DOCUMENT SEPARATING
AND DECODING

PLN2 — TEXT 123
PLN3
PLN4

S422
GRADATION VALUE
ACQUISITION

S423
PLANE EXCLUDING

S424
PLANE SPECIFYING

S425
DOCUMENT RECONSTRUCTION

RECONSTRUCTED DOCUMENT (300')

TEXT 123

EP 1 555 804 A2

# FIG.51A

400

402

401

ABCD

# FIG.51B

A1

A2~A16

REF

DD

ABCD

PLN(1)

PLN(2)

FIG.52

# FIG.53

DOCUMENT
DATA DD

DOCUMENT SEPARATING
AND DECODING ~S421

PLN1

PLN2

**ABCD**

REF

GRADATION VALUE
ACQUISITION ~S422

PLANE EXCLUDING ~S423

PLANE SPECIFYING ~S424

DOCUMENT
RECONSTRUCTION ~S425

**ABC**D
RECONSTRUCTED DOCUMENT
(400')

# FIG.54A

# FIG.54B

# FIG.55

AVERAGE VALUE COMPUTING IMAGE

TILE T (3 x 3)

(A)

PIXELS FOR COMPUTING AVERAGE VALUE (BOLD LINE) PIX01

PIXELS ON REFERENCE IMAGE (BINARY IMAGE)

(B)

PLN (1) SELECTION

PLN (2) SELECTION

(C)

PIXEL HAVING PIXEL VALUE OF AVERAGE VALUE OF BLACK BOX PIXEL

IMAGE WITH LOW RESOLUTION ON PLANE (2)

EP 1 555 804 A2

# FIG.56

ORIGINAL DOCUMENT 100

```
        │
        ▼
┌───────────────────────┐
│     PLANE IMAGE       │ ～411
│   EXTRACTION UNIT     │
└───────────────────────┘
        │
        ▼
┌───────────────────────┐
│   REFERENCE IMAGE     │ ～412
│    CREATION UNIT      │
└───────────────────────┘
        │
        ▼
┌───────────────────────┐
│   CORRECTION UNIT     │ ～413
└───────────────────────┘
        │
        ▼
┌───────────────────────┐
│    ENCODING UNIT      │ ～414
└───────────────────────┘
        │
        ▼
┌───────────────────────┐
│  IMAGE INTEGRATION    │ ～415
│         UNIT          │
└───────────────────────┘
        │
        ▼
```

410

DOCUMENT DATA DD

# FIG.57

S411
PLANE EXTRACTION

S412
REFERENCE
IMAGE
CREATION

PLN1  PLN2

S413
MANIPULATION
PROCESS

REF
TEXT
123

S414
ENCODING

S415 IMAGE INTEGRATION

DOCUMENT DATA DD

# FIG.58

DOCUMENT DATA DD

↓

| DOCUMENT SEPARATING/ DECODING UNIT | ～421 |

↓

| GRADATION VALUE ACQUISITION UNIT | ～422 |

↓

| PLANE EXCLUDING UNIT | ～423 |

↓

| PLANE SPECIFYING UNIT | ～424 |

↓

| DOCUMENT RECONSTRUCTION UNIT | ～425 |

420 {

↓

RECONSTRUCTED DOCUMENT (100')

# FIG.59

DOCUMENT DATA
DD

S421
DOCUMENT SEPARATING
AND DECODING

TEXT
123

S422
GRADATION VALUE
ACQUISITION

S423
PLANE EXCLUDING

S424
PLANE SPECIFYING

S425
DOCUMENT RECONSTRUCTION

TEXT
123

RECONSTRUCTED DOCUMENT (200')

# FIG.60

AVERAGE VALUE
COMPUTING IMAGE

PIXELS ON REFERENCE IMAGE
(BINARY IMAGE)

TILE T (8 x 8)

(A)

PIXELS FOR
COMPUTING
AVERAGE
VALUE

(B)

PLN (1) SELECTION

PLN (2) SELECTION

(C)

PIXELS WITHIN 8 x 8 TILE ARE SAME COLOR
IN CASE OF NO SCATTERING. PIXELS WITHIN A
SMALLER REGION ARE SAME COLOR
IN CASE OF SOME SCATTERING.

IMAGE WITH LOW
RESOLUTION ON PLANE (2)

EP 1 555 804 A2

# FIG.61

```
                    ┌─────────┐
                    │  START  │
                    └─────────┘
                         │
                         ▼               S401
        ┌──────────────────────────────────┐
        │  IMAGE REGION (1) EQUIVALENT     │
        │  TO 8 x 8 PIXELS OF IMAGE (1A)   │
        │           IS SELECTED            │
        └──────────────────────────────────┘
                         │
                         ▼               S402
        ┌──────────────────────────────────┐
        │      PIXELS EQUIVALENT TO        │
        │    CHARACTERS OF IMAGE (1)       │
        │         ARE EXTRACTED            │
        └──────────────────────────────────┘
                         │
                         ▼               S403           NO
                   ╱─────────────╲ ───────────────────────────┐
                  ╱ CORRESPONDING  ╲                           │
                  ╲ PIXEL EXISTS ?  ╱                          │
                   ╲───────────────╱                           │
                         │ YES          S405                   ▼              S404
        ┌──────────────────────────────┐         ┌──────────────────────────────┐
        │  PIXEL VALUE AVERAGE AND      │         │     MONO COLOR IS SET ON      │
        │  VARIANCE ARE COMPUTED        │         │      8 x 8 PIXELS BASIS       │
        └──────────────────────────────┘         └──────────────────────────────┘
                         │                                     │
                         ▼               S406   YES            │
                   ╱─────────────╲ ──────────────────┐         │
                  ╱ IS VARIANCE   ╲                  │         │
                  ╲   LARGE ?      ╱                  │         │
                   ╲─────────────╱                   ▼         │          S407
                         │ NO              ┌──────────────────────────────────┐
                         │       S409      │  IMAGE REGION IS DIVIDED INTO     │
        ┌──────────────────────────────┐   │  SMALL REGIONS EQUIVALENT         │
        │  AVERAGE PIXEL VALUE IS SET   │   │  TO 2 x 2 PIXELS OF IMAGE (1A)    │
        │     ON 8 x 8 PIXELS BASIS     │   └──────────────────────────────────┘
        └──────────────────────────────┘                      │            S408
                         │                     ┌──────────────────────────────┐
                         │                     │      COLOR IS SET ON          │
                         │                     │    SMALL-REGION BASIS         │
                         │                     └──────────────────────────────┘
                         │◄────────────────────────────────────┘
                         ▼               S410
                   ╱─────────────╲
        NO        ╱ IS PROCESSING ╲
        ┌─────────╲ OF ENTIRE IMAGE╱
        │          ╲  FINISHED ?   ╱
        │           ╲─────────────╱
        │                 │ YES
        │                 ▼
        │            ┌─────────┐
        │            │   END   │
        │            └─────────┘
        │
        └──► (back to S401)
```

# FIG.62

ORIGINAL IMAGE

SPECIFIC ATTRIBUTE
REGION EXTRACTION
UNIT                    111

BINARY ORIGINAL
IMAGE CREATION UNIT          1111

SPECIFIC ATTRIBUTE
REGION RECOGNITION UNIT      1112

RULED LINE
EXTRACTION UNIT              112

0GB

RULED-LINE-ELIMINATION
BINARY ORIGINAL IMAGE
CREATION UNIT                1113

0GB'

CONNECTION COMPONENT
EXTRACTION UNIT              1114

FB

LE

CONNECTION COMPONENT
SIZE CLASSIFYING UNIT        1115

EP(SPECIFIC ATTRIBUTE
REGION EXTRACTED DATA)

0GB'

SPECIFIC ATTRIBUTE
REGION ELIMINATION
IMAGE CREATION UNIT          113

SPECIFIC ATTRIBUTE
REGION COLOR
DETERMINATION UNIT           114

0GE

LC

SPECIFIC ATTRIBUTE
REGION COLORING IMAGE
CREATION UNIT                115

0GG

FB

RULED LINE DRAWING UNIT      116

ENCODING UNIT                117

INTEGRATED FILE
CREATION UNIT                118

# FIG.63

ORIGINAL IMAGE IS ACQUIRED — S501

BINARY IMAGE IS CREATED — S502

SPECIFIC ATTRIBUTE REGION IS RECOGNIZED — S503

PIXELS OTHER THAN SPECIFIC ATTRIBUTE REGION ARE CONVERTED TO WHITE PIXELS — S504

RULED LINE IS EXTRACTED — S505

RULED LINE IS ELIMINATED (TO WHITE PIXELS) — S506

CONNECTION COMPONENT IS EXTRACTED — S507

PIXELS OF CONNECTION COMPONENT OTHER THAN SPECIFIC SIZE ARE CONVERTED TO WHITE PIXELS — S508

RULED LINE DRAWING — S509

SPECIFIC ATTRIBUTE REGION ELIMINATION IMAGE IS CREATED — S510

COLOR OF SPECIFIC ATTRIBUTE REGION IS DETERMINED — S511

IMAGE OF SPECIFIC ATTRIBUTE REGION IS CREATED — S512

IMAGE COMPRESSION — S513

IMAGE INTEGRATION — S514

EP 1 555 804 A2

## FIG.64A

SIZE CLASSIFYING → PIXEL VALUE DETERMINED

なんたる →

(SIZE SUITABLE)

(SIZE UNSUITABLE)

## FIG.64B

SIZE CLASSIFYING → PIXEL VALUE DETERMINED → RULED LINE ADDED

なんたる →

(SIZE SUITABLE)

(SIZE UNSUITABLE)

129

# FIG.65

ORIGINAL IMAGE

SPECIFIC ATTRIBUTE
REGION EXTRACTION
UNIT ┌111

┌1111
BINARY ORIGINAL
IMAGE CREATION UNIT

┌1112
SPECIFIC ATTRIBUTE
REGION RECOGNITION UNIT

┌112
RULED LINE
EXTRACTION UNIT

0GM ┌119
MULTI-LEVEL
IMAGE
EXTRACTION
UNIT

0GB ┌1113
RULED-LINE-ELIMINATION
BINARY ORIGINAL IMAGE
CREATION UNIT

0GB' ┌1114
CONNECTION COMPONENT
EXTRACTION UNIT

FB

LE ┌1115
CONNECTION COMPONENT
SIZE CLASSIFYING UNIT

EP(SPECIFIC ATTRIBUTE
REGION EXTRACTED DATA)

0GB' ┌113
SPECIFIC ATTRIBUTE
REGION ELIMINATION
IMAGE CREATION UNIT

┌114
SPECIFIC ATTRIBUTE
REGION COLOR
DETERMINATION UNIT

0GE

LC

SPECIFIC ATTRIBUTE
REGION COLORING IMAGE
CREATION UNIT ⌐115

0GG

FB

RULED LINE DRAWING UNIT ⌐116

ENCODING UNIT ⌐117

INTEGRATED FILE
CREATION UNIT ⌐118

# FIG.66

ORIGINAL IMAGE "OG"
(MULTI-LEVEL IMAGE)

LT ── TEXT
FB ── 123
      IM

A1                                              A2

CHARACTER/RULED-LINE              BINARY ORIGINAL
ELIMINATION IMAGE                 IMAGE "OGB"

                                 LT ── TEXT
                                 FB ── 123
        IM                              IM

              A4                              A3

                                 LT ── TEXT
        FB                            123

SPECIFIC
ATTRIBUTE     TEXT        A5 (COLORING)
REGION
COLORING                          SPECIFIC
IMAGE         123                 ATTRIBUTE
"CGG"                             REGION
                                  COLORING
                                  IMAGE "CGG"

              (ENCODING)

A6 (IMAGE INTEGRATION)

# FIG.67A

RULED LINE
EXTRACTION UNIT
112

| SAME-COLOR LONG-RUN EXTRACTION UNIT | —1121 |

| LONG-RUN CONNECTION COMPONENT CREATION UNIT | —1122 |

# FIG.67B

RULED LINE
EXTRACTION UNIT
112

| SAME-COLOR SHORT-RUN EXTRACTION UNIT | —1123 |

| SHORT-RUN CONNECTION COMPONENT CREATION UNIT | —1124 |

# FIG.68

ORIGINAL IMAGE "OG"

ORIGINAL IMAGE "OG"

INCLINATION OR
DISTURBANCE PERCEPTIBLE
(A1)

INCLINATION OR DISTURBANCE
NOT PERCEPTIBLE
(B1)

ORIGINAL IMAGE "OG"

ORIGINAL IMAGE "OG"

EXTRACTED
(A2)

NOT
EXTRACTED
(B2)

ORIGINAL IMAGE "OG"

ORIGINAL IMAGE "OG"

(A3)

(B3)

# FIG.69

ORIGINAL IMAGE "OG"

ORIGINAL IMAGE "OG"

(A)

(B)

# FIG.70

ORIGINAL IMAGE (24 BITS, COLOR)

621 — ↓ 24 BITS, COLOR

PRE-PROCESSING UNIT

622 — ↓ 24 BITS, COLOR

CHARACTER/IMAGE
CREATION UNIT

24 BITS, COLOR / BINARY IMAGE | BINARY IMAGE / 24 BITS, COLOR

624 — NON-CHARACTER IMAGE
CREATION UNIT

CHARACTER COLOR
SPECIFYING UNIT — 625

IMAGE CODING UNIT — 626

INTEGRATION FILE
CREATION UNIT — 627

# FIG.71

ORIGINAL IMAGE (24 BITS, COLOR)

621 — ↓ 24 BITS, COLOR

PRE-PROCESSING UNIT

622 — ↓ 24 BITS, COLOR

CHARACTER/IMAGE
CREATION UNIT

24 BITS,
COLOR / BINARY IMAGE / BINARY IMAGE / 24 BITS, COLOR

624 — NON-CHARACTER IMAGE
CREATION UNIT

REPRESENTATIVE
COLOR COMPUTING
UNIT — 631

CHARACTER COLOR
SPECIFYING UNIT — 632

GAMMA CORRECTION
UNIT — 633

625

IMAGE CODING UNIT — 626

INTEGRATION FILE
CREATION UNIT — 627

# FIG.72

# FIG.73

ORIGINAL IMAGE (24 BITS, COLOR)

| | 24 BITS, COLOR |
| --- | --- |

621 → PRE-PROCESSING UNIT

24 BITS, COLOR

622 → CHARACTER/IMAGE CREATION UNIT

24 BITS, COLOR     BINARY IMAGE     BINARY IMAGE     24 BITS, COLOR

641 → NEIGHBORHOOD COLOR SPECIFYING UNIT

CHARACTER COLOR SPECIFYING UNIT ← 625

642 → CHARACTER OUTLINE ELIMINATION UNIT

643 → RESOLUTION CONVERSION UNIT

644 → SMOOTHING UNIT

645 → GAMMA CORRECTION UNIT

24

IMAGE CODING UNIT ~626

INTEGRATION FILE CREATION UNIT ~627

# FIG.74

SHARP CONTRAST UNIT 711

SMOOTHING UNIT 712

MULTI-LEVEL IMAGE ACQUISITION UNIT 701

BINARY IMAGE ACQUISITION UNIT 702

701

SPECIFIC ATTRIBUTE REGION EXTRACTION UNIT 704

SPECIFIC ATTRIBUTE REGION ELIMINATION IMAGE CREATION UNIT 703

WHITE PIXEL SUBSTITUTION UNIT 705

CONNECTION COMPONENT SIZE CHECK UNIT 713

SPECIFIC ATTRIBUTE REGION COLOR DETERMINATION UNIT 706

SPECIFIC ATTRIBUTE PIXEL IMAGE CREATION UNIT 707

CONTRAST ADJUSTMENT UNIT 714

RESOLUTION CONVERSION UNIT 715

IMAGE CODING UNIT 708

INTEGRATED FILE CREATION UNIT 709

EP 1 555 804 A2

# FIG.75

START

IMAGE INPUT — S701

SHARP CONTRAST PROCESS — S702

SMOOTHING PROCESS — S703

BINARY IMAGE CREATION — S704

SPECIFIC ATTRIBUTE REGION EXTRACTION — S705

PIXELS OTHER THAN SPECIFIC ATTRIBUTE REGION ARE CHANGED TO WHITE PIXELS — S706

CONNECTION COMPONENT SIZE IS CHECKED — S707

SPECIFIC ATTRIBUTE REGION ELIMINATION IMAGE CREATION — S708

SPECIFIC ATTRIBUTE REGION COLOR DETERMINATION — S709

SPECIFIC ATTRIBUTE PIXEL IMAGE CREATION — S710

CONTRAST ADJUSTMENT — S711

RESOLUTION CONVERSION — S712

IMAGE COMPRESSION CODING — S713

INTEGRATED FILE CREATION — S714

END

FIG.76A  | 3年間無償保証 |

FIG.76B  | 3年間無償保証 |

# FIG.77

```
                    ┌─────────────┐
                    │    START    │
                    └──────┬──────┘
                           │
                           ▼
   ┌──────────────────────────────────────────────┐
   │          CHARACTER EXTRACTION PROCESS         │ ── S721
   │ (EXTRACTION RESULT IS STORED AS RECTANGLE)    │
   └──────────────────────┬───────────────────────┘
                           │
                           ▼
                         ╱─────╲  S722
                       ╱         ╲
                     ╱  SIZE OF    ╲     NO
                   ╱  RECTANGLE IS   ╲──────────────┐
                   ╲ LESS THAN GIVEN ╱              │
                     ╲   SIZE      ╱                │
                       ╲         ╱                  ▼      S724
                         ╲─────╱            ┌─────────────────┐
                           │ YES            │  DETERMINED AS   │
                           │    S723        │ BACKGROUND IMAGE │
                           ▼                └────────┬─────────┘
                  ┌─────────────────┐                │
                  │  DETERMINED AS   │               │
                  │ CHARACTER IMAGE  │               │
                  └────────┬─────────┘               │
                           │◄─────────────────────────
                           ▼
                    ┌─────────────┐
                    │     END     │
                    └─────────────┘
```

142

## FIG.78

SHARP CONTRAST UNIT — 711

SMOOTHING UNIT — 712

MULTI-LEVEL IMAGE ACQUISITION UNIT — 701

BINARY IMAGE ACQUISITION UNIT — 702

SPECIFIC ATTRIBUTE REGION EXTRACTION UNIT — 704

WHITE PIXEL SUBSTITUTION UNIT — 705

CONNECTION COMPONENT SIZE CHECK UNIT — 713

SPECIFIC ATTRIBUTE REGION ELIMINATION IMAGE CREATION UNIT — 703

CHARACTER MASK IMAGE CREATION UNIT — 721

SPECIFIC-ATTRIBUTE-REGION BLACK-PIXEL CORRESPONDING COLOR DRAWING UNIT — 722

CHARACTER COLOR IMAGE CREATION UNIT — 723

CONTRAST ADJUSTMENT UNIT — 714

RESOLUTION CONVERSION UNIT — 715

IMAGE CODING UNIT — 708

INTEGRATED FILE CREATION UNIT — 709

EP 1 555 804 A2

# FIG.79

```
        ┌──────────┐
        │   START  │
        └────┬─────┘
             ▼                    S701
    ┌─────────────────┐
    │   IMAGE INPUT   │
    └────────┬────────┘
             ▼                    S702
    ┌─────────────────┐
    │ SHARP CONTRAST  │
    │    PROCESS      │
    └────────┬────────┘
             ▼                    S703
    ┌─────────────────┐
    │ SMOOTHING PROCESS│
    └────────┬────────┘
             ▼                    S704
    ┌─────────────────┐
    │  BINARY IMAGE   │
    │    CREATION     │
    └────────┬────────┘
             ▼                    S705
    ┌─────────────────┐
    │ SPECIFIC ATTRIBUTE │
    │ REGION EXTRACTION  │
    └────────┬────────┘
             ▼                    S706
    ┌─────────────────┐
    │ PIXELS OTHER THAN │
    │ SPECIFIC ATTRIBUTE │
    │ REGION ARE CHANGED │
    │  TO WHITE PIXELS  │
    └────────┬────────┘
             ▼                    S707
    ┌─────────────────┐
    │   CONNECTION    │
    │   COMPONENT     │
    │ SIZE IS CHECKED │
    └────────┬────────┘
```

S708 — SPECIFIC ATTRIBUTE REGION ELIMINATION IMAGE CREATION

S731 — CHARACTER MASK IMAGE CREATION UNIT

S732 — COLOR CORRESPONDING TO SPECIFIC-ATTRIBUTE-REGION BLACK PIXELS IS DRAWN

S733 — CHARACTER COLOR IMAGE CREATION

S711 — CONTRAST ADJUSTMENT

S712 — RESOLUTION CONVERSION

S713 — IMAGE COMPRESSION CODING

S714 — INTEGRATED FILE CREATION

END

# FIG.80

```
        ( START )
            │
            ▼
┌───────────────────────────────────┐  S741
│            FILE INPUT             │
└───────────────────────────────────┘
            │
            ▼
┌───────────────────────────────────┐  S742
│ DECODING OF EACH OF COMPONENT IMAGES │
└───────────────────────────────────┘
            │
            ▼
┌───────────────────────────────────┐  S743
│            SIZE CHANG             │
└───────────────────────────────────┘
            │
            ▼
┌───────────────────────────────────┐  S744
│   INTEGRATED IMAGE DISPLAYING END  │
└───────────────────────────────────┘
            │
            ▼
         ( END )
```

# FIG.81

```
        START

S801    MULTI-LEVEL IMAGE IS ACQUIRED

S802    BINARY IMAGE IS ACQUIRED

S803    CHARACTER REGION IS EXTRACTED

S804    PIXELS OTHER THAN CHARACTER REGION
        ARE CONVERTED TO WHITE PIXELS

S805    REDUCTION COLOR OF CHARACTER
        PIXELS IS DETERMINED

S806    COLOR OF CHARACTER REGION IS
        CHANGED TO BACKGROUND COLOR

S807    IMAGE CODING OF EACH CREATED IMAGE

S808    IMAGE INTEGRATION

        END
```

# FIG.82

ORIGINAL IMAGE (MULTI-LEVEL)

(a) TEXT 123

BINARY IMAGE →

(b) TEXT 123

CHARACTERS ARE DELETED

ONLY CHARACTERS ARE LEFT

(e)

(c) TEXT 123

LOW RESOLUTION IS SET

BINARY IMAGES ARE CREATED FOR EACH OF REDUCED COLORS

(f)

TEXT 123 (d)

CODING

CODING

(g) ARRANGED IN FORMAT ENABLING INTEGRATED DISPLAY

# FIG.83

801

| | |
|---|---|
| MULTI-LEVEL IMAGE ACQUISITION UNIT 821 | BINARY IMAGE ACQUISITION UNIT 822 |
| SPECIFIC ATTRIBUTE REGION ELIMINATION IMAGE CREATION UNIT 823 | SPECIFIC ATTRIBUTE PIXEL SPECIFYING UNIT 824 |

WHITE PIXEL SUBSTITUTION UNIT 825

SPECIFIC ATTRIBUTE PIXEL IMAGE CREATION UNIT 826

IMAGE CODING UNIT 827

INTEGRATED FILE CREATION UNIT 828

# FIG.84

```
            ( START )
                |
                v
+-----------------------------------+  ~S811
|  PIXEL VALUE OF SPECIFIC ATTRIBUTE |
|         REGION IS ACQUIRED         |
+-----------------------------------+
                |
                v
+-----------------------------------+  ~S812
| REPRESENTATIVE COLOR IS COMPUTED   |
+-----------------------------------+
                |
                v
+-----------------------------------+  ~S813
|      REPRESENTATIVE COLOR IS       |
|        ASSIGNED FOR PIXELS OF      |
|     SPECIFIC ATTRIBUTE REGION      |
+-----------------------------------+
                |
                v
+-----------------------------------+  ~S814
| REDUCTION COLOR IMAGE IS CREATED   |
+-----------------------------------+
                |
                v
            (  END  )
```

# FIG.85

```
                    ┌─────────┐
                    │  START  │
                    └─────────┘
                         │
                         ▼
   ┌──────────────────────────────────────────┐
   │  HISTOGRAM OF PIXEL VALUES IS CREATED     │──S821
   └──────────────────────────────────────────┘
                         │
                         ▼
   ┌──────────────────────────────────────────┐
   │       ORDER OF PRIORITY IS ASSIGNED       │──S822
   │     DEPENDING ON FREQUENCY VALUE          │
   └──────────────────────────────────────────┘
                         │
                         ▼
              S823
        ◇ ACHROMATIC COLOR ? ◇ ──NO──┐
                         │            │
                        YES           │
                         ▼            │
              S824                    │
        ◇ THE NUMBER                  │
          OF ACHROMATIC COLORS        │
          IN UPPER-ORDER CANDIDATES IS ──YES──┐
          LARGER THAN FIRST GIVEN     │       │
          NUMBER ? ◇                  │       │
                         │            │       │
                        NO            │       │
                         ▼            │       ▼
              S825                    │    S826
   ┌────────────────────────┐        │  ┌──────────────┐
   │ ACHROMATIC COLOR NUMBER│        │  │ EXCLUDED FROM│
   │    IS INCREMENTED       │       │  │  CANDIDATE   │
   └────────────────────────┘        │  └──────────────┘
                         │            │       │
                         ▼◄───────────┘◄──────┘
              S827
        ◇ ARE ALL
          REPRESENTATIVE COLORS ──NO──┐
          CHECKED ? ◇                 │
                         │            │
                        YES           │
                         ▼            │
   ┌──────────────────────────────────────────┐
   │ COLOR AT SECOND GIVEN NUMBER FROM TOP     │
   │ OF REMAINING COLOR CANDIDATE BLOCKS IS    │──S828
   │ OUTPUTTED AS REPRESENTATIVE COLOR         │
   └──────────────────────────────────────────┘
                         │
                         ▼
                    ┌─────────┐
                    │   END   │
                    └─────────┘
```

# FIG.86

START

HISTOGRAM OF PIXEL VALUES IS CREATED — S831

ORDER OF PRIORITY IS ASSIGNED
DEPENDING ON FREQUENCY VALUE — S832

FIRST GIVEN NUMBER OF PIXEL VALUES ARE LEFT — S833

S834
ACHROMATIC COLOR ? — NO

YES

THE NUMBER
OF ACHROMATIC COLORS
IN UPPER-ORDER CANDIDATES IS
LARGER THAN FIRST GIVEN
NUMBER ? — S835 — YES

NO — S836

ACHROMATIC COLOR NUMBER
IS INCREMENTED

S837
EXCLUDED FROM
CANDIDATE

ARE ALL
REPRESENTATIVE COLORS
CHECKED ? — S838 — NO

YES

SET OF REPRESENTATIVE COLORS WITH
LEAST COLOR DIFFERENCE IS DETERMINED — S839

REPRESENTATIVE COLOR WITH LOWER
PRIORITY IS EXCLUDED FROM CANDIDATE — S840

SMALLER THAN THIRD
GIVEN NUMBER ? — S841 — NO

YES

COLOR OF REMAINING COLOR CANDIDATE IS
OUTPUTTED AS REPRESENTATIVE COLOR — S842

END

# FIG.87

```
        ┌─────────────┐
        │    START    │
        └─────────────┘
               │
               ▼
┌─────────────────────────────────┐
│  BLACK PIXEL CONNECTION COMPONENT │──S851
│         IS EXTRACTED              │
└─────────────────────────────────┘
               │
               ▼ ◄──────────────────────┐
┌─────────────────────────────────┐     │
│  POSITION OF CONNECTION COMPONENT IN │──S852
│   MULTI-LEVEL IMAGE IS COMPUTED   │     │
└─────────────────────────────────┘     │
               │                        │
               ▼                        │
┌─────────────────────────────────┐     │
│  MOST FREQUENT VALUE OF PIXEL VALUE AT │──S853
│ CORRESPONDING POSITION IS DETERMINED │  │
└─────────────────────────────────┘     │
               │                        │
               ▼                        │
┌─────────────────────────────────┐     │
│  REPRESENTATIVE COLOR NEAREST TO MOST │──S854
│   FREQUENT VALUE IS DETERMINED    │     │
└─────────────────────────────────┘     │
               │                        │
               ▼                        │
┌─────────────────────────────────┐     │
│ CONNECTION COMPONENT AND REPRESENTATIVE │──S855
│ COLOR ARE WRITTEN TO REDUCTION-COLOR IMAGE │
└─────────────────────────────────┘     │
               │                        │
               ▼         S856           │
          ╱─────────────╲               │
         ╱   ARE ALL      ╲    NO        │
        ╱ CONNECTION COMPONENTS ╲───────┘
         ╲   CHECKED ?   ╱
          ╲─────────────╱
               │ YES
               ▼
        ┌─────────────┐
        │     END     │
        └─────────────┘
```

# FIG.88

```
        ( START )
            |
            v
+--------------------------------+
| BINARY IMAGE THICKENING PROCESS |--S861
+--------------------------------+
            |
            v
+--------------------------------+
| CONNECTION COMPONENT IS EXTRACTED|--S862
|   FROM THICKENED BINARY IMAGE   |
+--------------------------------+
            |
            v
+--------------------------------+
|   PIXEL VALUES OF MULTI-LEVEL   |
|   IMAGE CORRESPONDING TO WHITE  |
|   PIXELS SURROUNDING CONNECTION |--S863
|    COMPONENT ARE ACQUIRED       |
+--------------------------------+
            |
            v
+--------------------------------+
| AVERAGE OF PIXEL VALUES IS       |
| COMPUTED TO DETERMINE            |--S864
| BACKGROUND COLOR                 |
+--------------------------------+
            |
            v
+--------------------------------+
| PIXELS OF MULTI-LEVEL IMAGE      |
| CORRESPONDING TO CONNECTION      |--S865
| COMPONENT ARE REPLACED           |
| BY BACKGROUND COLOR              |
+--------------------------------+
            |
            v
       /S866
    /ARE ALL\
 / CONNECTION COMPONENT \  NO
 \ ARE PROCESSED ? /
    \         /
     | YES
     v
   ( END )
```

# FIG.89

START

MULTI-LEVEL IMAGE IS ACQUIRED — S801

BINARY IMAGE IS ACQUIRED — S802

SINGLE-COLOR REGION IS EXTRACTED — S803'

PIXELS OTHER THAN SINGLE-COLOR REGION ARE CONVERTED TO WHITE PIXELS — S804'

REDUCTION COLOR IMAGE OF SINGLE-COLOR PIXELS IS CREATED — S805'

COLOR OF SINGLE-COLOR REGION IS CHANGED TO BACKGROUND COLOR — S806'

IMAGE CODING OF EACH CREATED IMAGE — S807

IMAGE INTEGRATION — S808

END

# FIG.90

START

CONNECTION COMPONENT IS EXTRACTED ~S871

VARIANCE OF COLORS OF CONNECTION COMPONENT POSITIONS IS COMPUTED ~S872

S873
IS VARIANCE LARGE ?  NO

YES

ELIMINATED FROM BINARY IMAGE ~S874

S875
ARE ALL CONNECTION COMPONENTS ARE CHECKED ?  NO

YES

END

# FIG.91

801

| 821 | 822 |
| --- | --- |
| MULTI-LEVEL IMAGE ACQUISITION UNIT | BINARY IMAGE ACQUISITION UNIT |

| 823 | 824 |
| --- | --- |
| SPECIFIC ATTRIBUTE REGION ELIMINATION IMAGE CREATION UNIT | SPECIFIC ATTRIBUTE PIXEL SPECIFYING UNIT |

825

| WHITE PIXEL SUBSTITUTION UNIT |
| --- |

826

| SPECIFIC ATTRIBUTE PIXEL IMAGE CREATION UNIT |
| --- |

| IMAGE CODING UNIT | ~827 |
| --- | --- |

| INTEGRATED FILE CREATION UNIT | ~828 |
| --- | --- |

# FIG.92

MULTI-LEVEL IMAGE ACQUISITION UNIT ⌐821

BINARY IMAGE ACQUISITION UNIT ⌐822

SPECIFIC ATTRIBUTE PIXEL SPECIFYING UNIT

824~

CONNECTION COMPONENT EXTRACTION UNIT ⌐831

COLOR DATA ACQUISITION UNIT ⌐832

VARIANCE COMPUTATION UNIT ⌐833

WHITE PIXEL SUBSTITUTION UNIT

825